(19) Europäisches Patentamt
European Patent Office
Office européen des brevets

(11) **EP 1 876 506 A1**

(12) **EUROPEAN PATENT APPLICATION**
published in accordance with Art. 153(4) EPC

(43) Date of publication:
**09.01.2008 Bulletin 2008/02**

(51) Int Cl.:
***G06C 13/00*** *(2006.01)*

(21) Application number: **06728731.8**

(22) Date of filing: **07.03.2006**

(86) International application number:
**PCT/JP2006/304412**

(87) International publication number:
**WO 2006/095748 (14.09.2006 Gazette 2006/37)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **07.03.2005 JP 2005063169
07.04.2005 JP 2005110425
17.08.2005 US 205219**

(71) Applicant: **Intellectual Property Bank Corp.
Tokyo 105-0001 (JP)**

(72) Inventors:
• **MIYAMOTO, Kaoru,
102, Villa White Nagasaki
Tokyo 171-0051 (JP)**
• **ASADA, Makoto,
c/o Intellectual Pty Bank Corp.
Tokyo 105-0001 (JP)**

• **HASUKO, Kazumi,
c/o Intellectual Pty Bank Corp.
Tokyo 105-0001 (JP)**
• **HOTTA, Hideaki,
c/o Intellectual Pty Bank Corp.
Tokyo 105-0001 (JP)**
• **ORITO, Manabu,
c/o Intellectual Pty Banc Corp.
Tokyo 105-0001 (JP)**
• **ZHANG, Yu,
c/o Intellectual Pty Bank Corp.
Tokyo 105-0001 (JP)**

(74) Representative: **Style, Kelda Camilla Karen et al
Page White & Farrer
Bedford House
John Street
London, WC1N 2BF (GB)**

(54) **STOCK PORTFOLIO SELECTING DEVICE, STOCK PORTFOLIO SELECTING METHOD, AND STOCK PORTFOLIO SELECTING PROGRAM**

(57) Upon selecting the stock portfolio, a plurality of corporate valuation index related data containing an intellectual asset related index is acquired (steps S1 to S6), analysis is performed with the acquired corporate valuation index related data and a company ranking corresponding to at least one prescribed index is created (steps S7 to S13 and S19), a prescribed number of companies is selected from the created company ranking (step S14), an investment ratio is selected in relation to each of the selected companies (step S15), and, based on the obtained distribution result of the investment ratio, a stock portfolio corresponding to the selected company is created and output (steps S16, S17). Therefore, a device for automatically selecting a more preferable stock portfolio based on the results upon performing a comprehensive valuation of companies using a corporate valuation index containing an intellectual asset related index is provided.

FIG. 3

**Description**

BACKGROUND OF THE INVENTION

1. Field of the Invention

The present invention relates to a stock portfolio selection device for selecting a stock portfolio based on a corporate valuation index. The present invention further relates to a stock portfolio selection method and a medium storing a program for stock portfolio selection.

2. Description of the Related Art

When creating a stock portfolio, it is desirable to incorporate stock expected to yield a high return in the portfolio while combining a portfolio capable of reducing the risk of the return fluctuating. Thus, when creating a stock portfolio, in addition to selecting the stock, it is desirable to seek a portfolio combination giving consideration to the optimum investment ratio in relation to the selected stock. Thereupon, stocks expected to yield a high return are often determined by financial institutions and financial analysts based on their knowledge, experience and quantitative analysis. Further, as data for making this decision, for instance, it is standard to employ macro data publicly announced by government and public offices or the Tokyo Stock Exchange such as the transition of the interest rate trend, transition of the Nikkei Stock Average/TOPIX, capital investment trend of companies and so on. Moreover, as micro data, it is standard to employ the previous stock price transition and financial statements of companies as data for making this decision. In other words, the selection of this kind of stock was made based on the macro data publicly announced as described above and the valuation on the on-balance assets represented in financial statements.

Nevertheless, today, the profit and corporate value of companies are determined depending largely on the off-balance intellectual assets such as technology, R&D and brand. And, in light of the above, proposed is a method of selecting stock expected to yield a high return in the future by valuating the potential technical capabilities of companies not represented in financial statements and the like with an intellectual asset related index such as patents (e.g., US Patent No. 6175824)

Nevertheless, in foregoing US Patent No. 6175824, as the index used for calculating the corporate valuation, only an index obtained from public information of intellectual assets such as patents is used. Further, it is not necessarily clear as to how the selection of such index is being conducted.

Indeed, the profit and corporate value of companies as described above depend largely on the off-balance intellectual assets. Nevertheless, it is not possible to appropriately perform corporate valuation without giving any consideration to financially strategic elements such as the utilization of tangible fixed assets such as facilities and utilization of funds for reducing opportunity costs. Further, the foregoing US Patent No. 6175824 performs analysis based on the Monte Carlo Method and the like employing an index such as the number of citations (as patentee) and number of patents granted. Nevertheless, grounds for determining whether the valuation conducted with such indexes are adequate are unclear. Moreover, the foregoing US Patent No. 6175824 only selects stock, and it does not refer to the method of creating an optimum portfolio by combining the various stocks that were selected.

Thus, the present invention uses the indexes obtained from patents representing off-balance intellectual assets and further adds data obtained from information concerning the management and finance of companies. The present invention then comprehensively valuates how the respective companies are creating and operating the trinity management strategy consisting of business strategy, R&D strategy and intellectual property strategy so as to increase the corporate value. Moreover, this is used as the criterion of judgment upon selecting the stock for portfolio. In addition, the optimum investment ratio can be determined and output based on the same criterion as the case of selecting the stock for portfolio. As a result, provided is a highly convenient stock portfolio selection device, stock portfolio selection method and medium storing a program for stock portfolio selection.

SUMMARY OF THE INVENTION

In order to achieve the foregoing object, the present invention comprising the following constitution. Incidentally, definition of the terms used for explaining the invention claimed in any of the claims shall be applicable to the invention pertaining to the other claims to the extent possible according to its nature.
(1) The present invention is a device for selecting a stock portfolio based on a corporate valuation index, having the following means; that is, data acquisition means for acquiring corporate valuation index related data containing an intellectual asset related index; company ranking creation means for performing corporate valuation with the corporate valuation index related data to create a company ranking; stock-for-portfolio stock selection means for selecting a prescribed number of companies from the company ranking and making the companies the stock for portfolio; investment ratio selection means for selecting the investment ratio of funds to be invested in the respective companies selected by the stock-for-portfolio selection means; and stock portfolio creation means for creating a stock portfolio corresponding to the stock for portfolio based on the investment ratio.

According to the foregoing constitution, the intellectual assets accumulated based on R&D activities and the potential competitive power as the organization and personnel for creating intellectual assets can be valuated appropriately. Further, based on the strategic utilization of such intellectual assets and organization/personnel, companies expected to increasing their overt competitive power and profitability can be appropriately selected. And, it is also possible to select the distribution ratio of invested funds in relation to the selected stock-for-portfolio company based on the same criterion as in the case of selecting the companies. Thereby, information on the exchange of stocks and investment ratio can be acquired easily and accurately.
(2) In the foregoing stock portfolio selection device, it is desirable to further provide industry/company selection means for selecting an industry and/or company.

According to the foregoing constitution, in addition to the operation and effect described above, the industry and/or company of the investor's interest can be arbitrarily designated upon selecting the optimum stock portfolio.
Incidentally, the term "industry" as used herein is not limited to the case of indicating the business industry as used generally, and also refers to an arbitrary company group. For example, a group classified by the type of technology, merchandise or product; or a group classified based on the International Patent Classification (IPC) as the patent classification, FI, F term, and US Patent Classification (UPC) or US Standard Industry Classification (SIC).
(3) In each of the foregoing stock portfolio selection devices, as the company ranking creation means, it is desirable to provide index selection means for selecting a prescribed number of corporate valuation indexes so as to contain at least one intellectual asset related index from the corporate valuation index related data acquired with the data acquisition means; and principle component analysis means for performing principle component analysis with the corporate valuation index selected by the index selection means and calculating the principle component score of each company.

According to the foregoing constitution, upon selecting a stock-for-portfolio company, a selection is made from the corporate valuation index related data so as to contain at least one intellectual asset related index. Therefore, in addition to the respective operations and effects described above, the intellectual assets accumulated based on R&D activities and the potential competitive power as the organization and personnel for creating intellectual assets can be valuated appropriately, and companies expected to increasing their profitability can be appropriately selected.
In addition, since a company ranking can be created based on the principle component analysis, stock-for-portfolio candidate companies can be objectively selected without depending on arbitrariness.
(4) In each of the foregoing stock portfolio selection devices, as the company ranking creation means, it is preferable to provide factor analysis means for performing factor analysis to extract factor with the corporate valuation index related data acquired by the data acquisition means and uniting the corporate valuation index based on the factor; multiple regression analysis means for performing multiple regression analysis based on the factor extracted by the factor analysis means and the profit related index representing various profits such as intellectual asset related profits, and selecting the corporate valuation index based on the factor showing the statistical significance in relation to the profit related index; and principle component analysis means for performing principle component analysis with the corporate valuation index selected by the multiple regression analysis means and calculating principle component score of each company.

According to the foregoing constitution, upon selecting a stock-for-portfolio company, corporate valuation is performed upon selecting a factor showing the statistical significance in relation to the profit related index such as intellectual asset related profits. Therefore, the indexes are made comprehensive upon clarifying the structure of what is contributing to the various profits such as the intellectual asset related profits of the company. Thus, in addition to the respective operations and effects described above, stock-for-portfolio candidate companies can be objectively selected based on the corporate valuation indeed without depending on arbitrariness.

(5) In each of the foregoing stock portfolio selection devices, as the company ranking creation means, it is preferable to provide covariance structure analysis means for performing covariance structure analysis with the corporate valuation index containing the intellectual asset related index as observed variable so as to perform corporate valuation to the respective companies.

According to the foregoing constitution, in addition to the foregoing operations and effects, the causal structure among abstract elements that cannot be directly observed with covariance structure analysis can be comprehended and valuated. Further, by making various indexes such as the intellectual asset related index an observed variable, it will be possible to comprehensively valuate companies that are promoting the management strategy of such intellectual assets and linking this to the improved profitability of the company. Moreover, it will be possible to valuate companies multilaterally per index constituting the observed variable.

(6) In each of the foregoing stock portfolio selection devices, the covariance structure analysis means preferably comprise:

input means for inputting causal model information which sets a "financial profitability" factor, a "patent strategy" factor, an "R&D investment" factor, and an "intellectual property strategy management" factor as latent variables, sets a plurality of company evaluation indexes including the intellectual asset related index as observed variables, sets, as error variables, a unique factor of each of the observed variables that is not prescribed by the "financial profitability" factor, the "patent strategy" factor, and the "R&D investment" factor, and a variation factor that is not prescribed by the "financial profitability" factor, the "patent strategy" factor, and the "R&D investment" factor among factors that prescribe the "intellectual property strategy management" factor, sets coefficients in which each of the "financial profitability" factor, the "patent strategy" factor, and the "R&D investment" factor influences the "intellectual property strategy management" factor as coefficients between latent variables, and sets coefficients in which each of the "financial profitability" factor, the "patent strategy" factor, the "R&D investment" factor and the "intellectual property strategy management" factor influences any one of the plurality of company evaluation indexes as latent variable-observed variable coefficients;

causal model creation means for creating a matrix equation of causal model based on the causal model information input from the input means;

covariance structure creation means for creating a covariance structure which expresses a variance-covariance matrix of the observed variable contained in the matrix equation with a function of the coefficients hypothesized with the causal model information;

company evaluation index related data variance-covariance matrix calculation means for calculating a variance-covariance matrix based on the company evaluation index related data acquired with the data acquisition means;

coefficient estimated value calculation means for calculating estimated values of each of the coefficients by approximating the covariance structure to the company evaluation index related data variance-covariance matrix as much as possible;

adaptation verification means for calculating a value of a prescribed adaptation index based on the estimated value of each of the coefficients calculated with the coefficient estimated value calculation means and the company evaluation index related data variance-covariance matrix, and verifying the adaptation of the causal model based on the value of the adaptation index;

causal model determination means for determining the matrix equation when it is determined that the divergence between the causal model and the company evaluation index related data is within a tolerance level as a result of the verification by the adaptation verification means; and

factor score calculation means for calculating factor stores of the "financial profitability" factor, the "patent strategy" factor, the "R&D investment" factor and the "intellectual property strategy management" factor based on the respective coefficients contained in the determined matrix equation and each of the observed variables.

According to the foregoing configuration, in addition to each of the foregoing operations and effects, it is possible to understand and evaluate the causal structure by creating a hypothesis of such causal structure between the respective factors of "financial profitability" factor, "patent strategy" factor, "R&D investment" factor, and "intellectual property strategy management" factor, which are abstract elements that cannot be directly observed, and performing covariance structure analysis. In addition, by performing company evaluation upon verifying the foregoing causal structure, it is possible to more accurately valuate companies that are driving their management strategy of intellectual assets and linking this to improved business profitability.

Furthermore, by performing company evaluation based on the difference in the "patent strategy" factor score and the "intellectual property strategy management" factor score of the respective companies, it is possible to reflect the potential competitive power, which has yet to appear in the market valuation of the company, on the company evaluation.

(7) In each of the foregoing stock portfolio selection devices,

the company ranking creation means preferably comprise covariance structure analysis means for performing covariance structure analysis to calculate factor scores of a "patent strategy" factor and an "intellectual property strategy management" factor based on causal model information which sets a "financial profitability" factor, the "patent strategy" factor, an "R&D investment" factor, and the "intellectual property strategy management" factor as latent variables, sets a plurality of company evaluation indexes including the intellectual asset related index as observed variables, sets, as error variables, a unique factor of each of the observed variables that is not prescribed by the "financial profitability" factor, the "patent strategy" factor, and the "R&D investment" factor, and a variation factor that is not prescribed by the "financial profitability" factor, the "patent strategy" factor, and the "R&D investment" factor among factors that prescribe the "intellectual property strategy management" factor,

sets coefficients in which each of the "financial profitability" factor, the "patent strategy" factor, and the "R&D investment" factor influences the "intellectual property strategy management" factor as coefficients between latent variables, and

sets coefficients in which each of the "financial profitability" factor, the "patent strategy" factor, the "R&D investment" factor and the "intellectual property strategy management" factor influences any one of the plurality of company evaluation indexes as latent variable-observed variable coefficients; and

the stock-for-portfolio stock selection means preferably comprise:

score difference and/or factor score average value of all companies magnitude correlation calculation means for calculating score difference between the "patent strategy" factor score and the "intellectual property strategy management" factor score of each company calculated with the covariance structure analysis means, and/or, respectively calculating magnitude correlation of a sum of the "patent strategy" factor score and the "R&D investment" factor score of each company calculated with the covariance structure analysis means with an average value of all companies, and magnitude correlation of an "intellectual property strategy management" factor score of each company with an average value of all companies;

undervalued company extraction means for extracting, as undervalued companies, companies in which the score difference obtained by subtracting the "intellectual property strategy management" factor score from the "patent strategy" factor score is greater than a first prescribed value, and/or companies in which the sum of the "patent strategy" factor score and the "R&D investment" factor score is greater than the average value of all companies, and the "intellectual property strategy management" factor score is smaller than the average value of all companies; and

stock-for-portfolio candidate decision means for setting a company group extracted with the undervalued company extraction means as primary stock-for-portfolio candidates.

According to the foregoing configuration, in addition to each of the foregoing operations and effects, it is possible to understand and evaluate the causal structure of the "financial profitability" factor, the "patent strategy" factor, the "R&D investment" factor, and the "intellectual property strategy management" factor, which are abstract elements that cannot be directly observed, by performing covariance structure analysis. In addition, by performing company evaluation based on the sum of the "patent strategy" factor score and the "R&D investment" factor score of each company and the "intellectual property strategy management" factor score, it is possible to reflect the potential competitive power, which has yet to appear in the market valuation of the company, on the company evaluation.

A ranking on the "intellectual property strategy management" factor score is a ranking that does not only give considering to intellectual property, it also gives consideration to the financial strategy and market valuation of each company. Meanwhile, a ranking on the "patent strategy" factor score is a ranking that accurately reflects a part of the intellectual property strategy of each company. The intellectual property activity of each company is an activity with a long-term view toward improving the company value in the future, and will become the source of the future cash flow and company value improvement of each company. Accordingly, by focusing on the score difference between the "patent strategy" factor score and the "intellectual property strategy management" factor score, the gap between the valuation of each company for its performance to date and the valuation of future potential growth will become evident. Thus, it is possible to determine whether the current valuation of each company is an undervalued valuation.

Moreover, by further adding R&D activity as an investment element for creating patents and know-how of each company, it is possible to evaluate the future potential growth of each company. Further, by extracting companies that are evaluated the exact opposite of the relative valuations concerning the sum of the "patent strategy" factor score and the "R&D investment" factor score, and the "intellectual property strategy management" factor score of each company with the average value of all companies, the gap in valuation of the future potential growth in relation to the current evaluation of each company will become evident. Thus, it is possible to determine whether the current evaluation of each company is an undervalued evaluation from multiple aspects.

(8) In the stock portfolio selection device,
the stock-for-portfolio stock selection means may further comprise overvalued company extraction means for extracting, as overvalued companies, companies in which the score difference obtained by subtracting the "intellectual property strategy management" factor score from the "patent strategy" factor score is less than a second prescribed value, and/or, companies in which the sum of the "patent strategy" factor score and the "R&D investment" factor score is smaller than the average value of all companies, and the "intellectual property strategy management" factor score is greater than the average value of all companies; and
the stock-for-portfolio candidate decision means set both the company group extracted with the undervalued company extraction means and the company group extracted with the overvalued company extraction means as the primary stock-for-portfolio candidates.

Like this, by selecting companies in which the current evaluation is an undervalued valuation and so-called overvalued companies that show the opposite tendency, the portfolio will be equipped with a risk hedge function.

(9) In each of the foregoing stock portfolio selection devices,
the stock-for-portfolio stock selection means may further comprise:

company technology evaluated value calculation means for calculating a company technology evaluated value of each company included in the primary stock-for-portfolio candidates by using all or at least one among case share of the company among the overall number of patent applications or overall number of effective patents in a prescribed technical field to which the company's intellectual assets belong, excess growth rate showing the difference in the growth rate of the number of patent applications or the number of effective patents of the company in relation to the growth rate of the overall number of patent applications or overall number of effective patents in a prescribed technical field during a prescribed period,
patent concentration index showing the degree of concentration/diversification of company's technical development field by indexing the share of the number of patent applications or the number of effective patents for each prescribed technical field among the overall number of patent applications or overall number of effective patents during a prescribed period of each company, and advantageous patent ratio showing the ratio of advantageous patents among the overall patents owned by each company based on competitor diversion and right acquisition motivation degree for each individual patent calculated using historical information including the number of oppositions raised ratio, the number of competitor citations ratio, and the number of appeals ratio.

According to the foregoing configuration, in addition to each of the foregoing operations and effects, it is possible to appropriately evaluate the potential competitive power of the company to be evaluated based on the share size of each field that is unclear merely from the number of patent applications of the company to be evaluated, and because significance is given as a leading indicator by additionally giving consideration to the growth rate, and influence of the size of business is reduced by additionally giving consideration to the concentration ratio in a specified field.

(10) In each of the foregoing stock portfolio selection devices,
the stock-for-portfolio stock selection means may further comprise:

company technology evaluated value calculation means for calculating a company technology evaluated value of each company included in the primary stock-for-portfolio candidates by using all or at least one among case share of the company among the overall number of patent applications or overall number of effective patents in a prescribed technical field to which the company's intellectual assets belong,
excess growth rate showing the difference in the growth rate of the number of patent applications or the number of effective patents of the company in relation to the growth rate of the overall number of patent applications or overall number of effective patents in a prescribed technical field during a prescribed period,
patent concentration index showing the degree of concentration/diversification of company's technical development field by indexing the share of the number of patent applications or the number of effective patents for each prescribed technical field among the overall number of patent applications or overall number of effective patents during a prescribed period of each company, and

advantageous patent ratio showing the ratio of advantageous patents among the overall patents owned by each company based on competitor diversion and right acquisition motivation degree for each individual patent calculated using historical information including the number of oppositions raised ratio, the number of competitor citations ratio, and the number of appeals ratio; and

primary stock-for-portfolio candidates cutback means for excluding, from the primary stock-for-portfolio candidates, a prescribed number of top rank companies having a high company technology evaluated value among the overvalued companies, and excluding a prescribed number of low rank companies having a low company technology evaluated value among the undervalued companies;

wherein the stock-for-portfolio candidate decision means set the remaining company group that was not excluded with the primary stock-for-portfolio candidates cutback means as secondary stock-for-portfolio candidates.

It is possible to analyze and evaluate the intellectual assets of each company by including the attribute and quality of patents in addition to quantitative data such as the number of patent applications and the number of effective patents. Thereby, the potential growth of each company is valuated upon adding patent information, which could not be considered fully in the selection of the primary stock for portfolio, and the extraction of the overvalued/undervalued companies can be performed thereby.

(11) In each of the foregoing stock portfolio selection devices, the company technology evaluated value calculation means may further comprise:

per-company per-technical field case share calculation means for calculating, regarding all technical fields to which the company's intellectual assets belong, the number of patent applications or the number of effective patent share of the company per-technical field among the overall number of patent applications or the overall number of effective patents in each technical field to which the company's intellectual assets belong;

average case share of all technical fields calculation means for calculating an average value of all technical fields of the case share by dividing a number obtained by totaling the per-company per-technical field case share for all technical fields by the number of technical fields;

company excess growth rate calculation means for calculating the excess growth rate showing the difference in the growth rate of the number of patent applications or the number of effective patents of the company in relation to the growth rate of the overall number of patent applications or the overall number of effective patents of a prescribed technical field during a prescribed period;

company corrected relative case share calculation means for calculating a company corrected relative case share by multiplying the average case share of all technical fields with the company excess growth rate;

company patent concentration index calculation means for calculating the company's patent concentration index by squaring the share of the number of patent applications or the number of effective patents per prescribed technical field among the overall number of patent applications or the overall number of effective patents during a prescribed period of the company, and adding the squared share to all technical fields to which the company's intellectual assets belong; and

company patent valuation index calculation means for calculating patent valuation index by multiplying the company corrected relative case share with the company patent concentration index.

According to the foregoing configuration, in addition to each of the foregoing operations and effects, it is possible to elicit the positioning of one's own company by comparing the patents owned by each company and the patents of competitors. Simultaneously, by also giving consideration to the degree of concentration of the company's internal technical development field, the quality aspect of patents owned by each company can be evaluated multilaterally.

(12) In each of the foregoing stock portfolio selection devices, it is desirable that the investment ratio selection means distribute investment funds equally to the stock of the respective companies selected by the stock-for-portfolio selection means.

The potential value of the company is appropriately valuated upon containing at least one intellectual asset related index from the corporate valuation index related data at the stage of selecting the stock-for-portfolio company. Therefore, by equally distributing the invested funds, in addition to the respective operations and effects described above, a highly concise and profitable stock portfolio can be created.

(13) In each of the foregoing stock portfolio selection devices, the investment ratio selection means desirably comprise:

theoretical stock price calculation means for calculating the theoretical stock price of the respective companies selected by the stock-for-portfolio selection means;

first parameter calculation means for calculating first parameters of the theoretical excess profit in relation to the market stock price of the respective companies, theoretical sensitivity of the stock price of the respective companies in relation to the fluctuation of the market stock price, and theoretical residual showing an independent price movement of the stock of the respective companies based on said theoretical stock price;

expected return calculation means for calculating the expected return of the stock for portfolio based on the first parameters;

risk calculation means for calculating the risk of the stock for portfolio based on the first parameters;

efficient frontier derivation means for deriving the efficient frontier by calculating the share of portfolio of the stock for portfolio in relation to the value of the respective expected returns so as to make the value of the expected return a fixed value;

risk-free rate data acquisition means for acquiring the risk-free rate data;

capital market line derivation means for deriving a capital market line through a fixed point of the risk-free rate and tangent to the efficient frontier;

optimum share of portfolio calculation means for calculating the share of portfolio of the stock for portfolio in the contact point of the efficient frontier and the capital market line; and

fund investment ratio calculation means for calculating the fund investment ratio in relation to the stock of the respective companies forming the stock for portfolio based on the optimum share of portfolio.

According to the foregoing constitution, by calculating the expected return and risk of each stock of the respective companies of the stock for portfolio, in addition to the respective operations and effects described above, it will be possible to select an investment ratio in the contact point of the capital market line and efficient frontier. Further, by valuating, with the theoretical stock price, the potential competitive power of the company, it is expected that the distortion of the actual stock price due to arbitrariness of the market trend or the like unrelated to the asset value essential to the company will be eliminated as much as possible. As a result, the stock portfolio based on the correction of this theoretical stock price, in comparison to the stock portfolio based on the actual stock price, will be able to achieve the reduction of relative risks and/or a relatively high expected return. In other words, it will be possible to select a more preferable investment ratio.

(14) In each of the foregoing stock portfolio selection devices, the investment ratio selection means desirably comprise:

theoretical stock price calculation means for calculating the theoretical stock price of the respective companies selected by the stock-for-portfolio selection means;

stock price index data acquisition means for acquiring price movement data of stock price index;

individual stock data acquisition means for acquiring price movement data of the stock price of said respective companies;

second parameter calculation means for performing comparative analysis of the price movement of said stock price index and the price movement of the stock price of said respective companies, and calculating second parameters of the excess profit of each stock of said respective companies in relation to the profit of said stock price index, sensitivity of the stock price of said respective companies in relation to the price movement of said stock price index, and residual showing an independent price movement of the stock of said respective companies which is independent from the price movement of said stock price index;

correction means for correcting said second parameters based on said theoretical stock price;

expected return calculation means for calculating the expected return of the stock for portfolio based on the corrected second parameters;

risk calculation means for calculating the risk of the stock for portfolio based on the corrected second parameters;

efficient frontier derivation means for deriving the efficient frontier by calculating the share of portfolio of the stock for portfolio in relation to the value of the respective expected returns so as to make the value of the expected return a fixed value and make the value of said risk a minimum value;

risk-free rate data acquisition means for acquiring the risk-free rate data;
capital market line derivation means for deriving a capital market line through a fixed point of the risk-free rate and tangent to the efficient frontier;
optimum share of portfolio calculation means for calculating the share of portfolio of the stock for portfolio in the contact point of the efficient frontier and the capital market line; and
fund investment ratio calculation means for calculating the fund investment ratio in relation to the stock of the respective companies forming the stock for portfolio based on the optimum share of portfolio.

According to the foregoing constitution, by calculating the expected return and risk of each stock of the respective companies of the stock for portfolio, in addition to the respective operations and effects described above, it will be possible to select an investment ratio in the contact point of the capital market line and efficient frontier. Further, by correcting, with the theoretical stock price, the parameter calculated based on the comparative analysis of the price movement of the stock price index and the price movement of the stock price of the respective companies and appropriately valuating the potential competitive power of the company, it is expected that the distortion of the actual stock price due to arbitrariness of the market trend or the like unrelated to the asset value essential to the company will be eliminated as much as possible. As a result, the stock portfolio based on the correction of this theoretical stock price, in comparison to the stock portfolio based on the actual stock price, will be able to achieve the reduction of relative risks and/or a relatively high expected return. In other words, it will be possible to select a more preferable investment ratio.
(15) In each of the foregoing stock portfolio selection devices, the investment ratio selection means desirably comprise:

incorporation recommended company selection means for selecting incorporation recommended companies that satisfy a prescribed standard among the companies selected as the secondary stock-for-portfolio candidates;
minimum incorporation ratio setting means for setting the minimum incorporation ratio to each stock of the respective incorporation recommended companies within a range where the total share of portfolio regarding all incorporation recommended companies will be less than 100% of the total invested amount;
stock price index data acquisition means for acquiring price movement data of stock price index;
individual stock data acquisition means for acquiring price movement data of the stock price of each of companies that are the primary stock-for-portfolio candidates;
second parameter calculation means for performing comparative analysis of the price movement of the stock price index and the price movement of the stock price of each company, and calculating the second parameter group including excess earnings of each stock of each company in relation to profits of the stock price index, sensitivity of the stock price of each company in relation to the price movement of the stock price index, and residual showing an independent price movement of the stock of each company that is independent from the price movement of the stock price index;
expected return calculation means for calculating the expected return of the stock for portfolio based on the second parameter group;
risk calculation means for calculating the risk of the stock for portfolio based on the second parameter group;
efficient frontier derivation means for deriving the efficient frontier by calculating a share of portfolio of the stock for portfolio in relation to the value of each expected return with the expected return being a fixed value and the risk being a minimum value while holding at least the incorporation recommended stock of each of the minimum incorporation ratios;
risk-free assets risk-free rate data acquisition means for acquiring the risk-free rate data of risk-free assets;
capital market line derivation means for deriving a capital market line to come in contact with the efficient frontier with the risk-free rate of the risk-free assets as the fixed point;
optimal share of portfolio calculation means for calculating the share of portfolio of the stock for portfolio in the contact point of the efficient frontier and the capital market line; and
fund investment ratio calculation means for calculating the fund investment ratio for each stock of each company included in the stock for portfolio based on the optimal share of portfolio.

According to the foregoing configuration, it is possible to calculate the optimal share of portfolio of the stock for portfolio upon selecting the incorporation recommended companies in which the potential growth or technical capability were valued highly, and incorporating their stock at a fixed ratio. Thereby, the stock portfolio including the incorporation recommended companies is able to realize a relative decrease of risk and/or relatively high expected return in comparison to a stock portfolio in which the investment ratio is selected based on the efficient frontier of all stocks for portfolio. In other words, a more preferable investment ratio can be selected.
(16) In each of the foregoing stock portfolio selection devices, it is desirable that the theoretical stock price calculation means being provided with the following; that is, total business income after tax theoretical value calculation means for calculating the total business income after tax theoretical value of a company with corporate valuation index related data containing the intellectual asset related index; investment capital cost calculation means for calculating the investment capital cost of a company with the corporate valuation index related data; theoretical economic excess profit calculation means for calculating the theoretical economic excess profit by deducting the investment capital cost from the total business income after tax theoretical value; discount rate calculation means for calculating the discount rate for derivation of the present value of a company with corporate valuation index related data containing the intellectual asset related index; theoretical market value added calculation means for calculating the theoretical market value added by dividing the theoretical economic excess profit by the discount rate; equity capital calculation means for calculating the equity capital of a company with corporate valuation index related data containing the intellectual asset related index; estimated aggregate market value calculation means for calculating the estimated aggregate market value of a company by adding the market value added and the equity capital; and theoretical stock price calculation means for calculating the theoretical stock price by dividing the estimated aggregate market value by the total outstanding stock volume.

According to the foregoing constitution, in addition to the respective operations and effects described above, the R&D cost related index and intellectual asset related index can be utilized to calculate the theoretical stock price appropriately reflecting the potential competitive power of the company. Based on this result, it will be possible to determine whether the present stock price of a prescribed company is relatively cheap or relatively expensive in comparison to the potential corporate value essential to such company.
(17) Further, the present invention also relates to a stock portfolio selection method including the same steps as the processing steps to be executed by each of the foregoing devices, and a computer-readable medium storing a program for causing a computer to execute the same functions as the functions provided to each of the foregoing devices.

BRIEF DESCRIPTION OF THE DRAWINGS

FIG. 1 is a diagram showing a configuration example of the stock portfolio selection system employing the stock portfolio selection device according to the first embodiment;
FIG. 2 is a block diagram showing the configuration of the stock portfolio selection device 30;
FIG. 3 is a flowchart showing the processing steps of the stock portfolio selection device 30;
FIG. 4 is a chart illustrating the business/management related index (No. 1);
FIG. 5 is a chart illustrating the business/management related index (No. 2);
FIG. 6 is a chart illustrating the R&D related index;
FIG. 7 is chart illustrating the intellectual asset related index (No. 1);
FIG. 8 is a chart illustrating the intellectual asset related index (No. 2);
FIG. 9 is a chart illustrating the intellectual asset related index (No. 3);
FIG. 10 is a diagram showing an example of a screen for selecting the industry, company and index;
FIG. 11 is a flowchart showing the processing steps for performing the principle component analysis;
FIG. 12 is a chart showing the characteristic vector of the principle component analysis;
FIG. 13 is a concentration type company ranking corresponding to principle component 1;
FIG. 14 is a diversification type company ranking corresponding to principle component 2;
FIG. 15 is a flowchart of the factor analysis processing;
FIG. 16 is a chart showing the factor loading, characteristic value and cumulative contribution ratio;
FIG. 17 is a chart showing a list of factors;
FIG. 18 is a flowchart of the multiple regression analysis processing;
FIG. 19 is a chart showing a list of the multiple regression analysis;
FIG. 20 is a diagram showing the relationship of the index and factor;
FIG. 21 is a chart showing a list of the principle component analysis;
FIG. 22 is a comprehensive index ranking based on the principle component analysis;

FIG. 23 is a flowchart of the covariance structure analysis processing;

FIG. 24 is an example of a path diagram for explaining outline of the concept of the covariance structure analysis;

FIG. 25 is an example of a path diagram representing the results of the covariance structure analysis for evaluating intellectual property strategic management companies;

FIG. 26 is a diagram showing weighting for each index for calculating evaluated value;

FIG. 27 is a chart showing the company ranking based on the analysis of the intellectual property strategic management model;

FIG. 28 is a chart showing the company ranking based on the analysis of the intellectual property strategic management model;

FIG. 29 is a chart showing the company ranking based on the analysis of the intellectual property strategic management model;

FIG. 30 is a chart showing the company ranking based on the analysis of the intellectual property strategic management model;

FIG. 31 is a chart showing the company ranking based on the analysis of the intellectual property strategic management model;

FIGS. 32A and 32B show scatter plot of the analysis of the intellectual property strategic management model;

FIGS. 33A and 33B show scatter plot of the analysis of the intellectual property strategic management model;

FIG. 34 is another example of a path diagram representing the results of the covariance structure analysis for evaluating intellectual property strategic management companies;

FIG. 35 is a flowchart explaining process of selecting portfolio based on selecting overvalued/undervalued companies;

FIG. 36 is a list of primary stock-for-portfolio selection candidates of undervalued companies;

FIG. 37 is a list of primary stock-for-portfolio selection candidates of overvalued companies;

FIG. 38 is a list of secondary stock-for-portfolio selection candidates of undervalued companies;

FIG. 39 is a list of secondary stock-for-portfolio selection candidates of overvalued companies;

FIG. 40 is a flowchart showing the selection operation of the investment ratio;

FIG. 41 is a diagram showing the price movement data of the index;

FIG. 42 is a diagram showing the price movement data of individual stock;

FIGS. 43A and 43B are diagrams showing an example of the calculated $\alpha_i$, $\beta_i$, $\varepsilon_i$;

FIG. 44 is a flowchart showing the processing steps of calculating the theoretical stock price;

FIG. 45 is a flowchart showing the processing steps of calculating the total business income after tax theoretical value;

FIG. 46 is a diagram showing an example of the results of the factor analysis and multiple regression analysis;

FIG. 47 is a diagram showing an example of the results of the multiple regression analysis;

FIG. 48 is a diagram showing an example of the results of the regression line of the ROA $\beta$ in relation to the factor;

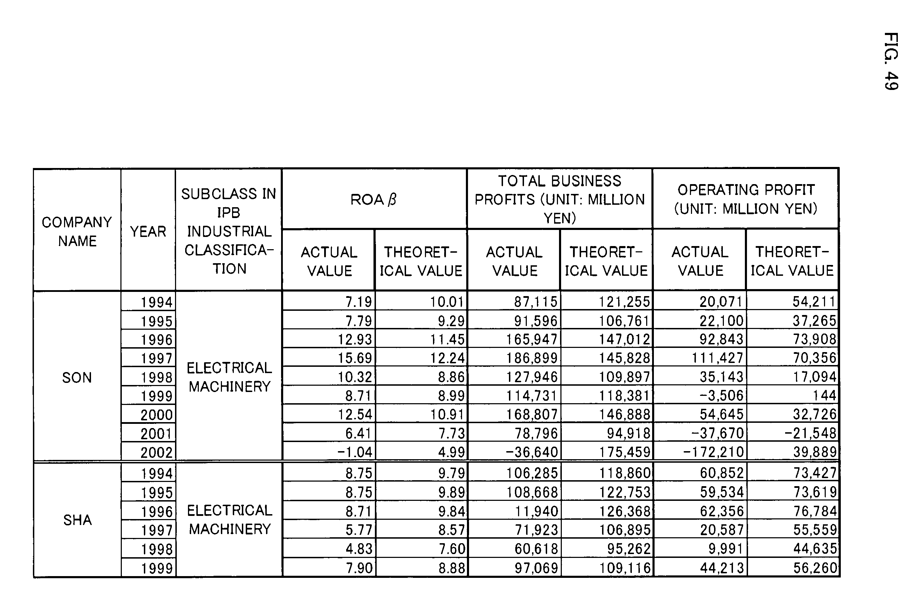

FIG. 49 is a diagram showing an example of the calculated theoretical stock price;

FIG. 50 is a list of the calculation results of the theoretical stock price;

FIG. 51 is a diagram showing an example of $\alpha_i$, $\beta_i$, $\varepsilon_i$ and $\alpha_i'$, $\beta_i'$, $\varepsilon_i'$:

FIG. 52 is a diagram showing an example of the efficient frontier and capital market line;

FIG. 53 is a diagram showing an example of the efficient frontier and capital market line;

FIG. 54 is a diagram showing an example of the theoretical incorporation ratio of each stock of the stock portfolio in the contact point;

FIG. 55 is a diagram showing an example of the actual incorporation ratio determined from the theoretical incorporation ratio;

FIG. 56 is a diagram showing an example of the stock portfolio corresponding to principle component 1 ;

FIG. 57 is a diagram showing an example of the stock portfolio corresponding to principle component 2;

FIG. 58 is a diagram showing a comparative example of the fluctuation ratio of the stock price;

FIG. 59 is a diagram showing an example of the return.

FIG. 60 is a flowchart showing the selection operation of the investment ratio according to a second embodiment;

FIG. 61 is a list of undervalued companies arranged in descending order of the factor score difference between a "patent strategy" factor score and an "intellectual property strategy management" factor score among the primary stock-for-portfolio selection candidates;

FIG. 62 is a diagram showing an example of the theoretical incorporation ratio of the respective stocks of the stock portfolio;

FIG. 63 is an example of a actual incorporation ratio decided based on the theoretical incorporation ratio; and

FIG. 64 is a diagram showing an example of the return.

DESCRIPTION OF REFERENCE MARKS

| 10 | Communication network |
|---|---|
| 20 | Database server |
| 20A | External database |
| 30 | Stock portfolio selecting device |
| 30A | Internal database |
| 31 | Printer |
| 100 | Stock portfolio selecting system |
| 301 | CPU |
| 302 | ROM |
| 303 | RAM |
| 304 | Recording medium mounting unit |
| 305 | Recording medium |
| 306 | Recording means interface |
| 307 | Calendar clock |
| 308 | Transmission-reception means |
| 309 | Communication line |
| 310 | Input means |
| 311 | Input interface |
| 312 | Display means |
| 313 | Display interface |
| 314 | Recording means interface |
| 315 | HDD |
| 316 | Printer interface |
| 317 | Bus |

DETAILED DESCRIPTION OF THE PREFERRED EMBODIMENTS

(1. Configuration)

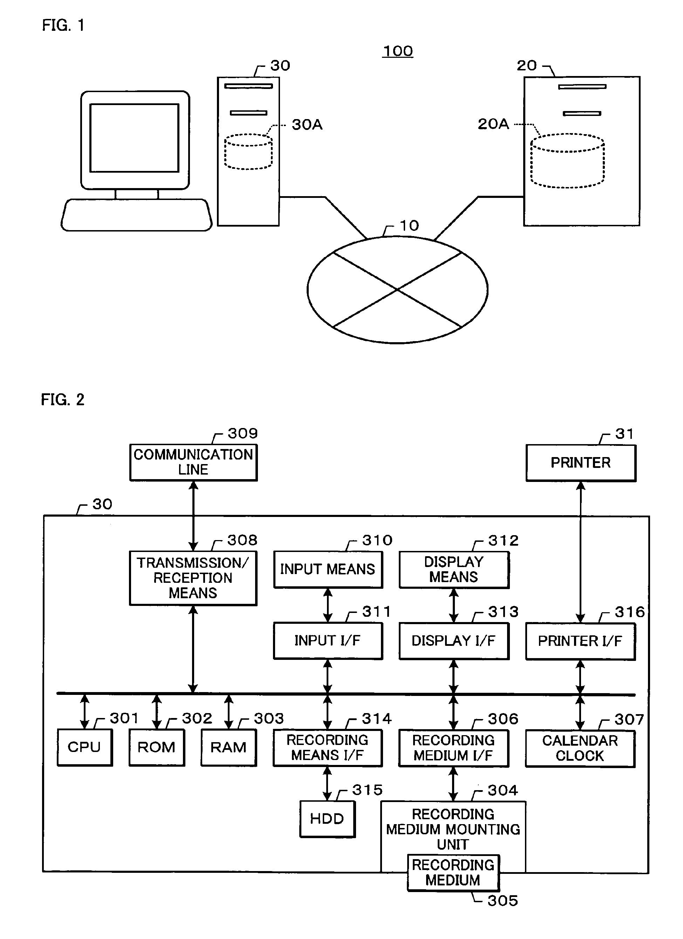

Embodiments of the present invention are now explained with reference to FIG. 1 and FIG. 2. FIG. 1 is a diagram showing the constitution of a stock portfolio selection system 100 containing a stock portfolio selection device 30 according to the first embodiment.

The stock portfolio selection system 100 is constituted from a stock portfolio selection device 30 and an external database server 20. The stock portfolio selection device 30 is connected to the external database server 20 via a communication network 10 such as the Internet, for instance, or is capable of incorporating external data from the external database server 20 offline via an appropriate recording medium.

Further, the external database 20A stores, for instance, an industry/company database storing company names based on industry or alphabetical order; corporate index such as the business/management related index or R&D related index or intellectual asset related index; classification of corporate indexes; various constants and threshold values and determination results on adequacy based on such threshold value; various types of information of categories and the like; and stock prices of the respective companies.

The stock portfolio selection device 30 is constituted from a computer such as a personal computer or workstation, and has an internal database 30A.

FIG. 2 is a block diagram showing the constitution of the stock portfolio selection device 30. As shown in FIG. 2, the stock portfolio selection device 30 has a CPU 301, a ROM 302, a RAM 303, a recording medium mounting unit 304, a recording medium 305, a recording medium interface 306, a calendar clock 307, a transmission/reception means 308, a communication line 309, an input means 310, an input interface 311, a display means 312, a display interface 313, a recording means interface 314, a recording means 315 such as a hard disk (HDD), a printer interface 316, and a bus 317.

The CPU 301 controls the overall operation of the stock portfolio selection device 30 while using the RAM 303 as the work area according to program information for the stock portfolio selection device.

Incidentally, the CPU 301 may execute all processing, or a plurality of dedicated processing devices may be provided so as to make the respective processing devices share and execute such processing.

The recording medium 305 is detachably mounted to the recording medium mounting unit 304. Further, the recording medium mounting unit 304 is connected to the bus 317 via the recording medium interface 306 which records and reads various types of information in and from the recording medium 305. Incidentally, the recording medium 305 is a detachable recording medium of a magnetic recording system or optical recording system as represented by semiconductors such as a memory card, MO or magnetic disk. The recording medium 305 is capable of housing the internal database 30A. Incidentally, the recording medium 305 is also capable of incorporating external data from the external database server 20 offline.

The calendar clock 307 is used as a clock means, and is connected to the bus 317.

The transmission/reception means 308 is connected to the external database server 20 with the communication line 309, and it communicates with the external database server 20 via the communication network 10, and acquires indexes for corporate valuation and stock prices of companies from the external database 20A of the external database server 20. The acquired data is stored in the HDD 315 or recording medium 305 as the internal database 30A. Incidentally, in the stock portfolio selection device 30, index data may be selected automatically or manually upon acquiring indexes for corporate valuation and stock prices of companies from the external database 20A.

The input means 310 is constituted from the likes of a keyboard, mouse, tablet or touch panel, and is connected to the bus 317 via the input interface 311. This input means 310 is used for selecting whether to update data, selecting the industry/company and selecting the analyzing method in the selection screen (not shown) of various instructions displayed on the display means 312.

The display means 312, for instance, is constituted from the likes of an LCD (Liquid Crystal Display), and is connected to the bus 317 via the display interface 313. This display means 312 displays the data input from the input means 310 and options of operational instructions on the screen. Further, the display means 312 displays the results of the calculated theoretical stock price on the screen.

The HDD (hard disk) 315 is a recording means storing various types of information such as the various constants relating to the processing of the stock portfolio selection device 30 and attribute information upon communicating with a communication device on a network; connection information such as URL (Uniform Resource Locators), gateway information and DNS (Domain Name System); management/finance information regarding the management of companies; technical documents concerning patents; patent information; market value information; and threshold values for determining the corporate value and determination results of adequacy based on such threshold value.

Further, the information stored in the HDD 315 can be read out via the recording means interface 314, and information can also be written in the HDD 315. The HDD 315 houses the internal database 30A having recorded thereon various data.

The printer 31 is connected to the bus 317 via the printer interface 316. This printer 31, as a printing means, prints the chart and the like concerning the stock portfolio created by the stock portfolio selection device 30 on a paper medium or the like.

According to the stock portfolio selection system according to an embodiment of the present invention, it is possible to perform a comprehensive valuation of companies with a corporate valuation index containing an intellectual asset related index and the like. In addition, it is possible to select a company to become the stock for portfolio candidate, and to create a stock portfolio enabling the output of the optimum investment ratio. Further, information on the exchange of stocks and investment ratio can be acquired easily and accurately.

(2. Processing steps)

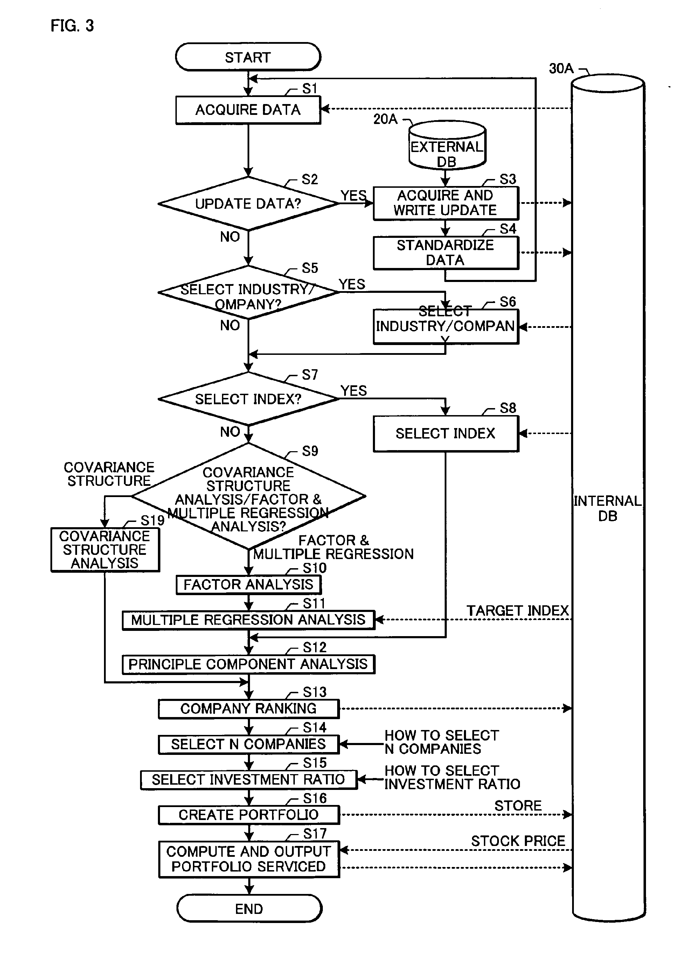

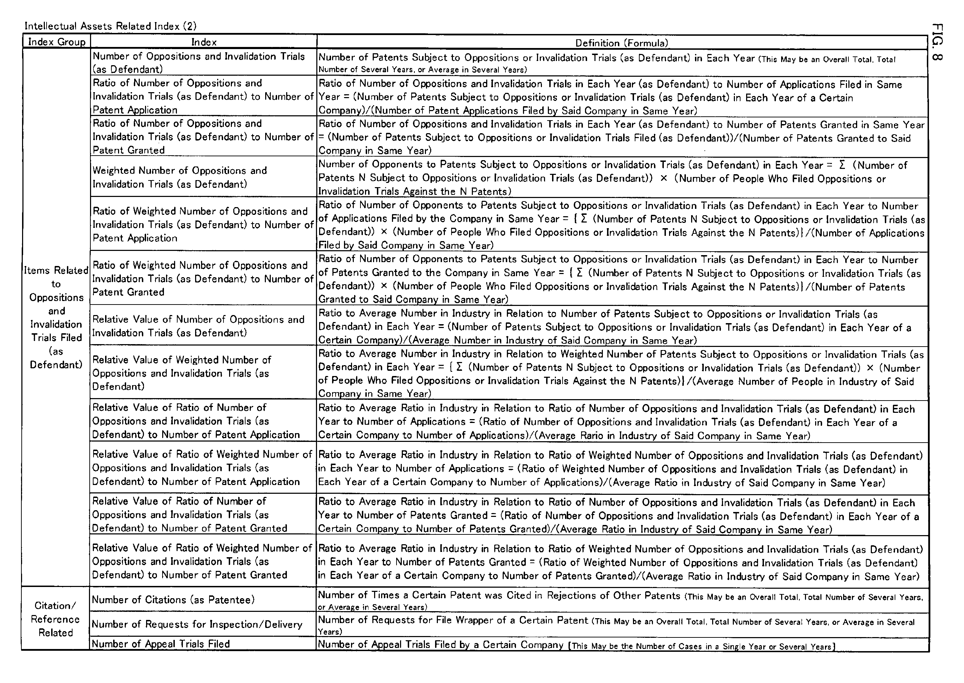

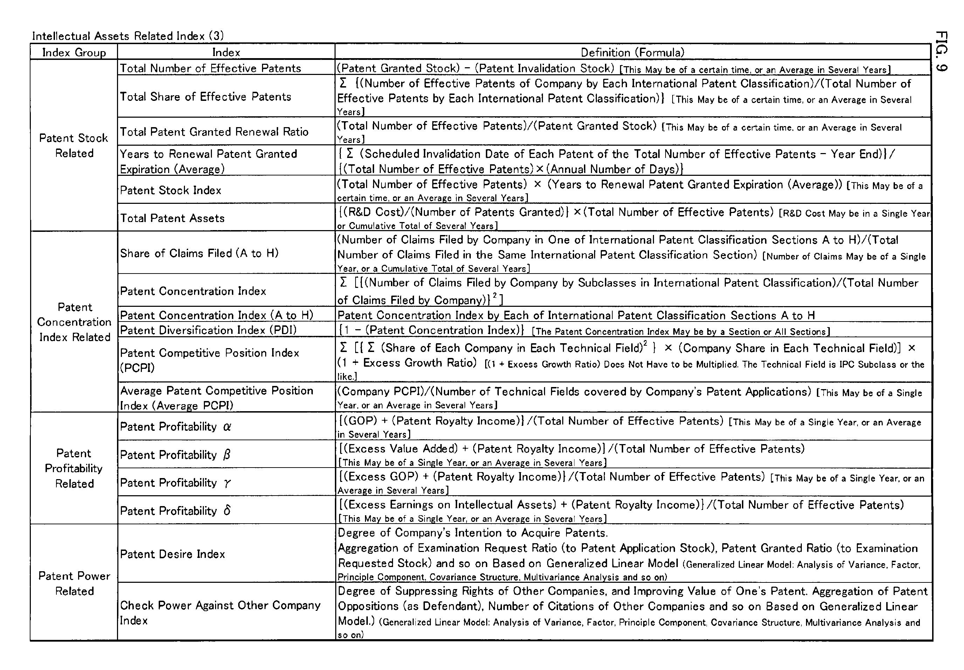

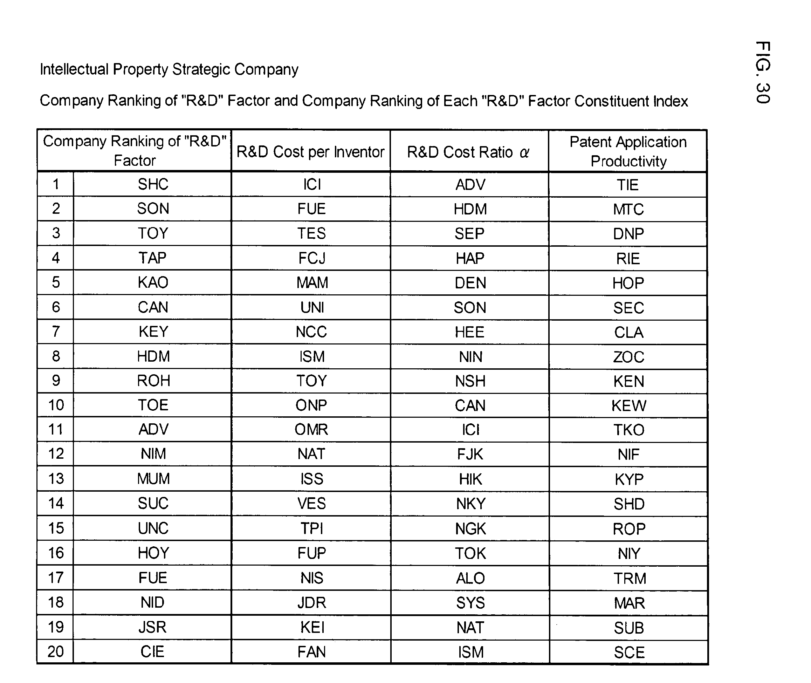

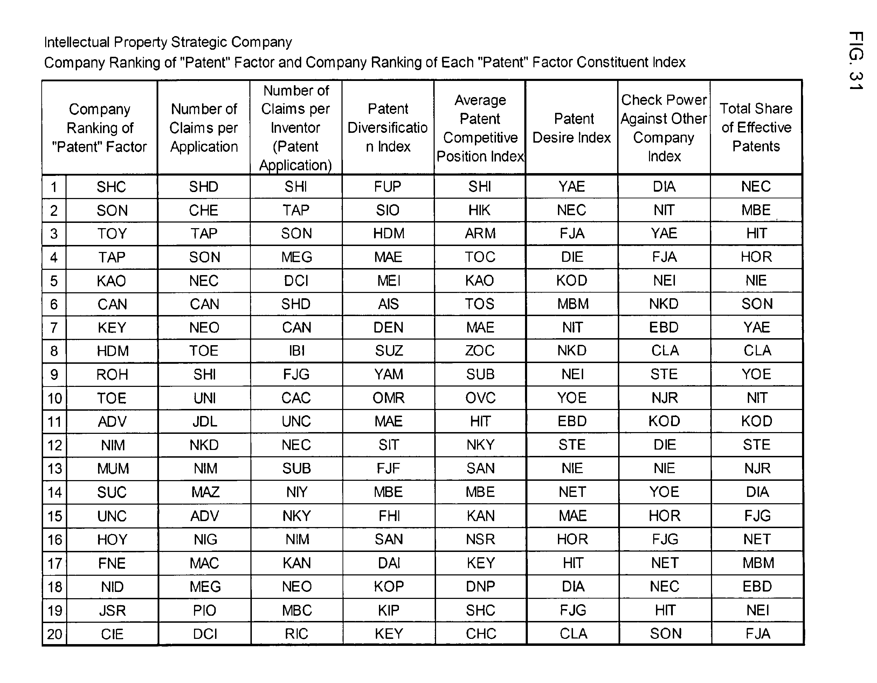

Next, the processing steps of creating the stock portfolio with the stock portfolio selection device, method and program are explained with reference to FIG. 3 to FIG. 47. FIG. 3 is a flowchart representing the processing steps of the stock portfolio selection based on the stock portfolio selection system 100. This processing is realized pursuant to the control of the CPU 301 based on the information incorporated in the stock portfolio selection program.

(2-1. Data Acquisition)

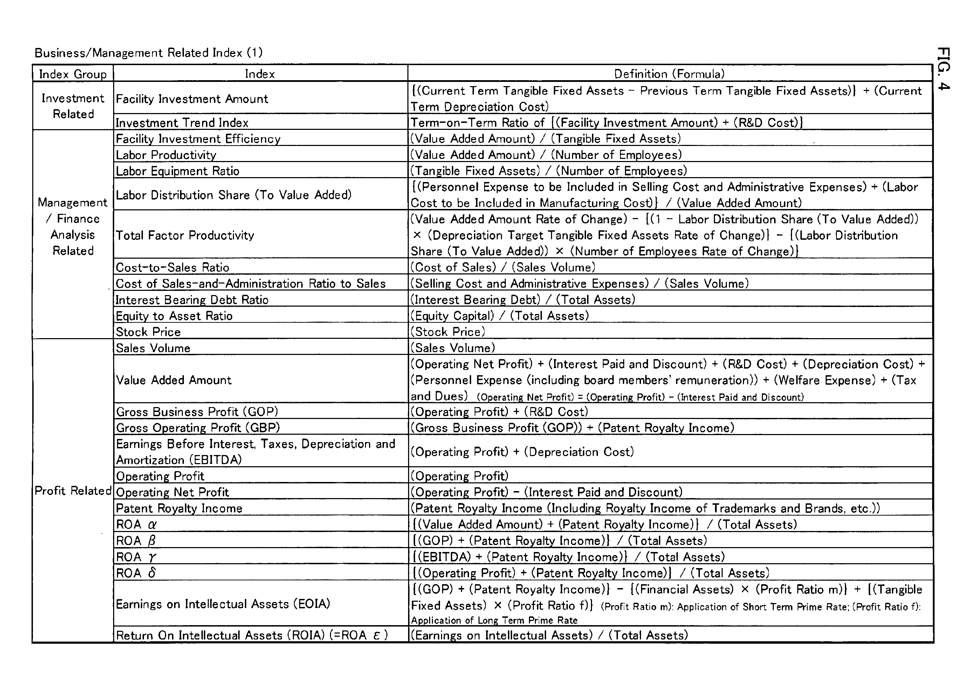

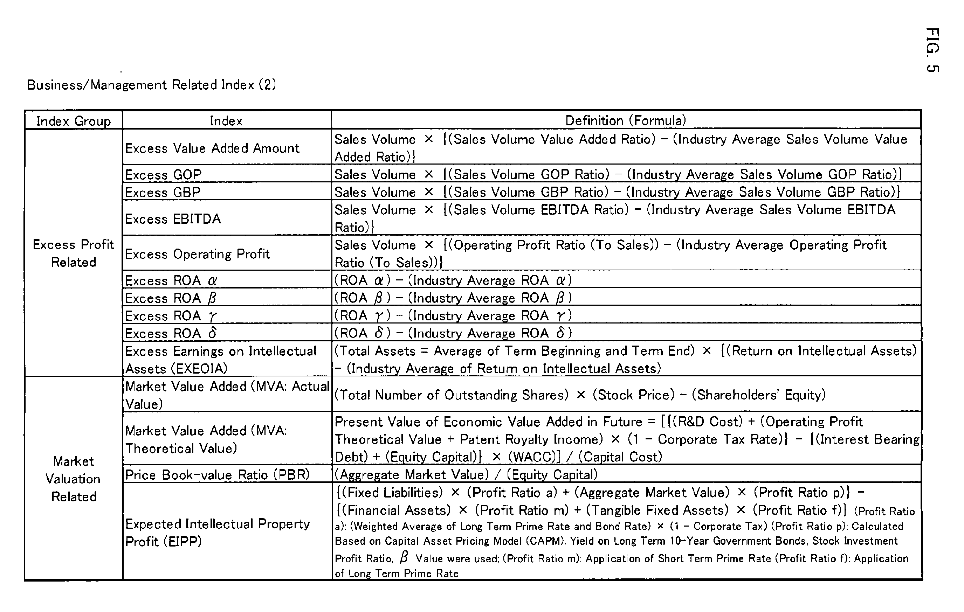

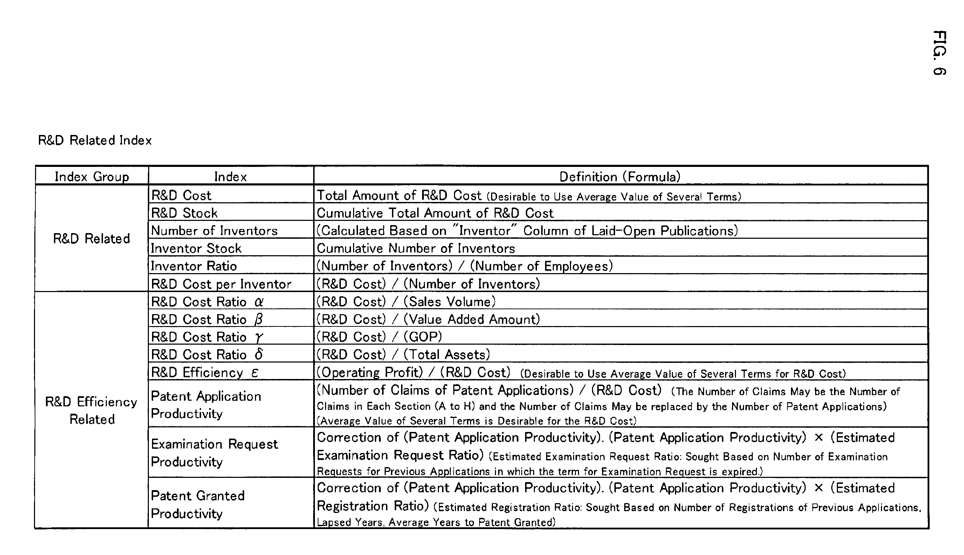

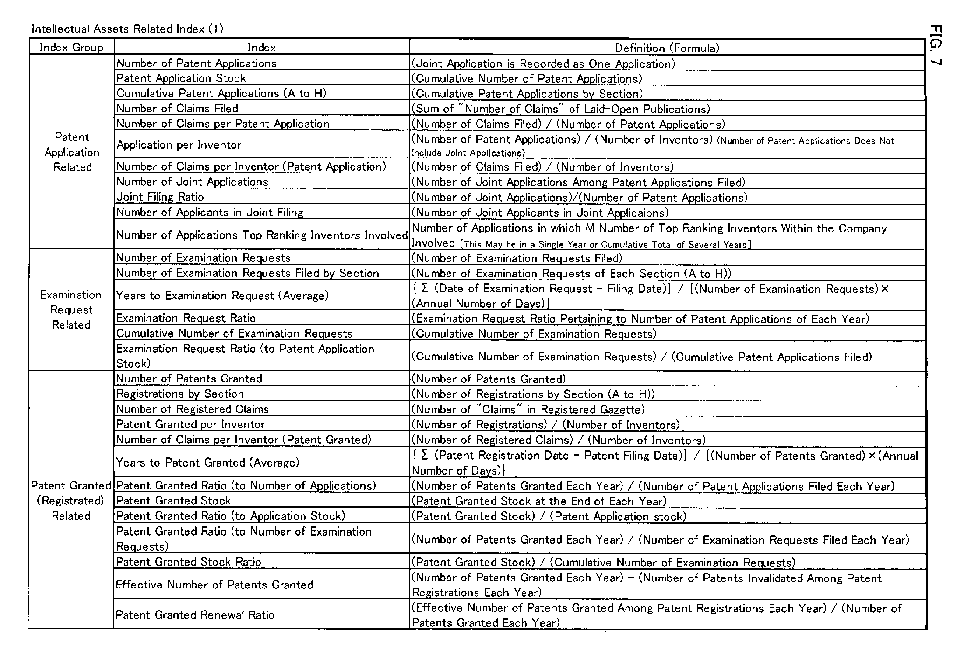

The stock portfolio selection system 100, foremost, at step S1, acquires necessary data from the internal database 30A. For example, corporate index such as the business/management related index or R&D related index or intellectual asset related index, or data on the stock prices of the respective companies. FIG. 4 and FIG. 5 are diagrams showing a list of the business/management related index, and, for instance, these are indexes of the capital investment amount, facility investment efficiency and so on. FIG. 6 is a diagram showing a list of the R&D related index, and, for instance, these are indexes of the R&D cost, R&D intensity $\alpha$ and so on. FIG. 7 through FIG. 9 are diagrams showing a list of the intellectual asset related index, and, for instance, these are indexes of the number of patent applications filed, number of examination requests filed, or total number of effective patents, number of claims filed, and so on.

The internal database 30A stores live data acquired from the external database 20A, standardized processing data and so on.

Next, at step S2, whether the update of data is required is determined. For example, a daily predetermined time is set as the data update time, and update processing is performed at such time. Or, data may be updated each time new data is added to the external database 20A.

When it is determined that an update is required, at step S3, updated data is acquired from the external database 20A and written in the internal database 30A. Then, at step S4, standardization of data is performed according to formula 1 below in relation to the data acquired from the external database 20A. The reason for performing this standardization of data is primarily for eliminating the gaps of numerical values arising pursuant to the difference of units and scales among industries or indexes.

$$\text{(Live Data - Average Live Data)/Standard Deviation}$$

$$\cdots\text{(Formula 1)}$$

Then, the data standardized for each industry is stored in the internal database 30A. After the standardization of data, the routine returns to step S1, and acquires the updated data. Next, at step S2, when it is determined that the update of data is not required, the routine proceeds to step S5 for the selection of industry/company.

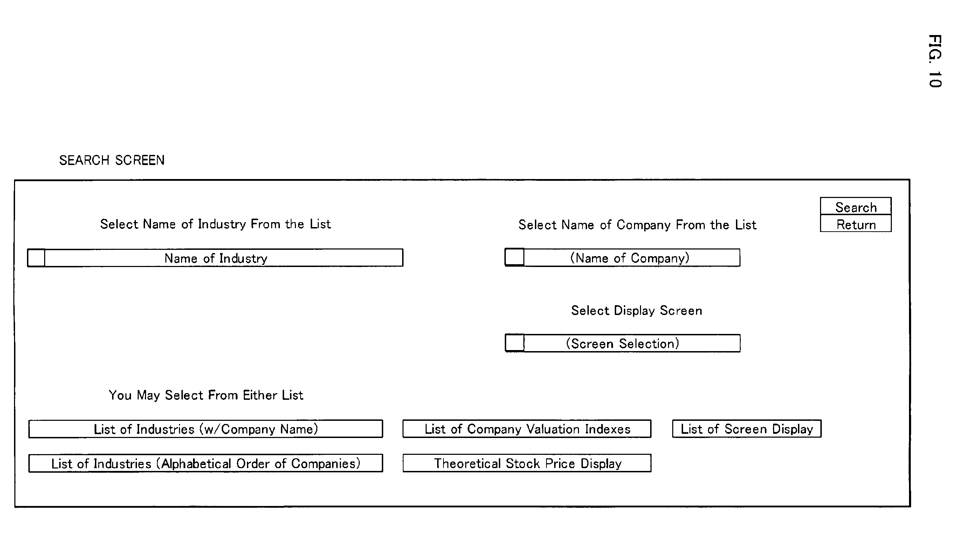

At step S5, whether the industry and/or company is to be selected is determined. Here, when the user determines that the selection of the industry and/or company is required and inputs instructions to the effect of selecting the industry and/or company, at step S6, the selection of the desired industry and/or specific company is accepted. For example, as shown in FIG. 10, the user may input the industry name or company name in the input unit of the industry or company name displayed on the display screen so as to select the desired industry and specific company. Further, for instance, by the user may also select the desired industry and specific company by selecting the option of the industry name and company name displayed on the display screen. Incidentally, when desiring to combine a certain industry with another industry, or when desiring to add a specific company, the stock portfolio can be created by designating such industries or companies.

(2-2. Company Valuation)

Next, at step S7, whether an index is to be selected is determined. When the user inputs instructions to the effect of performing index selection, at step S8, selection of the desired index is accepted. For example, as shown in FIG. 10, the user is able to select a desired index from the index option displayed on the display screen. Incidentally, upon selecting an index, as a general rule, it is desirable to include one to three R&D related indexes and intellectual asset related index, respectively, among the business/management related index, R&D related index and intellectual asset related index shown in FIG. 4 to FIG. 9. As a result, the intellectual assets accumulated based on R&D activities and the potential competitive power as the organization and personnel for creating intellectual assets can be valuated appropriately. Further, based on the strategic utilization of such intellectual assets and organization/personnel, companies expected to increasing their overt competitive power and profitability can be appropriately selected. After the selection of the index, principle component analysis is performed at step S12.

(2-2-1. Principle Component Analysis Using Selected Indexes)

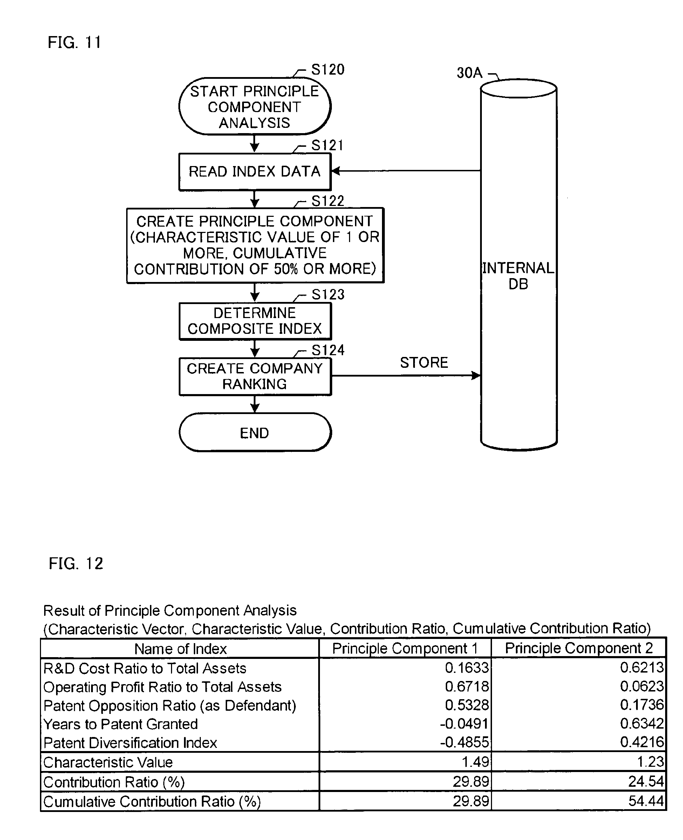

FIG. 11 is a flowchart representing the processing steps for performing principle component analysis. Here, principle component analysis is the method of analysis for extracting a component common to the observed variable and creating a synthesized variable. The purpose of performing the principle component analysis is to generalize the numerous existing indexes and create one or two comprehensive indexes, and to valuate companies to become the stock-for-portfolio candidate based on this comprehensive index.

When commencing the principle component analysis processing at step S120, index data is incorporated at step S121. In the embodiment of the present invention, the total assets R&D intensity, operating profit to total assets ratio, ratio of oppositions filed (as defendant), years to patent granted (average) and patent diversification index are selected as the valuation indexes designated by the user. Incidentally, the indexes to be selected are not limited to the above, and arbitrary indexes may be set according to the purpose or nature of analysis.

Here, the total assets R&D intensity is the ratio in relation to the total assets of the total R&D cost in each year of the company. The total assets R&D intensity is used for measuring the scope of the R&D cost viewed from the company's asset stock. As a result of adding the total assets R&D intensity, in addition to intellectual assets, it will be possible to measure the degree of contribution of the comprehensive intellectual assets potentially possessed by companies. The total assets R&D intensity is calculated based on the calculation formula shown in Formula 2 below.

```
Total Assets R&D Intensity = R&D Cost/Total Assets
```

                                                    ···(Formula 2)

Next, an operating profit to total assets ratio is the ratio in relation to the total assets of the operating profit; that is, the accounting business profit obtained from the manufacturing/sales activities of the company of each year of the company. This is an index representing how much the total assets containing intellectual assets contributed to the profit. The operating profit to total assets ratio is calculated with the calculation formula shown in Formula 3 below.

```
Operating Profit to Total Assets Ratio = Operating

Profit/Total Assets                    ···(Formula 3)
```

Next, the ratio of oppositions filed (as defendant) is the ratio of cases where a patent opposition or invalidation trial was filed against one patent in each year of the company. This is an index representing the quality of the patents acquired by the respective companies. In an embodiment of the present invention, the number of cases per one patent is used to eliminate the influence of the corporate size. The ratio of oppositions filed (as defendant) is calculated with the calculation formula shown in Formula 4 below.

```
Ratio of Oppositions Filed (as Defendant) = Number of

Patents Subject to Oppositions or Invalidation Trials in Each Year/Number of Patents Granted to the Company in Same Year
```

                                                    ···(Formula 4)

Next, years to patent granted (average) is an index representing the average number of years from filing to registration regarding a patent granted in each year of a company. As a result of employing the years to patent granted (average), it will be possible to know the purpose of the company acquiring the patent or the nature of the acquired patent. For example, an examination request is filed in a relatively short time in relation to strategic applications aiming for an early registration. Therefore, if the average number of years required from the filing to registration of a certain patent is short, it can be determined that it is highly likely of this patent being effectively utilized and producing results in business. The years to patent granted (average) is calculated with the calculation formula shown in Formula 5 below.

```
Years to Patent Granted (Average) = Σ (Patent

Registration Date - Patent Filing Date)/Number of Patents

Granted/Annual Number of Days              ···(Formula 5)
```

Next, a patent diversification index is the composition ratio (share) of the number of claims filed by International Patent Classification (IPC) subclasses among the overall claims filed in the patent applications of each year of the company. As a result of employing the patent diversification index, it will be possible to measure the degree of concentration and diversification of the technical development field of the company. The patent diversification index is calculated with the calculation formula shown in Formula 6 below.

$$\text{Patent Diversification Index} = 1 - \Sigma \text{ (Claims Filed by}$$

$$\text{International Patent Classifications of the Company/Total of}$$

$$\text{Claims Filed of the Company)}^2 \qquad \cdots \text{(Formula 6)}$$

After the indexes are selected, principle component analysis is performed for the purpose of creating a comprehensive index by combining the selected indexes. Foremost, at step S122, coefficient $\alpha_i$ of the linear combination for synthesizing the selected index $x_i$ and principle component Z are calculated. Here, principle component Z is the quantity of information calculated based on coefficient $\alpha_i$ calculated such that the variance will become maximum. Specifically, in light of the linear combination of the selected index $x_i$, coefficient $\alpha_i$ of the respective indexes is determined such that the variance of such linear combination will become maximum. Here, in order to prevent the variance from diverging infinitely, the value of coefficient $\alpha_i$ is calculated so that the variance will become maximum under the restriction that the sum of squares of the coefficient is 1. Specifically, this is as shown in Formula 7 below.

$$Z = \alpha_1 x_1 + \alpha_2 x_2 + \alpha_3 x_3 + \cdots + \alpha_n x_n$$

$$\text{(Constraint Condition) } \alpha_1{}^2 + \cdots + \alpha_n{}^2 = 1 \qquad \cdots \text{(Formula 7)}$$

Based on Formula 7, coefficient $\alpha_i$ ($i = 1 \cdots n$) is calculated, and principle component Z is sought based on the calculated coefficient. The value of coefficient $\alpha_i$ ($i = 1... n$) is sought by calculating the characteristic value and characteristic vector of the linear combination of Formula 7 above with the variance-covariance matrix or correlation matrix. Here, the characteristic vector represents the coefficient, and the characteristic value represents the quantity of information containing the principle component.

Next, the principle component to be adopted is selected. In the principle component analysis, principle components are calculated to the number of variables. Further, with the principle component obtained from the principle component analysis, the larger the characteristic value, the larger the quantity of information. Thus, generally, principle components are in descending order of the quantity of information from principle component 1, principle component 2, principle component 3, ..., principle component n. In an embodiment of the present invention, principle components where the characteristic value is 1 or more and the cumulative contribution ratio exceeds 50% are left. Needless to say, the threshold value is not limited to the above, and may be set arbitrarily according to the type or nature of analysis.

Here, the characteristic value being 1 or more means that the adopted principle component contains the quantity of information at least in the same amount as the average quantity of information held by the selected index. Further, a contribution ratio is a ratio representing to what degree the respective principle components are able to explain the overall index. The contribution ratio is calculated by dividing the characteristic value of the respective principle components by the sum of the characteristic values of all principle components. And, the cumulative contribution ratio is calculated by adding the contribution ratios of the respective principle components in deceasing order. The cumulative contribution ratio is a ratio representing to what degree the quantity of information of the overall index is able to explain the overall principle components adopted.

And, among the principle components where the characteristic value exceeds 1, the principle component in which the characteristic value is largest and the contribution ratio is largest will be the first principle component. Further, a principle component in which the characteristic value exceeds 1 and the cumulative contribution ratio is 50% or more is selected, and this will be the second principle component.

FIG. 12 is a list representing the characteristic vector and characteristic value of the principle component analysis, and the contribution ratio and cumulative contribution ratio. In an embodiment of the present invention, only the principle component in which the characteristic value exceeds 1 is extracted. According to the analysis, principle component 1, which is the first principle component, has a contribution ratio of 29% or more. Further, principle component 2, which is the second principle component, has a contribution ratio of 24% or more.

Next, the comprehensive index is determined at step S123. The numerical value (characteristic vector) calculated for each index in the list of FIG. 12 represents the value of the coefficient of each index. Foremost, with respect to principle component 1, the coefficient of "total assets R&D intensity", "operating profit to total assets ratio" and "ratio of oppositions filed (as defendant)" show positive, and the coefficient of "years to patent granted (average)" and "patent diversification index (average)" show negative. What is evident from this result is that even though the ratio in relation to the total assets of the R&D cost is average, companies in which the technology and patents are concentrated, number of years to registration is short, and the operating profit to total assets ratio is high are valuated highly. In other words, principle component 1 represents the characteristics of a company that is concentrating its intellectual assets including patents to a single field. Based on this result, principle component 1 is determined as the comprehensive index representing the "intellectual assets concentration type".

With principle component 2, the coefficient of all indexes is positive. What is evident from this result is that companies in which the technology and patents are diversified, number of years to registration is long, and the operating profit to total assets ratio is low are valuated highly. In other words, principle component 2 represents the characteristics of companies seeking to expand the intellectual assets stock including patents. Based on this result, principle component 2 is determined as the comprehensive index representing the "intellectual assets diversification type".

Next, at step S124, the total score of each company relating to principle component 1 and principle component 2 is calculated. The total score of each company is calculated based on the calculation formation shown with Formula 8 and Formula 9 below.

$$Z_1 = 0.1633 \times \text{Total Assets R\&D Intensity} + 0.6718 \times$$

$$\text{Operating Profit to Total Assets Ratio} + 0.5328 \times \text{Ratio of}$$

$$\text{Oppositions Filed (as Defendant)} - 0.0491 \times \text{Years to Patent}$$

$$\text{Granted} - 0.4855 \times \text{Patent Diversification Index}$$

$$\cdots \text{(Formula 8)}$$

In the formula, $Z_1$ is the principle component score of the "intellectual assets concentration type" of principle component 1, and the numerical values placed in front of the respective indexes are the values of the coefficient of the respective indexes in principle component 1 illustrated in FIG. 12.

$$Z_2 = 0.6213 \times \text{Total Assets R\&D Intensity} + 0.0623 \times$$

$$\text{Operating Profit to Total Assets Ratio} + 0.1736 \times \text{Ratio of}$$

$$\text{Oppositions Filed (as Defendant)} + 0.6342 \times \text{Years to Patent}$$

$$\text{Granted} + 0.4216 \times \text{Patent Diversification Index}$$

$$\cdots \text{(Formula 9)}$$

In the formula, $Z_2$ is the principle component score of the "intellectual assets diversification type" of principle component 2, and the numerical values placed in front of the respective indexes are the values of the coefficient of the respective indexes in principle component 2 illustrated in FIG. 12.

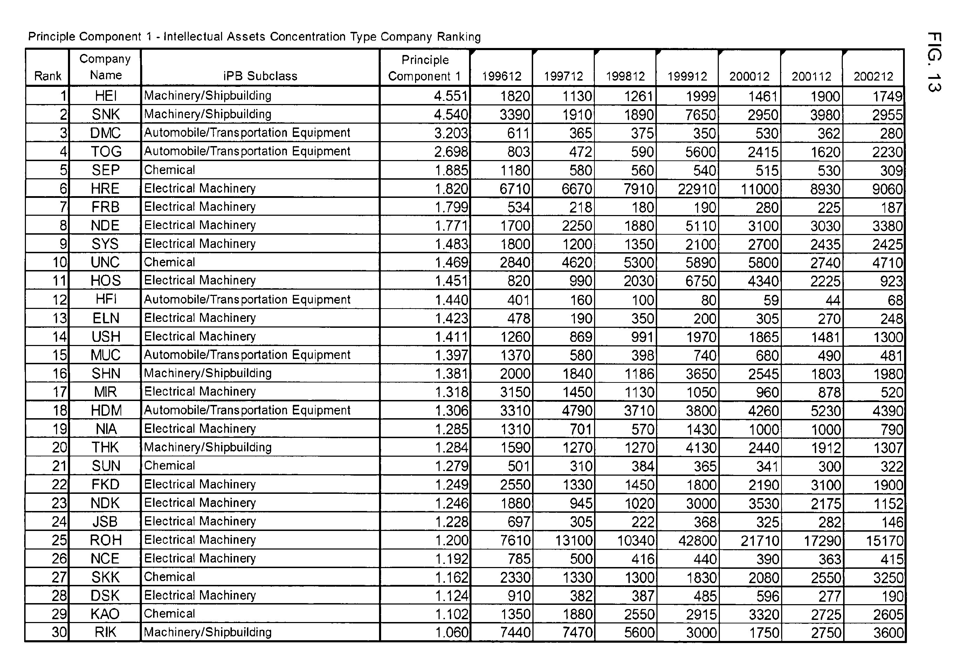

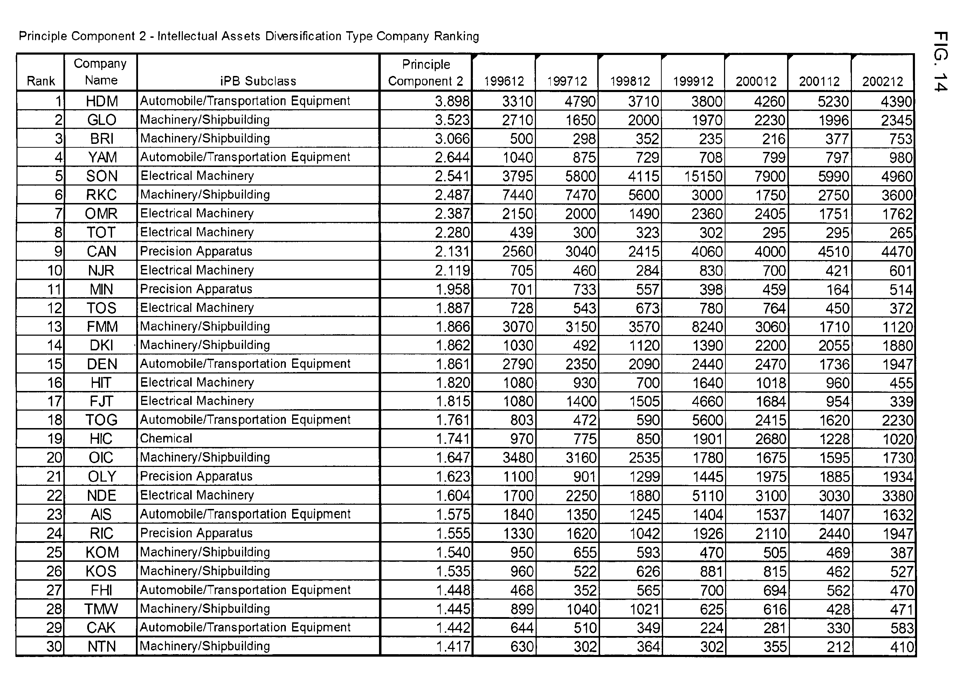

FIG. 13 is a ranking chart of the corporate valuation corresponding to the "intellectual assets concentration type" of principle component 1, and FIG. 14 is a ranking chart of the corporate valuation corresponding to the "intellectual assets diversification type" of principle component 2.

(2-2-2. Factor Analysis and Multiple Regression Analysis before Principle Component Analysis)

(2-2-2-1. Factor Analysis)

Returning once again to the flowchart of FIG. 3 representing the processing steps of the stock portfolio selection, the steps are resumed. Foremost, at step S7, when it is determined that an index is not to be selected, at step S9, whether covariance structure analysis, or factor analysis and multiple regression analysis are to be performed as the method of analysis is determined. At step S9, when the user inputs instructions for performing factor analysis and multiple regression analysis, the routine proceeds to step S10, and performs factor analysis.

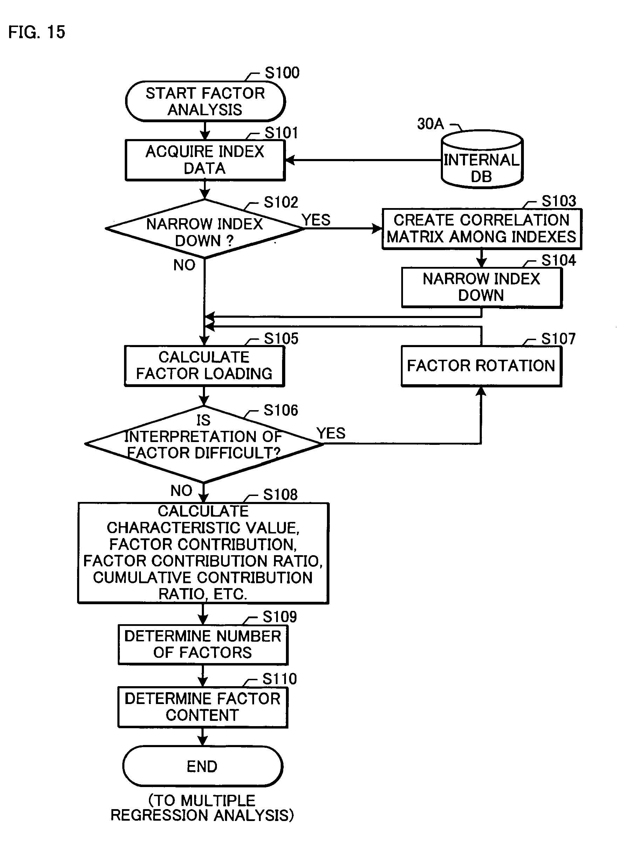

Here, factor analysis processing is explained with reference to the flowchart of FIG. 15. Factor analysis is the method of searching for a common factor hiding behind a certain observation data and which prescribes the same. The purpose of performing factor analysis is to clarify the characteristics and structure of the indexes by clarifying the potential factors prescribing such various indexes, and uniting these indexes into the clarified factors.

Foremost, at step S100, factor analysis processing is commenced, and, at step S101, data concerning the index is acquired from the internal database 30A. Nevertheless, the profit related index contained in the business/ management related index of FIG. 4 and FIG. 5 will be excluded. This is because the profit related indexes will be used as the target variable in the multiple regression analysis described later.

Next, at step S102, whether the narrowing down of indexes is determined. When the user inputs instructions for narrowing down of the indexes, at step S103, the correlation matrix of each index is calculated. And, at step S104, remotely related indexes without any commonality are removed, and deeply related and strongly associated indexes are extracted. Thereafter, the routine proceeds to the calculation of factor loading at step S105.

When the narrowing down of indexes is not performed in advance at step S102, the routine proceeds directly to the calculation of factor loading at step S105. Here, factor loading is the value showing the strength of influence against the observed variable of the factor. In the factor analysis, the primary objective is to calculate this factor loading. As the calculation method of this factor loading, a principal factor method or maximum likelihood method, least square method, generalized least square method and the like are known. In an embodiment of the present invention, the principal factor method is employed. The principal factor method is a method of calculating the factor loading in order from the first factor such that the factor contribution of the respective factors will become maximum. Incidentally, the calculation method of the factor loading may be arbitrarily selected according to the objective or nature of the observation.

Next, at step S106, whether it is difficult to interpret the factors based on the calculated factor loading is determined. When the user determines that it is difficult to interpret the factors and makes an input to such effect, factor rotation is performed at step S107 in order to search for the solution capable of optimally interpreting the data. The method of rotation may be an orthogonal rotation or an oblique rotation, and this may be arbitrarily selected according to the objective and nature of the observation. In an embodiment of the present invention, Varimax rotation, which is a type of orthogonal rotation, is employed. Varimax rotation is a rotation method of rotating the factors such that those with the factor loading of each factor closest to 0 and those with a large absolute value will increase, and thereby searching for the degree of contribution of the factor. And, after the factor rotation, the routine returns to step S105 and calculates the rotated factor loading. Incidentally, at step S106, when it is determined that it is not difficult to interpret the factors, factor rotation is not performed, and the initial solution of the calculated factor loading is used without change.

Next, at step S108, the characteristic value, factor contribution, factor contribution ratio and cumulative contribution ratio of each factor is calculated based on the calculated factor loading. A characteristic value is the numerical value output when calculating the initial solution of the factor loading. The characteristic value is calculated for each factor as though there is the same number of factors as the number of indexes. As a result, an arbitrary minimum characteristic value will be selected as the criterion for determining the number of factors to be adopted. Further, factor contribution is an amount of a certain factor capable of explaining the data, and is calculated for each factor based on the sum of squares of the factor loading of each index. Incidentally, at the point in time of calculating the initial solution of the factor loading, the characteristic value and the factor contribution value are the same. Further, a factor contribution ratio is the ratio of a certain factor that explains the overall data, and is calculated by dividing the factor contribution by the number of indexes. Finally, a cumulative contribution ratio is a value in which the factor contribution is accumulated pursuant to the increase of factors, and is an index showing up to how many factors are able to explain data to what degree.

Next, at step S109, the number of factors is determined based on the calculated characteristic value, factor contribution and cumulative contribution ratio. Theoretically, the number of factors is represented for the number of indexes. Thus, in an embodiment of the present invention, as the criterion upon determining the number of factors, a judgment criterion in which the characteristic value is 1 or more and the cumulative contribution ratio is 70% or more is used. As a result, 5 factors are selected in an embodiment of the present invention.

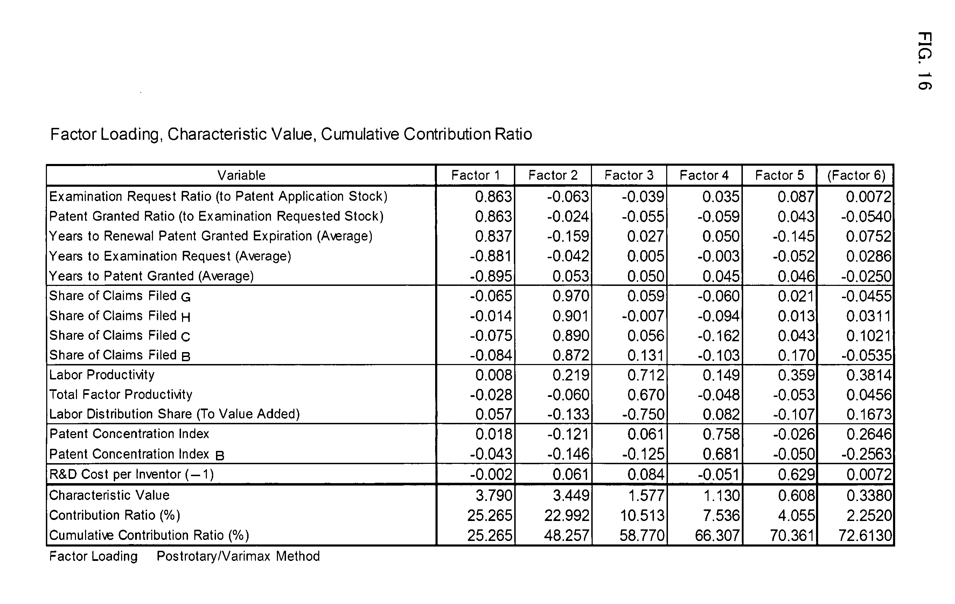

FIG. 16 is a list showing the factor loading, characteristic value, factor contribution and cumulative contribution ratio of the 5 factors selected in an embodiment of the present invention. Incidentally, the judgment criterion is not limited to the above, and this may be arbitrarily set according to the objective and nature of the observance.

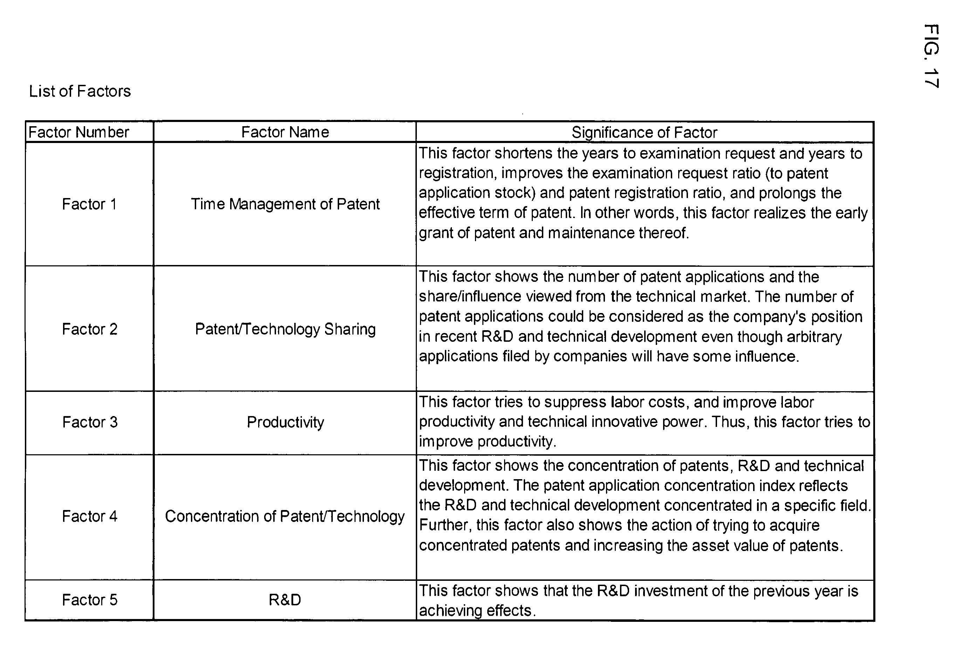

Next, at step S110, the factor content is determined. Specifically, the significance of the 5 factors selected at step S109 is interpreted based on the factor loading calculated for each index regarding factors 1 to 5. Explanation on the significance and factor name of each of the factors 1 to 5 is as per the list of FIG. 17.

Foremost, when viewing factor 1, among the index constituting factor 1, it is evident that the indexes having a large factor loading are the following 5 indexes; namely, the examination request ratio (to patent application stock), patent granted ratio (to application stock), years to renewal patent granted expiration (average), years to examination request (average), and years to patent granted (average). When interpreting the significance of factor 1 from the above, it could be said that factor 1 is a factor that improves the examination request ratio (to patent application stock) and patent granted ratio (to examination requested stock) by shortening the years to examination request and years to patent granted, and thereby prolongs the effective term of the patent. In other words, factor 1 can be interpreted to be a factor that quickly acquires and maintains a patent right. Based on this interpretation result, the factor name of factor 1 will be called "patent time management".

Similarly, the significance and factor name of the respective factors are also determined according to the foregoing procedures for factor 2 to factor 5 as well. Although the explanation is omitted to avoid redundancy, details are as per the list of FIG. 17. Incidentally, the definition and calculation method of the respective indexes shall be as per the lists of FIG. 4 to FIG. 9.

(2-2-2-2. Multiple Regression Analysis)

Returning once again to the flowchart of FIG. 3 representing the processing steps of the stock portfolio selection, after performing the factor analysis at step S10, multiple regression analysis processing is performed at step S11. The multiple regression analysis processing is now explained.

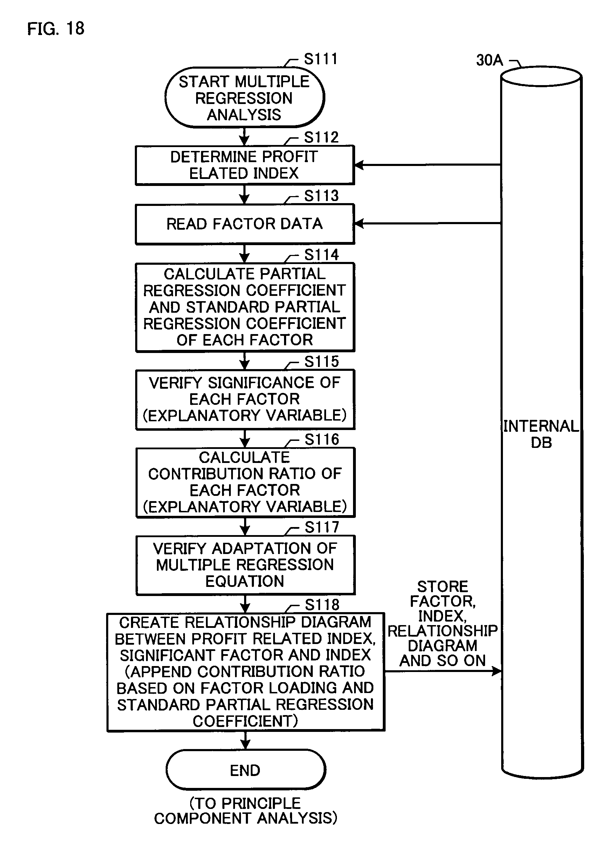

FIG. 18 is a flowchart representing the processing steps of the multiple regression analysis. Here, multiple regression analysis is a method of analyzing to what degree the value of the target variable can be explained based on the prediction relation constituted from such target variable and a plurality of explanatory variables. Incidentally, a target variable and explanatory variable are sometimes set as a dependent variable and independent variable according to the objective of analysis.

The purpose of performing multiple regression analysis is to verify whether the 5 factors clarified as a result of the foregoing factor analysis are actually contributing to the profit increase of the company. Further, among the above, it also specifies the factors with a high contribution ratio in relation to the profit and which indexes constitute such factors.

At step S111, multiple regression analysis processing is performed. Foremost, at step S112, the profit related index data is loaded from the list of the profit related index data stored in the internal database 30A, and the profit related index to be the target variable is determined. An example of the type and definition of the profit related index data is as per the profit related index list contained in the business/management related index of FIG. 4 and FIG. 5. Incidentally, the profit related index shown in FIG. 4 and FIG. 5 is primarily related to the business performance and results of the company, but the profit related index is not limited to the above, and arbitrary indexes may be set according to the objective or nature of analysis.

In an embodiment of the present invention, the profit related index is represented with an ROA. ROA is the abbreviation of Return On Asset, and this is also referred to as the profit to total assets ratio. ROA is the ratio obtained by dividing the current profit by the total assets, and is an index for measuring how much profit was gained from the total assets. The reason the index for comprehensively valuating the business performance of companies is represented with ROA is because ROA is an appropriate achievement index for representing the annual assets efficiency of a company. Although there is a similar index referred to as ROE (Return On Equity), ROE is not adopted in an embodiment of the present invention. The reason for this is because ROE is used for measuring the profit per equity capital, and, in order to the company to actually gain profit, it must utilize outside capital in addition to the equity capital, and it has been determined that it is difficult to measure the true assets efficiency of companies with ROE.

Further, in an embodiment of the present invention, instead of ordinary ROA, a ratio of an amount obtained by adding the "operating profit" and "patent royalty income" in each year to total assets of the respective companies (hereinafter referred to as "ROA δ") is set as the target variable. The calculation formula of ROA δ is as shown in Formula 10 below.

$$\text{ROA } \delta = (\text{Operating Profit} + \text{Patent Royalty Income})/\text{Total Assets} \quad \cdots (\text{Formula 10})$$

The reason ROA δ is used as the target variable is, firstly, because intellectual assets such as patents are a part of the assets owned by the company, and it is an index suitable for measuring how much profit was gained by utilizing tangible assets and intellectual assets such as patents. Secondly, in order to appropriately valuate the potential competitive power of companies and to measure to what degree such potential competitive power is connected to the overt competitive power and profit, it is necessary to incorporate the profits from intellectual assets such as patents generated as a result of R&D. Incidentally, the patent royalty income is recorded as non-operating income in terms of accounting, but some companies may not have such account title in the non-operating profit. In such a case, the patent royalty income is not added to the operating profit as it will be determined to be already incorporated in the operating profit, or not indicated since it is an amount that will not significantly influence the financial statements.

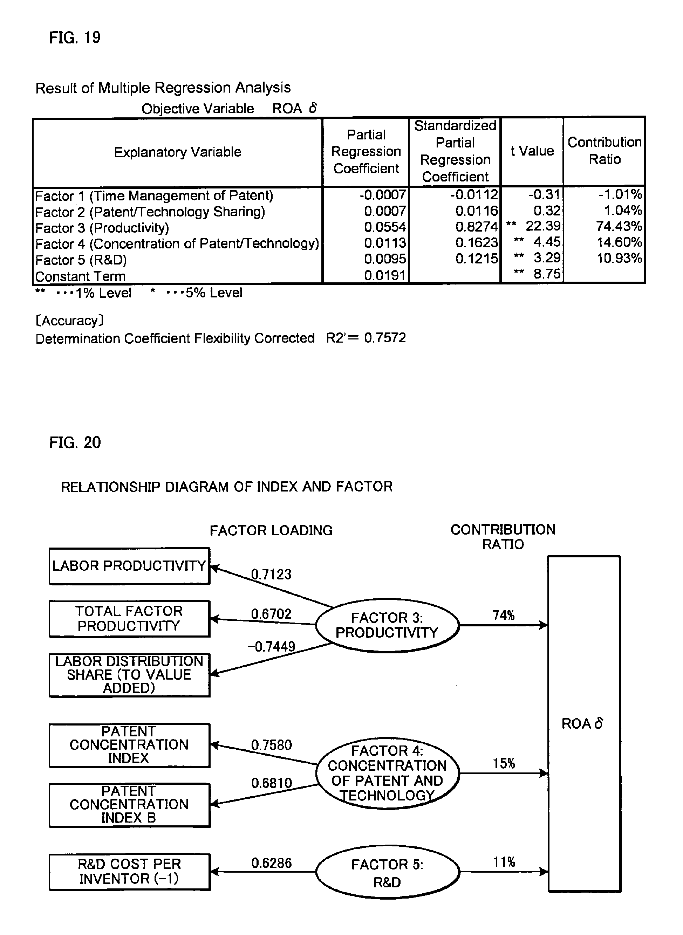

Next, at step S113, the 5 factors extracted as a result of the factor analysis performed at step S10 are read from the internal database 30A. In an embodiment of the present invention, as shown in FIG. 19, the 5 factors of factor 1 (patent time management), factor 2 (productivity), factor 3 (patent/technology share), factor 4 (R&D), and factor 5 (concentration of patent/technology) are adopted.

Next, at step S114, the profit related index ROA $\delta$ is made the target variable, and foregoing factors 1 to 5 are made the explanatory variables upon performing multiple regression analysis, and the partial regression coefficient, standard partial regression coefficient, and t value of the respective factors (explanatory variables) are calculated.

Specifically, foremost, the multiple regression equation represented with Formula 11 below is hypothesized for calculating the value of the ROA $\delta$ (target variable) with the information of the respective factors (explanatory variables).

$$Y_j = \alpha + \beta_1 x_{1j} + \beta_2 x_{2j} + \cdots + \beta_5 x_{5j} + \varepsilon_j$$

$$(j = 1 \cdots N) \qquad \cdots \text{(Formula 11)}$$

In the foregoing formula, $Y_j$ is the target variable, and $x_{ij}$ (i = 1$\cdots$5) is the explanatory variable. Further, $\alpha$ and $\beta_i$ (i = 1$\cdots$5) are parameters to be estimated from the observation data of the explanatory variable $x_{ij}$, $\alpha$ is the constant term, and $\beta_i$ is the partial regression coefficient. $\varepsilon_j$ (j = 1$\cdots$N. N represents number of samples) is the residual of the observed value of target variable $Y_j$ and the theoretical value, and represents portions that are not explained with the explanatory variable $x_{ij}$. Incidentally, with respect to explanatory variable $x_{ij}$, since appropriate analysis is performed upon eliminating the influence of the difference among indexes relating to the unit or scale of indexes, it is desirable to use standardized data. The standardization of data is performed with foregoing Formula 1.

Next, the values of constant term $\alpha$ and partial regression coefficient $\beta_i$ contained in Formula 11 are calculated with the estimation method referred to as the least square method. The least square method is a method of minimizing the sum of squares of the residual of the observed value and theoretical value. In the case of Formula 11 above, foremost, when the value of explanatory variable $x_{ij}$ is provided, the theoretical value of target variable $Y_j$ will be $\alpha + \Sigma_{i-1}^{5}(\beta_i x_{ij})$, and, therefore, residual $\varepsilon_j$, which is the difference between the theoretical value and observed value, will be calculated with Formula 12 below.

$$\varepsilon_j = Y_j - \{\alpha + \Sigma_{i=1}^{5}(\beta_i x_{ij})\} \qquad \cdots \text{(Formula 12)}$$

Next, the sum of squares of the residual is calculated with Formula 13 below.

$$Q = \Sigma_{j=1}^{N}[\{Y_j - \alpha - \Sigma_{i=1}^{5}(\beta_i x_{ij})\}^2] \qquad \cdots \text{(Formula 13)}$$

In the foregoing formula, Q is the value calculated as the sum of squares of the residual. Since the least square method is a method of minimizing the sum of squares of the residual, it is necessary to minimize the value of Q in Formula 13 in order to calculate constant term $\alpha$ and partial regression coefficient $\beta_i$. And, the values of constant term $\alpha$ and partial regression coefficient $\beta_i$ are sought by performing partial differentiation to Formula 13 above respectively with $\alpha$ and $\beta_i$, and solving the simultaneous equations equaling 0. Specifically, this is as per Formula 14 and Formula 15 below.

$$\partial Q / \partial \alpha = -2\Sigma_{j=1}^{N}\{Y_j - \alpha - \Sigma_{i=1}^{5}(\beta_i x_{ij})\} = 0 \qquad \cdots \text{(Formula 14)}$$

$$\partial Q/\partial \beta_i = -2\Sigma_{j=1}^{N}[x_{ij}\{Y_j - \alpha - \Sigma_{i=1}^{5}(\beta_i x_{ij})\}] = 0 \quad \cdots(\text{Formula 15})$$

Incidentally, the value of the partial regression coefficient will change significantly when the unit or scale of the explanatory variable is changed. Accordingly, in an embodiment of the present invention, pursuant to the standardization of data of the index to be used in explanatory variable $x_{ij}$, it is necessary to separately calculate the partial regression coefficient corresponding to the standardized explanatory variable (hereinafter referred to as the "standard partial regression coefficient").

After calculating the partial regression coefficient (and standard partial regression coefficient) $\beta_i$, at step S115, the significance of the respective factors used in explanatory variable $x_{ij}$ is verified. Specifically, foremost, a hypothesis that explanatory variable $x_{ij}$ is absolutely ineffective in the prediction of target variable $Y_j$ (hereinafter referred to as the "null hypothesis"). This null hypothesis is represented by the partial regression coefficient (and standard partial regression coefficient) $\beta_i$ being 0. Incidentally, as the hypothesis to be used for verification, in addition to this null hypothesis, there is an alternate hypothesis of performing verification on the premise that the explanatory variable is effective in the prediction of the target variable. Any of these hypotheses may be used according to the objective and nature of analysis. Further, verification based on both of these hypotheses may be conducted, and one of such hypotheses may be adopted.

Next, in order to verify whether the hypothesis of partial regression coefficient (and standard partial regression coefficient) $\beta_i = 0$, t value is calculated based on $\beta_i = 0$. t value is the numerical value showing the statistical reliability of the value of the calculated explanatory variable.

After the calculation of t value, the position occupied by the calculated t value on the t distribution is specified. Here, t distribution is a probability density variable for estimating the scope of the average value of the parent population from a certain finite number of sample data.

Next, a boundary line for determining whether to adopt or reject the hypothesis of $\beta_i = 0$ is set on the t distribution. This boundary line is referred to as the significant level. A significant level is represented based on the probability of the calculated t value occurring on the t distribution. In an embodiment of the present invention, the significant level is set to 5%. This shows that the hypothesis will be rejected when the probability of the calculated t value occurring on the t distribution is within the range of 5%. The area for accepting the hypothesis with this significant level as the criterion is referred to as the adopted area, and the area for rejecting the hypothesis is referred to as the rejected area.

Then, as a result of the verification, if it is specified that the t value calculated based on the hypothesis of $\beta_i = 0$ occupies the position within the significant level of 5%, the hypothesis of $\beta_i = 0$ will be rejected. In other words, here, partial regression coefficient $\beta_i$ pertaining to explanatory variable $x_{ij}$ is statistically significant, and it is determined that the factors employed in explanatory variable $x_{ij}$ are contributing to the explanation of target variable $Y_j$. Incidentally, the criteria for determining the significance of the explanatory variable is not limited to only the t value, and this may be determined with the p value which represents the probability of the t value exceeding the significant level with an absolute value.

Next, at step S116, the contribution ratio in relation to target variable $Y_j$ of the respective factors (explanatory variables) is calculated. The contribution ratio is calculated by dividing the standard partial regression coefficient of the respective factors calculated at step S114 by the total standard partial regression coefficients of the respective factors. And, thereafter, the calculated value is displayed as a percentage.

Finally, at step S117, the adaptation of the multiple regression equation employing the analysis according to an embodiment of the present invention is verified. The determination coefficient is used as the scale for verifying the adaptation of the multiple regression equation. A determination coefficient is an index representing to what degree of the provided multiple regression equation is able to explain the fluctuation of the observed value of the target variable. Here, fluctuation is the variation from the average value of the respective points. The determination coefficient is represented with $R^2$, and is calculated by dividing the fluctuation of the theoretical value of target variable $Y_j$ derived from the multiple regression equation by the fluctuation of the observed value of $Y_j$. Specifically, this is as per Formula 16 below.

$$\text{Determination Coefficient } R^2 = \text{Fluctuation of Theoretical}$$

$$\text{Value of } Y_j/\text{Fluctuation of Observed Value of } Y_j \quad \cdots (\text{Formula 16})$$

Nevertheless, the value of determination coefficient $R^2$ representing the adaptation of the multiple regression equation will increase pursuant to the increase of the explanatory variable. Although this appears to apply favorably, this does not necessarily mean that the power of explanation of the multiple regression equation is high. Thus, in order to supplement the defect of this determination coefficient $R^2$, the adaptation of the multiple regression equation is verified

with determination coefficient $R^{2'}$ of a corrected degree of freedom. Determination coefficient $R^{2'}$ flexibility corrected is a value obtained by giving consideration not only to the explanatory variable for determining the multiple regression equation, but also to the number of variables output as samples, and thereby adjusting the determination coefficient $R^2$. Further, the flexibility (degree of freedom) is a value obtained by subtracting the average value calculated from the sample from the number of samples. For instance, when the number of samples is N, if one average value is determined, the final sample among the N samples will be automatically determined, and the value that may be freely selected among the output samples will be N - 1 samples.

FIG. 19 is a list of the multiple regression analysis. The list is constituted from the values of the partial regression coefficient, standard partial regression coefficient, t value and contribution ratio calculated for each of the 5 factors that are extracted.

Foremost, the adaptation of the multiple regression equation adopted upon performing the analysis is viewed. Determination coefficient $R^{2'}$ flexibility corrected is 0.7572, and this shows that that adopted multiple regression equation has a high degree of explanation.

Next, whether each of the factors is statistically significant is viewed. According to the calculation result of t value, it is evident that factor 3 (productivity), factor 4 (concentration of patent/technology) and factor 5 (R&D) are statistically significant. In addition, the foregoing factors are statistically significant even when verified at a significant level of 1%.

And, at step S118, based on the foregoing analysis, a relationship diagram showing the relation of the profit related index ROA $\delta$ and factors showing the statistical significance, and the relationship of these factors and the various indexes constituting such factors is created. The created relationship diagram is stored in the internal database 30A.

FIG. 20 shows the created relationship diagram. In this relationship diagram, ROA $\delta$, factors showing statistical significance, and indexes constituting the respective factors are shown, and the contribution ratio and factor loading based on the standard partial regression coefficient are indicated above the arrows. According to this relationship diagram, with respect to the contribution ratio of factors in relation to ROA $\delta$, it is evident that factor 3 (productivity) is dominant at 74%. Further, among the indexes constituting factor 3 (productivity), it is evident that "labor distribution share (to value added)" works to lower the productivity. Accordingly, in order to improve the productivity, it is necessary to suppress "labor distribution share (to value added)" to a certain degree, and to seek the promotion of technical innovation shown in "total factor productivity" and improvement of the management efficiency.

Further, factor 4 (concentration of patent/technology) has the next highest contribution ratio in relation to ROA $\delta$ at 15% after factor 3 (productivity). Further, as indexes constituting factor 4 (concentration of patent/technology), it is evident that the factor loading of the index relating to "patent concentration index" is significant. This fact, for example, is considered to be based on the fact that the "patent application concentration index" is reflecting the selection of technical development and degree of progress of concentration. Further, the factor loading of "patent concentration index" in relation to factor 4 (concentration of patent/technology) being large means that increasing the "patent application concentration index" will prevent imitations by other companies and improve the asset value of patents, which will contribute significantly to profits.

And, factor 5 (R&D) is showing the third highest contribution ratio in relation to ROA $\delta$ at 11%. Further, the highest factor loading among the indexes constituting factor 5 (R&D) is "R&D investment of previous term". This result not only represents the achievement of the R&D cost of the previous term, it is considered that the ongoing R&D for many years is being reflected in current term ROA $\delta$ as achievements. Moreover, this result shows that improving the cost effectiveness of R&D costs such as shortening the period from R&D to commercialization and merchandizing, and early collection of the R&D costs will lead to increased profits of the company.

According to the foregoing analysis, it is evident that engagements by the company in promoting R&D, increasing the efficiency thereof, and simultaneously improving the business productivity will contribute to increased profits. Further, at the same time, the approach of promoting the "selection and concentration" of technical/intellectual assets will also contribute to increased profits. And, these engagements by companies will be represented as figures in the indexes constituting the respective factors.

(2-2-2-3. Principle Component Analysis)

Returning once again to the flowchart of FIG. 3 representing the processing steps of stock portfolio selection, after performing multiple regression analysis at step S11, principle component analysis processing is performed at step S12. In principle component analysis, corporate valuation is performed upon creating a comprehensive index with the indexes constituting the significant factors obtained as a result of the multiple regression analysis, and ROA $\delta$ set in the target variable. Incidentally, the processing method of principle component analysis is as described above, and the explanation thereof is omitted.

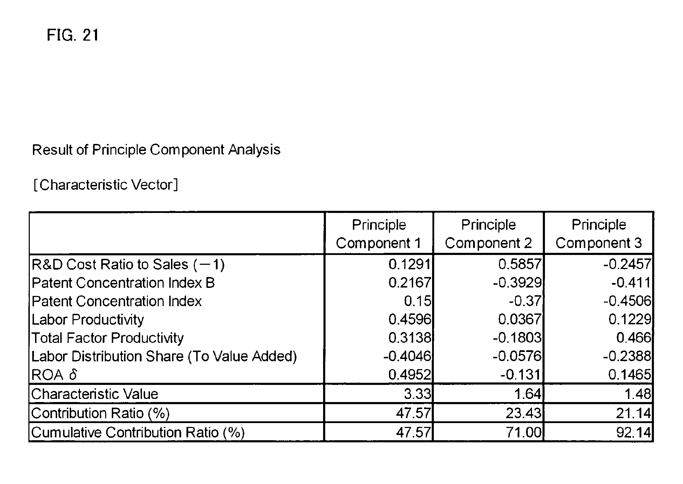

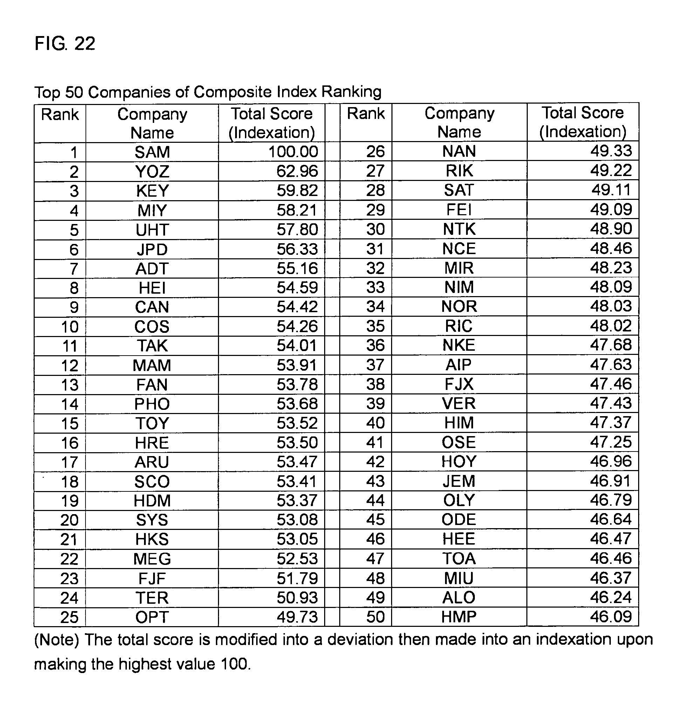

FIG. 21 is a list representing the characteristic vector and characteristic value of the principle component analysis, and the contribution ratio and cumulative contribution ratio. The contribution ratio of the first principle component is sufficiently high at 47.57%, and is also consistent with the results of the factor analysis and multiple regression analysis. Further, since it has no gap in the absolute value of the coefficient pertaining to the indexes as with the second and third principle components, principle component 1 as the first principle component can be selected as the comprehensive index. FIG. 22 is a ranking chart of the corporate valuation corresponding to principle component 1.

(2-2-3. Covariance Structure Analysis)

Returning once again to the flowchart of FIG. 3 representing the processing steps of stock portfolio selection, when the covariance structure analysis is selected at step S9, covariance structure analysis processing is performed at step S19 so as to conduct corporate valuation, and the company ranking is created at step S13.

(2-2-3-1. Outline of Covariance Structure Analysis)

The processing steps of covariance structure analysis are now explained. Here, covariance structure analysis is a method of comprehending the complex causal relation between a potential variable (constructive concept) which is an unobservable element and an observed variable (actual numerical value) which is an observable element, or between potential variables, with a quantitative model, and valuating the ranking and the like based on such comprehended model. Thereupon, a path diagram may be used to enable the visual analysis of the relationship of the observed variable and potential variable.

As the basic procedure, foremost, a hypothesis on the causal relation between the variables is established. When the relationship between developments is well known, a hypothetical model is created directly. When the relationship between developments is not well known, a hypothetical model is created after extracting a factor based on factor analysis.

Next, a path diagram is created based on the hypothetical model. And, according to the path diagram, the population parameter is estimated. Here, a population parameter is a parameter showing the numerical value representing the situation of the parent population distribution. As the estimation method of the population parameter, generally, the least square method or maximum likelihood estimation method is employed. Thereafter, the relationship between the variables representing the path diagram is actually digitized so as to match the sample data as much as possible.

Next, whether the created hypothetical model coincides with the data is verified. As the index of reference for verifying the hypothetical model, a statistic referred to as the adaptation index (GFI: Goodness of Fit Index or AGFI: Adjusted Goodness of Fit Index) is used. GFI is used as the criterion of "power of explanation" of the model regarding how much the hypothetical model created by the analyzer is able to explain the data. And, closer the value of GFI is to 1, the fitting of the hypothetical model is determined to be favorable. Incidentally, in the case of a complicated model, with GFI, the stability of the estimated value of the population parameter will become inferior. In such a case, the adaptation of the model will be verified with AGFI as the index, which removes the instability of the population parameter from GFI's power of explanation. If the hypothetical model does not coincide with the data as a result of verifying the hypothetical model, the routine returns to the creation of a model diagram, and repeats the estimation of the population parameter.

In an embodiment of the present invention, an intellectual property strategy management (trinity management) model is created as the hypothetical model. Here, an intellectual property strategy management (trinity management) model is a model for inclusively and comprehensively valuating companies that are associating business strategy, R&D strategy and intellectual property strategy so as to improve the total factor productivity and corporate value. Upon valuating companies, although it is extremely important to analyze the productivity index such as labor productivity and profit related index such as ROA, ROE, valuating the value of companies with only these indexes may lead management in the wrong direction. This is because these indexes merely show a cross section of the current business performance of corporate management. In fact, in order to improve corporate value, companies will depend significantly on intellectual assets including intellectual assets such as technology and know-how created by R&D investment and the like. In light of the above, in corporate valuation, the analysis and valuation of R&D and intellectual property are essential. This is the reason for creating such intellectual property strategy management (trinity management) model. Thus, in an embodiment of the present invention, the relationship (correlation) of three potential variables (constructive concept) of "R&D" - "patent (intellectual property)" - "business (management/finance) is hypothesized.

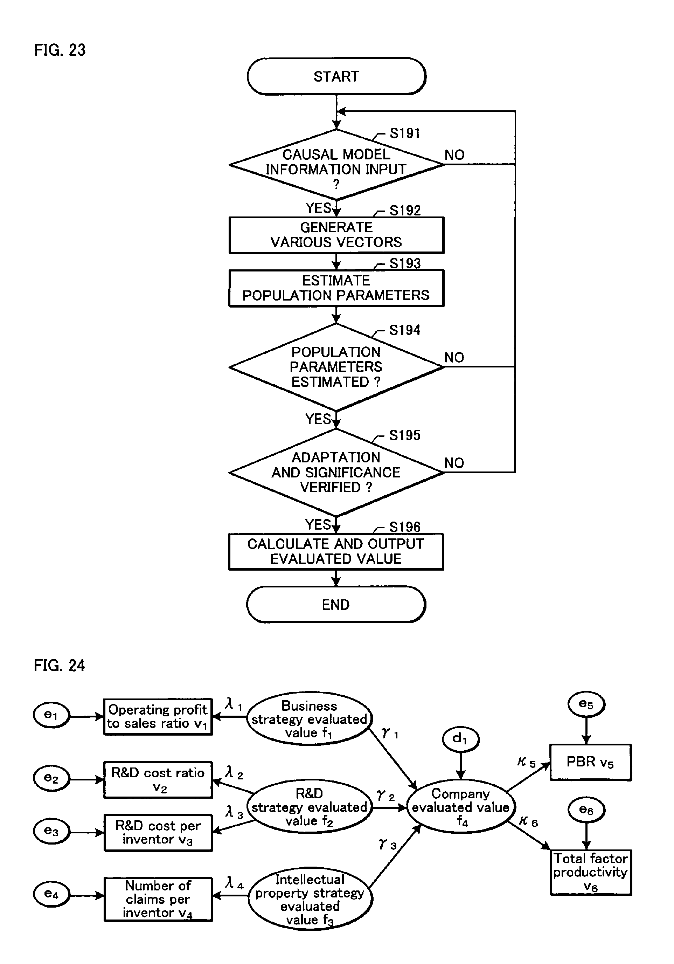

The processing steps of covariance structure analysis are now explained with reference to the flowchart of FIG. 23.

(2-2-3-2. Setting of Causal Model)

Upon performing covariance structure analysis, it is necessary to create a hypothesis regarding the relationship of the observed variables and the latent variables.

When the causal association of the observed variables and the latent variables is not known, factors can be extracted based on factor analysis to create a hypothetical model in order to discover the latent variables from a plurality of observed variables. Incidentally, the decision on the number of factors based on factor analysis is made based on the preset cumulative contribution ratio or eigenvalue. For example, the factors are decided with a reference where the cumulative contribution ratio is 70% or greater, and the eigenvalue is 1 or greater. Incidentally, the criterion is not limited to the above, and may be arbitrarily set according to the purpose or nature of observation.

Subsequently, a hypothesis concerning the observed variables and the latent variables is created. Even though the relationship of the three strategies of business strategy, R&D strategy and intellectual property strategy, and the company value will be demonstrated, these are all abstract concepts that cannot be directly observed. Thus, in covariance structure analysis, these are represented as "latent variable" vector f to enable quantitative analysis. The vector element of the latent variable vector f is a latent variable describing the individual factors. The following values are used as the latent variable in the present embodiment.

$f_1$ : business strategy evaluated value
$f_2$ : R&D strategy evaluated value
$f_3$ : intellectual property strategy evaluated value
$f_4$ : intellectual property strategic management

Meanwhile, "PBR," "number of claims per inventor," "total factor productivity" or the like which are available from annual security reports provided by each company or available from the Intellectual Property Digital Library are represented as an "observed variable" vector v.
Various indexes can be considered for use as observed variables, and examples thereof are shown as the 79 indexes of FIG. 4 through FIG. 9. Which index to use will be decided by the user as a result of extracting a plurality of kinds of index combinations and analyzing the respective combinations, and selecting the combination with the highest adaptation.

As shown in FIG. 24, the diagram showing the causal association between the variables is referred to a "path diagram." The path diagram of FIG. 24 is hypothesizing the causal association between the variables as follows.

Foremost, attention is focused on the unidirectional arrow drawn from the latent variable $f_1$ (business strategy evaluated value) toward the left side of the drawing. Here, it is hypothesized that the company's business strategy represented with the latent variable $f_1$ is contributing to the observed variable $v_1$ (operating profit to sales ratio). This influence is represented as the coefficient $\lambda_1$. Nevertheless, the observed variable $v_1$ (operating profit to sales ratio) is decided also be depending on a unique cause that cannot be explained only with the cause of the latent variable $f_1$ (business strategy evaluated value). The fluctuation due to the unique cause can be indicated as the error variable $e_1$. Thus, a unidirectional arrow is also drawn from the error variable $e_1$ to the observed variable $v_1$ (operating profit to sales ratio).

Similarly, with the unidirectional arrow drawn from the latent variable $f_2$ (R&D strategy evaluated value) toward the left side of the drawing, it is hypothesized that the company's R&D strategy is contributing to the observed variable $v_2$ (R&D cost ratio) and the observed variable $v_3$ (R&D cost per inventor). The influences are respectively represented as the coefficients $\lambda_2$ and $\lambda_3$. The fluctuations due to the unique cause that cannot be explained only with the cause of the latent variable $f_2$ (R&D strategy evaluated value) are respectively indicated as the error variables $e_2$ and $e_3$.

Similarly, with the unidirectional arrow drawn from the latent variable $f_3$ (intellectual property strategy evaluated value) toward the left side of the drawing, it is hypothesized that the company's R&D strategy is contributing to the observed variable $v_4$ (number of claims per inventor). This influence is represented as the coefficient $\lambda_4$. The fluctuation due to the unique cause that cannot be explained only with the cause of the latent variable $f_3$ (intellectual property strategy evaluated value) is indicated as the error variable $e_4$.

Similarly, with the unidirectional arrow drawn from the latent variable $f_4$ (intellectual property strategic management) toward the left side of the drawing, it is hypothesized that the company's company value is contributing to the observed variable $v_5$ (PBR) and the observed variable $v_6$ (total factor productivity). These influences are respectively represented as the coefficients $k_5$ and $k_6$. The fluctuations due to the unique cause that cannot be explained only with the cause of the latent variable $f_4$ (intellectual property strategic management) are respectively indicated as the error variables $e_5$ and $e_6$.

With the relationship of the latent variables, it is hypothesized that the latent variables $f_1$ to $f_3$ are contributing to the latent variable $f_4$ (intellectual property strategic management). These influences are respectively represented as the coefficients $\gamma_1$ to $\gamma_3$. Nevertheless, the latent variable $f_4$ (intellectual property strategic management) is decided also by depending on the unique cause that cannot be explained only with the cause of the latent variables $f_1$ to $f_3$. The fluctuation due to the unique cause is indicated as the error variable $d_1$.

<2-2-3-3. Conclusion of Equation>

As a result of creating a causal model hypothesized regarding the causal association of the latent variables and the observed variables, and the causal association of the latent variables, these relationships can be represented with a primary simultaneous equation. In other words, the individual observed variables $v_1$ to $v_6$ can be represented as:

```
Observed variable = coefficient × latent variable to

become cause + error variable,
```

and the relationship of the latent variables can be represented as:

```
Latent variable to be influenced = coefficient × latent

variable to become cause + error variable.
```

Nevertheless, when it is hypothesized that more latent variables are to become the cause, the sum of "coefficient x latent variables to become cause" is sought for the amount of such latent variables.
Incidentally, an exogenous variable is a variable that will not become a variable (objective variable) appearing at the left side of the model equation. The opposite is an endogenous variable which is a variable (objective variable) that appears on the left side of at least a formula of the model equation.
The example of FIG. 24 can be represented with Formula 17 below:

```
v₁ᵢ = λ₁×f₁ᵢ + e₁

v₂ᵢ = λ₂×f₂ᵢ + e₂

v₃ᵢ = λ₃×f₂ᵢ + e₃

v₄ᵢ = λ₄×f₃ᵢ + e₄

v₅ᵢ = κ₅×f₄ᵢ + e₅

v₆ᵢ = κ₆×f₄ᵢ + e₆

f₄ᵢ = γ₁×f₁ᵢ + γ₂×f₂ᵢ +γ₃×f₃ᵢ + d₁ ............. (Formula 17)
```

Here, the suffix i is provided for differentiation since the observed variable vector v and the latent variable vector f are different values for each company. If the number of sample is N, then i = 1, 2, ..., N.
The primary simultaneous equation showing the foregoing causal association can be represented using the following matrix equation.

```
t = At + u ............................... (Formula 18)
```

Here, t is the "structure variable vector." Since the structure variable vector t is composed of the latent variable vector f and the observed variable vector v, this is represented as t = [f, v]' ("'" indicates the transposition matrix).

    f: Latent variable vector. The vector element is the latent variable describing the individual factors.

v: Observed variable vector. The vector element is the individual observable indexes, and let it be assumed that it is standardized so that the expected value E[v] of v: E[v] = 0.

Further, u is an "exogenous variable vector." Since the exogenous variable vector u is composed of the error variable vector d concerning f and the error variable vector e concerning v, this is represented as u = [d, e]' ("'" indicates the transposition matrix).

d: Error variable vector. The vector element is $f_j$ itself when the error variable concerning the vector element of f or No. j element $f_j$ of f is an exogenous variable.

e: Error variable vector. The vector element is $v_k$ itself when the error variable concerning the vector element of v or the No. k element $v_k$ of v is an exogenous variable.

Further, A is a "coefficient parameter matrix." Since the coefficient parameter matrix A is composed of the coefficient matrix $A_a$, the coefficient matrix $A_b$, the coefficient matrix $A_c$, and the coefficient matrix $A_d$, this is represented as follows.

$$A = \begin{bmatrix} A_a & A_c \\ A_b & A_d \end{bmatrix}$$

.........................................(Formula 19)

$A_a$: Coefficient matrix in which the coefficient $\gamma_{jj}$ representing the prescribing power from the latent variable $f_j$ to the latent variable $f_j$, is arranged in the j'j element.

$A_b$: Coefficient matrix in which the coefficients $\lambda_k$ and $k_k$ representing the prescribing power from the latent variable $f_j$ to the observed variable $v_k$ are arranged in the kj element.

$A_c$: Coefficient matrix in which the coefficient (does not exist in the path diagram shown in FIG. 24, and is therefore zero) representing the prescribing power from the observed variable $v_k$ to the latent variable $f_j$ is arranged in the jk element.

$A_d$: Coefficient matrix in which the coefficient (does not exist in the path diagram shown in FIG. 24, and is therefore zero) representing the prescribing power from the observed variable $v_k$ to the observed variable $v_{k'}$, is arranged in the k'k element.

In the example of FIG. 24, since there is no unidirectional arrow from the observed variable to the observed variable, and there is no unidirectional arrow from the observed variable to the latent variable,

$$A_c = 0, \ A_d = 0 \ \dots\dots\dots\dots\dots\dots\dots\dots\dots \ (Formula\ 20)$$

Further, the unidirectional arrow from the latent variable to the latent variable and the unidirectional arrow from the latent variable to the observed variable will be as follows when represented from the example of FIG. 24.

$$A_a = \begin{bmatrix} 0 & 0 & 0 & 0 \\ 0 & 0 & 0 & 0 \\ 0 & 0 & 0 & 0 \\ \gamma_1 & \gamma_2 & \gamma_3 & 0 \end{bmatrix}$$

$$A_b = \begin{bmatrix} \lambda_1 & 0 & 0 & 0 \\ 0 & \lambda_2 & 0 & 0 \\ 0 & \lambda_3 & 0 & 0 \\ 0 & 0 & \lambda_4 & 0 \\ 0 & 0 & 0 & \kappa_5 \\ 0 & 0 & 0 & \kappa_6 \end{bmatrix}$$

$$\dots\dots\dots\dots\dots\dots\dots\dots\dots\dots\dots\dots\dots \text{(Formula 21)}$$

The example of FIG. 24 will be the following [Formula 22]. When [Formula 22] is substituted with [Formula 18], it will become the equivalent of [Formula 17].

$$t = [ \quad f_{1i} \quad f_{2i} \quad f_{3i} \quad f_{4i} \quad v_{1i} \quad v_{2i} \quad v_{3i} \quad v_{4i} \quad v_{5i} \quad v_{6i} \quad ]'$$

$$A = \begin{bmatrix} 0 & 0 & 0 & 0 & 0 & 0 & 0 & 0 & 0 & 0 \\ 0 & 0 & 0 & 0 & 0 & 0 & 0 & 0 & 0 & 0 \\ 0 & 0 & 0 & 0 & 0 & 0 & 0 & 0 & 0 & 0 \\ \gamma_1 & \gamma_2 & \gamma_3 & 0 & 0 & 0 & 0 & 0 & 0 & 0 \\ \lambda_1 & 0 & 0 & 0 & 0 & 0 & 0 & 0 & 0 & 0 \\ 0 & \lambda_2 & 0 & 0 & 0 & 0 & 0 & 0 & 0 & 0 \\ 0 & \lambda_3 & 0 & 0 & 0 & 0 & 0 & 0 & 0 & 0 \\ 0 & 0 & \lambda_4 & 0 & 0 & 0 & 0 & 0 & 0 & 0 \\ 0 & 0 & 0 & \kappa_5 & 0 & 0 & 0 & 0 & 0 & 0 \\ 0 & 0 & 0 & \kappa_6 & 0 & 0 & 0 & 0 & 0 & 0 \end{bmatrix}$$

$$u = [ \quad f_{1i} \quad f_{2i} \quad f_{3i} \quad d_1 \quad e_1 \quad e_2 \quad e_3 \quad e_4 \quad e_5 \quad e_6 \quad ]'$$

$$\dots\dots\dots\dots\dots\dots\dots\dots\dots\dots\dots\dots \quad \text{(Formula 22)}$$

The variance-covariance matrix of the observed variable v is structured based on the created coefficient parameter matrix A, and the vector u composed of exogenous variables. Then, values of the respective elements of the variance-covariance matrix of the coefficient parameter matrix A as a representation that structured the observed variable v, and the exogenous variable vector u are estimated based on a prescribed optimization method. Thereafter, if it is possible to determine that the value of the model adaptation of the path diagram hypothesized in FIG. 24 is within a tolerance level, values of the respective elements of the coefficient parameter matrix A and the exogenous variable vector u will be determined, and the respective factor scores of the company's latent variable vector $f = \{f_1, f_2, f_3, f_4\}$ can be sought from the determined values.

The foregoing was the schematic concept of using the covariance structure analysis in the present embodiment. The specific processing routine is now explained using the generalized equation of [Formula 18].

<2-2-3-4. Specific Routine of Covariance Structure Analysis (FIG. 23)>

FIG. 23 is a flowchart explaining the processing flow in the foregoing company evaluation assisting device. This processing is executed by the CPU 301 of the company evaluation assisting device 30 of FIG. 1.

Upon executing this processing, individual observable indexes (for instance, PBR, number of claims per inventor, total factor productivity and so on) regarding each company are prepared in advance in the external database or the internal database.

<2-2-3-4-1. Input of Causal Model Information: S1>

Foremost, at step S191, whether the causal model information hypothesized regarding the causal association was input from the input means 310 is determined. This causal model information, for instance, is represented with the foregoing primary simultaneous equation based on the path diagram shown in FIG. 24.

<2-2-3-4-2. Creation of Vector: S2>

When the causal model information is input, at step S192, the latent variable vector f, the exogenous variable vector d, the exogenous variable vector e, and the coefficient parameter matrix A are created based on the causal model information. Further, the observed variable vector v standardized so that the expected value E[v] = 0 by referring to the related observed variables of the external database or the internal database is created in the same number as the N number of samples.

<2-2-3-4-3. Estimation of Population Parameter: S3, S4>

Subsequently, at step S193, the population parameter is estimated based on the created latent variable vector f, exogenous variable vector d, exogenous variable vector e, coefficient parameter matrix A, and observed variable vector v. Here, the population parameter indicates the respective elements of the exogenous variable vector d, the exogenous variable vector e, and the coefficient parameter matrix A. The outline of estimating the population parameter is as follows.

Variance-Covariance Matrix

Foremost, this is subject to representing the variance-covariance matrix concerning the observed variables with the population parameter.
When O is 0 matrix and I is a unit matrix, [Formula 18] can be modified as follows.

$$(I-A)t = u$$

This formula can be modified to [Formula 23] below when I-A has an inverse matrix T.

$$t = Tu \dots\dots\dots\dots\dots\dots\dots\dots\dots\dots\dots\dots \text{(Formula 23)}$$

This formula can be further modified to [Formula 24] below when the matrix G in the form of [O, I] that satisfies v = Gt is applied from the left to both sides. Thereby, it is possible to extract only the variance-covariance matrix of the observed variables.

$$v = GTu \dots\dots\dots\dots\dots\dots\dots\dots\dots\dots\dots \text{[Formula 24]}$$

Meanwhile, it is publicly known to represent the variance-covariance matrix $\Sigma v$ of v as in Formula 25 below using the expected value vector E[v] in which the expected values of the respective elements of the vector v are the elements.

$$\Sigma v = E[(v-E[v])(v-E[v])']$$
$$= E[vv'] \dots\dots\dots\dots\dots\dots\dots\dots\dots\dots \text{(Formula 25)}$$

Thus, the variance-covariance matrix $\Sigma v$ regarding the observed variables can be represented with the population parameter in [Formula 26] below based on [Formula 25] and [Formula 24].

$$\Sigma v = E[GTuu'T'G']$$

$$= GT(\Sigma u)T'G' \dots\dots\dots\dots\dots\dots\dots\dots (\text{Formula } 26)$$

Incidentally, $\Sigma u = E[uu']$. If the variance of the element of f is hypothesized as 1, since $\Sigma u$ will be uniformly set forth without depending on the sample i, the variance-covariance matrix $\Sigma v$ regarding the observed variables will be uniformly set forth.

If I-A does not have an inverse matrix T, the equation of [Formula 23] cannot be obtained. In this case, it is determined that the population parameter cannot be estimated at step S194, and the routine returns to step S191 and waits for new causal model information to be input.

After the variance-covariance matrix is obtained, the population parameter is estimated using the maximum likelihood estimation method.

Foremost, the vector having the coefficient parameter matrix A and E[uu'] in [Formula 26] as elements is set to $\theta$. Since the covariance matrix $\Sigma v$ of [Formula 26] can also be represented by $\theta$, this is indicated as $\Sigma(\theta)$.

Generally, when the variable v is following the multivariate normal distribution, it is publicly known that the probability $F(X|\theta)$ in which the data matrix of the variable v is observed can be represented as in [Formula 27] below.

$$F(X|\theta)$$

$$= \Pi_{(i;\ 1\leq i\leq N)}(2\pi)^{(-n/2)}|\Sigma(\theta)|^{(-1/2)}\exp[(-1/2)v'\Sigma(\theta)^{(-1)}v]$$

$$\dots\dots\dots\dots\dots\dots\dots\dots\dots\dots\dots\dots\dots\dots [\text{Formula } 27]$$

Here,

n: Dimension of vector v
N: Number of samples
$|\Sigma(\theta)|$: Determinant of matrix covariance matrix $\Sigma(\theta)$
$\Sigma(\theta)^{(-1)}$: Inverse matrix of covariance matrix $\Sigma(\theta)$.
$[(-1/2)v'\Sigma(\theta)^{(-1)}v]$ is the scalar quantity dependant on i.
The probability $F(X|\theta)$ is obtained by crossing the probability $(2\pi)^{(n-/2)}|\Sigma(\theta)|^{(-1/2)}\exp[(-1/2)v'\Sigma(\theta)^{(-1)}V]$ in which the individual samples are observed regarding all samples from i = 1 to i = N.

Thus, $\theta$ that maximizes the probability $F(X|\theta)$ is set as the estimated value of the population parameter. In reality, the following function Fml organized by taking the natural logarithm of both sides of [Formula 27] is used to seek $\theta$ that maximizes Fml. As a result of seeking the logarithm, this can be treated as a monotonic increase function to facilitate the maximization.

$$Fml = tr(\Sigma(\theta)^{(-1)}S) - \ln|\Sigma(\theta)^{(-1)}S| - n \dots\dots (\text{Formula } 28)$$

Here,

S: Covariance matrix $\Sigma v$ using data matrix of observed variables
tr(B): Sum of diagonal components of matrix B.

Upon seeking $\theta$ that maximizes the function Fml (or probability $F(X|\theta)$), there are cases when the solution is not converged. In such a case, the solution of the primary simultaneous equation input at step S1 will be indefinite. Accordingly, it is determined that the population parameter cannot be estimated at step S4, and the routine returns to step S1 and waits for new causal model information to be input.

Incidentally, in the foregoing case, the causal model information based on the same path diagram subject to the restraint condition of the coefficient parameter may be input to estimate the population parameter once again. As a result of imposing the restraint condition on the coefficient parameter, the solution of the primary simultaneous equation can be uniquely sought.

Incidentally, the estimation method of the population parameter is not limited to the maximum likelihood estimation method. The least squares method, generalized least squares method, elliptic least squares method, elliptic generalized least squares method, elliptic re-weighting least squares method and other methods may be used.

<2-2-3-4-4. Verification of Adaptation and Significance: S5>

After the population parameter is estimated, adaptation and significance of the causal model is verified at step S195.

First, at step S195, adaptation of the causal model is verified. Verification of the adaptation uses the publicly-known adaptation index of GFI (Goodness of Fit Index) or AGFI (Adjusted Goodness of Fit Index), or both. GFI is an index showing what % the set causal model explained the data (covariance matrix $\Sigma v$ concerning the observed variable). The closer the value of GFI is to 1, the greater the power of explanation of the model. AGFI is an index that knocks off the instability of the population parameter from GFI in order to cover GFI's drawback (GFI improving even when the stability of the population parameter deteriorates when the causal model becomes complex). If GFI and/or AGFI is greater than a prescribed threshold value, adaptation is determined to exist.

Incidentally, when the GFI or AGFI has already been sought regarding a separate causal model and an inferior result is obtained, adaptation may be determined to be non-existent. Further, other indexes may also be jointly used in verifying the adaptation.

Further, verification of the significance regarding the individual population parameters is performed at step S195. Specifically, the primary linear equation corresponding to the 2 variables with an arbitrary unidirectional arrow in the path diagram is deemed to be a regression equation, and the true coefficient matrix of the population is set as $\Gamma$, wherein $(\theta-\Gamma)/(diag(\Sigma(\theta)))^{1/2}$,

provided that $(diag(C))^{1/2}$ is considered to be a diagonal matrix in which the square root of the diagonal element of the matrix C is the diagonal element. This quantity asymptotically follows the standard normal distribution. Accordingly, if the value substituted with $\Gamma = 0$ is of a given value or greater, since the hypothesis of $\Gamma = 0$ will be dismissed (significance of population parameter is not acknowledged), it is possible to acknowledge the significance of the population parameter.

When either the adaptation or the significance is not acknowledged, the routine returns to step S1 and waits for new causal model information to be input.

When the adaptation and the significance are acknowledged, the routine proceeds to subsequent step S6 and calculates the evaluated value. However, even when the adaptation and the significance are acknowledged, other causal models may be further verified for selecting the causal model with the highest adaptation.

<2-2-3-4-5. Calculation and Output of Evaluated Value: S6>

Subsequently, the latent variable vector f is calculated from the observed variable vector v regarding each company based on the obtained population parameter, and set as the evaluated value.

In order to realize the above, Y should be foremost sought so f = Yv. When v' is applied to both sides from the right side,

$$fv' = Yvv'.$$

Here,
since

$$S = \Sigma v$$

$$= vv'/(N-1),$$

Thus,

$$Y = fv'S^{(-1)}/(N-1).$$

Meanwhile, when the matrix K in the form of [O, I] that satisfies f = Kt is used, based on [Formula 23] and [Formula 24],

$$fv' = Ktv'$$

$$= KTuv'$$

$$= KTuu'T'G'.$$

Thus, Y will be:

$$Y = KTuu'T'G'S^{(-1)}/(N-1),$$

and $\Sigma u = uu'/(N-1)$, Y can be sought with the following equation.

$$Y = KT(\Sigma u)T'G'S^{(-1)} \quad \dots\dots\dots\dots\dots\dots\dots\dots\dots \quad [Formula\ 29]$$

After calculating the evaluated value at step S196, the result is output and the routine is ended thereby. And, the routine returns to FIG. 23, and creates the "company ranking" at step S13.

(2-2-3-5. Specific Example)

(2-2-3-5-1. Path Diagram)

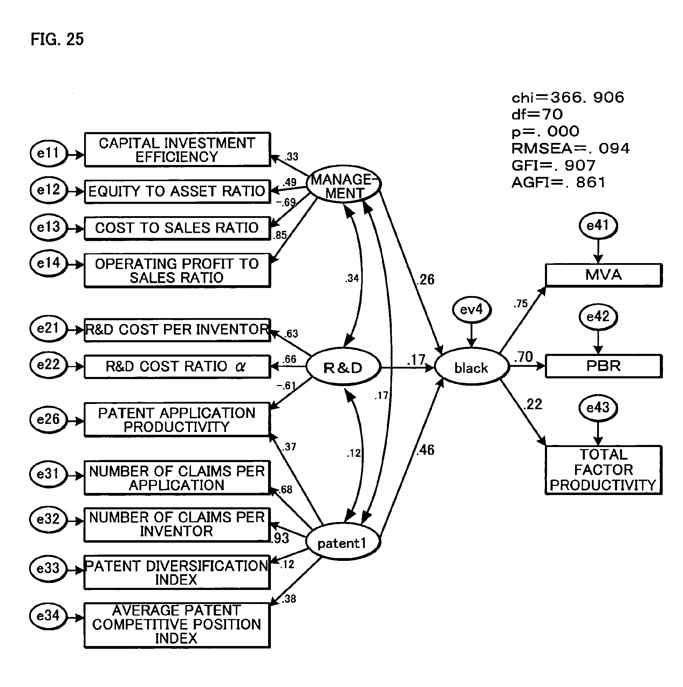

FIG. 25 is an example of the path diagram representing the results of the covariance structure analysis for valuating the intellectual property strategic management company. The path diagram shown in FIG. 25 is used for representing the results after creating the hypothesis and verifying the hypothetical model a few times.
As evident from the drawings, the intellectual property strategic management model shows a structure where the three strategies of "financial/profitability" factor (management), "patent strategy" factor (patent) and "R&D investment" factor (R&D) are associated. As a result of valuating this "intellectual property strategic management company" (black) based on this model, with respect to the influence (contribution ratio) in relation to the "intellectual property strategic management company" model (black), it is clear that the "financial/profitability" factor is roughly 26%, "R&D investment" factor (R&D) is roughly 17%, and "patent strategy" factor is 46%. Further, when viewing the coefficient of correlation between the factors, "financial/profitability" - "patent strategy" is 0.17, "patent strategy" - "R&D investment" is 0.12, and "R&D investment" - "finance/profitability" is 0.34, and each of these shows a weak relationship.
Further, there are 3 indexes that are valuating the "intellectual property strategic management company" from the outside; namely, "MVA (difference between the aggregate market price and stockholders' equity)", "PBR (price book value ratio) (market valuation index), and "total factor productivity". Here, the "intellectual property strategic management company" is set as a potential factor existing between these 3 external indexes and the "finance/profitability" factor, "R&D investment" factor, and "patent application strategy" factor. The reason a market valuation index is used as the external valuation index is because market price that is greater than the book price corresponds to the valuation in relation to off-balance intellectual assets such as know-how and intellectual property of the respective companies. Contrarily, if the market price is lower than the book value, the market will consider that the company hardly has any off-balance intellectual assets, or is not capable of utilizing this as the source of profit.
Nevertheless, there are restrictions to the intellectual asset valuation obtained from the market valuation index. This is because the market price will rise or fall wrongfully due to the macro economic environment or asymmetry of information existing between the company and market, noises unrelated to the valuation of intellectual assets are contained therein. Thus, in addition to the market valuation index, "total factor productivity" is used as an external index for valuating the "intellectual property strategy management". Here, the "total factor productivity" is an index for measuring the "technical progress ratio" and which can be obtained by subtracting the rate of change of "facilities" and "workforce" from the rate of change of the "value added amount" in each year of the respective companies.

In an embodiment of the present invention, the "intellectual property strategic management company" has been defined as a structure having an unknown potential factor existing between the three factors of business, R&D and intellectual property and the external valuation indexes of MVA, PBR and total factor productivity. Thereupon, a model is created by selecting and determining indexes that fit the most with such structure among all indexes described in FIG. 4 to FIG. 9. Indexes constituting the respective factors selected and determined based on the creation of the adaptive model are as follows.

Foremost, the model adaptations which are the highest as the index constituting the "finance/profitability" factor are the 4 indexes of "facility investment efficiency", "equity to asset ratio", "costs to sales ratio" and "operating profit to sales ratio". Next, the model adaptations which are the highest as the index constituting the "R&D investment" factor are the 3 indexes of "R&D cost ratio $\delta$", "R&D cost per inventor" and "patent application productivity". Finally, the model adaptations which are the highest as the index constituting the "patent strategy" factor are the 4 indexes of "number of claims per application", "number of claims per inventor", "patent diversification index" and "average patent competitive position index". Incidentally, as the index constituting the "patent strategy" factor, additionally there are "patent desire", "check power against other company" and "total valid patent share". The definition and calculation method of the respective indexes are as per the lists shown in FIG. 4 to FIG. 9.

The combinations of indexes shown in FIG. 25 are those with the highest model adaptation. Specifically, based on the chi-squared test, $\chi^2 = 366.906$ (degree of freedom df = 70, p value = 0.000). Further, RMSEA (Root Mean Square Error of Approximation) = 0.094, GFI = 0.907, AGFI = 0.861.

<2-2-3-5-2. Weighting>

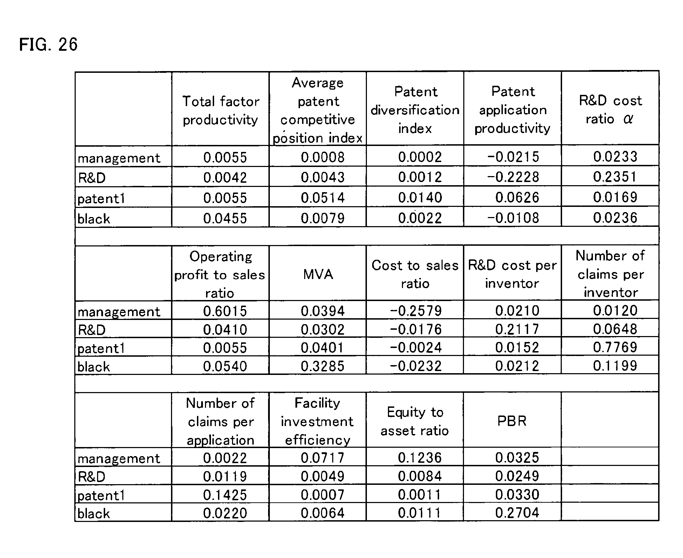

Further, the weighting (component of matrix Y) to be applied to the respective indexes for calculating the respective evaluated values at evaluated value calculation step S196 in the example of FIG. 25 is shown in FIG. 26. The digit of $10^{-5}$ was rounded off.

According to FIG. 26,

(1) Indexes with large weighting for calculating the business strategy evaluated value (management) are as follows:

"operating profit to sales ratio" which is 0.6015,
"equity to asset ratio" which is 0.1236,
"facility investment efficiency" which is 0.0717,
"MVA" which is 0.0394, and
"PBR" which is 0.0325.

Further, an index in which the weighting is a large negative value of an absolute value is as follows:

"cost to sales ratio" which is -0.2579.

(2) Indexes with large weighting for calculating the R&D strategy evaluated value (R&D) are as follows:

"R&D cost ratio $\alpha$" which is 0.2351,
"R&D cost per inventor" which is 0.2117, and
"number of claims per inventor" which is 0.0648.

Further, an index in which the weighting is a large negative value of an absolute value is as follows:

"patent application productivity" which is -0.2228.

(3) Indexes with large weighting for calculating the intellectual property strategy evaluated value (patent 1) are as follows:

"number of claims per inventor" which is 0.7769,

"number of claims per application" which is 0.1425, and
"patent application productivity" which is 0.0626.

(4) Indexes with large weighting for calculating the intellectual property strategic management (black) are as follows:

"MVA" which is 0.3285,
"PBR" which is 0.2704,
"number of claims per inventor" which is 0.1199, "operating profit to sales ratio" which is 0.0540, and
"total factor productivity" which is 0.0454.

(2-2-3-5-3. Ranking)

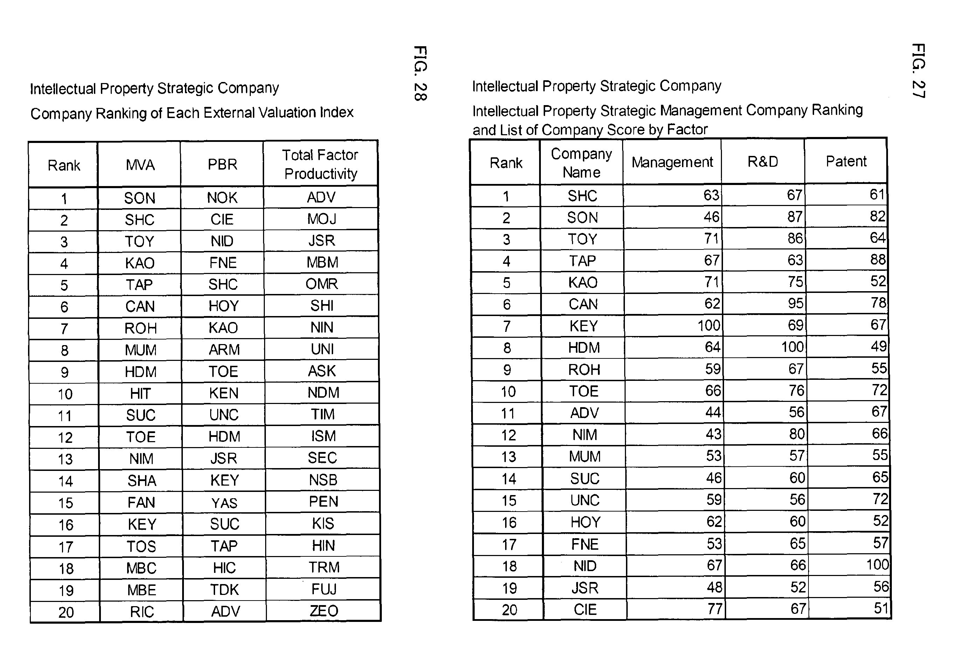

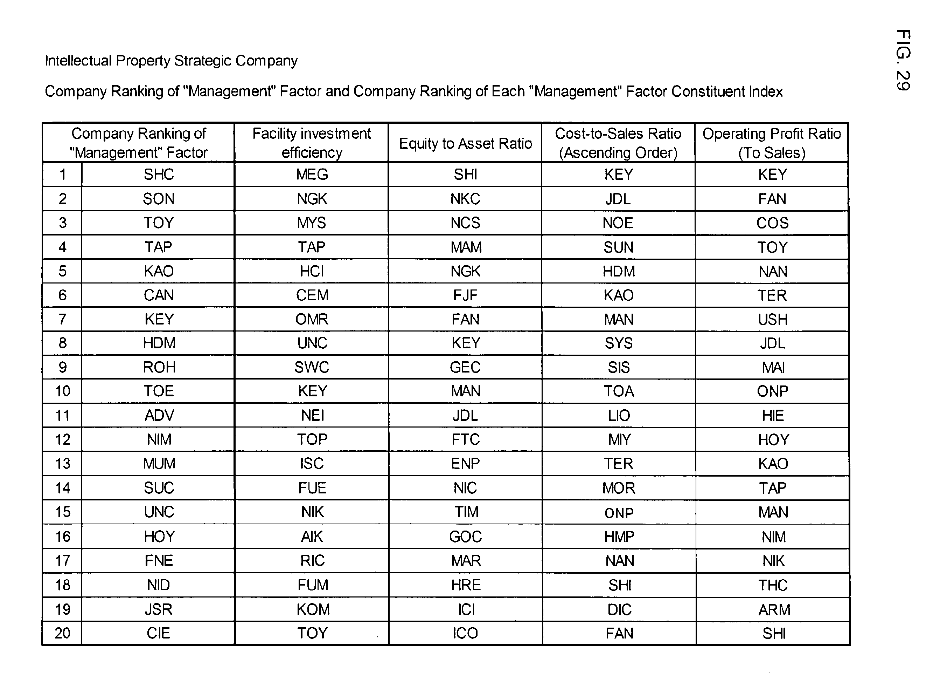

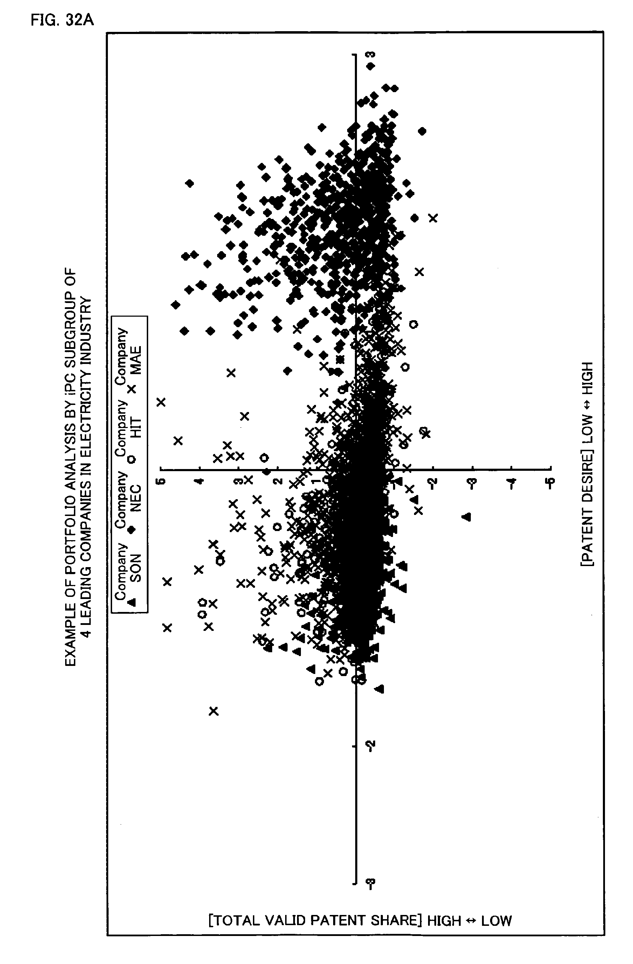

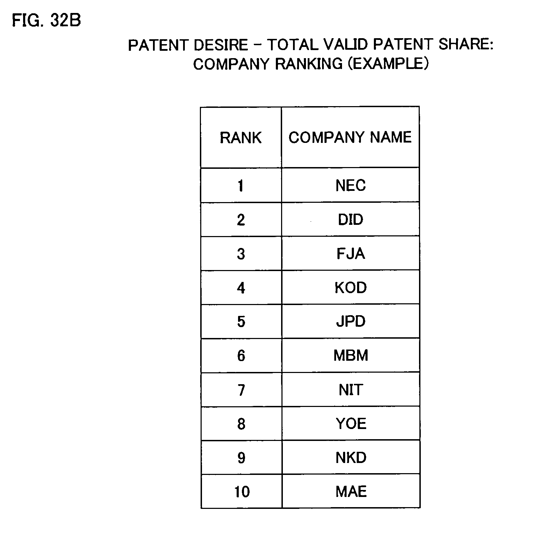

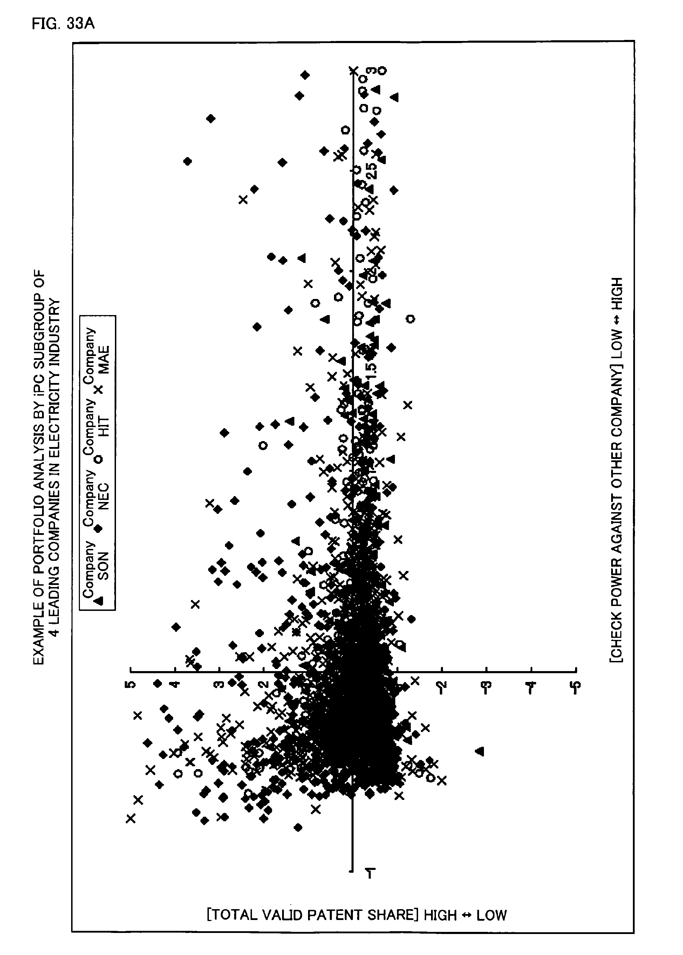

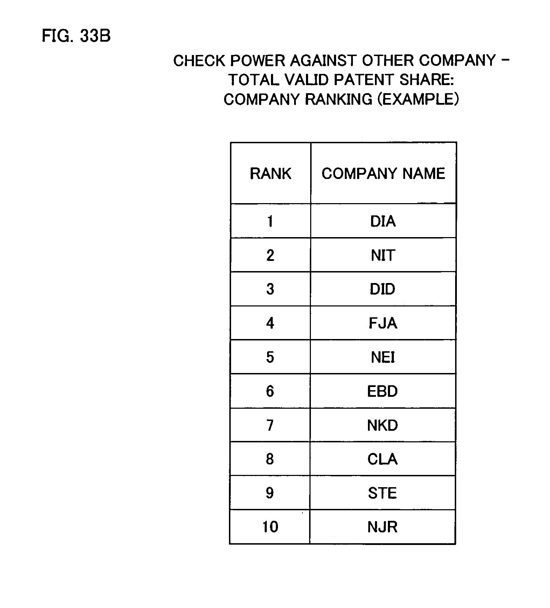

FIG. 27 to FIG. 31 are lists of company rankings valuating the "intellectual property strategic management company" based on the foregoing covariance structure analysis. FIG. 27 is a list constituted from the overall valuation ranking of the "intellectual property strategic management company", and the respective company scores of the "finance/ profitability" factor, "R&D investment" factor and "patent strategy" factor. Incidentally, the overall ranking of the "intellectual property strategic management company" is displayed by calculating the overall "total score", standardizing the companies with the highest scores as 100 points or 1000 points, and listing the companies in descending order from the company with the highest "total score" down.
The lists shown in FIG. 28 to FIG. 31 respectively show company rankings for each of the three external indexes described above, and the respective indexes constituting each of the factors. As described above, in the covariance structure analysis, in addition to creating a ranking representing the overall valuation of the overall company, it will be possible to create a company ranking representing a multilateral valuation of each factor.
Further, in addition to conducting the corporate valuation for each factor, corporate valuation may also be conducted based on industry or product. Moreover, corporate valuation may be conducted based on the sections, classes, sub classes, and main groups of the International Patent Classification (IPC), or corporate valuation may be conducted based on US Patent Classification (UPC) or US Standard Industry Classification (SIC).
For instance, FIG. 32B and FIG. 33B are representations as company rankings of the results obtained by valuating the patents owned by companies in the electrical industry in arbitrary IPC sub groups based on a plurality of indexes representing patent features. As a result of adopting this kind of corporate valuation method, the potential values of the respective companies can be valued in more detail and with more precision.
Incidentally, FIG. 32A and FIG. 33A are examples of the scatter diagram created from the company ranking shown at FIG. 32B and FIG. 33B. For example, FIG. 32A is an example of a scatter diagram in which the results upon valuating the patents owned by the 4 leading companies in the electrical industry in arbitrary IPC sub groups based on the two indexes of "patent desire" and "total valid patent share" are plotted as a factor score. Similarly, FIG. 33A is an example of a scatter diagram in which the results upon valuating the patents owned by the 4 leading companies in the electrical industry in arbitrary IPC sub groups based on the two indexes of "check power against other company" and "total valid patent share" are plotted as factor scores. As a result of employing the scatter diagrams shown in FIG. 32A and FIG. 33A, it will be possible to compare patents owned by the respective companies by technical fields, or with competitors. In addition, contrary to the foregoing procedures, for instance, the factor scores plotted on FIG. 32A and FIG. 33A may be added and totaled, and, by setting scores in advance by areas in the respective quadrants, the number of dots plotted in the respective areas may be totaled. Thereby, it will be possible to create a company ranking by IPC sub groups and based on each of the plurality of indexes representing patent features.

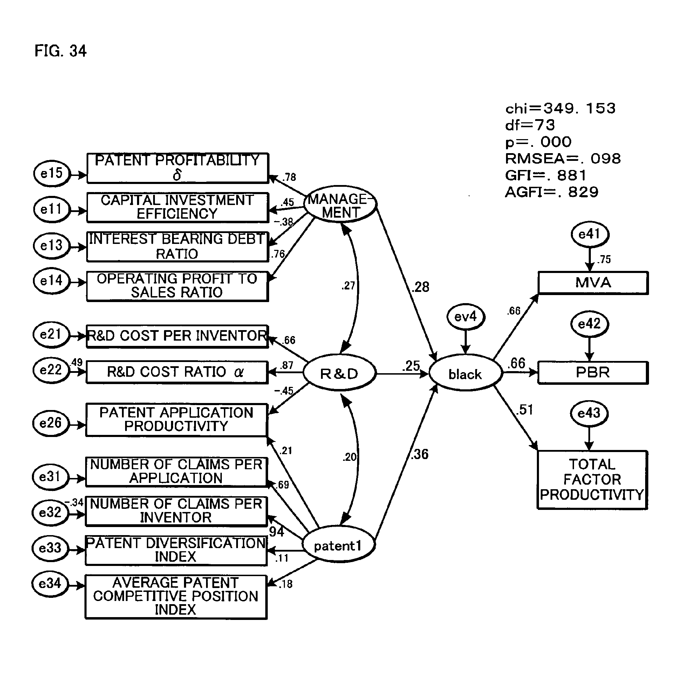

FIG. 34 is another example of the path diagram representing the results of the covariance structure analysis for valuating the intellectual property strategic management company.
As evident from FIG. 34, as well as FIG. 25, the intellectual property strategic management model shows a structure where the three strategies of "financial/profitability" factor (management), "patent strategy" factor (patent) and "R&D investment" factor (R&D) are associated. As a result of valuating this "intellectual property strategic management company" (black) based on this model, with respect to the influence (contribution ratio) in relation to the "intellectual property strategic management company" model (black), it is clear that the "financial/profitability" factor is roughly 28%, "R&D investment" factor (R&D) is roughly 25%, and "patent strategy" factor is 36%.
Further, in FIG. 34, as well as FIG. 25, there are 3 indexes that are valuating the "intellectual property strategic management company" from the outside; namely, "MVA (difference between the aggregate market price and stockholders' equity)", "PBR (price book value ratio) (market valuation index), and "total factor productivity". Here, the "intellectual property strategic management company" is set as a potential factor existing between these 3 external indexes and the "finance/profitability" factor, "R&D investment" factor, and "patent application strategy" factor.

In FIG. 34, the model adaptations which are the highest as the index constituting the "finance/profitability" factor are the 4 indexes of "patent profitability $\delta$", "facility investment efficiency", "interest bearing debt ratio" and "operating profit to sales ratio". Next, the model adaptations which are the highest as the index constituting the "R&D investment" factor are the 3 indexes of "R&D cost per inventor", "R&D cost ratio $\alpha$" and "patent application productivity". Finally, the model adaptations which are the highest as the index constituting the "patent strategy" factor are the 4 indexes of "number of claims per application", "number of claims per inventor", "patent diversification index" and "average patent competitive position index". The definition and calculation method of the respective indexes are as per the lists shown in FIG. 4 to FIG. 9.

(2-2-4. Other Methods of Company Valuation)

As described above, in an embodiment of the present invention, as the method of conducting corporate valuation, three methods; namely, a method of selecting an index and performing principle component analysis; a method of performing factor analysis and multiple regression analysis and thereafter performing principle component analysis; and a method of performing covariance structure analysis are explained. Nevertheless, the method of conducting corporate valuation is not limited to the foregoing methods. For example, multiple regression analysis may be performed without performing factor analysis, and principle component analysis may be performed thereafter upon selecting an index having a high contribution ratio in relation to the target variable. In addition, as another method of conducting corporate valuation, linear programming or non-linear programming may also be employed. As described above, a plurality of types of company rankings can be created based on a plurality of corporate valuation methods. Therefore, a company group to become the plurality of stock-for- portfolio candidates can be created based on different perspectives.

(2-3. Selection of Stock for Portfolio Company)

Returning to FIG. 3 once again, subsequently at step S14, N number of companies (hereinafter simply referred to as "N companies") is selected from the total ranking based on the corporate valuation at step S13 in order to select the stock-for-portfolio company. As the method of selecting N companies, (1) a method of simply selecting the top N companies of the ranking, (2) a method of selecting companies having the standardized value of 1 or more with principle component 1, (3) a method of selecting companies having the standardized value of 2 or more with both principle component 1 and principle component 2, and (4) a method of selecting companies in which the difference between the overall ranking based on company evaluation and the ranking of other company evaluation factors is over a prescribed range as overvalued/undervalued companies may be employed.

(2-3-1. Overvalued/Undervalued Company Extraction)

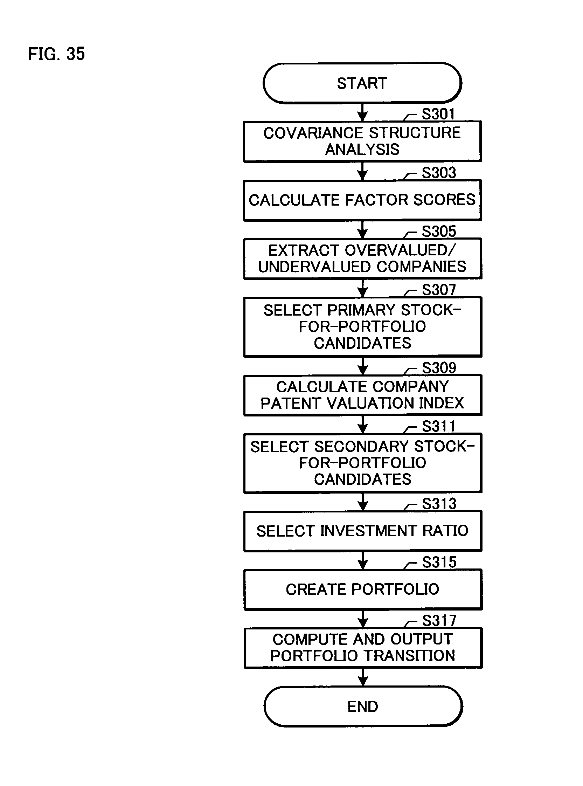

The method (4) above is now explained in detail with reference to FIG. 35. Foremost, covariance structure analysis is performed at step S301, and the respective factor scores of the "patent strategy" factor, the "R&D investment" factor, and the "intellectual property strategy management company" factor are calculated at step S303. Subsequently, the overvalued/undervalued companies are extracted at step S305. Since step S301 and step S303 have already been explained above, the detailed explanation thereof is omitted.
Foremost, the first overvalued/undervalued company is explained.
Among the scores of each company calculated based on the covariance structure analysis explained with reference to FIG. 23 onward, the score difference between the "patent strategy" factor score and the "intellectual property strategy management" factor score of each company is calculated with the following equation.

```
(Factor score difference) = ("patent strategy" factor

score) - ("intellectual property strategy management" factor

score) ... (Formula 30)
```

Among the companies in which the factor score difference is a positive value, the top 20 companies are listed, for instance, as the first undervalued companies in descending order of the absolute value. Companies with a large positive value of the factor score difference may be expected to be companies that have high potential competitive power in comparison to the market evaluation. Further, among the companies in which the factor score difference is a negative value, the lower 20 companies are listed, for instance, as the first overvalued companies in descending order of the absolute value. Companies with a large negative value of the factor score difference may be assumed to be companies that have low potential competitive power in comparison to the market evaluation.

Subsequently, the second overvalued/undervalued company is explained.

Here, among the scores of each company calculated based on the covariance structure analysis, the "patent strategy" factor score, the "R&D investment" factor score, and the "intellectual property strategy management" factor score of each company are respectively standardized, and the overvalued/undervalued companies are extracted based on the standardized "patent strategy" factor score, the standardized "R&D investment" factor score, and the standardized "intellectual property strategy management" factor score of each company. Since the average value will become 0 when standardization is performed, it is possible to represent the magnitude correlation of the calculated value of companies to be measured and the average value, in a positive/negative relationship.

Subsequently, the sum of the standardized "patent strategy" factor score and the standardized "R&D investment" factor score of each company is calculated, and the magnitude correlation with the average value of all companies is calculated. In this case, since the factor scores are standardized as described above, the average value becomes 0, and the sum of the factor scores will become a positive or negative value.

Then, subsequently, the standardized "intellectual property strategy management" factor score of each company is calculated, and the magnitude correlation with the average value of all companies is calculated. In this case also, since the factor scores are standardized as described above, the average value becomes 0, and the standardized "intellectual property strategy management" factor score of each company will become a positive or negative value.

Here, companies in which the sum of the "patent strategy" factor score and the "R&D investment" factor score is greater the average value of all companies, but the "intellectual property strategy management" factor score is lower than the average value of all companies are referred to as the second undervalued companies. In this case, companies in which the sum of the standardized "patent strategy" factor score and the standardized "R&D investment" factor score is a positive value, and the standardized "intellectual property strategy management" factor score is simultaneously a negative value are referred to as the second undervalued companies. The foregoing can be represented in an equation as shown in Formula 31 below.

(Standardized "patent strategy" factor score) +

(standardized "R&D investment" factor score) > 0 (average

value), and

(Standardized "intellectual property strategy management"

factor score) < 0 (average value) ... (Formula 31)

Contrarily, companies in which the sum of the "patent strategy" factor score and the "R&D investment" factor score is less than the average value of all companies, and the "intellectual property strategy management" factor score is greater than the average value of all companies are referred to as the second overvalued companies. In this case, companies in which the sum of the standardized "patent strategy" factor score and the standardized "R&D investment" factor score is a negative value, and the standardized "intellectual property strategy management" factor score is simultaneously a positive value are referred to as the second overvalued companies. The foregoing can be represented in an equation as shown below.

(Standardized "patent strategy" factor score) +

(standardized "R&D investment" factor score) < 0 (average

value), and

(Standardized "intellectual property strategy management"

factor score) > 0 (average value) ... (Formula 32)

Consequently, the primary stock-for-portfolio candidates are selected at step S307. Specifically, the primary stock-for-portfolio selection candidates include the first undervalued companies or the second undervalued companies, or the combination of both company groups, and 78 stock-for-portfolio companies are selected from such candidates. Otherwise, the primary stock-for-portfolio selection candidates may include a company group extracted as the first overvalued/undervalued companies or a company group extracted as the second overvalued/undervalued companies, or the combination of both company groups, and the stock-for-portfolio companies may be selected from such candidates. Like this, by selecting so-called overvalued companies in addition to selecting undervalued companies, the portfolio can be equipped with a risk hedge function.

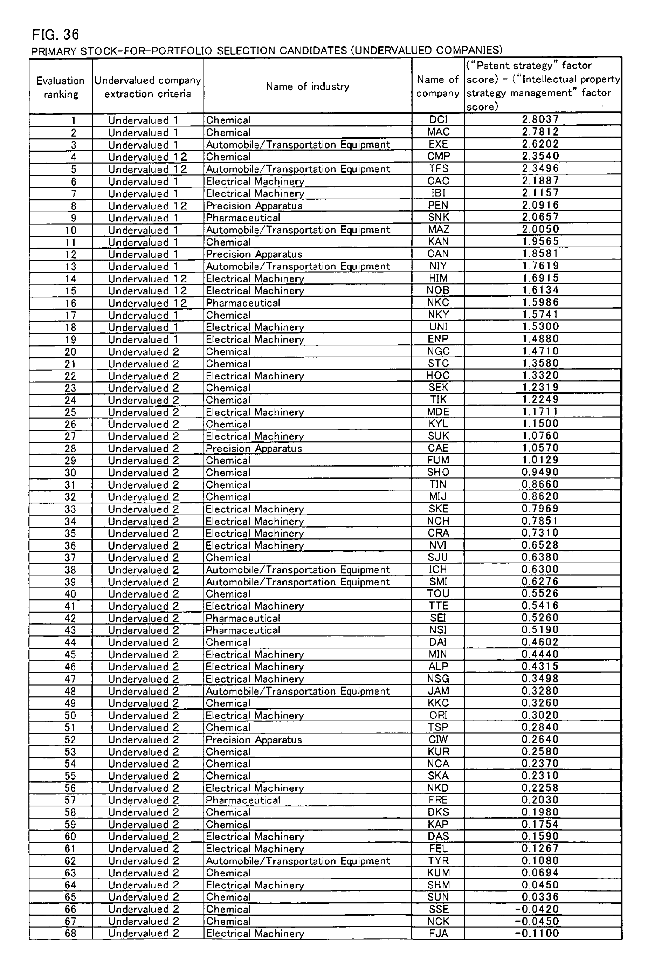

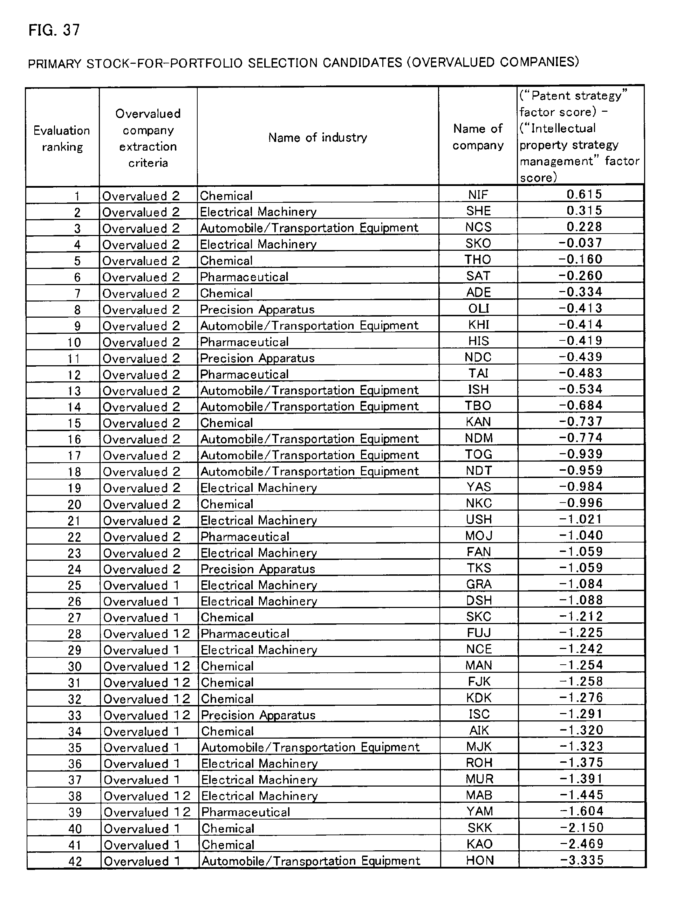

FIG. 36 and FIG. 37 are lists of the primary stock-for-portfolio selection candidates of undervalued companies and overvalued companies. The columns of "undervalued company extraction criteria" and "overvalued company extraction criteria" shown in the diagrams include the notations of "undervalued 1," "undervalued 2," "undervalued 12," and "overvalued 1," "overvalued 2," and "overvalued 12." Among the above, "undervalued 1" represents companies extracted as the first undervalued companies, and "undervalued 2" represents companies extracted as the second undervalued companies. Further, "undervalued 12" represents companies extracted as both the first undervalued companies and the second undervalued companies. Contrarily, "overvalued 1" represents companies extracted as the first overvalued companies, and "overvalued 2" represents companies extracted as the second overvalued companies. Further, "overvalued 12" represents companies extracted as both the first overvalued companies and the second overvalued companies. Further, this list indicates in descending order from the companies in which the value of the factor score difference obtained by ("patent strategy" factor score) - ("intellectual property strategy management" factor score) is large.

Incidentally, in this embodiment of the present invention, 78 undervalued companies and 41 overvalued companies were selected as the primary stock-for-portfolio selection candidates.

(2-3-2. Selection of Stock-For-Portfolio Companies)

Selection of the stock-for-portfolio companies may also be conducted by calculating the company patent valuation index for each company as shown in step S309, and basing the selection on the calculation result of the company patent valuation index.

More preferably, among the primary stock-for-portfolio selection candidates, a given number of companies is excluded from the primary stock-for-portfolio candidates based on the calculation result of the company patent valuation index. As a result, the remaining company group that was not excluded will become preferential stock-for-portfolio companies as incorporation recommended companies. As a result of performing this kind of cutback, companies with a highly valuated company patent valuation index can be preferentially included in the stock portfolio.

When "overvalued companies" are to be selected in addition to "undervalued companies" as the primary stock-for-portfolio selection candidates, among the foregoing "undervalued companies," companies in which the company patent valuation index is "lower" than a prescribed value are excluded. Contrarily, among the foregoing "overvalued companies," companies in which the company patent valuation index is "higher" than a prescribed value are excluded, and the remaining companies are made to be the incorporation recommended companies. Like this, as a result of performing the cutback of overvalued companies with a valuation method that is opposite to the cutback of undervalued companies, the risk hedge function of the portfolio can be reinforced.

Here, the reason the company patent valuation index is used is to elicit the positioning of one's own company by comparing the patents owned by each company and the patents of competitors, and simultaneously give consideration to the degree of concentration of the internal technical development field. As a result, by adding patent information that could not be given consideration during the selection of the primary stock-for-portfolio candidates, the potential growth of each company is evaluated, and further extraction of overvalued/undervalued companies is thereby enabled.

Foremost, the patent application data of all companies is extracted from the company evaluation index data of the acquired intellectual asset related index and the like. The number of patent applications is calculated based on such data.

Specifically, upon initially calculating the number of various patent applications, the patent application data of the available latest business year is extracted. Since the issue timing of laid-open patent publications is 1 year and 6 months from the filing date, the available period of the patent application data of the latest business year will be 3 business years before the present time. Thus, 3 business years before the present time will be the available latest business year, and this latest business year is defined as the current term.

Subsequently, the number of various patent applications is calculated. Firstly, the current term per-IPC sub class number of patent applications of all companies is calculated. Secondly, the current term per-company total number of patent applications is calculated. Thirdly, the current term per-company per-IPC sub class number of patent applications is calculated.

Fourthly, the (current term -1) term (hereinafter referred to as the "previous term") per-IPC sub class number of patent applications of all companies is calculated. Fifthly, the previous term per-company per-IPC sub class number of patent applications is calculated. The calculation results of the number of patent applications in the foregoing 5 types are used to calculate the company patent valuation index.

Initially, the average value of the corrected patent application relative share regarding the top 3 IPC sub classes of the total cumulative number of patent applications of each company is calculated. Here, the corrected patent application relative share is a value obtained by correcting the simple relative share of the number of patent applications of each company among the overall cumulative number of patent applications of the respective IPC sub classes by weighting it with the excess growth rate. Here, the excess growth rate represents the degree of excessiveness of the growth rate of each company in relation to the growth rate of all companies in the respective IPC sub classes. As a result of adding a temporal element of growth potential from the present to the future of each company, an anticipatory index element can be reinforced in comparison to the simple relative share.

Foremost, among the current term per-company per-IPC sub class number of patent applications of the number of patent applications, the top three per-IPC sub class number of patent applications in ascending order of the number of patent applications is extracted for each company. As a result of calculating the company patent valuation index regarding the top three IPC sub classes of the total cumulative number of patent applications of each company, the technical characteristics of companies can be further emphasized by hypothesizing that the technologies of each company are aggregated in the top three IPC sub classes.

Subsequently, the current term per-IPC sub class number of patent applications of all companies is calculated regarding the extracted top three IPC sub classes. Then, by dividing the current term per-company per-IPC sub class number of patent applications by the current term per-IPC sub class number of patent applications of all companies, the simple relative share of the number of patent applications in the top three per-IPC sub classes is calculated. The foregoing can be represented in an equation as shown below.

Top 3 per-IPC sub class simple relative share = current term per-company per-IPC sub class number of patent applications/current term per-IPC sub class number of patent applications of all companies

Subsequently, the excess growth rate of each company is calculated for each of the top three IPC sub classes. Specifically, firstly, the growth rate of each company is calculated for each of the top three IPC sub classes. Upon calculating the growth rate of each company, foremost, the increment/decrement value of the number of patent applications in 2 terms is calculated by subtracting the previous term per-company per-IPC sub class number of patent applications from the current term per-company per-IPC sub class number of patent applications. Subsequently, the growth rate of the number of patent applications in 2 terms is calculated by dividing the calculated increment/decrement value of the number of patent applications in 2 terms by the previous term per-company per-IPC sub class number of patent applications. The calculated growth rate of the number of patent applications of each company in each IPC sub class in 2 terms is used as the growth rate of each company.

The foregoing can be represented in an equation as shown below.

Growth rate of each company = (current term per-company per-IPC sub class number of patent applications - previous term per-company per-IPC sub class number of patent applications)/previous term per-company per-IPC sub class number of patent applications

Secondly, the growth rate of all companies is calculated for each of the top three IPC sub classes. Upon calculating the growth rate of all companies, foremost, the increment/decrement value of the number of patent applications in 2 terms is calculated by subtracting the previous term per-IPC sub class number of patent applications of all companies from the current term per-IPC sub class number of patent applications of all companies. Subsequently, the growth rate of the number of patent applications in 2 terms is calculated by dividing the calculated increment/decrement value of the number of patent applications in 2 terms by the previous term per-IPC sub class number of patent applications of all companies. The calculated growth rate of the number of patent applications of all companies for each IPC sub class in 2 terms is used as the growth rate of all companies. The foregoing can be represented in an equation as shown below.

Growth rate of all companies = (current term per-IPC sub class number of patent applications of all companies - previous term per-IPC sub class number of patent applications of all companies)/previous term per-IPC sub class number of patent applications of all companies

Thirdly, the excess growth rate of each company is calculated for each of the top three IPC sub classes. Upon calculating the excess growth rate of each company, the increment of the growth rate of each company in relation to the growth rate of all companies is calculated by subtracting the growth rate of all companies from the growth rate of each company. The value of this increment is used as the excess growth rate of each company for each of the top three IPC sub classes. The foregoing can be represented in an equation as shown below.

Excess growth rate of each company = growth rate of each company - growth rate of all companies

If the value of this increment is a positive value, this shows that the growth rate of each company in each of the IPC sub classes is greater than the overall growth rate of that IPC sub class. Contrarily, if the value of this increment is a negative value, this shows that the growth rate of each company in each of the IPC sub classes is lower than the overall growth rate of that IPC sub class.

By weighting the calculated simple relative share of each of the top 3 IPC sub classes with the excess growth rate of each company, the corrected patent application relative share of each company is corrected. Specifically, a value obtained by adding 1 to the excess growth rate of each company is multiplied to the simple relative share of each of the top 3 IPC sub classes. The reason 1 was added to the excess growth rate of each company is to prevent the value from becoming a negative value regardless of whether the value of the excess growth rate of each company is a positive or a negative value, and avoid the value of the simple relative share of each of the top 3 IPC sub classes from being converted from a positive value into a negative value based on weighting. The foregoing can be represented in an equation as shown below.

```
Top 3 per-IPC sub class corrected patent application
relative share = top 3 per-IPC sub class simple relative share
× (1 + excess growth rate)
```

In order to obtain a unique value from the values of the current term corrected patent application relative share calculated for each of the top 3 IPC sub classes, the top 3 IPC sub classes current term average corrected patent application relative share is calculated. Specifically, this is sought by calculating the average value by dividing the value of the corrected patent application relative share calculated for each of the top 3 IPC sub classes by 3, which is the number of IPC sub classes of the top 3 IPC sub classes. As a result of the foregoing routine, the corrected patent application relative share average value regarding the top 3 IPC sub classes of the total cumulative number of patent applications of each company can be sought.

Subsequently, the patent concentration index of each company is calculated. The patent concentration index is an index for measuring the degree of concentration/diversification of the company's technical development fields by calculating and using the number of patent application share for each of the IPC sub classes among the total number of patent applications during a prescribed period of each company.

Foremost, the per-IPC sub class number of patent application share of each company is calculated. Specifically, this is calculated by dividing the current term per-company per-IPC sub class number of patent applications of each company by the current term per-company total number of patent applications. The foregoing can be represented in an equation as shown below.

Per-company per-IPC sub class number of patent application share = current term per-company per-IPC sub class number of patent applications/current term per-company total number of patent applications

Subsequently, the value of the calculated per-company per-IPC sub class number of patent application share is squared. Further, the squared per-company per-IPC sub class number of patent application share is calculated regarding all IPC sub classes in which each company filed a patent application, and the total value of all of the foregoing additions is calculated as the patent concentration index of each company. Here, the reason the value of the per-company per-IPC sub class number of patent application shares were not simply added but rather squared values were added is to keep down the value of companies that are filing patent applications broadly across many IPC sub classes, and increase the value of companies that are filing patent applications in a concentrated manner in specific IPC sub classes, and to reflect the results thereof. The foregoing can be represented in an equation as shown below.

$$\text{Per-company patent concentration index} = \Sigma(\text{per-company}$$

$$\text{per-IPC sub class number of patent application share})^2$$

Finally, the company patent valuation index is calculated by multiplying the patent concentration index to the corrected patent application relative share average value regarding the top three IPC sub classes of the total cumulative number of patent applications of each company. In the company patent valuation index, the influence of the size of business being reflected on the size of value is diminished by multiplying the patent concentration index to the corrected patent application relative share average value.
The foregoing can be represented in an equation as shown in Formula 33 below.

$$\text{company patent valuation index} = \text{corrected patent}$$

$$\text{application relative share average value in top 3 IPC sub}$$

$$\text{classes of per-company number of patent applications} \times \text{patent}$$

$$\text{concentration index} \ldots \text{(Formula 33)}$$

In addition, at step S311, a given number of companies is excluded from the primary stock-for-portfolio candidates based on the calculated company patent valuation index. Foremost, among the primary stock-for-portfolio candidates, companies in which the company patent valuation index is 5 or less are excluded from the undervalued company group. Further, among the primary stock-for-portfolio candidates, companies in which the company patent valuation index is 5 or greater are excluded from the overvalued company group. In addition, the remaining company group excluding the excluded companies from the primary stock-for-portfolio candidates is used as the secondary stock-for-portfolio candidates.

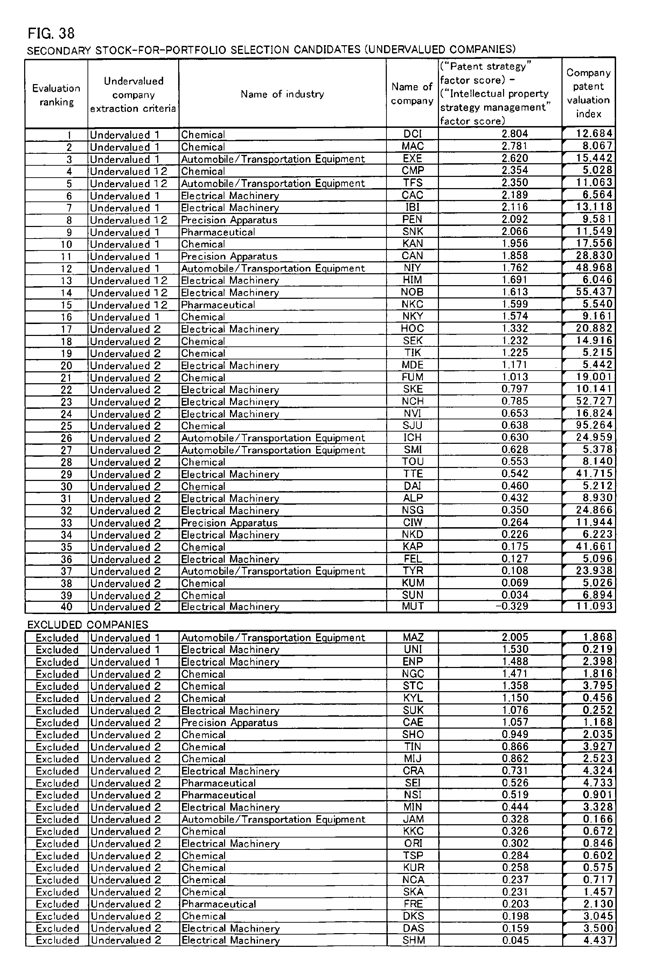

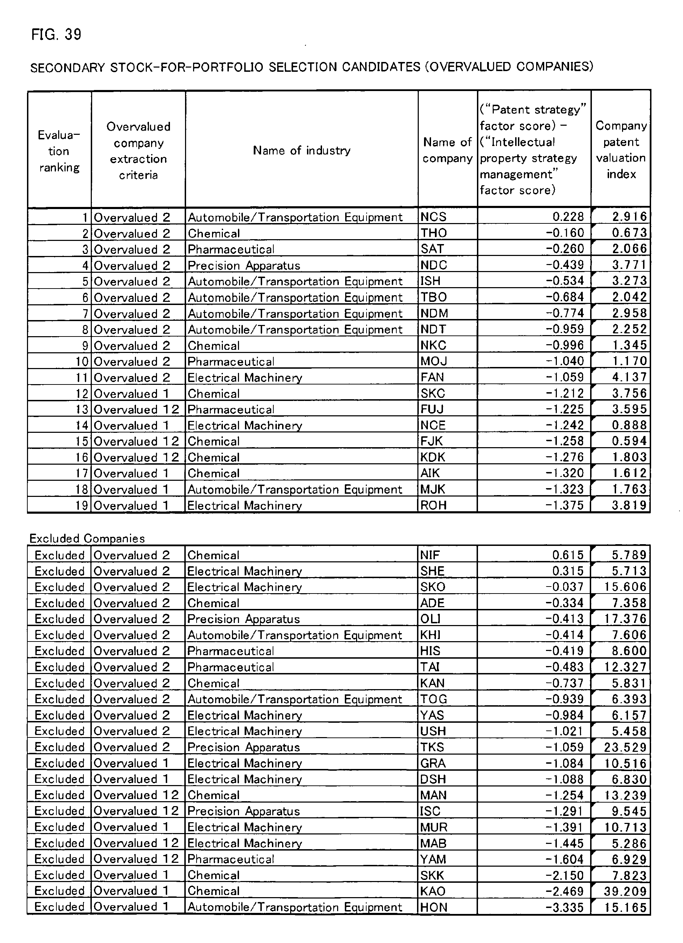

FIG. 38 and FIG. 39 show a list of the secondary stock-for-portfolio selection candidates of undervalued companies and overvalued companies. The columns of "undervalued company extraction criteria" and "overvalued company extraction criteria" shown in the diagrams include the notations of "undervalued 1," "undervalued 2," "undervalued 12," as well as "overvalued 1," "overvalued 2," and "overvalued 12." The significance of these notations is the same as the list of the primary stock-for-portfolio selection candidates explained in FIG. 36 and FIG. 37.
Further, the point that list is indicated in descending order of the companies in which the value of the factor score difference obtained by ("patent strategy" factor score) - ("intellectual property strategy management" factor score) is large is also the same as the list of the primary stock-for-portfolio selection candidates of FIG. 36 and FIG. 37. Moreover, FIG. 38 and FIG. 39 show the value obtained by calculating the company patent valuation index for each company.
Among the above, with respect to the undervalued company of FIG. 38, companies in which the value of the company technology valuation index is 5 or greater are indicated in the list of the secondary stock-for-portfolio selection candidates, and companies in which the value of the company technology valuation index is 5 or less are indicated in the list of excluded company groups. Further, with respect to the overvalued companies of FIG. 39, companies in which the value of the company technology valuation index is 5 or less are indicated in the list of the secondary stock-for-portfolio selection candidates, and companies in which the value of the company technology valuation index is 5 or greater are indicated in the list of excluded company groups.
In addition, the company patent valuation index may also be obtained as follows:

$$\text{Corrected patent application relative share average value}$$

$$\text{of all IPC sub classes of company} \times \text{patent concentration}$$

$$\text{index} \ldots \text{(Formula 34)}.$$

Here, the "corrected patent application relative share average value of all IPC sub classes of company" is obtained by classifying the patent applications of the company to be evaluated into the sub classes of IPC (International Patent Classification), calculating the corrected patent application relative share of the respective IPC sub classes regarding all IPC sub classes in which the company to be evaluated filed a patent application in each term,

$$\text{(relative share)} \times [1 + \text{(excess growth rate)}]$$

$$= \text{(relative share)} \times [1 + \text{(growth rate)} - \text{(growth rate of all companies)}],$$

and calculating the average value thereof.

Further, the company patent valuation index may also be an index that gives additional consideration to the "advantageous patent ratio." This "advantageous patent ratio" is the ratio of advantageous patents among the overall patents owned by each company based on the competitor diversion and right acquisition motivation degree for each of the individual patents calculated using historical information including the number of oppositions raised ratio, the number of competitor citations ratio, and the number of appeals ratio.

In order to calculate the "advantageous patent ratio," foremost, the number of patent applications (N) of a certain IPC sub class of the company to be evaluated is set as the population (P). Then, the ratio of advantageous patents among the overall number of patent applications (N) of the per-company per-IPC sub class is used as the population ratio. Contrarily, the ratio of advantageous patents among the overall number of patent applications of the per-company per-IPC sub class measured using the number of oppositions raised ratio, number of competitor citations ratio, and number of appeals ratio obtained from historical information is used as the sample ratio (p). Since it is not possible to measure the ratio of true advantageous patents forming the population ratio (P), the sample ratio (p) is used to estimate the population ratio (P). Specifically, interval estimation is performed to the population ratio (P), and, as a confidence interval having a reliability of 95%,

$$p - 1.96\sqrt{p(1-p)}/\text{number of patent applications (N)}$$

$$\leq P \leq p + 1.96\sqrt{p(1-p)}/\text{number of patent applications (N)}$$

is sought as the confidence interval in relation to the population ratio (P). The lower limit of $p - 1.96\sqrt{p(1-p)}$/number of patent applications (N) of this confidence interval is defined as the "minimum premium." In addition, the average value of values excluding 0 from the minimum premium of each of the IPC sub classes is defined as the "average minimum premium." This "average minimum premium" may also be given additional consideration upon calculating the company patent valuation index.

Further, the company patent valuation index may also be an index that gives additional consideration to the "advantageous patent ratio." This "advantageous patent ratio" is the ratio of advantageous patents among the overall patents owned by each company based on the competitor diversion and right acquisition motivation degree for each of the individual patents calculated using historical information including the number of oppositions raised ratio, the number of competitor citations ratio, and the number of appeals ratio.

Incidentally, among the primary stock-for-portfolio selection candidates, although companies in which the index calculated with Formula 33 or Formula 34 is lower than a prescribed value were excluded and the remaining companies were selected as the incorporation recommended companies, the present invention is not limited thereto.

For instance, principle component analysis is performed using the index calculated with Formula 33 or Formula 34, and a prescribed number of other indexes including the intellectual asset related index regarding the primary stock-for-portfolio selection candidates, and the incorporation recommended companies may be selected based on the principle component score for each company.

Further, the incorporation recommended companies may also be selected based on the principle component score for each company by performing factor analysis using the index calculated with Formula 33 or Formula 34, and a prescribed number of other indexes including the intellectual asset related index regarding the primary stock-for-portfolio selection candidates, consolidating the indexes based on the extracted factors, performing multiple regression analysis using the extracted factor and profit related index, selecting the company evaluation index of the factor showing statistical significance in relation to the profit related index, and thereafter performing principle component analysis.

Further, the incorporation recommended company may also be selected by performing covariance structure analysis using the index calculated with Formula 33 or Formula 34, and a prescribed number of other indexes including the intellectual asset related index regarding the primary stock-for-portfolio selection candidates.

These selection methods are loaded in the program in advance, and may be automatically executed, or manually executed by the user. In the first embodiment, the top 10 companies and top 20 companies respectively shown in the rankings of FIG. 13 and FIG. 14 will be selected.

(2-4. Selection of the First Investment Ratio)

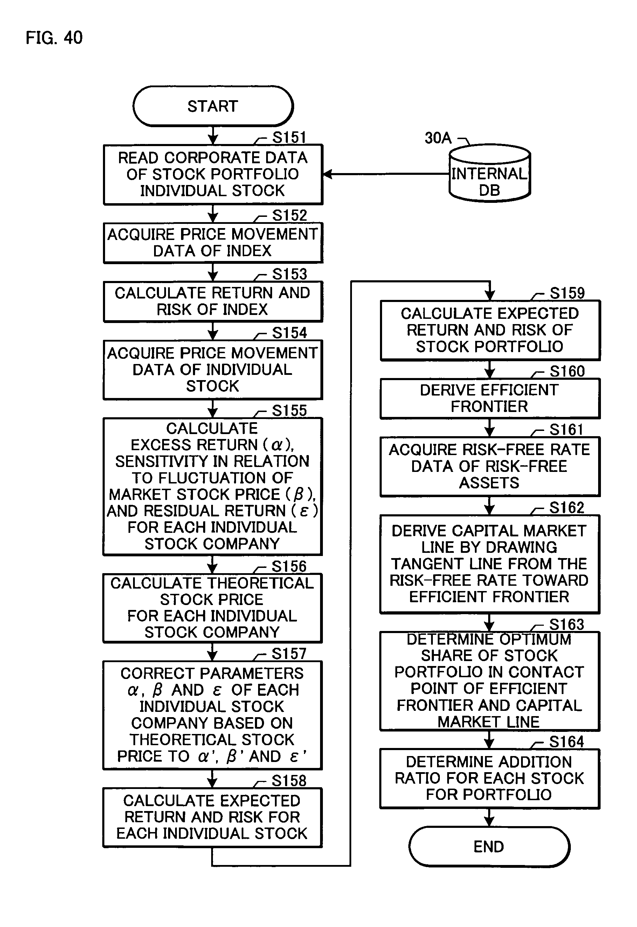

Next, at step S15, the selection of investment ratio of stock relating to the selected stock-for-portfolio company is conducted. FIG. 40 is a flowchart showing the processing steps of the investment ratio selection. Foremost, at step S151, the stock-for-portfolio company data is acquired from the internal database 30A.

(2-4-1. Parameter Calculation)

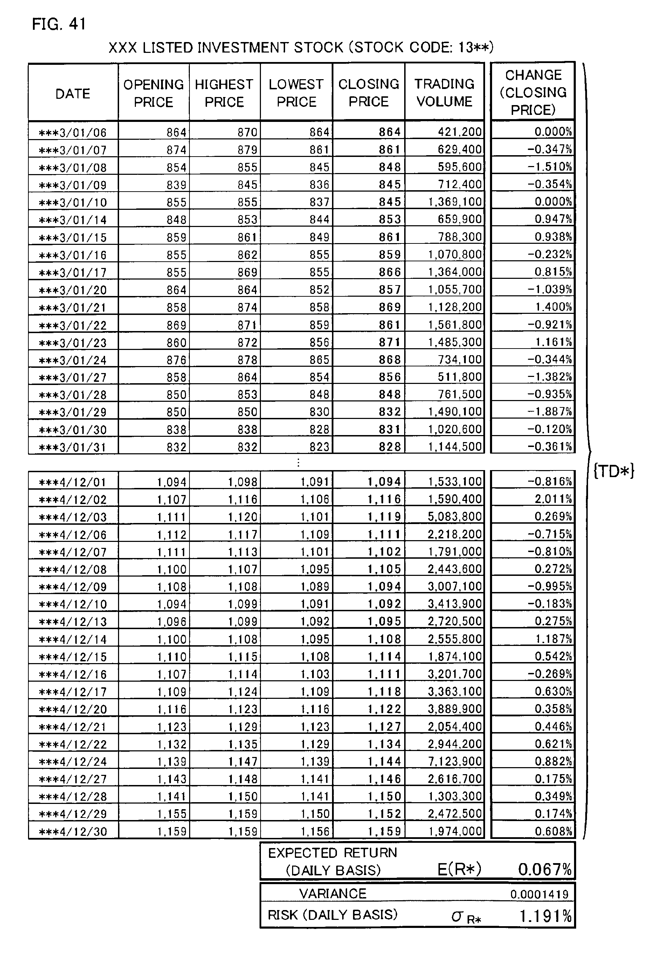

And, at step S152, the index is selected, and the price movement data of publicly available index is acquired. Here, and index is the stock price index showing the trend of the overall market. As the index, for instance, there is the Nikkei Stock Average, TOPIX, S&P 500 and so on. FIG. 41 is a list representing the aggregate {TD*} of the price movement data of the selected index *. In an embodiment of the present invention, although the price movement data for the past 2 years is obtained, the period of acquiring such data is not limited thereto, and an arbitrary period may be set.

Next, at step S153 of FIG. 40, the expected return and risk of the index are calculated. Here, an expected return is the profit ratio expected to be obtained from the investment. Generally, if the profit ratio of assets x is made to be Rx, the expected return will be represented with E(Rx). Here, the expected return can be calculated with a method of averaging the rate of return decided from the price trend of indexes of a certain period of time. As specific calculation methods, the arithmetic average method based on probability density, weighted arithmetic average method with larger weighting on the most recent year, geometrical average method, moving average method and so on may be used, and an appropriate method among the above can be adopted according to the market trend or the like. In this embodiment, among the above, the weighted arithmetic average method with larger weighting on the most recent year is selected. Further, risk generally means the possibility that the value is not realized, and investment risk in particular is measured based on the variability of the expected return and the scale of variance. The risk value is represented with a standard deviation ($\sigma$), which is the positive square root of the variance. FIG. 41 shows the expected return E(R*) and risk $\sigma_{R*}$ of index *.

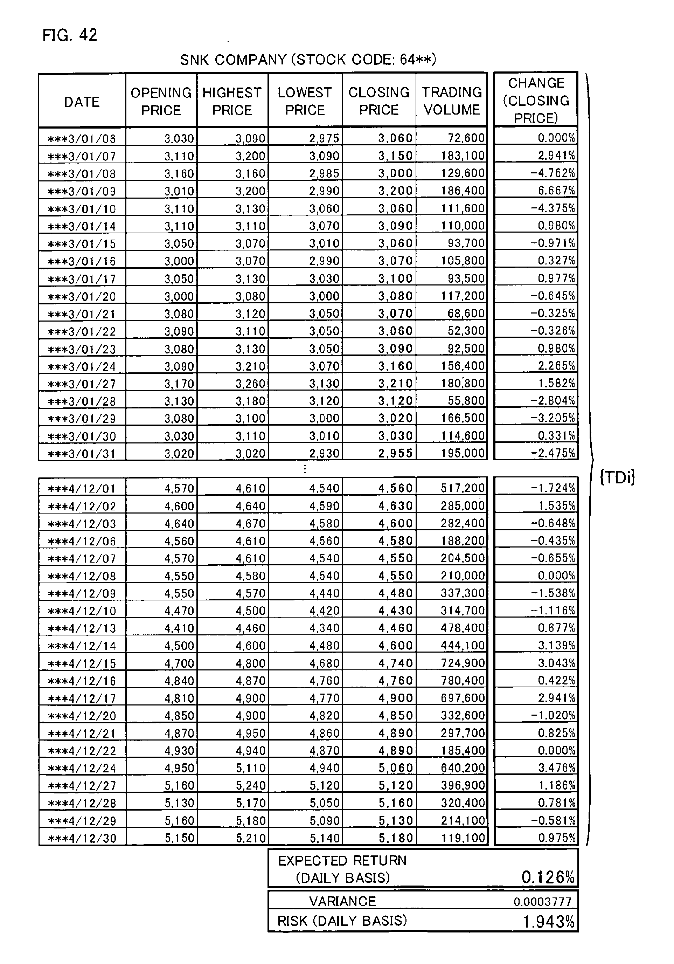

Next, at step S154, price movement data is acquired for each stock of individual company (hereinafter referred to as "individual stock") constituting the stock for portfolio. FIG. 42 is a list showing the aggregate {TD$_i$} of the price movement data of the actual stock price of individual stock i (i = 1⋯N. N represents number of selected companies).

Next, at step S155, the excess return ($\alpha$), sensitivity ($\beta$) and residual ($\epsilon$) based on the price movement of the actual stock price of each individual stock are calculated. Here, excess return ($\alpha$) shows how much the profit ratio of individual stock exceeded or fell below the profit ratio of the index. Sensitivity ($\beta$) is a coefficient showing the relationship of the price movement of the index and the price movement of the stock price of individual stock. Residual ($\epsilon$) is a value generated based on elements unique to companies subject to individual stock.

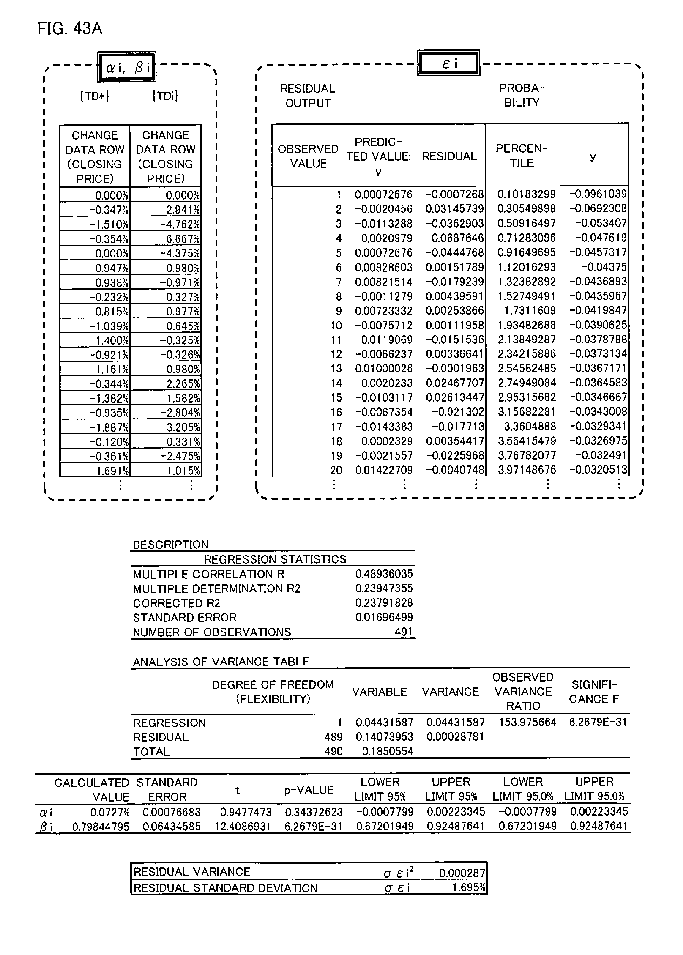

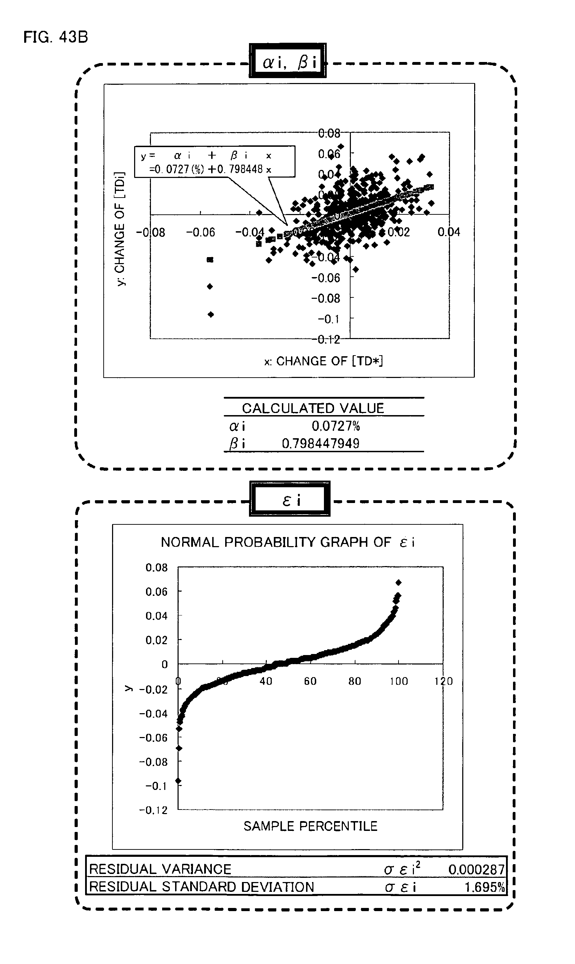

Calculation of $\alpha_i$, $\beta_i$, $\epsilon_i$ (i = 1⋯N) of each individual stock is conducted based on the comparative analysis of the price movement data(TD$_i$} individual stock shown in FIG. 42, and the price movement data{TD*} of index* shown in FIG. 41. Further, in an embodiment of the present invention, comparative analysis is conducted based on the regression analysis. FIGS. 43A and 43B are charts representing the calculated values of $\alpha_i$, $\beta_i$, $\epsilon_i$. FIG. 43A shows four types of tables of "regression statistics", "variance analysis", "residual output" and "probability". FIG. 43B shows two graphs of "observed value graph" and "normal probability graph".

(2-4-2. Theoretical Stock Price Calculation)

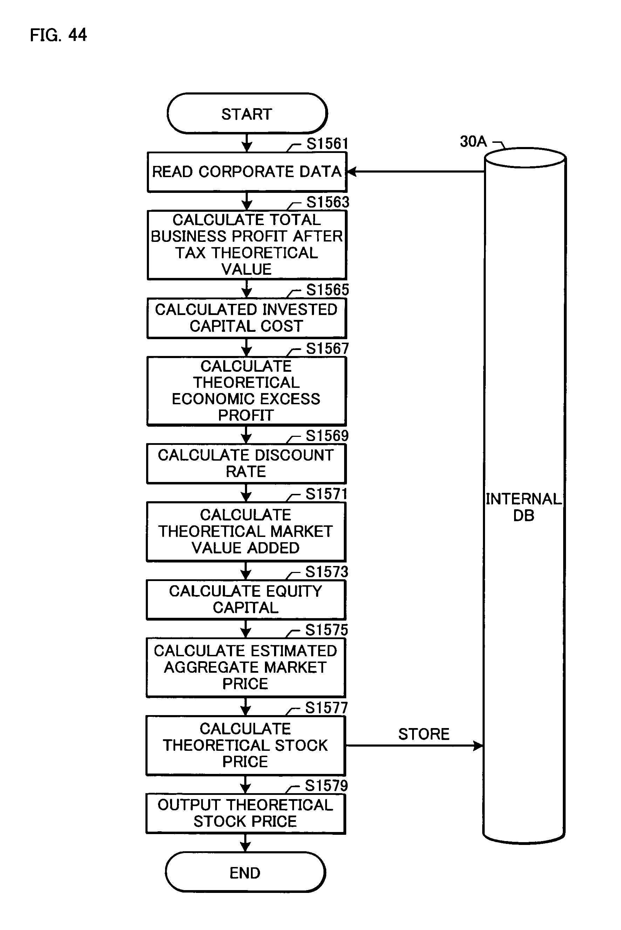

Next, at step S156, the theoretical stock price for each individual stock is calculated. The purpose of calculating the theoretical stock price here is to calculate the stock price which appropriately reflects the company's potential competitive power with the R&D cost related index and intellectual asset related index, and correct the parameter of each individual stock. As a result, a more preferable expected return and risk can be estimated. The theoretical stock price in an embodiment of the present invention is sought by obtaining the estimate aggregate market value by adding the equity capital of companies to the sum of the present value of residual profit in which the return requested from fund providers is deducted from the profits obtained from business activities, and dividing such estimated aggregate market value by the total outstanding stock volume. FIG. 44 is a flowchart representing the processing steps for calculating the theoretical stock price. Foremost, at step S1561, the valuation index data and stock price data of the selected stock-for-portfolio company are acquired from the internal database 30A.

Next, at step S1563, the total business income after tax theoretical value is calculated with the acquired corporate valuation index related data. Here, the gross business profit is an amount obtained by adding the patent royalty income to the amount of profit sought by adding the R&D cost processed as expenses back to the operating profit. The reason for using the gross business profit and not the operating profit is because, firstly, it is necessary to comprehend the profit secured by companies prior to the deduction of the R&D cost. Secondly, as a result of incorporating the profits from intellectual assets such as patents created based on R&D, it will be possible to appropriate valuate the company's potential competitive power, and to comprehend how such potential competitive power is linked with overt competitive power and profits.

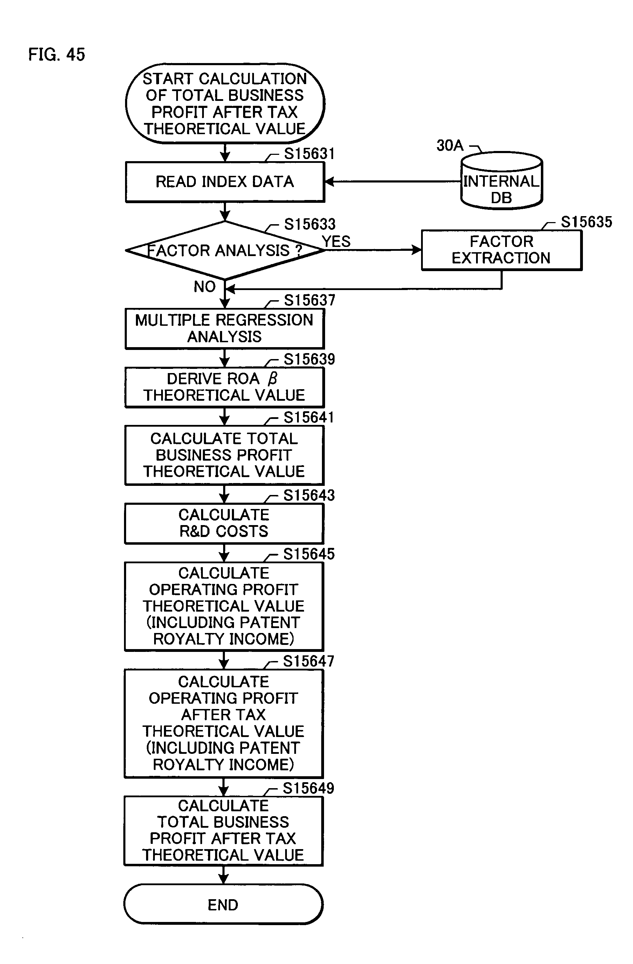

FIG. 45 is a flowchart showing the processing steps for calculating the total business income after tax theoretical value. Foremost, at step S15631, corporate valuation index related data containing the intellectual asset related index is acquired from the internal database 30A.

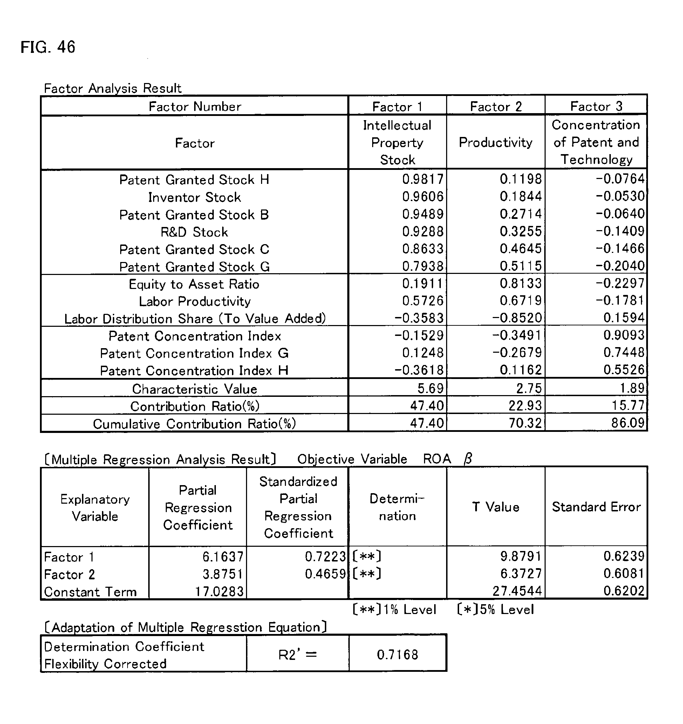

Next, at step S15633, whether to perform factor analysis processing is selected. When selecting to perform factor analysis processing, factor analysis relating to the acquired index data is performed at step S15635 so as to extract primary factors. The respective indexes are united for each of the extracted factors. The processing steps of factor analysis are the same as the procedures during the valuation of a company to become the stock-for-portfolio candidate, and the explanation thereof is omitted. FIG. 46 is a list representing the factor analysis. As a result of performing factor analysis, the three factors of factor 1 (intellectual assets stock), factor 2 (productivity) and factor 3 (concentration of patent/technology) are extracted.

At step S15637 of FIG. 45, the factor extracted in the factor analysis processing is made to be the explanatory variable, and ROA β as the profit related index is used as the target variable upon performing the multiple regression analysis. Here, ROA β is the ratio in relation to the total assets of the gross business profit generated in each year by the company. The calculation formula of ROA β is as shown in Formula 35 below.

$$\text{ROA } \beta = \text{Gross Business Profit/Total Assets} \cdots \text{(Formula 35)}$$

Incidentally, the profit related index used as the target variable is not limited to ROA β, and any profit related index may be used according to the objective and nature of analysis.

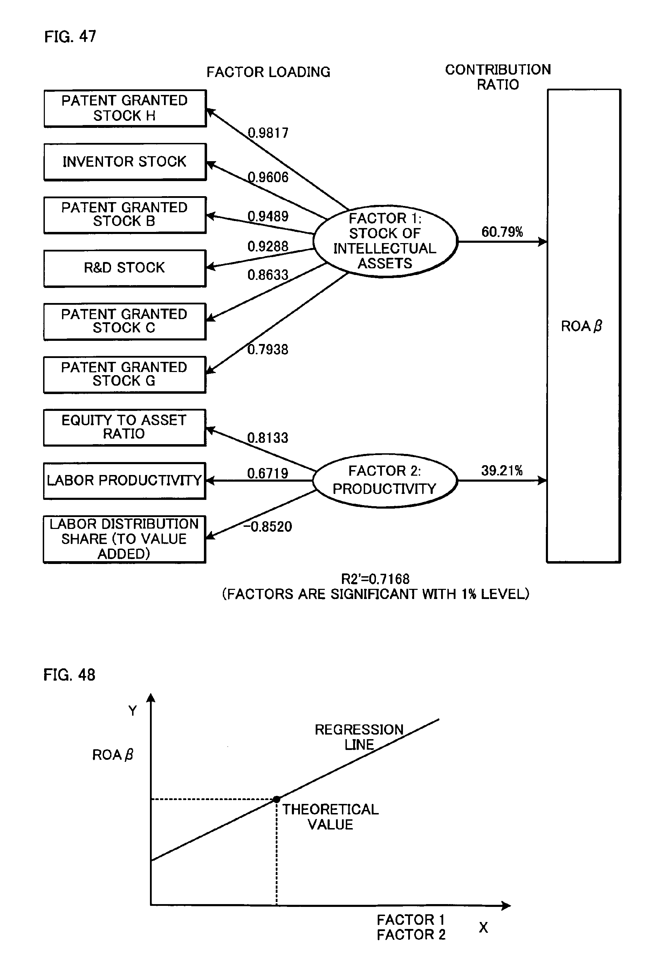

Incidentally, since the processing steps of calculating the partial regression coefficient and standard partial regression coefficient, verifying the respective coefficients with the t value, and verifying the adaptation of the multiple regression equation with determination coefficient $R^{2'}$ flexibility corrected are also the same as the procedures for valuating the company to become the stock-for-portfolio candidate, the explanation thereof is omitted. FIG. 46 and FIG. 47 are a list and relationship diagram representing the results of the multiple regression analysis. As shown in FIG. 47, as a result of having performed the multiple regression analysis, the statistically significant factors are factor 1 (intellectual assets stock) and factor 2 (productivity). Further, the contribution ratio in relation to ROA β of each factor is 60.79% in factor 1 (intellectual assets stock) and 39.21% in factor 2 (productivity).

Next, at step S15639 of FIG. 45, the theoretical value of ROA β is calculated. In order to perform this calculation, foremost, a regression line is derived in which factor 1 (intellectual assets stock) and factor 2 (productivity) which had a high contribution ratio in relation to ROA β are made to be independent variables, and ROA β employed in the target variable is made to be a dependent variable. FIG. 48 is a graph of the regression line representing the relationship of factor 1/factor 2 and ROA β. The theoretical value of ROA β is sought with a point on this regression line.

Incidentally, when factor analysis is not performed at step S15633, multiple regression analysis is performed at step S15637 based on the index data acquired at step S15631. Here, an index having a high contribution ratio in relation to target variable ROA β is selected, the selected index is made to be an independent variable, and ROA β is made to be a dependent variable upon deriving the regression line. Further, the method of calculating the theoretical value of ROA β at step S15639 is not limited to factor analysis or multiple regression analysis. For instance, covariance structure analysis may also be employed to calculate the theoretical value of ROA β.

Next, at step S15641, the gross business profit theoretical value is calculated. The gross business profit theoretical value is sought by multiplying the total assets of the company to the theoretical value of ROA β once again.

Next, at step S15643, the value of the R&D cost to be deducted from the gross business profit theoretical value is calculated. At present, the R&D cost is collectively recorded as accounting expenses. Nevertheless, R&D is conducted for the purpose of increasing profits with the subsequent commercialization and merchandizing. Thus, it would be appropriate to deem the portion of the R&D cost contributing to the profit of companies as assets, and not expenses. Therefore, investment of funds in R&D will be deems an investment, and not expenses, and losses that do not function as assets will be calculated as annual depreciation costs as with other fixed assets. And, by deducting the calculated depreciation costs, the remaining R&D cost (R&D cost after depreciation) will be calculated as assets. As the calculation method of such depreciation costs, firstly, there is an approach based on a macro corporate valuation of measuring how the R&D funds invested as an input generate intellectual assets as an output, and how such assets lead to achievements. Further, as the second calculation method, there is an approach based on a micro patent information analysis of performing a detailed analysis of the number of applications filed and subject matter of such applications of each company, forming an index of the competitive power of the company in a patent/technical development competitive market, and speculating the technical development characteristics thereof. Incidentally, in an embodiment of the present invention, it will be hypothesized that there are no losses pertaining to R&D, and depreciation costs have not been deducted.

Next, at step S15645, the operating profit theoretical value is calculated. Incidentally, this operating profit theoretical value is a theoretical value of a value including the patent royalty income. The operating profit theoretical value is sought by deducting the R&D cost calculated at step S15643 from the gross business profit theoretical value. In an embodiment of the present invention, the total amount of R&D costs recorded as expenses is deducted from the gross business profit theoretical value. FIG. 45 is a list representing the calculation results of the actual values and theoretical values including ROA β, gross business profit, and operating profit including the patent royalty income of each year of a specific company.

Next, at step S15647, the operating profit after tax theoretical value is calculated. The operating profit after tax theoretical value is calculated by deducting the corporate tax from the operating profit theoretical value including the patent royalty income. Specifically, this is as shown in Formula 36 below.

$$\text{Operating Profit After Tax Theoretical Value = Operating}$$
$$\text{Profit Theoretical Value (Including Patent Royalty Income) ×}$$
$$\text{(1 - corporate tax rate)} \qquad \cdots \text{(Formula 36)}$$

Finally, at step S15649, the total business income after tax theoretical value is calculated. The total business income after tax theoretical value is sought by adding the R&D cost calculated at step S15643 to the operating profit after tax theoretical value. Incidentally, the total business income after tax theoretical value according to an embodiment of the present invention employs an average value of three terms of the operating profit after tax theoretical value (including patent royalty income) and R&D cost. Nevertheless, the length of the term to be adopted is not limited to the above, and this may be arbitrarily set.

After calculating the total business income after tax theoretical value, the routine returns once again to FIG. 44, and at step S1565, the investment capital cost of the company is calculated. The investment capital cost is calculated based on the weighted average cost of capital (WACC). WACC is an abbreviation of Weighted Average Cost of Capital, and represents the minimum amount of return requested by the fund provider. Further, weighted average is the act of weighing and averaging the costs arising in connection with the debts as fund procurement resource of companies and stockholders' equity with the procured amount. The calculation formula of WACC is as shown in Formula 37 below.

$$\text{Investment Capital Cost (WACC) = Market Value of Interest}$$
$$\text{Bearing Debt/Market Value of Company × Debt Cost × (1 -}$$
$$\text{corporate tax rate) + Market Value of Stock/Market Value of}$$
$$\text{Company × Stockholders' Equity Cost} \qquad \cdots \text{(Formula 37)}$$

Incidentally, the method of calculating the capital cost is not limited to Formula 37 described above. For example, a method of calculation which multiplies the value obtained by adding the company's operating capital and tangible fixed assets with WACC may also be employed. Any of these methods may be arbitrarily selected according to the objective of analysis or nature of target.

Next, at step S1567, the theoretical economic excess profit is calculated by deducting the investment capital cost calculated at step S1565 from the total business income after tax theoretical value. Here, the theoretical economic excess profit is the theoretical value of the residual profit after deducting the investment capital cost from the total business income after tax theoretical value. The calculation formula of the theoretical economic excess profit is as shown in Formula 38 below.

$$\text{Theoretical Economic Excess Profit} = \text{Total Business}$$

$$\text{Income After Tax Theoretical Value (Average Value of 3 Terms)}$$

$$- \text{Investment Capital Cost} \qquad \cdots \text{(Formula 38)}$$

Next, at step S1569, the discount rate is calculated. A discount rate is a type of interest for calculating the future profits of the company upon returning them to the present value. The discount rate is calculated based on a capital asset pricing model (CAPM). CAPM is the abbreviation of Capital Asset Pricing Model, and is a model for showing that there is a quantitative relationship for balancing the supply and demand between the risk assets and expected profit ratio. CAPM is calculated by adding a value obtained by multiplying coefficient (β) representing the stock price range of individual companies with a value obtained by deducting the risk-free rate of risk-free assets from the profit ratio of the stock market, and the risk-free rate of risk-free assets. The calculation formula of CAPM is as shown in Formula 39 below.

$$\text{Discount Rate (CAPM)} = \text{Risk-free Rate of Risk-free Assets}$$

$$+ \beta \times \text{(Profit Ratio of Stock Market} - \text{Risk-free Rate of Risk-}$$

$$\text{free Assets)} \qquad \cdots \text{(Formula 39)}$$

Next, at step S1571, the theoretical market value added is calculated by dividing the theoretical economic excess profit by the discount rate. The theoretical market value added is equivalent to the sum of the discounted present value of the theoretical economic excess profit in a future term. Theoretical market value added is the theoretical value regarding the valuation in the market of off-balanced assets of the company. In other words, the theoretical market value added is the difference between the company's potential market value and equity capital, and represents the value deemed to be generated beyond the capital invested in the company. The calculation formula of the theoretical market value added is as shown in Formula 40 below.

$$\text{Theoretical Market Value Added} = \text{Theoretical Economic}$$

$$\text{Excess Profit/Discount Rate} \qquad \cdots \text{(Formula 40)}$$

Next, at step S1573, the company's equity capital is calculated. Equity capital is the stockholders' equity; in other words, the net assets of the company, and an average value of 3 terms is used in an embodiment of the present invention.

Next, at step S1575, the estimated aggregate market value is calculated. The estimated aggregate market value is calculated by adding the average value of 3 terms of equity capital calculated at step S1573 to the theoretical market value added. The calculation formula of the estimated aggregate market value is as shown in Formula 41 below.

$$\text{Estimated Aggregate Market Value} = \text{Theoretical Market}$$

$$\text{Value Added} + \text{Equity Capital (Average of 3 Terms)} \cdots \text{(Formula 41)}$$

Next, at step S1577, the theoretical stock price is calculated. The theoretical stock price is calculated by dividing the calculated estimated aggregate market value by the total outstanding stock volume. The calculation formula of the theoretical stock price is as shown in Formula 42 below.

```
Theoretical Stock Price = Estimated Aggregate Market Value/Total Outstanding Stock Volume            ···(Formula 42)
```

Incidentally, the calculation method of the theoretical stock price is not limited to the embodiments of the present invention. For example, a method of calculating the estimated aggregate market value by deducting the amount of debt from the discounted present value of future profits of the company, and dividing this by the total outstanding stock volume so as to obtain the theoretical stock price may also be employed. Or, it is also possible to calculate the theoretical stock price based on the dividends of stock. Any of these methods may be arbitrarily selected according to the objective of calculation and target of calculation of the theoretical stock price. Incidentally, the calculated theoretical stock price is stored in the internal database 30A.

Next, at step S1579, the calculation result of the theoretical stock price is displayed on a display screen together with the actual stock price. Further, as necessary the list or graph of the calculation result of the theoretical stock price and price movement data of the actual stock price is output to the printer 31.

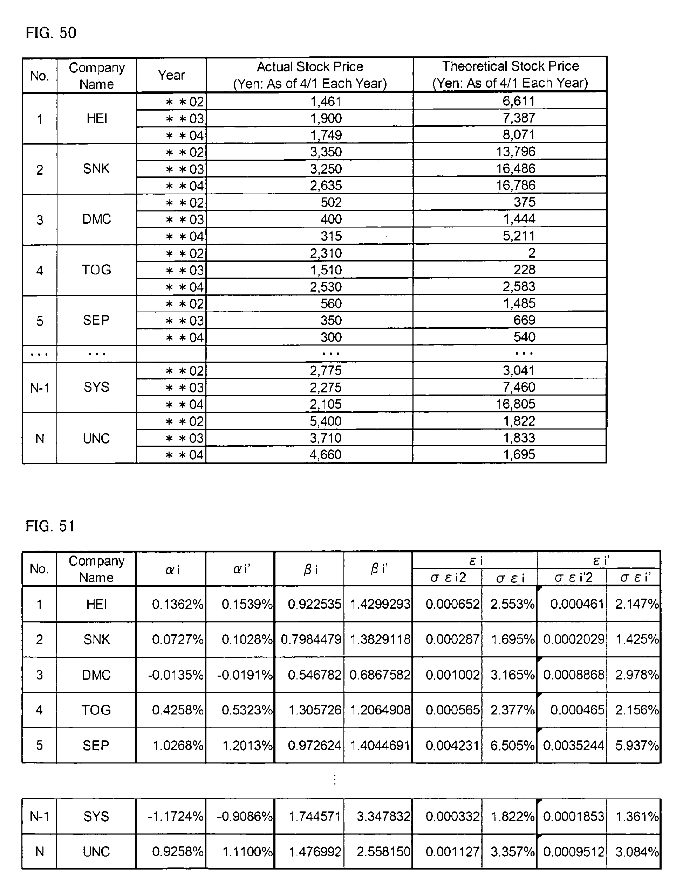

FIG. 50 is a list of the calculation result of the theoretical stock price. In this list, the company name, year, performance of the actual stock price and the theoretical stock price are displayed. Many of the calculated theoretical stock prices are of a higher value than the actual stock prices. This is based on the calculation of stock prices properly reflecting the company's potential competitive power as a result of valuating the outline of the intellectual assets created by the company and the contributions in relation to the corporate profit of intellectual assets employing, in addition to the management/finance related index, the R&D cost related index and intellectual asset related index. From this result, many of the stock prices of prescribed companies shown in FIG. 50 can be judged as being relatively cheap in comparison to the potential corporate value of the companies. Moreover, in light of the above, if there are no problems in areas other than business activities based on the core business of the company, it can be determined that it is highly likely for the stock prices to rise in the future.

(2-4-3. Investment Ratio Selection)

Returning once again to the flowchart of FIG. 40 representing the processing steps of selecting the investment ratio, foremost, at step S157, the parameters ($\alpha$, $\beta$, $\varepsilon$) of each individual stock calculated based on the actual stock price are corrected based on the theoretical stock price. Here, the aggregate $\{TD_i\}'$ of the price movement data of the theoretical stock price is sought by multiplying a coefficient according to a time series to the actual stock price such that the aggregate $\{TD_i\}$ of the price movement data of the actual stock price of individual stock i (i = 1···N) will pass through the present theoretical stock price, the theoretical stock price of the previous year, or the theoretical stock price of 2 years ago, or such that it overlaps with the aggregate value of these theoretical stock prices.

Thereafter, the aggregate $\{TD_i\}'$ of the price movement data of the theoretical stock price and the aggregate $\{TD^*\}$ of the price movement data of the index * are subject to comparative analysis. And, the theoretical excess profit ($\alpha_i'$), theoretical sensitivity ($\beta'$) and theoretical residual ($\varepsilon'$) are calculated for each individual stock. FIG. 51 is a list showing the calculation result of the excess profit ($\alpha$), sensitivity ($\beta$) and residual ($\varepsilon$), and the theoretical excess profit ($\alpha'$), theoretical sensitivity ($\beta'$) and theoretical residual ($\varepsilon'$) of each individual stock.

Incidentally, the method of correcting the parameter of individual stocks is not limited to the above. For instance, after calculating the theoretical stock price, it is possible to calculate the theoretical excess profit ($\alpha'$), theoretical sensitivity ($\beta'$) and theoretical residual ($\varepsilon'$) by directly comparing this with the index. Or, without correcting the excess profit ($\alpha$), sensitivity ($\beta$) and residual ($\varepsilon$) calculated based on the actual stock price with the theoretical stock price, these may be used as the theoretical excess profit ($\alpha'$), theoretical sensitivity ($\beta'$) and theoretical residual ($\varepsilon'$) without change. Further, as another correction method, statistical analysis or nonlinear analysis employing the input information of the theoretical stock price and a variety of other methods of analysis may be employed.

Next, at step S158, the expected return and risk for each individual stock are calculated based on the calculated theoretical excess profit ($\alpha'$), theoretical sensitivity ($\beta'$) and theoretical residual ($\varepsilon'$). Foremost, the expected return of the individual stock is represented with $E(R_i)$ (i = 1···N), and is calculated based on Formula 43 below.

$$\text{Expected Return } E(R_i) = \text{Theoretical Excess Profit } (\alpha') +$$

$$\text{Theoretical Sensitivity } (\beta') \times \text{Return of Index * + Theoretical}$$

$$\text{Residual } (\varepsilon') \qquad\qquad \cdots \text{ (Formula 43)}$$

Next, the risk of the individual stock is calculated. The risk is represented with $\sigma_{Ri}$ (i = 1···N), and is sought by calculating variance $\sigma^2$ of the expected return of the individual stock. Specifically, this is as shown in Formula 44 below.

$$\text{Variance } \sigma_{Ri}{}^2 \text{ of Individual Stock}$$

$$= \Sigma_{i=1}{}^{N}[\{E(R_i) - E(R^*)\}^2]/N - 1 \qquad \cdots \text{ (Formula 44)}$$

Incidentally, risk $\sigma_{Ri}$ is the positive square root of variance $\sigma_{Ri}{}^2$.

Next, at step S159, the expected return and risk of the overall stock portfolio are calculated based on the expected return and risk calculated for each individual stock. Foremost, the expected return of the overall stock portfolio is calculated. The expected return of the overall stock portfolio is represented with E(Rp), and is calculated based on Formula 45 below.

$$\text{Expected Return } E(Rp) = \alpha'_p + \beta'_p \times E(R^*) \qquad \cdots \text{(Formula 45)}$$

Here, $\alpha'_p$ represents the theoretical excess profit ($\alpha'$) of the overall stock portfolio. $\beta'_p$ represents the theoretical sensitivity ($\beta'$) of the overall stock portfolio. E(R*) represents the expected return of the index *. The theoretical excess profit ($\alpha'$) of the overall stock portfolio is a weighted average of $\alpha'$ of the individual stock in relation to the share of portfolio. Further, the theoretical sensitivity ($\beta'$) of the overall stock portfolio is similarly a weighted average of $\beta'$ of the individual stock in relation to the share of portfolio.

Next, the risk of the stock portfolio is calculated. The risk of the overall stock portfolio is represented with $\sigma_{Rp}$, and is sought by calculating variance $\sigma_{Rp}{}^2$ of the overall stock portfolio. Specifically, this is as shown in Formula 46 below.

$$\text{Variance } \sigma_{Rp}{}^2 \text{ of Overall Stock Portfolio}$$

$$= \beta'_p{}^2\sigma_{R^*}{}^2 + \Sigma_{i=1}{}^{N}(X_i{}^2\sigma_{\varepsilon i}{}^2) \qquad \cdots \text{(Formula 46)}$$

Here, $\beta'_p{}^2$ represents the variance of the theoretical sensitivity ($\beta'$) of the overall stock portfolio. $\sigma_{R^*}{}^2$ represents the variance of the index *. $X_i$(i = 1···N) represents the individual share of portfolio. $\sigma_{\varepsilon i}{}^2$ represents the variance of the predicted residual ($\varepsilon'$) of the individual stock. Incidentally, risk $\sigma_{Rp}$ of the overall stock portfolio is the positive square root of variance $\sigma_{Rp}{}^2$.

Here, since the first term on the right side is a crossing of the variance of the index * and the variance of $\beta'$ of the overall stock portfolio, this value will be influenced based on the price movement of the index. Meanwhile, the second term is determined based on the standard deviation ($\sigma_{\varepsilon i}$) of the predicted residual ($\varepsilon'$) of the individual stock and the share of portfolio (X) of the individual stock, and is not related to the risk of the index *. Thus, the first term on the right side is referred to as the systematic risk (market risk), and the second term is referred to as the unsystematic risk (non-market risk). In other words, the risk of the overall stock portfolio is based on elements resulting from the price movement of the index *, and element resulting from events unique to the stock portfolio.

Next, at step S160, the efficient frontier is derived based on the expected return and risk of the calculated stock portfolio. Specifically, foremost, when the expected return of the stock portfolio is fixed, the share of portfolio of the stock for portfolio in which the risk is to be minimized (hereinafter referred to as the "minimum risk share of portfolio") is calculated. Next, by changing the expected return of the stock portfolio into various values, the minimum risk share of portfolio corresponding to the respective expected returns is calculated. And, the aggregate of the minimum risk share of portfolio by the obtained expected return is derived as the efficient frontier. Here, "frontier" means the outer edge of the portfolio, and implies that a combination and ratio having a smaller risk in an equivalent expected return among any and all combinations and ratios of the stock in possess does not exist.

Next, at step S161, data concerning the risk-free rate of risk-free assets is acquired. Here, risk-free assets mean the assets such as government bonds in which assured profits are guaranteed. A risk-free rate is the return of the risk-free assets. For example, in Japan, the risk-free rate of the 10-year government bond to be the index of a long-term interest rate and, in the US, the risk-free rate of a 30-year bond will become the index of the risk-free rate of risk-free assets.

Next, at step S162, the capital market line is derived. A capital market line is a straight line representing the relationship of the risk and return of the portfolio incorporating risk assets such as stocks and risk-free assets. A capital market line, foremost, is derived by drawing a tangent from a fixed point, which is the risk-free rate of risk-free assets, toward the efficient frontier.

No investor only owns financial assets as stock, and always owns safe assets without any risk in decrease in prices. Thus, the decision making for selecting the investment ratio of stock portfolio, and the decision making for selecting the investment ratio upon combining risk-free assets and risk assets such as stock are conducted completely separately. As a result, the optimum portfolio for an investor in the efficient frontier will be determined at one point which contacts the capital market line. This is the reason the capital market line is introduced in addition to the efficient frontier.

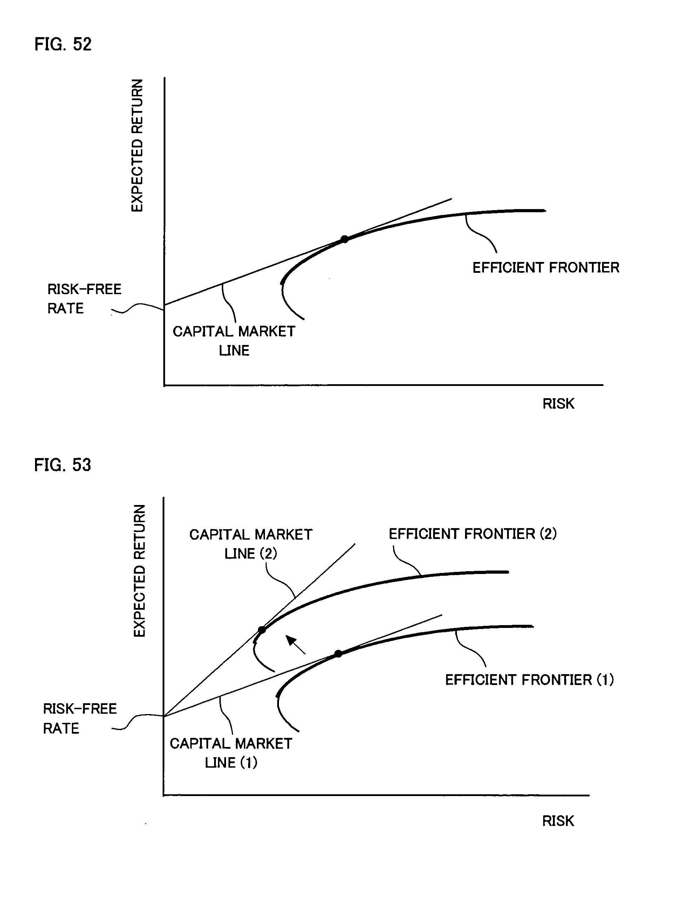

Next, at step S163, the optimum share of portfolio of the stock for portfolio is determined in the contact point of the efficient frontier and capital market line. FIG. 52 is a graph representing an example realizing the optimum share of portfolio in the contact point of the efficient frontier and capital market line.

The foregoing is the standard processing steps for selecting the optimum investment ratio of a stock portfolio. Nevertheless, in an embodiment of the present invention, by calculating the theoretical stock price of each stock-for-portfolio company, the parameters ($\alpha_i'$, $\beta_i'$, $\varepsilon_i'$) are corrected by appropriated valuating the potential competitive power of the respective companies. As a result, it is highly likely that the value of the expected return $E(R_i)$ of the theoretical stock price compared with the actual stock price will comparatively rise. Or, at the same time, it is highly likely that the value of risk $\sigma_{Ri}$ of the theoretical stock price compared with the actual stock price will comparatively fall.

Accordingly, for instance, as shown in FIG. 53, when both the rise of the expected return and the fall of the risk occur, the efficient frontier will shift toward the upper left direction from (1) to (2). Pursuant thereto, the contact point of the capital market line and efficient frontier will also shift toward the upper left direction, and the optimum share of the stock portfolio will be changed thereby. Further, although not shown, when only the expected return rises, the efficient frontier will shift upward. Moreover, when only the risk falls, the efficient frontier will shift leftward. And, in either case, the contact point of the capital market line and efficient frontier will change, and the optimum share of the stock portfolio will be changed thereby.

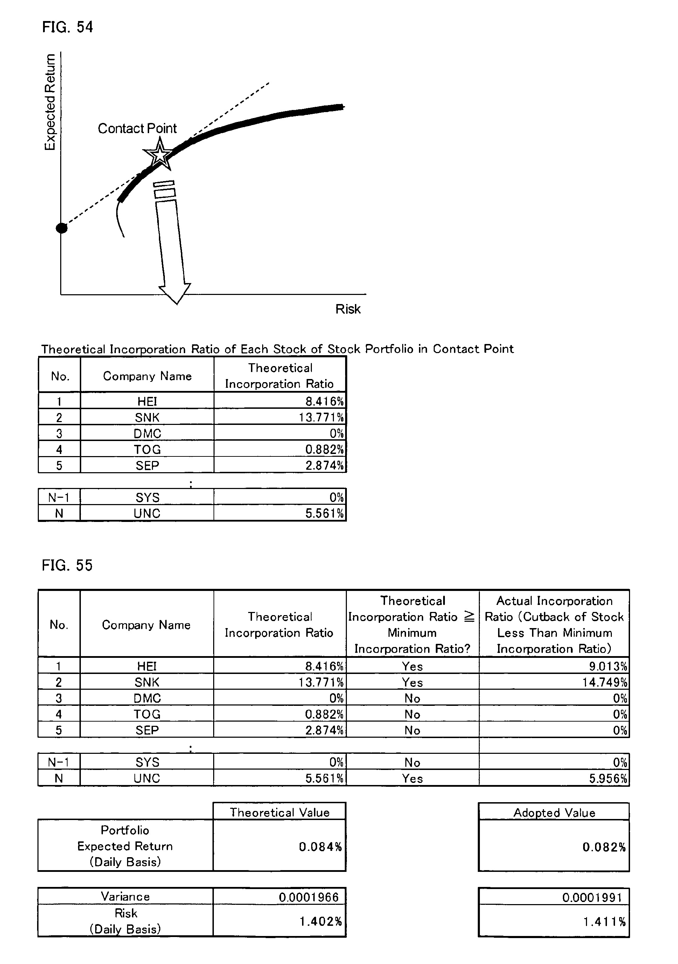

Next, at step S164, the incorporation ratio for each individual stock of the stock portfolio is determined. Foremost, the optimum share of portfolio in the contact point of the efficient frontier (2) and capital market line (2) shown in FIG. 53 is specified. Next, in this contact point, the respective incorporation ratios of each individual stock of the stock portfolio are calculated. FIG. 54 is a chart representing an example of the theoretical incorporation ratio of each individual stock in the contact point of the efficient frontier and capital market line.

Incidentally, with the calculated theoretical incorporation ratio as is, there may be cases where the investment ratio cannot be distributed. In other words, there may be cases where it is necessary to determine the actual incorporation ratio capable of actual distribution according to the minimum required investment amount or actual stock price per stock. FIG. 55 shows an example of the actual incorporation ratio determined from the theoretical incorporation ratio. And, after the actual incorporation ratio is determined, the selection procedure of the investment ratio is ended.

Incidentally, the investment ratio selection method is not limited to the above. The investment ratio can be selected based on a predetermined arbitrary criterion. For example, a method of simply distributing an equal number of stocks or a method of distributing an equal amount to the stock-for-portfolio company may be employed. Or, a method of distributing in proportion to the company score, or a method of distributing to companies having a standardized value of 1 or 2 or more in the company ranking based on the principle component analysis may be employed. Or, a method of selecting the investment ratio with a linear programming or the like may be employed. An investment ratio in relation to the respective companies can be selected with any of these methods, or with a combination of these methods.

Further, without selecting the stock-for-portfolio company in advance, it is possible to select the investment ratio regarding the stock for portfolio constituted from all companies or an arbitrary company group. For example, the investment ratio can be selected by calculating the risk and return, respectively, for all target companies, and determining the optimum share of portfolio in the contact point of the efficient frontier and capital market line derived as a result thereof.

(2-5. Portfolio Creation)

Returning now to the flowchart of FIG. 3 representing the processing steps of the stock portfolio selection, after the investment ratio selection procedures is complete, at step S16, the stock portfolio is created and stored in the internal database 30A.

Then, at step S17, the transition of the stock price fluctuation ratio and return of the created stock portfolio is computed, and, a list or graph visually displaying this is output as necessary, and the routine is thereby ended.

(2-6. Transition Result of Stock Price Fluctuation Ratio and Return of Stock Portfolio in the Selection of the First Investment Ratio)

Next, an example of the transition result of the stock price fluctuation ratio and return of the stock portfolio is described. In this example, as a result of conducting the company ranking based on principle component 1 and principle component 2 in the principle component analysis performed for selecting the stock-for- portfolio candidate company, the stock price transition of the respectively selected top 10 companies, top 20 companies and top 30 companies is shown. Further, the investment ratio is all equally distributed.

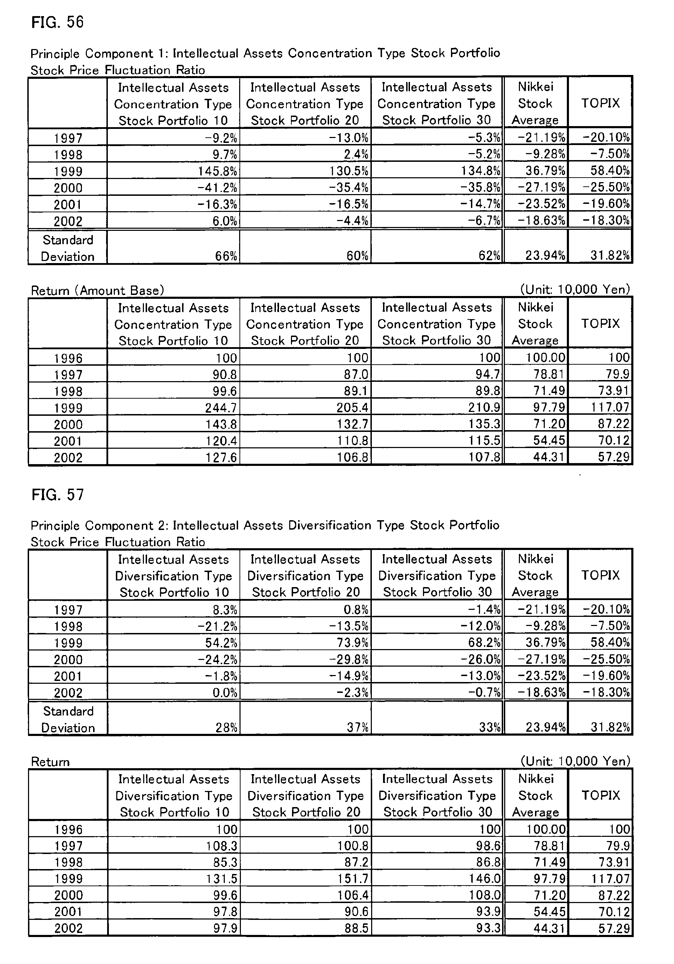

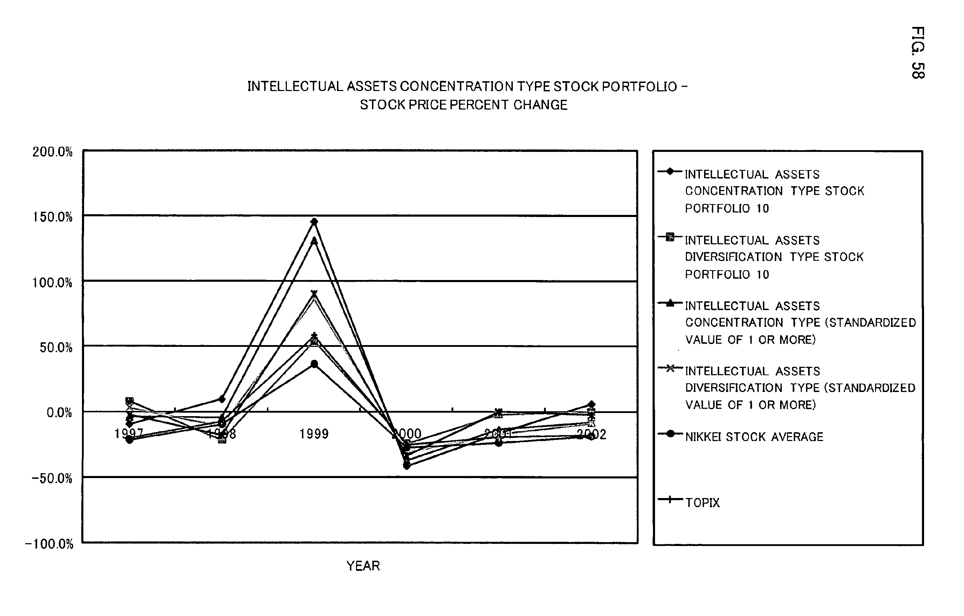

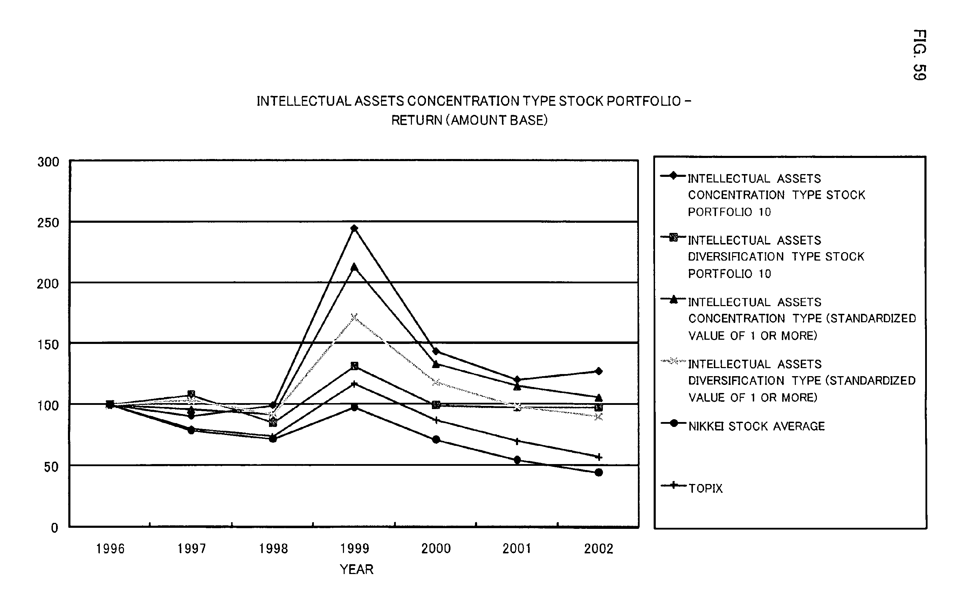

FIG. 56 is a list representing the transition of the stock price fluctuation ratio and return of the stock portfolio of the top 10 companies, top 20 companies and top 30 companies corresponding to principle component 1. FIG. 57 is a list showing the transition of the stock price fluctuation ratio and return of the stock portfolio of the top 10 companies, top 20 companies and top 30 companies corresponding to principle component 2. Further, FIG. 58 is a graph representing the comparative example of the stock price fluctuation ratio. FIG. 59 is a graph representing a comparative example of the stock return. FIG. 59 shows a comparative example of the return in the case of distributing an equal amount (= ¥1,000,000) to the respective companies constituting the stock for portfolio.

When viewing the comparative example of the stock price fluctuation ratio shown in FIG. 58, the stock portfolio of the "intellectual assets concentration type" corresponding to principle component 1 shown in FIG. 56 has a larger data spread in the stock price in comparison to the stock portfolio of the "intellectual assets diversification type" corresponding to principle component 2 shown in FIG. 57. This is considered to be a reflection of the principle component 1 containing many specialized companies, and the fluctuation of the profit ratio being significant in comparison to the diversification type company group of principle component 2.

When viewing the comparative example of the stock portfolio return shown in FIG. 59, it is evident that the stock portfolio of the "intellectual assets concentration type" corresponding to principle component 1 and the stock portfolio of the "intellectual assets diversification type" corresponding to principle component 2 are both obtaining returns larger than the Nikkei Stock Average or TOPIX in all three categories of top 10 companies, top 20 companies and top 30 companies.

(2-7. Selection of Second Investment Ratio)

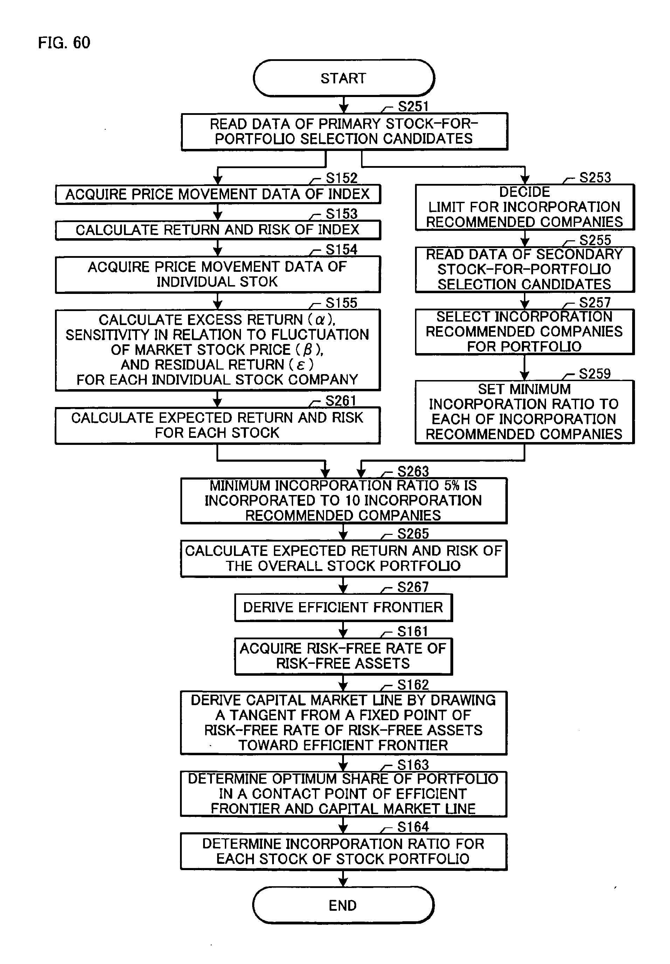

Subsequently, at step S313, the selection of the second investment ratio to be performed in substitute for the selection of the first investment ratio is now explained with reference to FIG. 60 to FIG. 64. Since the selection of the second investment ratio uses the same configuration of FIGS. 1 and 2 and performs the same processing of FIGS. 3, 11, 15, 18 and 23, illustration and detailed explanation in common are omitted.

For the selection of the second investment ratio, in substitute for the investment ratio selection processing shown in FIG. 40 of the selection of the first investment ratio, the investment ratio selection processing shown in FIG. 60 is performed. In the selection of the second investment ratio, it is not necessary to perform the processing for calculating the theoretical stock price and calculating the business profit after tax theoretical value shown in FIGS. 44 and 45 of the selection of the first investment ratio.

FIG. 60 is a flowchart showing the investment ratio selection processing in the selection of the second investment ratio. The same numbers are assigned to the same steps in FIG. 40 of the selection of the first investment ratio, and detailed explanations are omitted. In the selection of the second investment ratio, the same processing is performed until step S155, and concurrently, incorporation recommended companies must be selected (step S257), and a minimum incorporation ratio of the incorporation recommended company is set (step S259), in which the selection of the second investment ratio differs from the selection of the first investment ratio.

Foremost, data of the primary stock-for-portfolio selection candidate companies is read at step S251. Subsequently, at step S253, a certain limit for incorporating stock of the incorporation recommended companies among the total amount of investment is decided. In this embodiment of the present invention, 50% of the total amount of investment is set as the incorporation limit of the incorporation recommended stock. Incidentally, only the minimum share of portfolio of the individual incorporation recommended stocks may be set without setting the incorporation limit in advance.

Subsequently, data of the secondary stock-for-portfolio selection candidate companies is read at step S255.

Then, at step S257, the incorporation recommended companies are selected among the secondary stock-for-portfolio selection candidate companies. In this embodiment of the present invention, among the companies in which the value of the company patent valuation index is 5 or greater, the top 10 companies having a large score difference among the undervalued companies showing a positive value for the factor score difference between the "patent strategy" factor score and "intellectual property strategy management" factor score, which are the extraction criteria of the first overvalued/ undervalued companies, are selected.

Incidentally, as the selection criteria of the incorporation recommended companies, the factor score average value difference as the extraction criteria of the second overvalued/undervalued companies may be used instead of the factor score difference as the extraction criteria of the first overvalued/undervalued companies. Here, the reason why the factor score difference was given preference over the factor score average value difference is because the latter is considered to more directly reflect the gap between the valuation of each company for its performance to date and the valuation of future potential growth.

Incidentally, selection of the incorporation recommended companies does not necessarily have to be from the undervalued companies, and may also be performed from the overvalued companies or both the overvalued/undervalued companies. When operating the stock portfolio for the purpose of short-term purchase and sale of stock, it is desirable to incorporate both the overvalued/undervalued companies. Otherwise, when the objective is the long-term operation of the stock portfolio, it is desirable to incorporate only the undervalued companies with high potential growth.

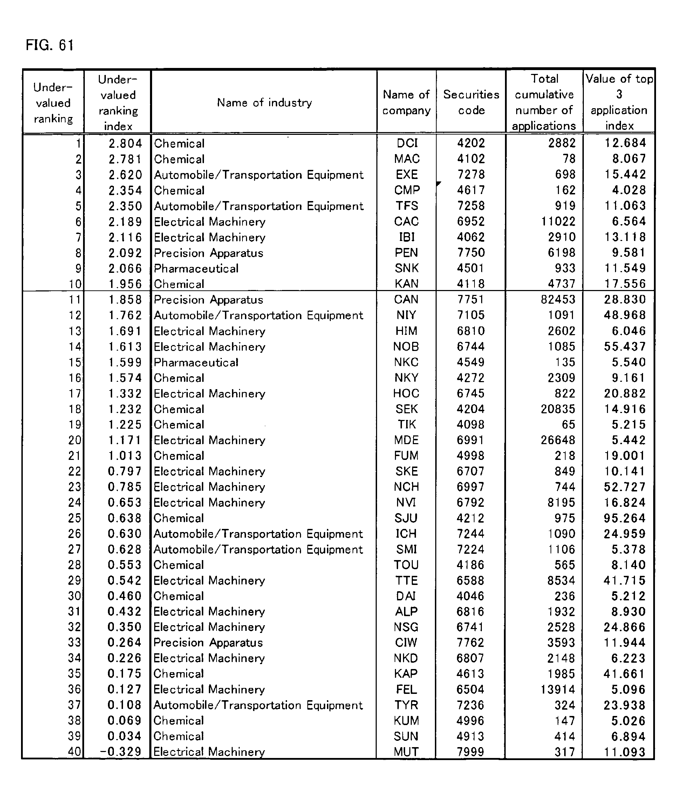

FIG. 61 shows a part of the list of the undervalued companies ranked in descending order according to the size of the factor score difference between the "patent strategy" factor score and the "intellectual property strategy management" factor score among the primary stock-for-portfolio selection candidates. Further, a line is drawn at the position of the top 10 companies in which the value of the company patent valuation index is 5 or greater and having a large factor score difference, and this shows that these companies will become the incorporation recommended stock companies.

After the incorporation recommended company is selected, at step S259, the stock portfolio selection system 100 sets the minimum incorporation ratio to each stock of the incorporation recommended companies. As the methods for setting the minimum incorporation ratio, there are (1) a method of equally allocating the minimum incorporation ratio to each of the incorporation recommended companies, and (2) a method of allocating the ratio according to the ranking or comprehensive score of the incorporation recommended companies obtained up to step S257. The total minimum incorporation ratio regarding all incorporation recommended companies will suffice so as long as it is less than 100%. In this embodiment of the present invention, at step S253, since the incorporation limit of the incorporation recommended stock is set at 50%, the minimum incorporation ratio to each of the incorporation recommended companies is set to 5% within the foregoing limit, and allocated equally.

Subsequently, at step S261, the expected return and risk are calculated for each individual stock of the undervalued companies (78 companies) among the primary stock-for-portfolio selection candidates. In the selection of the second investment ratio, it is not necessary to calculate the theoretical excess earnings ($\alpha'$), the theoretical sensitivity ($\beta'$), and the theoretical residual ($\epsilon'$), and the expected return and risk may be calculated using the excess earnings ($\alpha$), the sensitivity ($\beta$), and the residual ($\epsilon$) based on the actual stock price. Foremost, the expected return of the individual stock is represented as $E(R_i)$ (i = 1, ..., 78), and calculated based on Formula 47 below.

$$\text{Expected return } E(R_i) = \text{excess earnings } (\alpha) + \text{sensitivity}$$

$$(\beta) \times \text{return of index*} + \text{residual } (\epsilon) \quad \ldots \text{ (Formula 47)}$$

Subsequently, the risk of the individual stock of the primary stock-for-portfolio selection candidates is calculated. The risk is represented with $\sigma_{Ri}$ (i = 1, ..., 78), and is sought by calculating the variance $\sigma^2$ of the expected return of the individual stock. Specifically, this is as shown in Formula 48 below.

$$\text{Variance } \sigma_{Ri}^2 \text{ of individual stock} = \Sigma_{i=1}^{78}[\{E(R_i) - E(\dot{R^*})\}^2] /$$

$$(78-1) \ldots \text{ (Formula 48)}$$

Incidentally, the risk $\sigma_{Ri}$ is the positive square root of the variance $\sigma_{Ri}^2$.

Subsequently, at step S263, the minimum incorporation ratio 5% set at step S259 is incorporated to the 10 incorporation recommended companies selected at step S257 before selecting the investment ratio.

At step S265, the minimum incorporation ratio 5% of the 10 incorporation recommended companies set at step S263 is set as the condition, and the expected return and risk of the overall stock portfolio is calculated based on the $\alpha_i$, $\beta_i$, $\varepsilon_i$ (i = 1, ..., 78) of each individual stock. Foremost, the expected return of the overall stock portfolio is represented as E(Rp), and calculated based on Formula 49 below.

$$\texttt{Expected return E(Rp)} = \alpha_p + \beta_p \times E(R\star) \ \ldots \ \texttt{(Formula 49)}$$

Here, $\alpha_p$ represents the excess earnings ($\alpha$) of the overall stock portfolio. $\beta_p$ represents the sensitivity ($\beta$) of the overall stock portfolio. E(R*) represents the expected return of the index*. The excess earnings ($\alpha$) of the overall stock portfolio is the weighted average of the $\alpha_i$ (i = 1, ..., 78) of the individual stock based on the incorporation ratio. Further, the sensitivity ($\beta$) of the overall stock portfolio is the weighted average of the $\beta_i$ (i = 1, ..., 78) of the individual stock based on the incorporation ratio.

Subsequently, the risk of the stock portfolio is calculated. The risk of the overall stock portfolio is represented as $\sigma_{Rp}$, and is sought by calculating the variance $\sigma_{Rp}^2$ of the overall stock portfolio. Specifically, this is as shown in Formula 50 below.

$$\texttt{Variance } \sigma_{Rp}^2 \texttt{ of overall stock portfolio}$$

$$= \beta_p^2 \sigma_{R\star}^2 + \Sigma_{i=1}^{78} (X_i^2 \sigma_{\varepsilon i}^2) \ \ldots \ \texttt{(Formula 50)}$$

Here, $\beta_p^2$ represents the variance of the sensitivity ($\beta$) of the overall stock portfolio. $\sigma_{R\star}^2$ represents the variance of the index*. $X_i$ (i = 1, ..., 78) represents the share of portfolio of the individual stock. $\sigma_{\varepsilon i}^2$ represents the variance of the residual ($\varepsilon$) of the individual stock. Incidentally, the risk $\sigma_{Rp}$ of the overall stock portfolio is the positive square root of the variance $\sigma_{Rp}^2$.

Here, since the right-end first term is the crossing of the variance of the index* and the variance of the $\beta$ of the overall stock portfolio, the value thereof will be influenced by the price movement of the indexes. Contrarily, the second term is decided based on the standard deviation ($\sigma_{\varepsilon i}$) of the residual ($\varepsilon$) of the individual stock, and the share of portfolio (X) of the individual stock, and there is no relation to the risk of the index*. Accordingly, the right-end first term is referred to as a systematic risk (market risk), and the second term is referred to as an unsystematic risk (non-market risk). In other words, the risk of the overall stock portfolio is a result of the elements arising from the price movement of the index* and the elements arising due to events that are unique to the stock portfolio.

Subsequently, at step S267, the efficient frontier is elicited based on the expected return and risk of the stock portfolio in consideration of the minimum incorporation ratio of the incorporation recommended stock. Specifically, foremost, when the expected return of the stock portfolio configured from the primary stock-for-portfolio selection candidates is fixed, the share of portfolio of the stock for portfolio (minimum risk share of portfolio) that will not be lower than the minimum incorporation ratio set to the respective incorporation recommended stocks and capable of minimizing the risk is calculated. Subsequently, by changing the expected return of the stock portfolio to various values, the minimum risk share of portfolio corresponding to the respective expected returns is calculated. In addition, the aggregate of the minimum risk share of portfolios of the expected return obtained as described above is elicited as the efficient frontier.

In the selection of the foregoing first investment ratio, the share of portfolio to become the smallest risk was sought among any and all combinations of the retained stocks. Contrarily, in the selection of the second investment ratio, under the restriction of "the share of portfolio of the incorporation recommended stock is not less than the minimum incorporation ratio," the share of portfolio to become the smallest risk is sought. Accordingly, there may be cases where the minimum risk upon selecting the second investment ratio is greater than the minimum risk in selecting the first investment ratio. Nevertheless, the selection of the second investment ratio minimizes the risk by combining with other stocks simultaneously with preferentially incorporating the incorporation recommended stock.

The processing of step S161 or later is the same as FIG. 40 of the first embodiment.

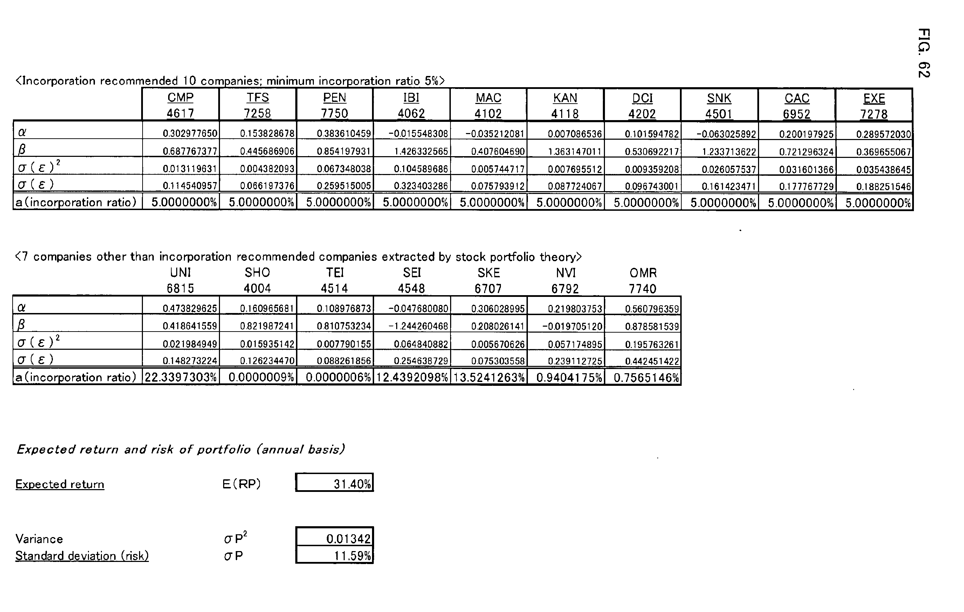

FIG. 62 shows the optimal share of portfolio of the stock for portfolio calculated at the contact point of the efficient frontier and the capital market line (S161 to 5163). FIG. 62 also shows the $\alpha_i$, $\beta_i$, variance $\sigma_{\varepsilon i}^2$ and standard deviation $\sigma_{\varepsilon i}$ of residual $\varepsilon$, expected return E(Rp) and variance $\sigma_{Rp}^2$ of the overall portfolio, and diversification of risk $\sigma_{Rp}$. As evident from the diagram, 10 companies are selected as the incorporation recommended companies, and 7 companies are selected as other incorporation companies. Nevertheless, 2 companies among the 7 companies as the other incorporation companies have an optimal share of portfolio that is a value extremely close to 0.

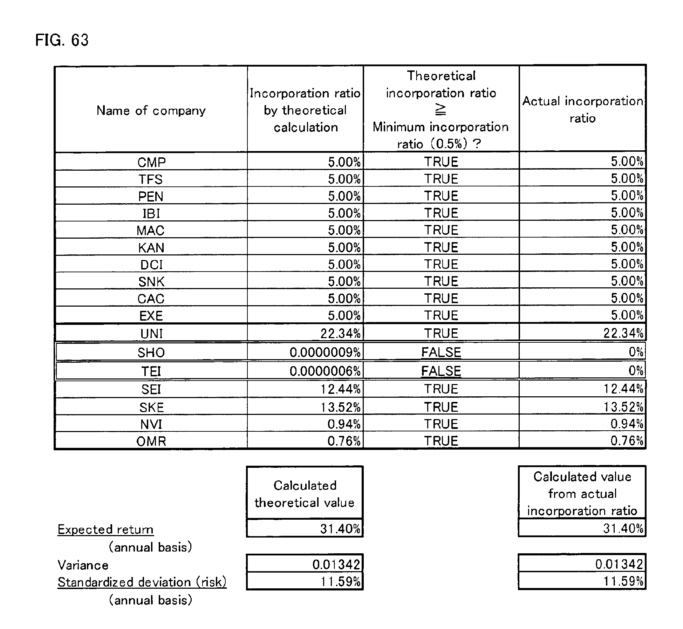

FIG. 63 shows the actual incorporation ratio decided for each stock for portfolio (S164). It is clear from this diagram that the 2 companies in which the optimal share of portfolio is less than 0.5% are not actually incorporated to the portfolio. The creation of the portfolio at step S315 is thereby complete.

Incidentally, the method for selecting the second investment ratio is not limited to the above. For instance, the stock portfolio can be formed by allocating all investments only to the incorporation recommended stock without calculating the optimal share of portfolio at the contact point of the efficient frontier and the capital market line.

(2-8. Stock Price Fluctuation Ratio of Stock Portfolio and Transition Result of Return based on Selection of Second Investment Ratio)

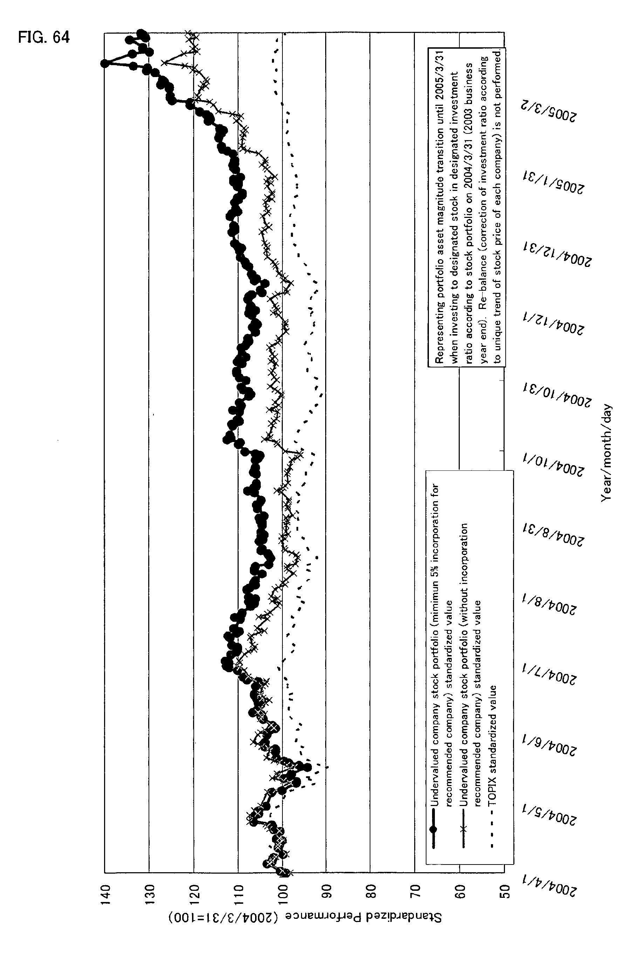

Subsequently, the portfolio transition is computed and output as necessary at step S317. FIG. 64 shows an example of the stock price fluctuation ratio and the transition result of return of the stock portfolio. This example shows the stock price transition in which the incorporation ratio to the stock portfolio in the overall incorporation recommended companies is 50% and the stock price transition in which the incorporation ratio of the incorporation recommended companies is 0% according to the method of equally distributing the minimum incorporation ratio to the incorporation recommended companies.

This diagram shows a graph representing the comparison of the performance return for 1 year in 2004 of the stock portfolio and the TOPIX trend during the same period. When comparing the performance returns, it is evident that both the stock price transition in which the incorporation ratio to the stock portfolio in the overall incorporation recommended companies is 50% and the stock price transition in which the incorporation ratio of the incorporation recommended companies is 0% according to the method of equally distributing the minimum incorporation ratio to the incorporation recommended companies gained a larger return than TOPIX.

Further, it is also evident that the stock price transition in which the incorporation ratio to the stock portfolio in the overall incorporation recommended companies is 50% according to the method of equally distributing the minimum incorporation ratio to the incorporation recommended companies showed a greater growth in the performance return according to the temporal transition in comparison to the stock price transition in which the incorporation ratio of the incorporation recommended companies is 0%. This can be evaluated as enjoying the benefit of the upward revision of the stock price based on the growth potential of the company by incorporating the incorporation recommended companies particularly extracted based on the evaluation of potential competitive power to the stock portfolio at a given ratio.

As described above, the stock portfolio selection device pertaining to the present invention uses the indexes obtained from patents representing off-balance intellectual assets and further adds data obtained from information concerning the management and finance of companies. Further, the stock portfolio selection device then comprehensively valuates how the respective companies are creating and operating the trinity management strategy consisting of business strategy, R&D strategy and intellectual property strategy so as to increase the corporate value. Therefore, a more preferable stock-for-portfolio company can be selected based on such corporate valuation. Moreover, as a result of calculating the theoretical stock price based on the same criterion as in the case of selecting the stock-for-portfolio company, an investment ratio having a higher expected return and/or a reduced risk can be selected.

Accordingly, by employing the stock portfolio selection device pertaining to the present invention, it will be possible to provide to investors and others a new service system for creating a stock portfolio with higher profitability while linking with the index. Further, it will also be possible to provide a new stock portfolio selection method as a service. Moreover, as a result of providing the program itself for controlling the stock portfolio selection system, each client will be able to personally utilize this system to realize a stock portfolio with high profitability.

The stock portfolio selection device, stock portfolio selection method and stock portfolio selection program according to the present invention comprehensively valuates companies based on a corporate valuation index containing an R&D cost related index, management/finance related index and intellectual asset related index, and are employed for the purpose of providing a highly profitable stock portfolio based on the valuation result thereof.

**Claims**

**1.** A stock portfolio selection device for selecting a stock portfolio based on a corporate valuation index, comprising:

data acquisition means for acquiring corporate valuation index related data containing an intellectual asset related index;
company ranking creation means for performing corporate valuation with said corporate valuation index related data to create the company ranking;
stock-for-portfolio selection means for selecting a prescribed number of companies from said company ranking and making the companies the stock for portfolio;
investment ratio selection means for selecting the investment ratio of funds to be invested in the respective companies selected by said stock-for-portfolio selection means; and
stock portfolio creation means for creating a stock portfolio corresponding to said stock for portfolio based on said investment ratio.

2. The stock portfolio selection device according to claim 1, further comprising industry/company selection means for selecting an industry and/or company.

3. The stock portfolio selection device according to claim 1 or 2, wherein said company ranking creation means comprise:

   index selection means for selecting a prescribed number of corporate valuation indexes so as to contain at least one intellectual asset related index from the corporate valuation index related data acquired by said data acquisition means; and
   principle component analysis means for performing principle component analysis with the corporate valuation index selected by said index selection means and calculating principle component score of each company.

4. The stock portfolio selection device according to claim 1 or 2, wherein said company ranking creation means comprise:

   factor analysis means for performing factor analysis to extract factor with the corporate valuation index related data acquired by said data acquisition means and uniting said corporate valuation index based on said factor;
   multiple regression analysis means for performing multiple regression analysis based on the factor extracted by said factor analysis means and profit related index representing various profits such as intellectual asset related profits, and selecting the corporate valuation index based on the factor showing the statistical significance in relation to said profit related index; and
   principle component analysis means for performing principle component analysis with the corporate valuation index selected by said multiple regression analysis means and calculating principle component score of each company.

5. The stock portfolio selection device according to claim 1 or 2, wherein said company ranking creation means comprise covariance structure analysis means for performing covariance structure analysis taking the corporate valuation index containing said intellectual asset related index as observed variable so as to perform corporate valuation for said respective companies.

6. The stock portfolio selection device according to claim 5, wherein said covariance structure analysis means comprise:

   input means for inputting causal model information which sets a "financial profitability" factor, a "patent strategy" factor, an "R&D investment" factor, and an "intellectual property strategy management" factor as latent variables, sets a plurality of company evaluation indexes including the intellectual asset related index as observed variables, sets, as error variables, a unique factor of each of the observed variables that is not prescribed by the "financial profitability" factor, the "patent strategy" factor, and the "R&D investment" factor, and a variation factor that is not prescribed by the "financial profitability" factor, the "patent strategy" factor, and the "R&D investment" factor among factors that prescribe the "intellectual property strategy management" factor,
   sets coefficients in which each of the "financial profitability" factor, the "patent strategy" factor, and the "R&D investment" factor influences the "intellectual property strategy management" factor as coefficients between latent variables, and
   sets coefficients in which each of the "financial profitability" factor, the "patent strategy" factor, the "R&D investment" factor and the "intellectual property strategy management" factor influences any one of the plurality of company evaluation indexes as latent variable-observed variable coefficients;
   causal model creation means for creating a matrix equation of causal model based on the causal model information input from the input means;
   covariance structure creation means for creating a covariance structure which expresses a variance-covariance matrix of the observed variable contained in the matrix equation with a function of the coefficients hypothesized with the causal model information;
   company evaluation index related data variance-covariance matrix calculation means for calculating a variance-covariance matrix based on the company evaluation index related data acquired with the data acquisition means;

coefficient estimated value calculation means for calculating estimated values of each of the coefficients by approximating the covariance structure to the company evaluation index related data variance-covariance matrix as much as possible;

adaptation verification means for calculating a value of a prescribed adaptation index based on the estimated value of each of the coefficients calculated with the coefficient estimated value calculation means and the company evaluation index related data variance-covariance matrix, and verifying the adaptation of the causal model based on the value of the adaptation index;

causal model determination means for determining the matrix equation when it is determined that the divergence between the causal model and the company evaluation index related data is within a tolerance level as a result of the verification by the adaptation verification means; and

factor score calculation means for calculating factor stores of the "financial profitability" factor, the "patent strategy" factor, the "R&D investment" factor and the "intellectual property strategy management" factor based on the respective coefficients contained in the determined matrix equation and each of the observed variables.

7. The stock portfolio selection device according to claim 1 or 2,

wherein said company ranking creation means comprise covariance structure analysis means for performing covariance structure analysis to calculate factor scores of a "patent strategy" factor and an "intellectual property strategy management" factor based on causal model information which sets a "financial profitability" factor, the "patent strategy" factor, an "R&D investment" factor, and the "intellectual property strategy management" factor as latent variables, sets a plurality of company evaluation indexes including the intellectual asset related index as observed variables, sets, as error variables, a unique factor of each of the observed variables that is not prescribed by the "financial profitability" factor, the "patent strategy" factor, and the "R&D investment" factor, and a variation factor that is not prescribed by the "financial profitability" factor, the "patent strategy" factor, and the "R&D investment" factor among factors that prescribe the "intellectual property strategy management" factor,

sets coefficients in which each of the "financial profitability" factor, the "patent strategy" factor, and the "R&D investment" factor influences the "intellectual property strategy management" factor as coefficients between latent variables, and

sets coefficients in which each of the "financial profitability" factor, the "patent strategy" factor, the "R&D investment" factor and the "intellectual property strategy management" factor influences any one of the plurality of company evaluation indexes as latent variable-observed variable coefficients; and

wherein the stock-for-portfolio stock selection means comprise:

score difference and/or factor score average value of all companies magnitude correlation calculation means for calculating score difference between the "patent strategy" factor score and the "intellectual property strategy management" factor score of each company calculated with the covariance structure analysis means, and/or, respectively calculating magnitude correlation of a sum of the "patent strategy" factor score and the "R&D investment" factor score of each company calculated with the covariance structure analysis means with an average value of all companies, and magnitude correlation of an "intellectual property strategy management" factor score of each company with an average value of all companies;

undervalued company extraction means for extracting, as undervalued companies, companies in which the score difference obtained by subtracting the "intellectual property strategy management" factor score from the "patent strategy" factor score is greater than a first prescribed value, and/or companies in which the sum of the "patent strategy" factor score and the "R&D investment" factor score is greater than the average value of all companies, and the "intellectual property strategy management" factor score is smaller than the average value of all companies; and

stock-for-portfolio candidate decision means for setting a company group extracted with the undervalued company extraction means as primary stock-for-portfolio candidates.

8. The stock portfolio selection device according to claim 7,

wherein said stock-for-portfolio stock selection means further comprise overvalued company extraction means for extracting, as overvalued companies, companies in which the score difference obtained by subtracting the "intellectual property strategy management" factor score from the "patent strategy" factor score is less than a second prescribed value, and/or, companies in which the sum of the "patent strategy" factor score and the "R&D investment" factor score is smaller than the average value of all companies, and the "intellectual property strategy management" factor score is greater than the average value of all companies; and

wherein said stock-for-portfolio candidate decision means set both the company group extracted with the undervalued company extraction means and the company group extracted with the overvalued company extraction means as the primary stock-for-portfolio candidates.

9.  The stock portfolio selection device according to any one of claims 1 through 6, wherein said stock-for-portfolio stock selection means comprise company technology evaluated value calculation means for calculating a company technology evaluated value of each company included in the primary stock-for-portfolio candidates by using all or at least one among:

    case share of the company among the overall number of patent applications or overall number of effective patents in a prescribed technical field to which the company's intellectual assets belong,
    excess growth rate showing the difference in the growth rate of the number of patent applications or the number of effective patents of the company in relation to the growth rate of the overall number of patent applications or overall number of effective patents in a prescribed technical field during a prescribed period,
    patent concentration index showing the degree of concentration/diversification of company's technical development field by indexing the share of the number of patent applications or the number of effective patents for each prescribed technical field among the overall number of patent applications or overall number of effective patents during a prescribed period of each company, and
    advantageous patent ratio showing the ratio of advantageous patents among the overall patents owned by each company based on competitor diversion and right acquisition motivation degree for each individual patent calculated using historical information including the number of oppositions raised ratio, the number of competitor citations ratio, and the number of appeals ratio.

10. The stock portfolio selection device according to claim 7 or 8,
    wherein said stock-for-portfolio stock selection means comprise:

    company technology evaluated value calculation means for calculating a company technology evaluated value of each company included in the primary stock-for-portfolio candidates by using all or at least one among
    case share of the company among the overall number of patent applications or overall number of effective patents in a prescribed technical field to which the company's intellectual assets belong,
    excess growth rate showing the difference in the growth rate of the number of patent applications or the number of effective patents of the company in relation to the growth rate of the overall number of patent applications or overall number of effective patents in a prescribed technical field during a prescribed period,
    patent concentration index showing the degree of concentration/diversification of company's technical development field by indexing the share of the number of patent applications or the number of effective patents for each prescribed technical field among the overall number of patent applications or overall number of effective patents during a prescribed period of each company, and
    advantageous patent ratio showing the ratio of advantageous patents among the overall patents owned by each company based on competitor diversion and right acquisition motivation degree for each individual patent calculated using historical information including the number of oppositions raised ratio, the number of competitor citations ratio, and the number of appeals ratio; and
    primary stock-for-portfolio candidates cutback means for excluding, from the primary stock-for-portfolio candidates, a prescribed number of top rank companies having a high company technology evaluated value among the overvalued companies, and excluding a prescribed number of low rank companies having a low company technology evaluated value among the undervalued companies; and

    wherein the stock-for-portfolio candidate decision means set the remaining company group that was not excluded with the primary stock-for-portfolio candidates cutback means as secondary stock-for-portfolio candidates.

11. The stock portfolio selection device according to claim 9 or 10, wherein said company technology evaluated value calculation means comprise:

    per-company per-technical field case share calculation means for calculating, regarding all technical fields to which the company's intellectual assets belong, the number of patent applications or the number of effective patent share of the company per-technical field among the overall number of patent applications or the overall number of effective patents in each technical field to which the company's intellectual assets belong;
    average case share of all technical fields calculation means for calculating an average value of all technical fields of the case share by dividing a number obtained by totaling the per-company per-technical field case share for all technical fields by the number of technical fields;
    company excess growth rate calculation means for calculating the excess growth rate showing the difference in the growth rate of the number of patent applications or the number of effective patents of the company in relation to the growth rate of the overall number of patent applications or the overall number of effective patents of a prescribed technical field during a prescribed period;

company corrected relative case share calculation means for calculating a company corrected relative case share by multiplying the average case share of all technical fields with the company excess growth rate;

company patent concentration index calculation means for calculating the company's patent concentration index by squaring the share of the number of patent applications or the number of effective patents per prescribed technical field among the overall number of patent applications or the overall number of effective patents during a prescribed period of the company, and adding the squared share to all technical fields to which the company's intellectual assets belong; and

company patent valuation index calculation means for calculating patent valuation index by multiplying the company corrected relative case share with the company patent concentration index.

12. The stock portfolio selection device according to any one of claims 1 through 11, wherein said investment ratio selection means distributes investment funds equally to the stock of the respective companies selected by said stock-for-portfolio selection means.

13. The stock portfolio selection device according to any one of claims 1 through 11, wherein said investment ratio selection means comprise:

theoretical stock price calculation means for calculating the theoretical stock price of the respective companies selected by said stock-for-portfolio selection means;

first parameter calculation means for calculating first parameters of the theoretical excess profit in relation to the market stock price of said respective companies, theoretical sensitivity of the stock price of said respective companies in relation to the fluctuation of the stock market price, and theoretical residual showing an independent price movement of the stock of said respective companies based on said theoretical stock price;

expected return calculation means for calculating the expected return of said stock for portfolio based on said first parameters;

risk calculation means for calculating the risk of said stock for portfolio based on said first parameters;

efficient frontier derivation means for deriving the efficient frontier by calculating the share of portfolio of said stock for portfolio in relation to the value of the respective expected returns so as to make the value of said expected return a fixed value and make the value of said risk a minimum value;

risk-free rate data acquisition means for acquiring the risk-free rate data;

capital market line derivation means for deriving a capital market line through a fixed point of the risk-free rate and tangent to said efficient frontier;

optimum share of portfolio calculation means for calculating the share of portfolio of said stock for portfolio in the contact point of said efficient frontier and said capital market line; and

fund investment ratio calculation means for calculating the fund investment ratio in relation to the stock of the respective companies forming said stock for portfolio based on said optimum share of portfolio.

14. The stock portfolio selection device according to any one of claims 1 through 11, wherein said investment ratio selection means comprise:

theoretical stock price calculation means for calculating the theoretical stock price of the respective companies selected by said stock-for-portfolio selection means;

stock price index data acquisition means for acquiring price movement data of the stock price index;

individual stock data acquisition means for acquiring price movement data of the stock price of said respective companies;

second parameter calculation means for performing comparative analysis of the price movement of said stock price index and the price movement of the stock price of said respective companies, and calculating second parameters of the excess profit of each stock of said respective companies in relation to the profit of said stock price index, sensitivity of the stock price of said respective companies in relation to the price movement of said stock price index, and residual showing an independent price movement of the stock of said respective companies which is independent from the price movement of said stock price index;

correction means for correcting said second parameters based on said theoretical stock price;

expected return calculation means for calculating the expected return of said stock for portfolio based on said corrected second parameters;

risk calculation means for calculating the risk of said stock for portfolio based on said corrected second parameters;

efficient frontier derivation means for deriving the efficient frontier by calculating the share of portfolio of said stock for portfolio in relation to the value of the respective expected returns so as to make the value of said expected return a fixed value and make the value of said risk a minimum value;

risk-free rate data acquisition means for acquiring the risk-free rate data;

capital market line derivation means for deriving a capital market line through a fixed point of the risk-free rate and tangent to said efficient frontier;

optimum share of portfolio calculation means for calculating the share of portfolio of said stock for portfolio in the contact point of said efficient frontier and said capital market line; and

fund investment ratio calculation means for calculating the fund investment ratio in relation to the stock of the respective companies forming said stock for portfolio based on said optimum share of portfolio.

15. The stock portfolio selection device according to claim 10, wherein said investment ratio selection means comprise:

incorporation recommended company selection means for selecting incorporation recommended companies that satisfy a prescribed standard among the companies selected as the secondary stock-for-portfolio candidates;

minimum incorporation ratio setting means for setting the minimum incorporation ratio to each stock of the respective incorporation recommended companies within a range where the total share of portfolio regarding all incorporation recommended companies will be less than 100% of the total invested amount;

stock price index data acquisition means for acquiring price movement data of stock price index;

individual stock data acquisition means for acquiring price movement data of the stock price of each of companies that are the primary stock-for-portfolio candidates;

second parameter calculation means for performing comparative analysis of the price movement of the stock price index and the price movement of the stock price of each company, and calculating the second parameter group including excess earnings of each stock of each company in relation to profits of the stock price index, sensitivity of the stock price of each company in relation to the price movement of the stock price index, and residual showing an independent price movement of the stock of each company that is independent from the price movement of the stock price index;

expected return calculation means for calculating the expected return of the stock for portfolio based on the second parameter group;

risk calculation means for calculating the risk of the stock for portfolio based on the second parameter group;

efficient frontier derivation means for deriving the efficient frontier by calculating a share of portfolio of the stock for portfolio in relation to the value of each expected return with the expected return being a fixed value and the risk being a minimum value while holding at least the incorporation recommended stock of each of the minimum incorporation ratios;

risk-free assets risk-free rate data acquisition means for acquiring the risk-free rate data of risk-free assets;

capital market line derivation means for deriving a capital market line to come in contact with the efficient frontier with the risk-free rate of the risk-free assets as the fixed point;

optimal share of portfolio calculation means for calculating the share of portfolio of the stock for portfolio in the contact point of the efficient frontier and the capital market line; and

fund investment ratio calculation means for calculating the fund investment ratio for each stock of each company included in the stock for portfolio based on the optimal share of portfolio.

16. The stock portfolio selection device according to claim 13 or 14, wherein said theoretical stock price calculation means comprise:

total business income after tax theoretical value calculation means for calculating the total business income after tax theoretical value of a company with corporate valuation index related data containing said intellectual asset related index;

investment capital cost calculation means for calculating the investment capital cost of a company with said corporate valuation index related data;

theoretical economic excess profit calculation means for calculating the theoretical economic excess profit by deducting said investment capital cost from said total business income after tax theoretical value;

discount rate calculation means for calculating the discount rate for derivation of the present value of a company with the corporate valuation index related data containing said intellectual asset related index;

theoretical market-value-added calculation means for calculating the theoretical market-value-added by dividing said theoretical economic excess profit by said discount rate;

equity capital calculation means for calculating the equity capital of a company with corporate valuation index related data containing said intellectual asset related index;

estimated aggregate market value calculation means for calculating the estimated aggregate market value of a company by adding said market-value-added and said equity capital; and

theoretical stock price calculation means for calculating the theoretical stock price by dividing said estimated aggregate market value by the total outstanding stock volume.

17. A stock portfolio selection method for selecting a stock portfolio based on a corporate valuation index, comprising:

a data acquisition step for acquiring corporate valuation index related data containing an intellectual asset related index;

a company ranking creation step for performing corporate valuation with said corporate valuation index related data to create the company ranking;

a stock-for-portfolio selection step for selecting a prescribed number of companies from said company ranking and making the companies the stock for portfolio;

an investment ratio selection step for selecting the investment ratio of funds to be invested in the respective companies selected by said stock-for-portfolio selection step; and

a stock portfolio creation step for creating a stock portfolio corresponding to said stock for portfolio based on said investment ratio.

18. A program for selecting a stock portfolio based on a corporate valuation index, which causes a computer to execute:

a data acquisition step for acquiring corporate valuation index related data containing an intellectual asset related index;

a company ranking creation step for performing corporate valuation with said corporate valuation index related data to create the company ranking;

a stock-for-portfolio selection step for selecting a prescribed number of companies from said company ranking and making the companies the stock for portfolio;

an investment ratio selection step for selecting the investment ratio of funds to be invested in the respective companies selected by said stock-for-portfolio selection step; and

a stock portfolio creation step for creating a stock portfolio corresponding to said stock for portfolio based on said investment ratio.

FIG. 1

100

FIG. 2

FIG. 3

```
                    ┌──────────────┐
                    │    START     │
                    └──────┬───────┘
                           │                                    30A ┐
                         ┌─S1                                      ┌─┴─┐
                    ┌──────────────┐                              │   │
                    │ ACQUIRE DATA │◄┄┄┄┄┄┄┄┄┄┄┄┄┄┄┄┄┄┄┄┄┄┄┄┄┄┄┄┄┤   │
                    └──────┬───────┘          20A ┐               │   │
                           │                   ┌──┴────┐          │   │
                           │                   │EXTERNAL│         │   │
                         ┌─S2                   │  DB   │         │   │
                      ╱──────────╲      YES   ┌─S3└──┬───┘        │   │
                     ╱ UPDATE DATA? ╲─────►┌──────────┐          │   │
                      ╲──────────╱         │ACQUIRE AND│┄┄┄┄┄┄┄►  │   │
                           │ NO            │WRITE UPDATE│         │   │
                           │               └─────┬─────┘         │   │
                           │                   ┌─S4              │   │
                           │               ┌──────────┐          │   │
                           │               │STANDARDIZE│┄┄┄┄┄┄┄►  │   │
                         ┌─S5              │   DATA    │          │   │
                      ╱──────────╲      YES└──────────┘          │   │
                     ╱SELECT INDUSTRY╲─────┐                     │   │
                     ╲  /COMPANY?   ╱      │   ┌─S6              │   │
                      ╲──────────╱         │┌──────────┐         │   │
                           │ NO            ││ SELECT   │◄┄┄┄┄┄┄┄┤   │
                           │               ││INDUSTRY/ │         │   │
                           │               ││ COMPANY  │         │   │
                           │               │└─────┬────┘         │   │
                           │◄──────────────┘      │              │   │
                         ┌─S7                                    │   │
                      ╱──────────╲      YES                      │   │
                     ╱SELECT INDEX?╲───────────┐  ┌─S8          │   │
                      ╲──────────╱             │┌──────────┐     │   │
                           │ NO                ││ SELECT   │◄┄┄┄┤   │
                         ┌─S9                   ││  INDEX   │     │   │
   COVARIANCE      ╱──────────────╲            │└────┬─────┘     │   │
   STRUCTURE      ╱  COVARIANCE    ╲           │     │           │   │
          ┌──────╱   STRUCTURE      ╲          │     │           │   │
          │     ╱ ANALYSIS/FACTOR &  ╲─────────┘     │           │   │
          │     ╲MULTIPLE REGRESSION ╱               │           │   │
        ┌─S19    ╲   ANALYSIS?      ╱                │           │   │
  ┌──────────┐    ╲──────────────╱                   │           │   │
  │COVARIANCE│         │ FACTOR &                     │           │   │
  │STRUCTURE │         │ MULTIPLE REGRESSION          │           │   │
  │ANALYSIS  │       ┌─S10                            │           │   │
  └────┬─────┘   ┌──────────────┐                     │           │   │
       │         │FACTOR ANALYSIS│                    │           │   │
       │         └──────┬───────┘                     │           │   │
       │              ┌─S11                           │ TARGET INDEX │
       │      ┌──────────────────────┐                │           │   │
       │      │MULTIPLE REGRESSION   │◄┄┄┄┄┄┄┄┄┄┄┄┄┄┄┄┘           │   │
       │      │     ANALYSIS         │                            │   │
       │      └──────────┬───────────┘                            │   │
       │               ┌─S12                                      │   │
       │      ┌──────────────────────┐                            │   │
       │      │PRINCIPLE COMPONENT   │                            │   │
       │      │     ANALYSIS         │                            │   │
       │      └──────────┬───────────┘                            │   │
       └──────────────►  │                                        │   │
                       ┌─S13                                       │   │
              ┌──────────────────┐                        INTERNAL│   │
              │ COMPANY RANKING  │┄┄┄┄┄┄┄┄┄┄┄┄┄┄┄┄┄┄┄┄┄┄┄┄► DB    │   │
              └────────┬─────────┘                                │   │
                     ┌─S14      HOW TO SELECT                     │   │
              ┌──────────────────┐  N COMPANIES                   │   │
              │SELECT N COMPANIES│◄──                             │   │
              └────────┬─────────┘                                │   │
                     ┌─S15      HOW TO SELECT                     │   │
              ┌──────────────────┐  INVESTMENT RATIO              │   │
              │SELECT INVESTMENT │◄──                             │   │
              │      RATIO       │                                │   │
              └────────┬─────────┘                                │   │
                     ┌─S16                              STORE     │   │
              ┌──────────────────┐                                │   │
              │ CREATE PORTFOLIO │┄┄┄┄┄┄┄┄┄┄┄┄┄┄┄┄┄┄┄┄┄┄┄┄►       │   │
              └────────┬─────────┘                   STOCK PRICE  │   │
                     ┌─S17                                         │   │
              ┌──────────────────┐                                │   │
              │COMPUTE AND OUTPUT│◄┄┄┄┄┄┄┄┄┄┄┄┄┄┄┄┄┄┄┄┄┄┄┄┄┤       │   │
              │PORTFOLIO SERVICED│┄┄┄┄┄┄┄┄┄┄┄┄┄┄┄┄┄┄┄┄┄┄┄┄►       │   │
              └────────┬─────────┘                                │   │
                ┌──────────────┐                                  │   │
                │     END      │                                  └─┬─┘
                └──────────────┘                                    │
```

Business/Management Related Index (1)

FIG. 4

| Index Group | Index | Definition (Formula) |
|---|---|---|
| Investment Related | Facility Investment Amount | {(Current Term Tangible Fixed Assets − Previous Term Tangible Fixed Assets)} + (Current Term Depreciation Cost) |
| | Investment Trend Index | Term-on-Term Ratio of {(Facility Investment Amount) + (R&D Cost)} |
| Management / Finance Analysis Related | Facility Investment Efficiency | (Value Added Amount) / (Tangible Fixed Assets) |
| | Labor Productivity | (Value Added Amount) / (Number of Employees) |
| | Labor Equipment Ratio | (Tangible Fixed Assets) / (Number of Employees) |
| | Labor Distribution Share (To Value Added) | {(Personnel Expense to be Included in Selling Cost and Administrative Expenses) + (Labor Cost to be Included in Manufacturing Cost)} / (Value Added Amount) |
| | Total Factor Productivity | (Value Added Amount Rate of Change) − {(1 − Labor Distribution Share (To Value Added)) × (Depreciation Target Tangible Fixed Assets Rate of Change)} − {(Labor Distribution Share (To Value Added)) × (Number of Employees Rate of Change)} |
| | Cost-to-Sales Ratio | (Cost of Sales) / (Sales Volume) |
| | Cost of Sales-and-Administration Ratio to Sales | (Selling Cost and Administrative Expenses) / (Sales Volume) |
| | Interest Bearing Debt Ratio | (Interest Bearing Debt) / (Total Assets) |
| | Equity to Asset Ratio | (Equity Capital) / (Total Assets) |
| | Stock Price | (Stock Price) |
| Profit Related | Sales Volume | (Sales Volume) |
| | Value Added Amount | (Operating Net Profit) + (Interest Paid and Discount) + (R&D Cost) + (Depreciation Cost) + (Personnel Expense (including board members' remuneration)) + (Welfare Expense) + (Tax and Dues) (Operating Net Profit) = (Operating Profit) − (Interest Paid and Discount) |
| | Gross Business Profit (GOP) | (Operating Profit) + (R&D Cost) |
| | Gross Operating Profit (GBP) | (Gross Business Profit (GOP)) + (Patent Royalty Income) |
| | Earnings Before Interest, Taxes, Depreciation and Amortization (EBITDA) | (Operating Profit) + (Depreciation Cost) |
| | Operating Profit | (Operating Profit) |
| | Operating Net Profit | (Operating Profit) − (Interest Paid and Discount) |
| | Patent Royalty Income | (Patent Royalty Income (Including Royalty Income of Trademarks and Brands, etc.)) |
| | ROA $\alpha$ | {(Value Added Amount) + (Patent Royalty Income)} / (Total Assets) |
| | ROA $\beta$ | {(GOP) + (Patent Royalty Income)} / (Total Assets) |
| | ROA $\gamma$ | {(EBITDA) + (Patent Royalty Income)} / (Total Assets) |
| | ROA $\delta$ | {(Operating Profit) + (Patent Royalty Income)} / (Total Assets) |
| | Earnings on Intellectual Assets (EOIA) | {(GOP) + (Patent Royalty Income)} − {(Financial Assets) × (Profit Ratio m)} + {(Tangible Fixed Assets) × (Profit Ratio f)} (Profit Ratio m): Application of Short Term Prime Rate; (Profit Ratio f): Application of Long Term Prime Rate |
| | Return On Intellectual Assets (ROIA) (=ROA $\varepsilon$) | (Earnings on Intellectual Assets) / (Total Assets) |

FIG. 5

Business/Management Related Index (2)

| Index Group | Index | Definition (Formula) |
|---|---|---|
| Excess Profit Related | Excess Value Added Amount | Sales Volume × {(Sales Volume Value Added Ratio) − (Industry Average Sales Volume Value Added Ratio)} |
| | Excess GOP | Sales Volume × {(Sales Volume GOP Ratio) − (Industry Average Sales Volume GOP Ratio)} |
| | Excess GBP | Sales Volume × {(Sales Volume GBP Ratio) − (Industry Average Sales Volume GBP Ratio)} |
| | Excess EBITDA | Sales Volume × {(Sales Volume EBITDA Ratio) − (Industry Average Sales Volume EBITDA Ratio)} |
| | Excess Operating Profit | Sales Volume × {(Operating Profit Ratio (To Sales)) − (Industry Average Operating Profit Ratio (To Sales))} |
| | Excess ROA $\alpha$ | (ROA $\alpha$) − (Industry Average ROA $\alpha$) |
| | Excess ROA $\beta$ | (ROA $\beta$) − (Industry Average ROA $\beta$) |
| | Excess ROA $\gamma$ | (ROA $\gamma$) − (Industry Average ROA $\gamma$) |
| | Excess ROA $\delta$ | (ROA $\delta$) − (Industry Average ROA $\delta$) |
| | Excess Earnings on Intellectual Assets (EXEOIA) | (Total Assets = Average of Term Beginning and Term End) × {(Return on Intellectual Assets) − (Industry Average of Return on Intellectual Assets) |
| Market Valuation Related | Market Value Added (MVA: Actual Value) | (Total Number of Outstanding Shares) × (Stock Price) − (Shareholders' Equity) |
| | Market Value Added (MVA: Theoretical Value) | Present Value of Economic Value Added in Future = [{(R&D Cost) + (Operating Profit Theoretical Value + Patent Royalty Income) × (1 − Corporate Tax Rate)} − {(Interest Bearing Debt) + (Equity Capital)} × (WACC)] / (Capital Cost) |
| | Price Book-value Ratio (PBR) | (Aggregate Market Value) / (Equity Capital) |
| | Expected Intellectual Property Profit (EIPP) | {(Fixed Liabilities) × (Profit Ratio a) + (Aggregate Market Value) × (Profit Ratio p)} − {(Financial Assets) × (Profit Ratio m) + (Tangible Fixed Assets) × (Profit Ratio f)} (Profit Ratio a): (Weighted Average of Long Term Prime Rate and Bond Rate) × (1 − Corporate Tax) (Profit Ratio p): Calculated Based on Capital Asset Pricing Model (CAPM). Yield on Long Term 10-Year Government Bonds, Stock Investment Profit Ratio, $\beta$ Value were used; (Profit Ratio m): Application of Short Term Prime Rate (Profit Ratio f): Application of Long Term Prime Rate |

FIG. 6

EP 1 876 506 A1

R&D Related Index

| Index Group | Index | Definition (Formula) |
|---|---|---|
| R&D Related | R&D Cost | Total Amount of R&D Cost (Desirable to Use Average Value of Several Terms) |
| | R&D Stock | Cumulative Total Amount of R&D Cost |
| | Number of Inventors | (Calculated Based on "Inventor" Column of Laid-Open Publications) |
| | Inventor Stock | Cumulative Number of Inventors |
| | Inventor Ratio | (Number of Inventors) / (Number of Employees) |
| | R&D Cost per Inventor | (R&D Cost) / (Number of Inventors) |
| R&D Efficiency Related | R&D Cost Ratio $\alpha$ | (R&D Cost) / (Sales Volume) |
| | R&D Cost Ratio $\beta$ | (R&D Cost) / (Value Added Amount) |
| | R&D Cost Ratio $\gamma$ | (R&D Cost) / (GOP) |
| | R&D Cost Ratio $\delta$ | (R&D Cost) / (Total Assets) |
| | R&D Efficiency $\varepsilon$ | (Operating Profit) / (R&D Cost) (Desirable to Use Average Value of Several Terms for R&D Cost) |
| | Patent Application Productivity | (Number of Claims of Patent Applications) / (R&D Cost) (The Number of Claims May be the Number of Claims in Each Section (A to H) and the Number of Claims May be replaced by the Number of Patent Applications) (Average Value of Several Terms is Desirable for the R&D Cost) |
| | Examination Request Productivity | Correction of (Patent Application Productivity). (Patent Application Productivity) × (Estimated Examination Request Ratio) (Estimated Examination Request Ratio: Sought Based on Number of Examination Requests for Previous Applications in which the term for Examination Request is expired.) |
| | Patent Granted Productivity | Correction of (Patent Application Productivity). (Patent Application Productivity) × (Estimated Registration Ratio) (Estimated Registration Ratio: Sought Based on Number of Registrations of Previous Applications, Lapsed Years, Average Years to Patent Granted) |

Intellectual Assets Related Index (1)

FIG. 7

EP 1 876 506 A1

| Index Group | Index | Definition (Formula) |
|---|---|---|
| Patent Application Related | Number of Patent Applications | (Joint Application is Recorded as One Application) |
| | Patent Application Stock | (Cumulative Number of Patent Applications) |
| | Cumulative Patent Applications (A to H) | (Cumulative Patent Applications by Section) |
| | Number of Claims Filed | (Sum of "Number of Claims" of Laid-Open Publications) |
| | Number of Claims per Patent Application | (Number of Claims Filed) / (Number of Patent Applications) |
| | Application per Inventor | (Number of Patent Applications) / (Number of Inventors) (Number of Patent Applications Does Not Include Joint Applications) |
| | Number of Claims per Inventor (Patent Application) | (Number of Claims Filed) / (Number of Inventors) |
| | Number of Joint Applications | (Number of Joint Applications Among Patent Applications Filed) |
| | Joint Filing Ratio | (Number of Joint Applications)/(Number of Patent Applications) |
| | Number of Applicants in Joint Filing | (Number of Joint Applicants in Joint Applicaions) |
| | Number of Applications Top Ranking Inventors Involved | Number of Applications in which M Number of Top Ranking Inventors Within the Company Involved [This May be in a Single Year or Cumulative Total of Several Years] |
| Examination Request Related | Number of Examination Requests | (Number of Examination Requests Filed) |
| | Number of Examination Requests Filed by Section | (Number of Examination Requests of Each Section (A to H)) |
| | Years to Examination Request (Average) | { Σ (Date of Examination Request - Filing Date)} / [(Number of Examination Requests) × (Annual Number of Days)] |
| | Examination Request Ratio | (Examination Request Ratio Pertaining to Number of Patent Applications of Each Year) |
| | Cumulative Number of Examination Requests | (Cumulative Number of Examination Requests) |
| | Examination Request Ratio (to Patent Application Stock) | (Cumulative Number of Examination Requests) / (Cumulative Patent Applications Filed) |
| Patent Granted (Registrated) Related | Number of Patents Granted | (Number of Patents Granted) |
| | Registrations by Section | (Number of Registrations by Section (A to H)) |
| | Number of Registered Claims | (Number of "Claims" in Registered Gazette) |
| | Patent Granted per Inventor | (Number of Registrations) / (Number of Inventors) |
| | Number of Claims per Inventor (Patent Granted) | (Number of Registered Claims) / (Number of Inventors) |
| | Years to Patent Granted (Average) | { Σ (Patent Registration Date - Patent Filing Date)} / [(Number of Patents Granted) × (Annual Number of Days)] |
| | Patent Granted Ratio (to Number of Applications) | (Number of Patents Granted Each Year) / (Number of Patent Applications Filed Each Year) |
| | Patent Granted Stock | (Patent Granted Stock at the End of Each Year) |
| | Patent Granted Ratio (to Application Stock) | (Patent Granted Stock) / (Patent Application stock) |
| | Patent Granted Ratio (to Number of Examination Requests) | (Number of Patents Granted Each Year) / (Number of Examination Requests Filed Each Year) |
| | Patent Granted Stock Ratio | (Patent Granted Stock) / (Cumulative Number of Examination Requests) |
| | Effective Number of Patents Granted | (Number of Patents Granted Each Year) - (Number of Patents Invalidated Among Patent Registrations Each Year) |
| | Patent Granted Renewal Ratio | (Effective Number of Patents Granted Among Patent Registrations Each Year) / (Number of Patents Granted Each Year) |

Intellectual Assets Related Index (2)

FIG. 8

EP 1 876 506 A1

| Index Group | Index | Definition (Formula) |
|---|---|---|
| Items Related to Oppositions and Invalidation Trials Filed (as Defendant) | Number of Oppositions and Invalidation Trials (as Defendant) | Number of Patents Subject to Oppositions or Invalidation Trials (as Defendant) in Each Year (This May be an Overall Total, Total Number of Several Years, or Average in Several Years) |
| | Ratio of Number of Oppositions and Invalidation Trials (as Defendant) to Number of Patent Application | Ratio of Number of Oppositions and Invalidation Trials in Each Year (as Defendant) to Number of Applications Filed in Same Year = (Number of Patents Subject to Oppositions or Invalidation Trials (as Defendant) in Each Year of a Certain Company)/(Number of Patent Applications Filed by Said Company in Same Year) |
| | Ratio of Number of Oppositions and Invalidation Trials (as Defendant) to Number of Patent Granted | Ratio of Number of Oppositions and Invalidation Trials in Each Year (as Defendant) to Number of Patents Granted in Same Year = (Number of Patents Subject to Oppositions or Invalidation Trials Filed (as Defendant))/(Number of Patents Granted to Said Company in Same Year) |
| | Weighted Number of Oppositions and Invalidation Trials (as Defendant) | Number of Opponents to Patents Subject to Oppositions or Invalidation Trials (as Defendant) in Each Year = Σ (Number of Patents N Subject to Oppositions or Invalidation Trials (as Defendant)) × (Number of People Who Filed Oppositions or Invalidation Trials Against the N Patents) |
| | Ratio of Weighted Number of Oppositions and Invalidation Trials (as Defendant) to Number of Patent Application | Ratio of Number of Opponents to Patents Subject to Oppositions or Invalidation Trials (as Defendant) in Each Year to Number of Applications Filed by the Company in Same Year = { Σ (Number of Patents N Subject to Oppositions or Invalidation Trials (as Defendant)) × (Number of People Who Filed Oppositions or Invalidation Trials Against the N Patents)}/(Number of Applications Filed by Said Company in Same Year) |
| | Ratio of Weighted Number of Oppositions and Invalidation Trials (as Defendant) to Number of Patent Granted | Ratio of Number of Opponents to Patents Subject to Oppositions or Invalidation Trials (as Defendant) in Each Year to Number of Patents Granted to the Company in Same Year = { Σ (Number of Patents N Subject to Oppositions or Invalidation Trials (as Defendant)) × (Number of People Who Filed Oppositions or Invalidation Trials Against the N Patents)}/(Number of Patents Granted to Said Company in Same Year) |
| | Relative Value of Number of Oppositions and Invalidation Trials (as Defendant) | Ratio to Average Number in Industry in Relation to Number of Patents Subject to Oppositions or Invalidation Trials (as Defendant) in Each Year = (Number of Patents Subject to Oppositions or Invalidation Trials (as Defendant) in Each Year of a Certain Company)/(Average Number in Industry of Said Company in Same Year) |
| | Relative Value of Weighted Number of Oppositions and Invalidation Trials (as Defendant) | Ratio to Average Number in Industry in Relation to Weighted Number of Patents Subject to Oppositions or Invalidation Trials (as Defendant) in Each Year = { Σ (Number of Patents N Subject to Oppositions or Invalidation Trials (as Defendant)) × (Number of People Who Filed Oppositions or Invalidation Trials Against the N Patents)}/(Average Number of People in Industry of Said Company in Same Year) |
| | Relative Value of Ratio of Number of Oppositions and Invalidation Trials (as Defendant) to Number of Patent Application | Ratio to Average Ratio in Industry in Relation to Ratio of Number of Oppositions and Invalidation Trials (as Defendant) in Each Year to Number of Applications = (Ratio of Number of Oppositions and Invalidation Trials (as Defendant) in Each Year of a Certain Company to Number of Applications)/(Average Rario in Industry of Said Company in Same Year) |
| | Relative Value of Ratio of Weighted Number of Oppositions and Invalidation Trials (as Defendant) to Number of Patent Application | Ratio to Average Ratio in Industry in Relation to Ratio of Weighted Number of Oppositions and Invalidation Trials (as Defendant) in Each Year to Number of Applications = (Ratio of Weighted Number of Oppositions and Invalidation Trials (as Defendant) in Each Year of a Certain Company to Number of Applications)/(Average Ratio in Industry of Said Company in Same Year) |
| | Relative Value of Ratio of Number of Oppositions and Invalidation Trials (as Defendant) to Number of Patent Granted | Ratio to Average Ratio in Industry in Relation to Ratio of Number of Oppositions and Invalidation Trials (as Defendant) in Each Year to Number of Patents Granted = (Ratio of Number of Oppositions and Invalidation Trials (as Defendant) in Each Year of a Certain Company to Number of Patents Granted)/(Average Ratio in Industry of Said Company in Same Year) |
| | Relative Value of Ratio of Weighted Number of Oppositions and Invalidation Trials (as Defendant) to Number of Patent Granted | Ratio to Average Ratio in Industry in Relation to Ratio of Weighted Number of Oppositions and Invalidation Trials (as Defendant) in Each Year to Number of Patents Granted = (Ratio of Weighted Number of Oppositions and Invalidation Trials (as Defendant) in Each Year of a Certain Company to Number of Patents Granted)/(Average Ratio in Industry of Said Company in Same Year) |
| Citation/ Reference Related | Number of Citations (as Patentee) | Number of Times a Certain Patent was Cited in Rejections of Other Patents (This May be an Overall Total, Total Number of Several Years, or Average in Several Years) |
| | Number of Requests for Inspection/Delivery | Number of Requests for File Wrapper of a Certain Patent (This May be an Overall Total, Total Number of Several Years, or Average in Several Years) |
| | Number of Appeal Trials Filed | Number of Appeal Trials Filed by a Certain Company [This May be the Number of Cases in a Single Year or Several Years] |

FIG. 9

EP 1 876 506 A1

Intellectual Assets Related Index (3)

| Index Group | Index | Definition (Formula) |
|---|---|---|
| Patent Stock Related | Total Number of Effective Patents | (Patent Granted Stock) − (Patent Invalidation Stock) [This May be of a certain time, or an Average in Several Years] |
| | Total Share of Effective Patents | $\Sigma$ {(Number of Effective Patents of Company by Each International Patent Classification)/(Total Number of Effective Patents by Each International Patent Classification)} [This May be of a certain time, or an Average in Several Years] |
| | Total Patent Granted Renewal Ratio | (Total Number of Effective Patents)/(Patent Granted Stock) [This May be of a certain time, or an Average in Several Years] |
| | Years to Renewal Patent Granted Expiration (Average) | { $\Sigma$ (Scheduled Invalidation Date of Each Patent of the Total Number of Effective Patents − Year End)} / {(Total Number of Effective Patents) × (Annual Number of Days)} |
| | Patent Stock Index | (Total Number of Effective Patents) × (Years to Renewal Patent Granted Expiration (Average)) [This May be of a certain time, or an Average in Several Years] |
| | Total Patent Assets | {(R&D Cost)/(Number of Patents Granted)} × (Total Number of Effective Patents) [R&D Cost May be in a Single Year or Cumulative Total of Several Years] |
| Patent Concentration Index Related | Share of Claims Filed (A to H) | (Number of Claims Filed by Company in One of International Patent Classification Sections A to H)/(Total Number of Claims Filed in the Same International Patent Classification Section) [Number of Claims May be of a Single Year, or a Cumulative Total of Several Years] |
| | Patent Concentration Index | $\Sigma$ [{(Number of Claims Filed by Company by Subclasses in International Patent Classification)/(Total Number of Claims Filed by Company)}$^2$] |
| | Patent Concentration Index (A to H) | Patent Concentration Index by Each of International Patent Classification Sections A to H |
| | Patent Diversification Index (PDI) | {1 − (Patent Concentration Index)} [The Patent Concentration Index May be by a Section or All Sections] |
| | Patent Competitive Position Index (PCPI) | $\Sigma$ [{ $\Sigma$ (Share of Each Company in Each Technical Field)$^2$ } × (Company Share in Each Technical Field)] × (1 + Excess Growth Ratio) [(1 + Excess Growth Ratio) Does Not Have to be Multiplied. The Technical Field is IPC Subclass or the like.] |
| | Average Patent Competitive Position Index (Average PCPI) | (Company PCPI)/(Number of Technical Fields covered by Company's Patent Applications) [This May be of a Single Year, or an Average in Several Years] |
| Patent Profitability Related | Patent Profitability $\alpha$ | {(GOP) + (Patent Royalty Income)} /(Total Number of Effective Patents) [This May be of a Single Year, or an Average in Several Years] |
| | Patent Profitability $\beta$ | {(Excess Value Added) + (Patent Royalty Income)} /(Total Number of Effective Patents) [This May be of a Single Year, or an Average in Several Years] |
| | Patent Profitability $\gamma$ | {(Excess GOP) + (Patent Royalty Income)} /(Total Number of Effective Patents) [This May be of a Single Year, or an Average in Several Years] |
| | Patent Profitability $\delta$ | {(Excess Earnings on Intellectual Assets) + (Patent Royalty Income)} /(Total Number of Effective Patents) [This May be of a Single Year, or an Average in Several Years] |
| Patent Power Related | Patent Desire Index | Degree of Company's Intention to Acquire Patents. Aggregation of Examination Request Ratio (to Patent Application Stock), Patent Granted Ratio (to Examination Requested Stock) and so on Based on Generalized Linear Model (Generalized Linear Model: Analysis of Variance, Factor, Principle Component, Covariance Structure, Multivariance Analysis and so on) |
| | Check Power Against Other Company Index | Degree of Suppressing Rights of Other Companies, and Improving Value of One's Patent. Aggregation of Patent Oppositions (as Defendant), Number of Citations of Other Companies and so on Based on Generalized Linear Model.) (Generalized Linear Model: Analysis of Variance, Factor, Principle Component, Covariance Structure, Multivariance Analysis and so on) |

FIG. 10

SEARCH SCREEN

| Search |
| Return |

Select Name of Industry From the List

Name of Industry

You May Select From Either List

List of Industries (w/Company Name)

List of Industries (Alphabetical Order of Companies)

Select Name of Company From the List

(Name of Company)

Select Display Screen

(Screen Selection)

List of Company Valuation Indexes

Theoretical Stock Price Display

List of Screen Display

67

FIG. 11

FIG. 12

Result of Principle Component Analysis
(Characteristic Vector, Characteristic Value, Contribution Ratio, Cumulative Contribution Ratio)

| Name of Index | Principle Component 1 | Principle Component 2 |
|---|---|---|
| R&D Cost Ratio to Total Assets | 0.1633 | 0.6213 |
| Operating Profit Ratio to Total Assets | 0.6718 | 0.0623 |
| Patent Opposition Ratio (as Defendant) | 0.5328 | 0.1736 |
| Years to Patent Granted | -0.0491 | 0.6342 |
| Patent Diversification Index | -0.4855 | 0.4216 |
| Characteristic Value | 1.49 | 1.23 |
| Contribution Ratio (%) | 29.89 | 24.54 |
| Cumulative Contribution Ratio (%) | 29.89 | 54.44 |

## FIG. 13

Principle Component 1 - Intellectual Assets Concentration Type Company Ranking

| Rank | Company Name | iPB Subclass | Principle Component 1 | 199612 | 199712 | 199812 | 199912 | 200012 | 200112 | 200212 |
|---|---|---|---|---|---|---|---|---|---|---|
| 1 | HEI | Machinery/Shipbuilding | 4.551 | 1820 | 1130 | 1261 | 1999 | 1461 | 1900 | 1749 |
| 2 | SNK | Machinery/Shipbuilding | 4.540 | 3390 | 1910 | 1890 | 7650 | 2950 | 3980 | 2955 |
| 3 | DMC | Automobile/Transportation Equipment | 3.203 | 611 | 365 | 375 | 350 | 530 | 362 | 280 |
| 4 | TOG | Automobile/Transportation Equipment | 2.698 | 803 | 472 | 590 | 5600 | 2415 | 1620 | 2230 |
| 5 | SEP | Chemical | 1.885 | 1180 | 580 | 560 | 540 | 515 | 530 | 309 |
| 6 | HRE | Electrical Machinery | 1.820 | 6710 | 6670 | 7910 | 22910 | 11000 | 8930 | 9060 |
| 7 | FRB | Electrical Machinery | 1.799 | 534 | 218 | 180 | 190 | 280 | 225 | 187 |
| 8 | NDE | Electrical Machinery | 1.771 | 1700 | 2250 | 1880 | 5110 | 3100 | 3030 | 3380 |
| 9 | SYS | Electrical Machinery | 1.483 | 1800 | 1200 | 1350 | 2100 | 2700 | 2435 | 2425 |
| 10 | UNC | Chemical | 1.469 | 2840 | 4620 | 5300 | 5890 | 5800 | 2740 | 4710 |
| 11 | HOS | Electrical Machinery | 1.451 | 820 | 990 | 2030 | 6750 | 4340 | 2225 | 923 |
| 12 | HFI | Automobile/Transportation Equipment | 1.440 | 401 | 160 | 100 | 80 | 59 | 44 | 68 |
| 13 | ELN | Electrical Machinery | 1.423 | 478 | 190 | 350 | 200 | 305 | 270 | 248 |
| 14 | USH | Electrical Machinery | 1.411 | 1260 | 869 | 991 | 1970 | 1865 | 1481 | 1300 |
| 15 | MUC | Automobile/Transportation Equipment | 1.397 | 1370 | 580 | 398 | 740 | 680 | 490 | 481 |
| 16 | SHN | Machinery/Shipbuilding | 1.381 | 2000 | 1840 | 1186 | 3650 | 2545 | 1803 | 1980 |
| 17 | MIR | Electrical Machinery | 1.318 | 3150 | 1450 | 1130 | 1050 | 960 | 878 | 520 |
| 18 | HDM | Automobile/Transportation Equipment | 1.306 | 3310 | 4790 | 3710 | 3800 | 4260 | 5230 | 4390 |
| 19 | NIA | Electrical Machinery | 1.285 | 1310 | 701 | 570 | 1430 | 1000 | 1000 | 790 |
| 20 | THK | Machinery/Shipbuilding | 1.284 | 1590 | 1270 | 1270 | 4130 | 2440 | 1912 | 1307 |
| 21 | SUN | Chemical | 1.279 | 501 | 310 | 384 | 365 | 341 | 300 | 322 |
| 22 | FKD | Electrical Machinery | 1.249 | 2550 | 1330 | 1450 | 1800 | 2190 | 3100 | 1900 |
| 23 | NDK | Electrical Machinery | 1.246 | 1880 | 945 | 1020 | 3000 | 3530 | 2175 | 1152 |
| 24 | JSB | Electrical Machinery | 1.228 | 697 | 305 | 222 | 368 | 325 | 282 | 146 |
| 25 | ROH | Electrical Machinery | 1.200 | 7610 | 13100 | 10340 | 42800 | 21710 | 17290 | 15170 |
| 26 | NCE | Electrical Machinery | 1.192 | 785 | 500 | 416 | 440 | 390 | 363 | 415 |
| 27 | SKK | Chemical | 1.162 | 2330 | 1330 | 1300 | 1830 | 2080 | 2550 | 3250 |
| 28 | DSK | Electrical Machinery | 1.124 | 910 | 382 | 387 | 485 | 596 | 277 | 190 |
| 29 | KAO | Chemical | 1.102 | 1350 | 1880 | 2550 | 2915 | 3320 | 2725 | 2605 |
| 30 | RIK | Machinery/Shipbuilding | 1.060 | 7440 | 7470 | 5600 | 3000 | 1750 | 2750 | 3600 |

Principle Component 2 - Intellectual Assets Diversification Type Company Ranking

| Rank | Company Name | iPB Subclass | Principle Component 2 | 199612 | 199712 | 199812 | 199912 | 200012 | 200112 | 200212 |
|---|---|---|---|---|---|---|---|---|---|---|
| 1 | HDM | Automobile/Transportation Equipment | 3.898 | 3310 | 4790 | 3710 | 3800 | 4260 | 5230 | 4390 |
| 2 | GLO | Machinery/Shipbuilding | 3.523 | 2710 | 1650 | 2000 | 1970 | 2230 | 1996 | 2345 |
| 3 | BRI | Machinery/Shipbuilding | 3.066 | 500 | 298 | 352 | 235 | 216 | 377 | 753 |
| 4 | YAM | Automobile/Transportation Equipment | 2.644 | 1040 | 875 | 729 | 708 | 799 | 797 | 980 |
| 5 | SON | Electrical Machinery | 2.541 | 3795 | 5800 | 4115 | 15150 | 7900 | 5990 | 4960 |
| 6 | RKC | Machinery/Shipbuilding | 2.487 | 7440 | 7470 | 5600 | 3000 | 1750 | 2750 | 3600 |
| 7 | OMR | Electrical Machinery | 2.387 | 2150 | 2000 | 1490 | 2360 | 2405 | 1751 | 1762 |
| 8 | TOT | Electrical Machinery | 2.280 | 439 | 300 | 323 | 302 | 295 | 295 | 265 |
| 9 | CAN | Precision Apparatus | 2.131 | 2560 | 3040 | 2415 | 4060 | 4000 | 4510 | 4470 |
| 10 | NJR | Electrical Machinery | 2.119 | 705 | 460 | 284 | 830 | 700 | 421 | 601 |
| 11 | MIN | Precision Apparatus | 1.958 | 701 | 733 | 557 | 398 | 459 | 164 | 514 |
| 12 | TOS | Electrical Machinery | 1.887 | 728 | 543 | 673 | 780 | 764 | 450 | 372 |
| 13 | FMM | Machinery/Shipbuilding | 1.866 | 3070 | 3150 | 3570 | 8240 | 3060 | 1710 | 1120 |
| 14 | DKI | Machinery/Shipbuilding | 1.862 | 1030 | 492 | 1120 | 1390 | 2200 | 2055 | 1880 |
| 15 | DEN | Automobile/Transportation Equipment | 1.861 | 2790 | 2350 | 2090 | 2440 | 2470 | 1736 | 1947 |
| 16 | HIT | Electrical Machinery | 1.820 | 1080 | 930 | 700 | 1640 | 1018 | 960 | 455 |
| 17 | FJT | Electrical Machinery | 1.815 | 1080 | 1400 | 1505 | 4660 | 1684 | 954 | 339 |
| 18 | TOG | Automobile/Transportation Equipment | 1.761 | 803 | 472 | 590 | 5600 | 2415 | 1620 | 2230 |
| 19 | HIC | Chemical | 1.741 | 970 | 775 | 850 | 1901 | 2680 | 1228 | 1020 |
| 20 | OIC | Machinery/Shipbuilding | 1.647 | 3480 | 3160 | 2535 | 1780 | 1675 | 1595 | 1730 |
| 21 | OLY | Precision Apparatus | 1.623 | 1100 | 901 | 1299 | 1445 | 1975 | 1885 | 1934 |
| 22 | NDE | Electrical Machinery | 1.604 | 1700 | 2250 | 1880 | 5110 | 3100 | 3030 | 3380 |
| 23 | AIS | Automobile/Transportation Equipment | 1.575 | 1840 | 1350 | 1245 | 1404 | 1537 | 1407 | 1632 |
| 24 | RIC | Precision Apparatus | 1.555 | 1330 | 1620 | 1042 | 1926 | 2110 | 2440 | 1947 |
| 25 | KOM | Machinery/Shipbuilding | 1.540 | 950 | 655 | 593 | 470 | 505 | 469 | 387 |
| 26 | KOS | Machinery/Shipbuilding | 1.535 | 960 | 522 | 626 | 881 | 815 | 462 | 527 |
| 27 | FHI | Automobile/Transportation Equipment | 1.448 | 468 | 352 | 565 | 700 | 694 | 562 | 470 |
| 28 | TMW | Machinery/Shipbuilding | 1.445 | 899 | 1040 | 1021 | 625 | 616 | 428 | 471 |
| 29 | CAK | Automobile/Transportation Equipment | 1.442 | 644 | 510 | 349 | 224 | 281 | 330 | 583 |
| 30 | NTN | Machinery/Shipbuilding | 1.417 | 630 | 302 | 364 | 302 | 355 | 212 | 410 |

FIG. 14

EP 1 876 506 A1

FIG. 15

START FACTOR ANALYSIS ─ S100

ACQUIRE INDEX DATA ─ S101

INTERNAL DB ─ 30A

NARROW INDEX DOWN ? ─ S102
YES → CREATE CORRELATION MATRIX AMONG INDEXES ─ S103
NO
NARROW INDEX DOWN ─ S104

CALCULATE FACTOR LOADING ─ S105

FACTOR ROTATION ─ S107

IS INTERPRETATION OF FACTOR DIFFICULT? ─ S106
YES
NO

CALCULATE CHARACTERISTIC VALUE, FACTOR CONTRIBUTION, FACTOR CONTRIBUTION RATIO, CUMULATIVE CONTRIBUTION RATIO, ETC. ─ S108

DETERMINE NUMBER OF FACTORS ─ S109

DETERMINE FACTOR CONTENT ─ S110

END
(TO MULTIPLE REGRESSION ANALYSIS)

FIG. 16

EP 1 876 506 A1

Factor Loading, Characteristic Value, Cumulative Contribution Ratio

| Variable | Factor 1 | Factor 2 | Factor 3 | Factor 4 | Factor 5 | (Factor 6) |
|---|---|---|---|---|---|---|
| Examination Request Ratio (to Patent Application Stock) | 0.863 | -0.063 | -0.039 | 0.035 | 0.087 | 0.0072 |
| Patent Granted Ratio (to Examination Requested Stock) | 0.863 | -0.024 | -0.055 | -0.059 | 0.043 | -0.0540 |
| Years to Renewal Patent Granted Expiration (Average) | 0.837 | -0.159 | 0.027 | 0.050 | -0.145 | 0.0752 |
| Years to Examination Request (Average) | -0.881 | -0.042 | 0.005 | -0.003 | -0.052 | 0.0286 |
| Years to Patent Granted (Average) | -0.895 | 0.053 | 0.050 | 0.045 | 0.046 | -0.0250 |
| Share of Claims Filed G | -0.065 | 0.970 | 0.059 | -0.060 | 0.021 | -0.0455 |
| Share of Claims Filed H | -0.014 | 0.901 | -0.007 | -0.094 | 0.013 | 0.0311 |
| Share of Claims Filed C | -0.075 | 0.890 | 0.056 | -0.162 | 0.043 | 0.1021 |
| Share of Claims Filed B | -0.084 | 0.872 | 0.131 | -0.103 | 0.170 | -0.0535 |
| Labor Productivity | 0.008 | 0.219 | 0.712 | 0.149 | 0.359 | 0.3814 |
| Total Factor Productivity | -0.028 | -0.060 | 0.670 | -0.048 | -0.053 | 0.0456 |
| Labor Distribution Share (To Value Added) | 0.057 | -0.133 | -0.750 | 0.082 | -0.107 | 0.1673 |
| Patent Concentration Index | 0.018 | -0.121 | 0.061 | 0.758 | -0.026 | 0.2646 |
| Patent Concentration Index B | -0.043 | -0.146 | -0.125 | 0.681 | -0.050 | -0.2563 |
| R&D Cost per Inventor ($-1$) | -0.002 | 0.061 | 0.084 | -0.051 | 0.629 | 0.0072 |
| Characteristic Value | 3.790 | 3.449 | 1.577 | 1.130 | 0.608 | 0.3380 |
| Contribution Ratio (%) | 25.265 | 22.992 | 10.513 | 7.536 | 4.055 | 2.2520 |
| Cumulative Contribution Ratio (%) | 25.265 | 48.257 | 58.770 | 66.307 | 70.361 | 72.6130 |

Factor Loading    Postrotary/Varimax Method

FIG. 17

EP 1 876 506 A1

List of Factors

| Factor Number | Factor Name | Significance of Factor |
|---|---|---|
| Factor 1 | Time Management of Patent | This factor shortens the years to examination request and years to registration, improves the examination request ratio (to patent application stock) and patent registration ratio, and prolongs the effective term of patent. In other words, this factor realizes the early grant of patent and maintenance thereof. |
| Factor 2 | Patent/Technology Sharing | This factor shows the number of patent applications and the share/influence viewed from the technical market. The number of patent applications could be considered as the company's position in recent R&D and technical development even though arbitrary applications filed by companies will have some influence. |
| Factor 3 | Productivity | This factor tries to suppress labor costs, and improve labor productivity and technical innovative power. Thus, this factor tries to improve productivity. |
| Factor 4 | Concentration of Patent/Technology | This factor shows the concentration of patents, R&D and technical development. The patent application concentration index reflects the R&D and technical development concentrated in a specific field. Further, this factor also shows the action of trying to acquire concentrated patents and increasing the asset value of patents. |
| Factor 5 | R&D | This factor shows that the R&D investment of the previous year is achieving effects. |

FIG. 18

```
                    ┌─ S111
              ╭─────────────╮
              │START MULTIPLE│
              │  REGRESSION  │                        30A ┐
              │   ANALYSIS   │                          ╭──────╮
              ╰─────────────╯                          │      │
                     │    ┌─ S112                       │      │
              ┌──────▼──────┐                           │      │
              │DETERMINE PROFIT│◄──────────────────────┤      │
              │ ELATED INDEX │                          │      │
              └──────┬──────┘                           │      │
                     │    ┌─ S113                        │      │
              ┌──────▼──────┐                            │      │
              │READ FACTOR DATA│◄─────────────────────┤      │
              └──────┬──────┘                            │      │
                     │    ┌─ S114                        │      │
              ┌──────▼──────┐                            │      │
              │CALCULATE PARTIAL│                        │      │
              │REGRESSION COEFFICIENT│                   │      │
              │AND STANDARD PARTIAL│                     │      │
              │REGRESSION COEFFICIENT│                   │      │
              │ OF EACH FACTOR │                         │      │
              └──────┬──────┘                            │      │
                     │    ┌─ S115                        │INTERNAL│
              ┌──────▼──────┐                            │  DB  │
              │VERIFY SIGNIFICANCE OF│                   │      │
              │   EACH FACTOR │                          │      │
              │(EXPLANATORY VARIABLE)│                   │      │
              └──────┬──────┘                            │      │
                     │    ┌─ S116                        │      │
              ┌──────▼──────┐                            │      │
              │  CALCULATE  │                            │      │
              │CONTRIBUTION RATIO OF│                    │      │
              │  EACH FACTOR │                           │      │
              │(EXPLANATORY VARIABLE)│                   │      │
              └──────┬──────┘                            │      │
                     │    ┌─ S117                        │      │
              ┌──────▼──────┐                            │      │
              │VERIFY ADAPTATION OF│       STORE         │      │
              │MULTIPLE REGRESSION│       FACTOR,        │      │
              │   EQUATION   │            INDEX,         │      │
              └──────┬──────┘         RELATIONSHIP       │      │
                     │    ┌─ S118        DIAGRAM         │      │
     ┌───────────────▼───────────────┐  AND SO ON       │      │
     │CREATE RELATIONSHIP DIAGRAM    │                  │      │
     │BETWEEN PROFIT RELATED INDEX,  │──────────────────►      │
     │SIGNIFICANT FACTOR AND INDEX   │                  │      │
     │(APPEND CONTRIBUTION RATIO     │                  │      │
     │BASED ON FACTOR LOADING AND    │                  │      │
     │STANDARD PARTIAL REGRESSION    │                  ╰──────╯
     │       COEFFICIENT)            │
     └───────────────┬───────────────┘
                     │
              ╭──────▼──────╮
              │     END     │
              ╰─────────────╯
             (TO PRINCIPLE
           COMPONENT ANALYSIS)
```

FIG. 19

Result of Multiple Regression Analysis

Objective Variable    ROA δ

| Explanatory Variable | Partial Regression Coefficient | Standardized Partial Regression Coefficient | t Value | Contribution Ratio |
|---|---|---|---|---|
| Factor 1 (Time Management of Patent) | -0.0007 | -0.0112 | -0.31 | -1.01% |
| Factor 2 (Patent/Technology Sharing) | 0.0007 | 0.0116 | 0.32 | 1.04% |
| Factor 3 (Productivity) | 0.0554 | 0.8274 | ** 22.39 | 74.43% |
| Factor 4 (Concentration of Patent/Technology) | 0.0113 | 0.1623 | ** 4.45 | 14.60% |
| Factor 5 (R&D) | 0.0095 | 0.1215 | ** 3.29 | 10.93% |
| Constant Term | 0.0191 | | ** 8.75 | |

**   ···1% Level    *   ···5% Level

[Accuracy]
Determination Coefficient Flexibility Corrected   R2'= 0.7572

FIG. 20

RELATIONSHIP DIAGRAM OF INDEX AND FACTOR

FIG. 21

Result of Principle Component Analysis

[Characteristic Vector]

| | Principle Component 1 | Principle Component 2 | Principle Component 3 |
|---|---|---|---|
| R&D Cost Ratio to Sales ($-1$) | 0.1291 | 0.5857 | -0.2457 |
| Patent Concentration Index B | 0.2167 | -0.3929 | -0.411 |
| Patent Concentration Index | 0.15 | -0.37 | -0.4506 |
| Labor Productivity | 0.4596 | 0.0367 | 0.1229 |
| Total Factor Productivity | 0.3138 | -0.1803 | 0.466 |
| Labor Distribution Share (To Value Added) | -0.4046 | -0.0576 | -0.2388 |
| ROA $\delta$ | 0.4952 | -0.131 | 0.1465 |
| Characteristic Value | 3.33 | 1.64 | 1.48 |
| Contribution Ratio (%) | 47.57 | 23.43 | 21.14 |
| Cumulative Contribution Ratio (%) | 47.57 | 71.00 | 92.14 |

## FIG. 22

Top 50 Companies of Composite Index Ranking

| Rank | Company Name | Total Score (Indexation) | Rank | Company Name | Total Score (Indexation) |
|---|---|---|---|---|---|
| 1 | SAM | 100.00 | 26 | NAN | 49.33 |
| 2 | YOZ | 62.96 | 27 | RIK | 49.22 |
| 3 | KEY | 59.82 | 28 | SAT | 49.11 |
| 4 | MIY | 58.21 | 29 | FEI | 49.09 |
| 5 | UHT | 57.80 | 30 | NTK | 48.90 |
| 6 | JPD | 56.33 | 31 | NCE | 48.46 |
| 7 | ADT | 55.16 | 32 | MIR | 48.23 |
| 8 | HEI | 54.59 | 33 | NIM | 48.09 |
| 9 | CAN | 54.42 | 34 | NOR | 48.03 |
| 10 | COS | 54.26 | 35 | RIC | 48.02 |
| 11 | TAK | 54.01 | 36 | NKE | 47.68 |
| 12 | MAM | 53.91 | 37 | AIP | 47.63 |
| 13 | FAN | 53.78 | 38 | FJX | 47.46 |
| 14 | PHO | 53.68 | 39 | VER | 47.43 |
| 15 | TOY | 53.52 | 40 | HIM | 47.37 |
| 16 | HRE | 53.50 | 41 | OSE | 47.25 |
| 17 | ARU | 53.47 | 42 | HOY | 46.96 |
| 18 | SCO | 53.41 | 43 | JEM | 46.91 |
| 19 | HDM | 53.37 | 44 | OLY | 46.79 |
| 20 | SYS | 53.08 | 45 | ODE | 46.64 |
| 21 | HKS | 53.05 | 46 | HEE | 46.47 |
| 22 | MEG | 52.53 | 47 | TOA | 46.46 |
| 23 | FJF | 51.79 | 48 | MIU | 46.37 |
| 24 | TER | 50.93 | 49 | ALO | 46.24 |
| 25 | OPT | 49.73 | 50 | HMP | 46.09 |

(Note) The total score is modified into a deviation then made into an indexation upon making the highest value 100.

FIG. 23

```
                    ┌─────────────────┐
                    │      START      │
                    └─────────────────┘
                             │
                             ▼
                        ╱───────╲  ╱ S191
                      ╱  CAUSAL   ╲        NO
                    ╱    MODEL      ╲────────────┐
                    ╲  INFORMATION  ╱            │
                      ╲   INPUT ?  ╱             │
                        ╲───────╱                │
                         YES│                    │
                            │  ╱ S192            │
                    ┌───────▼────────┐           │
                    │    GENERATE    │           │
                    │ VARIOUS VECTORS│           │
                    └───────┬────────┘           │
                            │  ╱ S193            │
                    ┌───────▼────────┐           │
                    │    ESTIMATE    │           │
                    │ POPULATION     │           │
                    │ PARAMETERS     │           │
                    └───────┬────────┘           │
                            │                    │
                         ╱─────╲  ╱ S194         │
                       ╱POPULATION╲      NO       │
                      ╱ PARAMETERS ╲─────────────┤
                      ╲ ESTIMATED ?╱             │
                        ╲────────╱               │
                          YES│                   │
                             │  ╱ S195           │
                         ╱─────╲                 │
                       ╱ADAPTATION╲      NO        │
                      ╱    AND      ╲─────────────┘
                      ╲ SIGNIFICANCE╱
                       ╲ VERIFIED ?╱
                         ╲───────╱
                          YES│
                             │  ╱ S196
                    ┌────────▼─────────┐
                    │ CALCULATE AND    │
                    │ OUTPUT           │
                    │ EVALUATED VALUE  │
                    └────────┬─────────┘
                             ▼
                    ┌─────────────────┐
                    │       END       │
                    └─────────────────┘
```

FIG. 24

FIG. 25

chi=366. 906
df=70
p=. 000
RMSEA=. 094
GFI=. 907
AGFI=. 861

FIG. 26

|  | Total factor productivity | Average patent competitive position index | Patent diversification index | Patent application productivity | R&D cost ratio $\alpha$ |
|---|---|---|---|---|---|
| management | 0.0055 | 0.0008 | 0.0002 | -0.0215 | 0.0233 |
| R&D | 0.0042 | 0.0043 | 0.0012 | -0.2228 | 0.2351 |
| patent1 | 0.0055 | 0.0514 | 0.0140 | 0.0626 | 0.0169 |
| black | 0.0455 | 0.0079 | 0.0022 | -0.0108 | 0.0236 |

|  | Operating profit to sales ratio | MVA | Cost to sales ratio | R&D cost per inventor | Number of claims per inventor |
|---|---|---|---|---|---|
| management | 0.6015 | 0.0394 | -0.2579 | 0.0210 | 0.0120 |
| R&D | 0.0410 | 0.0302 | -0.0176 | 0.2117 | 0.0648 |
| patent1 | 0.0055 | 0.0401 | -0.0024 | 0.0152 | 0.7769 |
| black | 0.0540 | 0.3285 | -0.0232 | 0.0212 | 0.1199 |

|  | Number of claims per application | Facility investment efficiency | Equity to asset ratio | PBR |  |
|---|---|---|---|---|---|
| management | 0.0022 | 0.0717 | 0.1236 | 0.0325 |  |
| R&D | 0.0119 | 0.0049 | 0.0084 | 0.0249 |  |
| patent1 | 0.1425 | 0.0007 | 0.0011 | 0.0330 |  |
| black | 0.0220 | 0.0064 | 0.0111 | 0.2704 |  |

FIG. 27

Intellectual Property Strategic Company
Intellectual Property Strategic Management Company Ranking
and List of Company Score by Factor

| Rank | Company Name | Management | R&D | Patent |
|---|---|---|---|---|
| 1 | SHC | 63 | 67 | 61 |
| 2 | SON | 46 | 87 | 82 |
| 3 | TOY | 71 | 86 | 64 |
| 4 | TAP | 67 | 63 | 88 |
| 5 | KAO | 71 | 75 | 52 |
| 6 | CAN | 62 | 95 | 78 |
| 7 | KEY | 100 | 69 | 67 |
| 8 | HDM | 64 | 100 | 49 |
| 9 | ROH | 59 | 67 | 55 |
| 10 | TOE | 66 | 76 | 72 |
| 11 | ADV | 44 | 56 | 67 |
| 12 | NIM | 43 | 80 | 66 |
| 13 | MUM | 53 | 57 | 55 |
| 14 | SUC | 46 | 60 | 65 |
| 15 | UNC | 59 | 56 | 72 |
| 16 | HOY | 62 | 60 | 52 |
| 17 | FNE | 53 | 65 | 57 |
| 18 | NID | 67 | 66 | 100 |
| 19 | JSR | 48 | 52 | 56 |
| 20 | CIE | 77 | 67 | 51 |

FIG. 28

Intellectual Property Strategic Company
Company Ranking of Each External Valuation Index

| Rank | MVA | PBR | Total Factor Productivity |
|---|---|---|---|
| 1 | SON | NOK | ADV |
| 2 | SHC | CIE | MOJ |
| 3 | TOY | NID | JSR |
| 4 | KAO | FNE | MBM |
| 5 | TAP | SHC | OMR |
| 6 | CAN | HOY | SHI |
| 7 | ROH | KAO | NIN |
| 8 | MUM | ARM | UNI |
| 9 | HDM | TOE | ASK |
| 10 | HIT | KEN | NDM |
| 11 | SUC | UNC | TIM |
| 12 | TOE | HDM | ISM |
| 13 | NIM | JSR | SEC |
| 14 | SHA | KEY | NSB |
| 15 | FAN | YAS | PEN |
| 16 | KEY | SUC | KIS |
| 17 | TOS | TAP | HIN |
| 18 | MBC | HIC | TRM |
| 19 | MBE | TDK | FUJ |
| 20 | RIC | ADV | ZEO |

FIG. 29

EP 1 876 506 A1

Intellectual Property Strategic Company

Company Ranking of "Management" Factor and Company Ranking of Each "Management" Factor Constituent Index

| | Company Ranking of "Management" Factor | Facility investment efficiency | Equity to Asset Ratio | Cost-to-Sales Ratio (Ascending Order) | Operating Profit Ratio (To Sales) |
|---|---|---|---|---|---|
| 1 | SHC | MEG | SHI | KEY | KEY |
| 2 | SON | NGK | NKC | JDL | FAN |
| 3 | TOY | MYS | NCS | NOE | COS |
| 4 | TAP | TAP | MAM | SUN | TOY |
| 5 | KAO | HCI | NGK | HDM | NAN |
| 6 | CAN | CEM | FJF | KAO | TER |
| 7 | KEY | OMR | FAN | MAN | USH |
| 8 | HDM | UNC | KEY | SYS | JDL |
| 9 | ROH | SWC | GEC | SIS | MAI |
| 10 | TOE | KEY | MAN | TOA | ONP |
| 11 | ADV | NEI | JDL | LIO | HIE |
| 12 | NIM | TOP | FTC | MIY | HOY |
| 13 | MUM | ISC | ENP | TER | KAO |
| 14 | SUC | FUE | NIC | MOR | TAP |
| 15 | UNC | NIK | TIM | ONP | MAN |
| 16 | HOY | AIK | GOC | HMP | NIM |
| 17 | FNE | RIC | MAR | NAN | NIK |
| 18 | NID | FUM | HRE | SHI | THC |
| 19 | JSR | KOM | ICI | DIC | ARM |
| 20 | CIE | TOY | ICO | FAN | SHI |

FIG. 30

Intellectual Property Strategic Company

Company Ranking of "R&D" Factor and Company Ranking of Each "R&D" Factor Constituent Index

| | Company Ranking of "R&D" Factor | R&D Cost per Inventor | R&D Cost Ratio $\alpha$ | Patent Application Productivity |
|---|---|---|---|---|
| 1 | SHC | ICI | ADV | TIE |
| 2 | SON | FUE | HDM | MTC |
| 3 | TOY | TES | SEP | DNP |
| 4 | TAP | FCJ | HAP | RIE |
| 5 | KAO | MAM | DEN | HOP |
| 6 | CAN | UNI | SON | SEC |
| 7 | KEY | NCC | HEE | CLA |
| 8 | HDM | ISM | NIN | ZOC |
| 9 | ROH | TOY | NSH | KEN |
| 10 | TOE | ONP | CAN | KEW |
| 11 | ADV | OMR | ICI | TKO |
| 12 | NIM | NAT | FJK | NIF |
| 13 | MJM | ISS | HIK | KYP |
| 14 | SUC | VES | NKY | SHD |
| 15 | UNC | TPI | NGK | ROP |
| 16 | HOY | FUP | TOK | NIY |
| 17 | FUE | NIS | ALO | TRM |
| 18 | NID | JDR | SYS | MAR |
| 19 | JSR | KEI | NAT | SUB |
| 20 | CIE | FAN | ISM | SCE |

Intellectual Property Strategic Company

Company Ranking of "Patent" Factor and Company Ranking of Each "Patent" Factor Constituent Index

| | Company Ranking of "Patent" Factor | Number of Claims per Application | Number of Claims per Inventor (Patent Application) | Patent Diversification Index | Average Patent Competitive Position Index | Patent Desire Index | Check Power Against Other Company Index | Total Share of Effective Patents |
|---|---|---|---|---|---|---|---|---|
| 1 | SHC | SHD | SHI | FUP | SHI | YAE | DIA | NEC |
| 2 | SON | CHE | TAP | SIO | HIK | NEC | NIT | MBE |
| 3 | TOY | TAP | SON | HDM | ARM | FJA | YAE | HIT |
| 4 | TAP | SON | MEG | MAE | TOC | DIE | FJA | HOR |
| 5 | KAO | NEC | DCI | MEI | KAO | KOD | NEI | NIE |
| 6 | CAN | CAN | SHD | AIS | TOS | MBM | NKD | SON |
| 7 | KEY | NEO | CAN | DEN | MAE | NIT | EBD | YAE |
| 8 | HDM | TOE | IBI | SUZ | ZOC | NKD | CLA | CLA |
| 9 | ROH | SHI | FJG | YAM | SUB | NEI | STE | YOE |
| 10 | TOE | UNI | CAC | OMR | OVC | YOE | NJR | NIT |
| 11 | ADV | JDL | UNC | MAE | HIT | EBD | KOD | KOD |
| 12 | NIM | NKD | NEC | SIT | NKY | STE | DIE | STE |
| 13 | MUM | NIM | SUB | FJF | SAN | NIE | NIE | NJR |
| 14 | SUC | MAZ | NIY | MBE | MBE | NET | YOE | DIA |
| 15 | UNC | ADV | NKY | FHI | KAN | MAE | HOR | FJG |
| 16 | HOY | NIG | NIM | SAN | NSR | HOR | FJG | NET |
| 17 | FNE | MAC | KAN | DAI | KEY | HIT | NET | MBM |
| 18 | NID | MEG | NEO | KOP | DNP | DIA | NEC | EBD |
| 19 | JSR | PIO | MBC | KIP | SHC | FJG | HIT | NEI |
| 20 | CIE | DCI | RIC | KEY | CHC | CLA | SON | FJA |

FIG. 31

FIG. 32A

EXAMPLE OF PORTFOLIO ANALYSIS BY iPC SUBGROUP OF 4 LEADING COMPANIES IN ELECTRICITY INDUSTRY

Company SON ▲  Company NEC ◆  Company HIT ○  Company MAE ✕

[PATENT DESIRE] LOW ↔ HIGH

[TOTAL VALID PATENT SHARE] HIGH ↔ LOW

FIG. 32B

PATENT DESIRE – TOTAL VALID PATENT SHARE:
COMPANY RANKING (EXAMPLE)

| RANK | COMPANY NAME |
|------|--------------|
| 1 | NEC |
| 2 | DID |
| 3 | FJA |
| 4 | KOD |
| 5 | JPD |
| 6 | MBM |
| 7 | NIT |
| 8 | YOE |
| 9 | NKD |
| 10 | MAE |

FIG. 33A

EXAMPLE OF PORTFOLIO ANALYSIS BY IPC SUBGROUP OF
4 LEADING COMPANIES IN ELECTRICITY INDUSTRY

[CHECK POWER AGAINST OTHER COMPANY] LOW ↔ HIGH

[TOTAL VALID PATENT SHARE] HIGH ↔ LOW

FIG. 33B

CHECK POWER AGAINST OTHER COMPANY –
TOTAL VALID PATENT SHARE:
COMPANY RANKING (EXAMPLE)

| RANK | COMPANY NAME |
|------|--------------|
| 1 | DIA |
| 2 | NIT |
| 3 | DID |
| 4 | FJA |
| 5 | NEI |
| 6 | EBD |
| 7 | NKD |
| 8 | CLA |
| 9 | STE |
| 10 | NJR |

FIG. 34

chi=349. 153
df=73
p=. 000
RMSEA=. 098
GFI=. 881
AGFI=. 829

FIG. 35

```
         ┌─────────────────────┐
         │        START        │
         └─────────────────────┘
                    │    ┌─ S301
                    ▼
         ┌─────────────────────┐
         │ COVARIANCE STRUCTURE │
         │      ANALYSIS        │
         └─────────────────────┘
                    │    ┌─ S303
                    ▼
         ┌─────────────────────┐
         │ CALCULATE FACTOR SCORES │
         └─────────────────────┘
                    │    ┌─ S305
                    ▼
         ┌─────────────────────┐
         │  EXTRACT OVERVALUED/ │
         │ UNDERVALUED COMPANIES│
         └─────────────────────┘
                    │    ┌─ S307
                    ▼
         ┌─────────────────────┐
         │ SELECT PRIMARY STOCK-│
         │    FOR-PORTFOLIO     │
         │     CANDIDATES       │
         └─────────────────────┘
                    │    ┌─ S309
                    ▼
         ┌─────────────────────┐
         │  CALCULATE COMPANY   │
         │ PATENT VALUATION INDEX│
         └─────────────────────┘
                    │    ┌─ S311
                    ▼
         ┌─────────────────────┐
         │SELECT SECONDARY STOCK-│
         │    FOR-PORTFOLIO     │
         │     CANDIDATES       │
         └─────────────────────┘
                    │    ┌─ S313
                    ▼
         ┌─────────────────────┐
         │ SELECT INVESTMENT RATIO│
         └─────────────────────┘
                    │    ┌─ S315
                    ▼
         ┌─────────────────────┐
         │   CREATE PORTFOLIO   │
         └─────────────────────┘
                    │    ┌─ S317
                    ▼
         ┌─────────────────────┐
         │ COMPUTE AND OUTPUT   │
         │ PORTFOLIO TRANSITION │
         └─────────────────────┘
                    │
                    ▼
         ┌─────────────────────┐
         │         END         │
         └─────────────────────┘
```

FIG. 36

PRIMARY STOCK-FOR-PORTFOLIO SELECTION CANDIDATES (UNDERVALUED COMPANIES)

| Evaluation ranking | Undervalued company extraction criteria | Name of industry | Name of company | ("Patent strategy" factor score) - ("Intellectual property strategy management" factor score) |
|---|---|---|---|---|
| 1 | Undervalued 1 | Chemical | DCI | 2.8037 |
| 2 | Undervalued 1 | Chemical | MAC | 2.7812 |
| 3 | Undervalued 1 | Automobile/Transportation Equipment | EXE | 2.6202 |
| 4 | Undervalued 12 | Chemical | CMP | 2.3540 |
| 5 | Undervalued 12 | Automobile/Transportation Equipment | TFS | 2.3496 |
| 6 | Undervalued 1 | Electrical Machinery | CAC | 2.1887 |
| 7 | Undervalued 1 | Electrical Machinery | IBI | 2.1157 |
| 8 | Undervalued 12 | Precision Apparatus | PEN | 2.0916 |
| 9 | Undervalued 1 | Pharmaceutical | SNK | 2.0657 |
| 10 | Undervalued 1 | Automobile/Transportation Equipment | MAZ | 2.0050 |
| 11 | Undervalued 1 | Chemical | KAN | 1.9565 |
| 12 | Undervalued 1 | Precision Apparatus | CAN | 1.8581 |
| 13 | Undervalued 1 | Automobile/Transportation Equipment | NIY | 1.7619 |
| 14 | Undervalued 12 | Electrical Machinery | HIM | 1.6915 |
| 15 | Undervalued 12 | Electrical Machinery | NOB | 1.6134 |
| 16 | Undervalued 12 | Pharmaceutical | NKC | 1.5986 |
| 17 | Undervalued 1 | Chemical | NKY | 1.5741 |
| 18 | Undervalued 1 | Electrical Machinery | UNI | 1.5300 |
| 19 | Undervalued 1 | Electrical Machinery | ENP | 1.4880 |
| 20 | Undervalued 2 | Chemical | NGC | 1.4710 |
| 21 | Undervalued 2 | Chemical | STC | 1.3580 |
| 22 | Undervalued 2 | Electrical Machinery | HOC | 1.3320 |
| 23 | Undervalued 2 | Chemical | SEK | 1.2319 |
| 24 | Undervalued 2 | Chemical | TIK | 1.2249 |
| 25 | Undervalued 2 | Electrical Machinery | MDE | 1.1711 |
| 26 | Undervalued 2 | Chemical | KYL | 1.1500 |
| 27 | Undervalued 2 | Electrical Machinery | SUK | 1.0760 |
| 28 | Undervalued 2 | Precision Apparatus | CAE | 1.0570 |
| 29 | Undervalued 2 | Chemical | FUM | 1.0129 |
| 30 | Undervalued 2 | Chemical | SHO | 0.9490 |
| 31 | Undervalued 2 | Chemical | TIN | 0.8660 |
| 32 | Undervalued 2 | Chemical | MIJ | 0.8620 |
| 33 | Undervalued 2 | Electrical Machinery | SKE | 0.7969 |
| 34 | Undervalued 2 | Electrical Machinery | NCH | 0.7851 |
| 35 | Undervalued 2 | Electrical Machinery | CRA | 0.7310 |
| 36 | Undervalued 2 | Electrical Machinery | NVI | 0.6528 |
| 37 | Undervalued 2 | Chemical | SJU | 0.6380 |
| 38 | Undervalued 2 | Automobile/Transportation Equipment | ICH | 0.6300 |
| 39 | Undervalued 2 | Automobile/Transportation Equipment | SMI | 0.6276 |
| 40 | Undervalued 2 | Chemical | TOU | 0.5526 |
| 41 | Undervalued 2 | Electrical Machinery | TTE | 0.5416 |
| 42 | Undervalued 2 | Pharmaceutical | SEI | 0.5260 |
| 43 | Undervalued 2 | Pharmaceutical | NSI | 0.5190 |
| 44 | Undervalued 2 | Chemical | DAI | 0.4602 |
| 45 | Undervalued 2 | Electrical Machinery | MIN | 0.4440 |
| 46 | Undervalued 2 | Electrical Machinery | ALP | 0.4315 |
| 47 | Undervalued 2 | Electrical Machinery | NSG | 0.3498 |
| 48 | Undervalued 2 | Automobile/Transportation Equipment | JAM | 0.3280 |
| 49 | Undervalued 2 | Chemical | KKC | 0.3260 |
| 50 | Undervalued 2 | Electrical Machinery | ORI | 0.3020 |
| 51 | Undervalued 2 | Chemical | TSP | 0.2840 |
| 52 | Undervalued 2 | Precision Apparatus | CIW | 0.2640 |
| 53 | Undervalued 2 | Chemical | KUR | 0.2580 |
| 54 | Undervalued 2 | Chemical | NCA | 0.2370 |
| 55 | Undervalued 2 | Chemical | SKA | 0.2310 |
| 56 | Undervalued 2 | Electrical Machinery | NKD | 0.2258 |
| 57 | Undervalued 2 | Pharmaceutical | FRE | 0.2030 |
| 58 | Undervalued 2 | Chemical | DKS | 0.1980 |
| 59 | Undervalued 2 | Chemical | KAP | 0.1754 |
| 60 | Undervalued 2 | Electrical Machinery | DAS | 0.1590 |
| 61 | Undervalued 2 | Electrical Machinery | FEL | 0.1267 |
| 62 | Undervalued 2 | Automobile/Transportation Equipment | TYR | 0.1080 |
| 63 | Undervalued 2 | Chemical | KUM | 0.0694 |
| 64 | Undervalued 2 | Electrical Machinery | SHM | 0.0450 |
| 65 | Undervalued 2 | Chemical | SUN | 0.0336 |
| 66 | Undervalued 2 | Chemical | SSE | -0.0420 |
| 67 | Undervalued 2 | Chemical | NCK | -0.0450 |
| 68 | Undervalued 2 | Electrical Machinery | FJA | -0.1100 |

FIG. 37

PRIMARY STOCK-FOR-PORTFOLIO SELECTION CANDIDATES (OVERVALUED COMPANIES)

| Evaluation ranking | Overvalued company extraction criteria | Name of industry | Name of company | ("Patent strategy" factor score) – ("Intellectual property strategy management" factor score) |
|---|---|---|---|---|
| 1 | Overvalued 2 | Chemical | NIF | 0.615 |
| 2 | Overvalued 2 | Electrical Machinery | SHE | 0.315 |
| 3 | Overvalued 2 | Automobile/Transportation Equipment | NCS | 0.228 |
| 4 | Overvalued 2 | Electrical Machinery | SKO | -0.037 |
| 5 | Overvalued 2 | Chemical | THO | -0.160 |
| 6 | Overvalued 2 | Pharmaceutical | SAT | -0.260 |
| 7 | Overvalued 2 | Chemical | ADE | -0.334 |
| 8 | Overvalued 2 | Precision Apparatus | OLI | -0.413 |
| 9 | Overvalued 2 | Automobile/Transportation Equipment | KHI | -0.414 |
| 10 | Overvalued 2 | Pharmaceutical | HIS | -0.419 |
| 11 | Overvalued 2 | Precision Apparatus | NDC | -0.439 |
| 12 | Overvalued 2 | Pharmaceutical | TAI | -0.483 |
| 13 | Overvalued 2 | Automobile/Transportation Equipment | ISH | -0.534 |
| 14 | Overvalued 2 | Automobile/Transportation Equipment | TBO | -0.684 |
| 15 | Overvalued 2 | Chemical | KAN | -0.737 |
| 16 | Overvalued 2 | Automobile/Transportation Equipment | NDM | -0.774 |
| 17 | Overvalued 2 | Automobile/Transportation Equipment | TOG | -0.939 |
| 18 | Overvalued 2 | Automobile/Transportation Equipment | NDT | -0.959 |
| 19 | Overvalued 2 | Electrical Machinery | YAS | -0.984 |
| 20 | Overvalued 2 | Chemical | NKC | -0.996 |
| 21 | Overvalued 2 | Electrical Machinery | USH | -1.021 |
| 22 | Overvalued 2 | Pharmaceutical | MOJ | -1.040 |
| 23 | Overvalued 2 | Electrical Machinery | FAN | -1.059 |
| 24 | Overvalued 2 | Precision Apparatus | TKS | -1.059 |
| 25 | Overvalued 1 | Electrical Machinery | GRA | -1.084 |
| 26 | Overvalued 1 | Electrical Machinery | DSH | -1.088 |
| 27 | Overvalued 1 | Chemical | SKC | -1.212 |
| 28 | Overvalued 1 2 | Pharmaceutical | FUJ | -1.225 |
| 29 | Overvalued 1 | Electrical Machinery | NCE | -1.242 |
| 30 | Overvalued 1 2 | Chemical | MAN | -1.254 |
| 31 | Overvalued 1 2 | Chemical | FJK | -1.258 |
| 32 | Overvalued 1 2 | Chemical | KDK | -1.276 |
| 33 | Overvalued 1 2 | Precision Apparatus | ISC | -1.291 |
| 34 | Overvalued 1 | Chemical | AIK | -1.320 |
| 35 | Overvalued 1 | Automobile/Transportation Equipment | MJK | -1.323 |
| 36 | Overvalued 1 | Electrical Machinery | ROH | -1.375 |
| 37 | Overvalued 1 | Electrical Machinery | MUR | -1.391 |
| 38 | Overvalued 1 2 | Electrical Machinery | MAB | -1.445 |
| 39 | Overvalued 1 2 | Pharmaceutical | YAM | -1.604 |
| 40 | Overvalued 1 | Chemical | SKK | -2.150 |
| 41 | Overvalued 1 | Chemical | KAO | -2.469 |
| 42 | Overvalued 1 | Automobile/Transportation Equipment | HON | -3.335 |

## FIG. 38

SECONDARY STOCK-FOR-PORTFOLIO SELECTION CANDIDATES (UNDERVALUED COMPANIES)

| Evaluation ranking | Undervalued company extraction criteria | Name of industry | Name of company | ("Patent strategy" factor score) - ("Intellectual property strategy management" factor score) | Company patent valuation index |
|---|---|---|---|---|---|
| 1 | Undervalued 1 | Chemical | DCI | 2.804 | 12.684 |
| 2 | Undervalued 1 | Chemical | MAC | 2.781 | 8.067 |
| 3 | Undervalued 1 | Automobile/Transportation Equipment | EXE | 2.620 | 15.442 |
| 4 | Undervalued 12 | Chemical | CMP | 2.354 | 5.028 |
| 5 | Undervalued 12 | Automobile/Transportation Equipment | TFS | 2.350 | 11.063 |
| 6 | Undervalued 1 | Electrical Machinery | CAC | 2.189 | 6.564 |
| 7 | Undervalued 1 | Electrical Machinery | IBI | 2.116 | 13.118 |
| 8 | Undervalued 12 | Precision Apparatus | PEN | 2.092 | 9.581 |
| 9 | Undervalued 1 | Pharmaceutical | SNK | 2.066 | 11.549 |
| 10 | Undervalued 1 | Chemical | KAN | 1.956 | 17.556 |
| 11 | Undervalued 1 | Precision Apparatus | CAN | 1.858 | 28.830 |
| 12 | Undervalued 1 | Automobile/Transportation Equipment | NIY | 1.762 | 48.968 |
| 13 | Undervalued 12 | Electrical Machinery | HIM | 1.691 | 6.046 |
| 14 | Undervalued 12 | Electrical Machinery | NOB | 1.613 | 55.437 |
| 15 | Undervalued 12 | Pharmaceutical | NKC | 1.599 | 5.540 |
| 16 | Undervalued 1 | Chemical | NKY | 1.574 | 9.161 |
| 17 | Undervalued 2 | Electrical Machinery | HOC | 1.332 | 20.882 |
| 18 | Undervalued 2 | Chemical | SEK | 1.232 | 14.916 |
| 19 | Undervalued 2 | Chemical | TIK | 1.225 | 5.215 |
| 20 | Undervalued 2 | Electrical Machinery | MDE | 1.171 | 5.442 |
| 21 | Undervalued 2 | Chemical | FUM | 1.013 | 19.001 |
| 22 | Undervalued 2 | Electrical Machinery | SKE | 0.797 | 10.141 |
| 23 | Undervalued 2 | Electrical Machinery | NCH | 0.785 | 52.727 |
| 24 | Undervalued 2 | Electrical Machinery | NVI | 0.653 | 16.824 |
| 25 | Undervalued 2 | Chemical | SJU | 0.638 | 95.264 |
| 26 | Undervalued 2 | Automobile/Transportation Equipment | ICH | 0.630 | 24.959 |
| 27 | Undervalued 2 | Automobile/Transportation Equipment | SMI | 0.628 | 5.378 |
| 28 | Undervalued 2 | Chemical | TOU | 0.553 | 8.140 |
| 29 | Undervalued 2 | Electrical Machinery | TTE | 0.542 | 41.715 |
| 30 | Undervalued 2 | Chemical | DAI | 0.460 | 5.212 |
| 31 | Undervalued 2 | Electrical Machinery | ALP | 0.432 | 8.930 |
| 32 | Undervalued 2 | Electrical Machinery | NSG | 0.350 | 24.866 |
| 33 | Undervalued 2 | Precision Apparatus | CIW | 0.264 | 11.944 |
| 34 | Undervalued 2 | Electrical Machinery | NKD | 0.226 | 6.223 |
| 35 | Undervalued 2 | Chemical | KAP | 0.175 | 41.661 |
| 36 | Undervalued 2 | Electrical Machinery | FEL | 0.127 | 5.096 |
| 37 | Undervalued 2 | Automobile/Transportation Equipment | TYR | 0.108 | 23.938 |
| 38 | Undervalued 2 | Chemical | KUM | 0.069 | 5.026 |
| 39 | Undervalued 2 | Chemical | SUN | 0.034 | 6.894 |
| 40 | Undervalued 2 | Electrical Machinery | MUT | -0.329 | 11.093 |

EXCLUDED COMPANIES

| | | | | | |
|---|---|---|---|---|---|
| Excluded | Undervalued 1 | Automobile/Transportation Equipment | MAZ | 2.005 | 1.868 |
| Excluded | Undervalued 1 | Electrical Machinery | UNI | 1.530 | 0.219 |
| Excluded | Undervalued 1 | Electrical Machinery | ENP | 1.488 | 2.398 |
| Excluded | Undervalued 2 | Chemical | NGC | 1.471 | 1.816 |
| Excluded | Undervalued 2 | Chemical | STC | 1.358 | 3.795 |
| Excluded | Undervalued 2 | Chemical | KYL | 1.150 | 0.456 |
| Excluded | Undervalued 2 | Electrical Machinery | SUK | 1.076 | 0.252 |
| Excluded | Undervalued 2 | Precision Apparatus | CAE | 1.057 | 1.168 |
| Excluded | Undervalued 2 | Chemical | SHO | 0.949 | 2.035 |
| Excluded | Undervalued 2 | Chemical | TIN | 0.866 | 3.927 |
| Excluded | Undervalued 2 | Chemical | MIJ | 0.862 | 2.523 |
| Excluded | Undervalued 2 | Electrical Machinery | CRA | 0.731 | 4.324 |
| Excluded | Undervalued 2 | Pharmaceutical | SEI | 0.526 | 4.733 |
| Excluded | Undervalued 2 | Pharmaceutical | NSI | 0.519 | 0.901 |
| Excluded | Undervalued 2 | Electrical Machinery | MIN | 0.444 | 3.328 |
| Excluded | Undervalued 2 | Automobile/Transportation Equipment | JAM | 0.328 | 0.166 |
| Excluded | Undervalued 2 | Chemical | KKC | 0.326 | 0.672 |
| Excluded | Undervalued 2 | Electrical Machinery | ORI | 0.302 | 0.846 |
| Excluded | Undervalued 2 | Chemical | TSP | 0.284 | 0.602 |
| Excluded | Undervalued 2 | Chemical | KUR | 0.258 | 0.575 |
| Excluded | Undervalued 2 | Chemical | NCA | 0.237 | 0.717 |
| Excluded | Undervalued 2 | Chemical | SKA | 0.231 | 1.457 |
| Excluded | Undervalued 2 | Pharmaceutical | FRE | 0.203 | 2.130 |
| Excluded | Undervalued 2 | Chemical | DKS | 0.198 | 3.045 |
| Excluded | Undervalued 2 | Electrical Machinery | DAS | 0.159 | 3.500 |
| Excluded | Undervalued 2 | Electrical Machinery | SHM | 0.045 | 4.437 |

## FIG. 39

SECONDARY STOCK-FOR-PORTFOLIO SELECTION CANDIDATES (OVERVALUED COMPANIES)

| Evalua-tion ranking | Overvalued company extraction criteria | Name of industry | Name of company | ("Patent strategy" factor score) − ("Intellectual property strategy management" factor score) | Company patent valuation index |
|---|---|---|---|---|---|
| 1 | Overvalued 2 | Automobile/Transportation Equipment | NCS | 0.228 | 2.916 |
| 2 | Overvalued 2 | Chemical | THO | −0.160 | 0.673 |
| 3 | Overvalued 2 | Pharmaceutical | SAT | −0.260 | 2.066 |
| 4 | Overvalued 2 | Precision Apparatus | NDC | −0.439 | 3.771 |
| 5 | Overvalued 2 | Automobile/Transportation Equipment | ISH | −0.534 | 3.273 |
| 6 | Overvalued 2 | Automobile/Transportation Equipment | TBO | −0.684 | 2.042 |
| 7 | Overvalued 2 | Automobile/Transportation Equipment | NDM | −0.774 | 2.958 |
| 8 | Overvalued 2 | Automobile/Transportation Equipment | NDT | −0.959 | 2.252 |
| 9 | Overvalued 2 | Chemical | NKC | −0.996 | 1.345 |
| 10 | Overvalued 2 | Pharmaceutical | MOJ | −1.040 | 1.170 |
| 11 | Overvalued 2 | Electrical Machinery | FAN | −1.059 | 4.137 |
| 12 | Overvalued 1 | Chemical | SKC | −1.212 | 3.756 |
| 13 | Overvalued 12 | Pharmaceutical | FUJ | −1.225 | 3.595 |
| 14 | Overvalued 1 | Electrical Machinery | NCE | −1.242 | 0.888 |
| 15 | Overvalued 12 | Chemical | FJK | −1.258 | 0.594 |
| 16 | Overvalued 12 | Chemical | KDK | −1.276 | 1.803 |
| 17 | Overvalued 1 | Chemical | AIK | −1.320 | 1.612 |
| 18 | Overvalued 1 | Automobile/Transportation Equipment | MJK | −1.323 | 1.763 |
| 19 | Overvalued 1 | Electrical Machinery | ROH | −1.375 | 3.819 |

Excluded Companies

| | | | | | |
|---|---|---|---|---|---|
| Excluded | Overvalued 2 | Chemical | NIF | 0.615 | 5.789 |
| Excluded | Overvalued 2 | Electrical Machinery | SHE | 0.315 | 5.713 |
| Excluded | Overvalued 2 | Electrical Machinery | SKO | −0.037 | 15.606 |
| Excluded | Overvalued 2 | Chemical | ADE | −0.334 | 7.358 |
| Excluded | Overvalued 2 | Precision Apparatus | OLI | −0.413 | 17.376 |
| Excluded | Overvalued 2 | Automobile/Transportation Equipment | KHI | −0.414 | 7.606 |
| Excluded | Overvalued 2 | Pharmaceutical | HIS | −0.419 | 8.600 |
| Excluded | Overvalued 2 | Pharmaceutical | TAI | −0.483 | 12.327 |
| Excluded | Overvalued 2 | Chemical | KAN | −0.737 | 5.831 |
| Excluded | Overvalued 2 | Automobile/Transportation Equipment | TOG | −0.939 | 6.393 |
| Excluded | Overvalued 2 | Electrical Machinery | YAS | −0.984 | 6.157 |
| Excluded | Overvalued 2 | Electrical Machinery | USH | −1.021 | 5.458 |
| Excluded | Overvalued 2 | Precision Apparatus | TKS | −1.059 | 23.529 |
| Excluded | Overvalued 1 | Electrical Machinery | GRA | −1.084 | 10.516 |
| Excluded | Overvalued 1 | Electrical Machinery | DSH | −1.088 | 6.830 |
| Excluded | Overvalued 12 | Chemical | MAN | −1.254 | 13.239 |
| Excluded | Overvalued 12 | Precision Apparatus | ISC | −1.291 | 9.545 |
| Excluded | Overvalued 1 | Electrical Machinery | MUR | −1.391 | 10.713 |
| Excluded | Overvalued 12 | Electrical Machinery | MAB | −1.445 | 5.286 |
| Excluded | Overvalued 12 | Pharmaceutical | YAM | −1.604 | 6.929 |
| Excluded | Overvalued 1 | Chemical | SKK | −2.150 | 7.823 |
| Excluded | Overvalued 1 | Chemical | KAO | −2.469 | 39.209 |
| Excluded | Overvalued 1 | Automobile/Transportation Equipment | HON | −3.335 | 15.165 |

FIG. 40

```
                    ┌──────────────┐
                    │    START     │
                    └──────┬───────┘
                           │ ┌─ S151
              ┌────────────▼────────────┐        30A ┐
              │   READ CORPORATE DATA   │        ┌────────┐
              │   OF STOCK PORTFOLIO    │◄───────│INTERNAL│
              │    INDIVIDUAL STOCK     │        │   DB   │
              └────────────┬────────────┘        └────────┘
                           │ ┌─ S152
              ┌────────────▼────────────┐
              │ ACQUIRE PRICE MOVEMENT  │
              │     DATA OF INDEX       │
              └────────────┬────────────┘
                           │ ┌─ S153
              ┌────────────▼────────────┐              ┌─ S159
              │   CALCULATE RETURN AND  │    ┌──────────▼──────────┐
              │      RISK OF INDEX      │    │  CALCULATE EXPECTED │
              └────────────┬────────────┘    │   RETURN AND RISK OF│
                           │ ┌─ S154         │   STOCK PORTFOLIO   │
              ┌────────────▼────────────┐    └──────────┬──────────┘
              │ ACQUIRE PRICE MOVEMENT  │               │ ┌─ S160
              │   DATA OF INDIVIDUAL    │    ┌──────────▼──────────┐
              │         STOCK           │    │   DERIVE EFFICIENT  │
              └────────────┬────────────┘    │      FRONTIER       │
                           │ ┌─ S155         └──────────┬──────────┘
              ┌────────────▼────────────┐               │ ┌─ S161
              │       CALCULATE         │    ┌──────────▼──────────┐
              │   EXCESS RETURN (α),    │    │ ACQUIRE RISK-FREE   │
              │  SENSITIVITY IN RELATION│    │   RATE DATA OF      │
              │   TO FLUCTUATION OF     │    │  RISK-FREE ASSETS   │
              │ MARKET STOCK PRICE (β), │    └──────────┬──────────┘
              │ AND RESIDUAL RETURN (ε) │               │ ┌─ S162
              │    FOR EACH INDIVIDUAL   │    ┌──────────▼──────────┐
              │     STOCK COMPANY       │    │ DERIVE CAPITAL      │
              └────────────┬────────────┘    │   MARKET LINE BY    │
                           │ ┌─ S156         │  DRAWING TANGENT    │
              ┌────────────▼────────────┐    │ LINE FROM THE RISK- │
              │ CALCULATE THEORETICAL   │    │  FREE RATE TOWARD   │
              │      STOCK PRICE        │    │ EFFICIENT FRONTIER  │
              │   FOR EACH INDIVIDUAL   │    └──────────┬──────────┘
              │     STOCK COMPANY       │               │ ┌─ S163
              └────────────┬────────────┘    ┌──────────▼──────────┐
                           │ ┌─ S157         │ DETERMINE OPTIMUM   │
              ┌────────────▼────────────┐    │  SHARE OF STOCK     │
              │  CORRECT PARAMETERS     │    │ PORTFOLIO IN CONTACT│
              │   α, β AND ε OF EACH    │    │  POINT OF EFFICIENT │
              │   INDIVIDUAL STOCK      │    │ FRONTIER AND CAPITAL│
              │   COMPANY BASED ON      │    │    MARKET LINE      │
              │   THEORETICAL STOCK     │    └──────────┬──────────┘
              │  PRICE TO α', β' AND ε' │               │ ┌─ S164
              └────────────┬────────────┘    ┌──────────▼──────────┐
                           │ ┌─ S158         │ DETERMINE ADDITION  │
              ┌────────────▼────────────┐    │ RATIO FOR EACH STOCK│
              │  CALCULATE EXPECTED     │    │   FOR PORTFOLIO     │
              │  RETURN AND RISK FOR    │    └──────────┬──────────┘
              │ EACH INDIVIDUAL STOCK   │               │
              └────────────┬────────────┘    ┌──────────▼──────────┐
                           └────────────────►│        END          │
                                             └─────────────────────┘
```

## FIG. 41

### XXX LISTED INVESTMENT STOCK (STOCK CODE: 13**)

| DATE | OPENING PRICE | HIGHEST PRICE | LOWEST PRICE | CLOSING PRICE | TRADING VOLUME | CHANGE (CLOSING PRICE) |
|---|---|---|---|---|---|---|
| ***3/01/06 | 864 | 870 | 864 | 864 | 421,200 | 0.000% |
| ***3/01/07 | 874 | 879 | 861 | 861 | 629,400 | -0.347% |
| ***3/01/08 | 854 | 855 | 845 | 848 | 595,600 | -1.510% |
| ***3/01/09 | 839 | 845 | 836 | 845 | 712,400 | -0.354% |
| ***3/01/10 | 855 | 855 | 837 | 845 | 1,369,100 | 0.000% |
| ***3/01/14 | 848 | 853 | 844 | 853 | 659,900 | 0.947% |
| ***3/01/15 | 859 | 861 | 849 | 861 | 788,300 | 0.938% |
| ***3/01/16 | 855 | 862 | 855 | 859 | 1,070,800 | -0.232% |
| ***3/01/17 | 855 | 869 | 855 | 866 | 1,364,000 | 0.815% |
| ***3/01/20 | 864 | 864 | 852 | 857 | 1,055,700 | -1.039% |
| ***3/01/21 | 858 | 874 | 858 | 869 | 1,128,200 | 1.400% |
| ***3/01/22 | 869 | 871 | 859 | 861 | 1,561,800 | -0.921% |
| ***3/01/23 | 860 | 872 | 856 | 871 | 1,485,300 | 1.161% |
| ***3/01/24 | 876 | 878 | 865 | 868 | 734,100 | -0.344% |
| ***3/01/27 | 858 | 864 | 854 | 856 | 511,800 | -1.382% |
| ***3/01/28 | 850 | 853 | 848 | 848 | 761,500 | -0.935% |
| ***3/01/29 | 850 | 850 | 830 | 832 | 1,490,100 | -1.887% |
| ***3/01/30 | 838 | 838 | 828 | 831 | 1,020,600 | -0.120% |
| ***3/01/31 | 832 | 832 | 823 | 828 | 1,144,500 | -0.361% |
| ⋮ | | | | | | |
| ***4/12/01 | 1,094 | 1,098 | 1,091 | 1,094 | 1,533,100 | -0.816% |
| ***4/12/02 | 1,107 | 1,116 | 1,106 | 1,116 | 1,590,400 | 2.011% |
| ***4/12/03 | 1,111 | 1,120 | 1,101 | 1,119 | 5,083,800 | 0.269% |
| ***4/12/06 | 1,112 | 1,117 | 1,109 | 1,111 | 2,218,200 | -0.715% |
| ***4/12/07 | 1,111 | 1,113 | 1,101 | 1,102 | 1,791,000 | -0.810% |
| ***4/12/08 | 1,100 | 1,107 | 1,095 | 1,105 | 2,443,600 | 0.272% |
| ***4/12/09 | 1,108 | 1,108 | 1,089 | 1,094 | 3,007,100 | -0.995% |
| ***4/12/10 | 1,094 | 1,099 | 1,091 | 1,092 | 3,413,900 | -0.183% |
| ***4/12/13 | 1,096 | 1,099 | 1,092 | 1,095 | 2,720,500 | 0.275% |
| ***4/12/14 | 1,100 | 1,108 | 1,095 | 1,108 | 2,555,800 | 1.187% |
| ***4/12/15 | 1,110 | 1,115 | 1,108 | 1,114 | 1,874,100 | 0.542% |
| ***4/12/16 | 1,107 | 1,114 | 1,103 | 1,111 | 3,201,700 | -0.269% |
| ***4/12/17 | 1,109 | 1,124 | 1,109 | 1,118 | 3,363,100 | 0.630% |
| ***4/12/20 | 1,116 | 1,123 | 1,116 | 1,122 | 3,889,900 | 0.358% |
| ***4/12/21 | 1,123 | 1,129 | 1,123 | 1,127 | 2,054,400 | 0.446% |
| ***4/12/22 | 1,132 | 1,135 | 1,129 | 1,134 | 2,944,200 | 0.621% |
| ***4/12/24 | 1,139 | 1,147 | 1,139 | 1,144 | 7,123,900 | 0.882% |
| ***4/12/27 | 1,143 | 1,148 | 1,141 | 1,146 | 2,616,700 | 0.175% |
| ***4/12/28 | 1,141 | 1,150 | 1,141 | 1,150 | 1,303,300 | 0.349% |
| ***4/12/29 | 1,155 | 1,159 | 1,150 | 1,152 | 2,472,500 | 0.174% |
| ***4/12/30 | 1,159 | 1,159 | 1,156 | 1,159 | 1,974,000 | 0.608% |

{TD*}

| EXPECTED RETURN (DAILY BASIS) | E(R*) | 0.067% |
|---|---|---|
| VARIANCE | | 0.0001419 |
| RISK (DAILY BASIS) | $\sigma_{R*}$ | 1.191% |

FIG. 42

SNK COMPANY (STOCK CODE: 64**)

| DATE | OPENING PRICE | HIGHEST PRICE | LOWEST PRICE | CLOSING PRICE | TRADING VOLUME | CHANGE (CLOSING PRICE) |
|---|---|---|---|---|---|---|
| ***3/01/06 | 3,030 | 3,090 | 2,975 | 3,060 | 72,600 | 0.000% |
| ***3/01/07 | 3,110 | 3,200 | 3,090 | 3,150 | 183,100 | 2.941% |
| ***3/01/08 | 3,160 | 3,160 | 2,985 | 3,000 | 129,600 | -4.762% |
| ***3/01/09 | 3,010 | 3,200 | 2,990 | 3,200 | 186,400 | 6.667% |
| ***3/01/10 | 3,110 | 3,130 | 3,060 | 3,060 | 111,600 | -4.375% |
| ***3/01/14 | 3,110 | 3,110 | 3,070 | 3,090 | 110,000 | 0.980% |
| ***3/01/15 | 3,050 | 3,070 | 3,010 | 3,060 | 93,700 | -0.971% |
| ***3/01/16 | 3,000 | 3,070 | 2,990 | 3,070 | 105,800 | 0.327% |
| ***3/01/17 | 3,050 | 3,130 | 3,030 | 3,100 | 93,500 | 0.977% |
| ***3/01/20 | 3,000 | 3,080 | 3,000 | 3,080 | 117,200 | -0.645% |
| ***3/01/21 | 3,080 | 3,120 | 3,050 | 3,070 | 68,600 | -0.325% |
| ***3/01/22 | 3,090 | 3,110 | 3,050 | 3,060 | 52,300 | -0.326% |
| ***3/01/23 | 3,080 | 3,130 | 3,050 | 3,090 | 92,500 | 0.980% |
| ***3/01/24 | 3,090 | 3,210 | 3,070 | 3,160 | 156,400 | 2.265% |
| ***3/01/27 | 3,170 | 3,260 | 3,130 | 3,210 | 180,800 | 1.582% |
| ***3/01/28 | 3,130 | 3,180 | 3,120 | 3,120 | 55,800 | -2.804% |
| ***3/01/29 | 3,080 | 3,100 | 3,000 | 3,020 | 166,500 | -3.205% |
| ***3/01/30 | 3,030 | 3,110 | 3,010 | 3,030 | 114,600 | 0.331% |
| ***3/01/31 | 3,020 | 3,020 | 2,930 | 2,955 | 195,000 | -2.475% |
| : | | | | | | |
| ***4/12/01 | 4,570 | 4,610 | 4,540 | 4,560 | 517,200 | -1.724% |
| ***4/12/02 | 4,600 | 4,640 | 4,590 | 4,630 | 285,000 | 1.535% |
| ***4/12/03 | 4,640 | 4,670 | 4,580 | 4,600 | 282,400 | -0.648% |
| ***4/12/06 | 4,560 | 4,610 | 4,560 | 4,580 | 188,200 | -0.435% |
| ***4/12/07 | 4,570 | 4,610 | 4,540 | 4,550 | 204,500 | -0.655% |
| ***4/12/08 | 4,550 | 4,580 | 4,540 | 4,550 | 210,000 | 0.000% |
| ***4/12/09 | 4,550 | 4,570 | 4,440 | 4,480 | 337,300 | -1.538% |
| ***4/12/10 | 4,470 | 4,500 | 4,420 | 4,430 | 314,700 | -1.116% |
| ***4/12/13 | 4,410 | 4,460 | 4,340 | 4,460 | 478,400 | 0.677% |
| ***4/12/14 | 4,500 | 4,600 | 4,480 | 4,600 | 444,100 | 3.139% |
| ***4/12/15 | 4,700 | 4,800 | 4,680 | 4,740 | 724,900 | 3.043% |
| ***4/12/16 | 4,840 | 4,870 | 4,760 | 4,760 | 780,400 | 0.422% |
| ***4/12/17 | 4,810 | 4,900 | 4,770 | 4,900 | 697,600 | 2.941% |
| ***4/12/20 | 4,850 | 4,900 | 4,820 | 4,850 | 332,600 | -1.020% |
| ***4/12/21 | 4,870 | 4,950 | 4,860 | 4,890 | 297,700 | 0.825% |
| ***4/12/22 | 4,930 | 4,940 | 4,870 | 4,890 | 185,400 | 0.000% |
| ***4/12/24 | 4,950 | 5,110 | 4,940 | 5,060 | 640,200 | 3.476% |
| ***4/12/27 | 5,160 | 5,240 | 5,120 | 5,120 | 396,900 | 1.186% |
| ***4/12/28 | 5,130 | 5,170 | 5,050 | 5,160 | 320,400 | 0.781% |
| ***4/12/29 | 5,160 | 5,180 | 5,090 | 5,130 | 214,100 | -0.581% |
| ***4/12/30 | 5,150 | 5,210 | 5,140 | 5,180 | 119,100 | 0.975% |

{TDi}

| EXPECTED RETURN (DAILY BASIS) | 0.126% |
|---|---|
| VARIANCE | 0.0003777 |
| RISK (DAILY BASIS) | 1.943% |

## FIG. 43A

| α i, β i | |
| --- | --- |
| {TD*} | {TDi} |
| CHANGE DATA ROW (CLOSING PRICE) | CHANGE DATA ROW (CLOSING PRICE) |
| 0.000% | 0.000% |
| -0.347% | 2.941% |
| -1.510% | -4.762% |
| -0.354% | 6.667% |
| 0.000% | -4.375% |
| 0.947% | 0.980% |
| 0.938% | -0.971% |
| -0.232% | 0.327% |
| 0.815% | 0.977% |
| -1.039% | -0.645% |
| 1.400% | -0.325% |
| -0.921% | -0.326% |
| 1.161% | 0.980% |
| -0.344% | 2.265% |
| -1.382% | 1.582% |
| -0.935% | -2.804% |
| -1.887% | -3.205% |
| -0.120% | 0.331% |
| -0.361% | -2.475% |
| 1.691% | 1.015% |
| ⋮ | ⋮ |

ε i

| | RESIDUAL OUTPUT | | | PROBA-BILITY | |
| --- | --- | --- | --- | --- | --- |
| | OBSERVED VALUE | PREDIC-TED VALUE: y | RESIDUAL | PERCEN-TILE | y |
| 1 | 0.00072676 | -0.0007268 | 0.10183299 | -0.0961039 | |
| 2 | -0.0020456 | 0.03145739 | 0.30549898 | -0.0692308 | |
| 3 | -0.0113288 | -0.0362903 | 0.50916497 | -0.053407 | |
| 4 | -0.0020979 | 0.0687646 | 0.71283096 | -0.047619 | |
| 5 | 0.00072676 | -0.0444768 | 0.91649695 | -0.0457317 | |
| 6 | 0.00828603 | 0.00151789 | 1.12016293 | -0.04375 | |
| 7 | 0.00821514 | -0.0179239 | 1.32382892 | -0.0436893 | |
| 8 | -0.0011279 | 0.00439591 | 1.52749491 | -0.0435967 | |
| 9 | 0.00723332 | 0.00253866 | 1.7311609 | -0.0419847 | |
| 10 | -0.0075712 | 0.00111958 | 1.93482688 | -0.0390625 | |
| 11 | 0.0119069 | -0.0151536 | 2.13849287 | -0.0378788 | |
| 12 | -0.0066237 | 0.00336641 | 2.34215886 | -0.0373134 | |
| 13 | 0.01000026 | -0.0001963 | 2.54582485 | -0.0367171 | |
| 14 | -0.0020233 | 0.02467707 | 2.74949084 | -0.0364583 | |
| 15 | -0.0103117 | 0.02613447 | 2.95315682 | -0.0346667 | |
| 16 | -0.0067354 | -0.021302 | 3.15682281 | -0.0343008 | |
| 17 | -0.0143383 | -0.017713 | 3.3604888 | -0.0329341 | |
| 18 | -0.0002329 | 0.00354417 | 3.56415479 | -0.0326975 | |
| 19 | -0.0021557 | -0.0225968 | 3.76782077 | -0.032491 | |
| 20 | 0.01422709 | -0.0040748 | 3.97148676 | -0.0320513 | |

DESCRIPTION

| REGRESSION STATISTICS | |
| --- | --- |
| MULTIPLE CORRELATION R | 0.48936035 |
| MULTIPLE DETERMINATION R2 | 0.23947355 |
| CORRECTED R2 | 0.23791828 |
| STANDARD ERROR | 0.01696499 |
| NUMBER OF OBSERVATIONS | 491 |

ANALYSIS OF VARIANCE TABLE

| | DEGREE OF FREEDOM (FLEXIBILITY) | VARIABLE | VARIANCE | OBSERVED VARIANCE RATIO | SIGNIFI-CANCE F |
| --- | --- | --- | --- | --- | --- |
| REGRESSION | 1 | 0.04431587 | 0.04431587 | 153.975664 | 6.2679E-31 |
| RESIDUAL | 489 | 0.14073953 | 0.00028781 | | |
| TOTAL | 490 | 0.1850554 | | | |

| | CALCULATED VALUE | STANDARD ERROR | t | p-VALUE | LOWER LIMIT 95% | UPPER LIMIT 95% | LOWER LIMIT 95.0% | UPPER LIMIT 95.0% |
| --- | --- | --- | --- | --- | --- | --- | --- | --- |
| α i | 0.0727% | 0.00076683 | 0.9477473 | 0.34372623 | -0.0007799 | 0.00223345 | -0.0007799 | 0.00223345 |
| β i | 0.79844795 | 0.06434585 | 12.4086931 | 6.2679E-31 | 0.67201949 | 0.92487641 | 0.67201949 | 0.92487641 |

| RESIDUAL VARIANCE | $\sigma \varepsilon i^2$ | 0.000287 |
| --- | --- | --- |
| RESIDUAL STANDARD DEVIATION | $\sigma \varepsilon i$ | 1.695% |

FIG. 43B

$\alpha$ i, $\beta$ i

y: CHANGE OF [TDi]

$$y = \alpha i + \beta i \times$$
$$= 0.0727(\%) + 0.798448 \times$$

x: CHANGE OF [TD*]

| CALCULATED VALUE | |
|---|---|
| $\alpha$ i | 0.0727% |
| $\beta$ i | 0.798447949 |

$\varepsilon$ i

NORMAL PROBABILITY GRAPH OF $\varepsilon$ i

SAMPLE PERCENTILE

| RESIDUAL VARIANCE | $\sigma \varepsilon i^2$ | 0.000287 |
|---|---|---|
| RESIDUAL STANDARD DEVIATION | $\sigma \varepsilon i$ | 1.695% |

FIG. 44

```
                 ┌─────────────┐
                 │    START    │
                 └──────┬──────┘
                        │        S1561
                        ▼
            ┌─────────────────────┐
            │  READ CORPORATE DATA│◄──────────────┐
            └──────────┬──────────┘               │
                       │          S1563           │
                       ▼                          │
            ┌─────────────────────┐               │
            │   CALCULATE TOTAL   │               │
            │BUSINESS PROFIT AFTER│               │
            │   TAX THEORETICAL   │               │
            │       VALUE         │               │
            └──────────┬──────────┘               │
                       │          S1565           │
                       ▼                          │
            ┌─────────────────────┐               │
            │ CALCULATED INVESTED │               │
            │    CAPITAL COST     │               │
            └──────────┬──────────┘               │
                       │          S1567           │
                       ▼                          │
            ┌─────────────────────┐               │
            │     CALCULATE       │               │
            │    THEORETICAL      │               │
            │  ECONOMIC EXCESS    │               │
            │       PROFIT        │               │
            └──────────┬──────────┘               │
                       │          S1569           │
                       ▼                          │
            ┌─────────────────────┐               │
            │ CALCULATE DISCOUNT  │               │
            │        RATE         │               │
            └──────────┬──────────┘               │
                       │          S1571           │
                       ▼                          │
            ┌─────────────────────┐               │
            │     CALCULATE       │               │
            │ THEORETICAL MARKET  │               │
            │    VALUE ADDED      │               │
            └──────────┬──────────┘               │
                       │          S1573           │
                       ▼                          │
            ┌─────────────────────┐               │
            │  CALCULATE EQUITY   │               │
            │      CAPITAL        │               │
            └──────────┬──────────┘               │
                       │          S1575           │
                       ▼                          │
            ┌─────────────────────┐               │
            │ CALCULATE ESTIMATED │               │
            │  AGGREGATE MARKET   │               │
            │       PRICE         │               │
            └──────────┬──────────┘               │
                       │          S1577          STORE
                       ▼              ┌─────────────┐
            ┌─────────────────────┐   │             │
            │     CALCULATE       │───┘             ▼
            │ THEORETICAL STOCK   │            INTERNAL DB
            │       PRICE         │               30A
            └──────────┬──────────┘
                       │          S1579
                       ▼
            ┌─────────────────────┐
            │ OUTPUT THEORETICAL  │
            │    STOCK PRICE      │
            └──────────┬──────────┘
                       │
                       ▼
                 ┌─────────────┐
                 │     END     │
                 └─────────────┘
```

FIG. 45

START CALCULATION
OF TOTAL BUSINESS
PROFIT AFTER TAX
THEORETICAL VALUE

S15631

READ INDEX DATA ← 30A INTERNAL DB

S15633

FACTOR ANALYSIS ? — YES → FACTOR EXTRACTION — S15635

NO

S15637

MULTIPLE REGRESSION ANALYSIS

S15639

DERIVE ROA $\beta$ THEORETICAL VALUE

S15641

CALCULATE TOTAL BUSINESS PROFIT THEORETICAL VALUE

S15643

CALCULATE R&D COSTS

S15645

CALCULATE OPERATING PROFIT THEORETICAL VALUE (INCLUDING PATENT ROYALTY INCOME)

S15647

CALCULATE OPERATING PROFIT AFTER TAX THEORETICAL VALUE (INCLUDING PATENT ROYALTY INCOME)

S15649

CALCULATE TOTAL BUSINESS PROFIT AFTER TAX THEORETICAL VALUE

END

FIG. 46

Factor Analysis Result

| Factor Number | Factor 1 | Factor 2 | Factor 3 |
|---|---|---|---|
| Factor | Intellectual Property Stock | Productivity | Concentration of Patent and Technology |
| Patent Granted Stock H | 0.9817 | 0.1198 | -0.0764 |
| Inventor Stock | 0.9606 | 0.1844 | -0.0530 |
| Patent Granted Stock B | 0.9489 | 0.2714 | -0.0640 |
| R&D Stock | 0.9288 | 0.3255 | -0.1409 |
| Patent Granted Stock C | 0.8633 | 0.4645 | -0.1466 |
| Patent Granted Stock G | 0.7938 | 0.5115 | -0.2040 |
| Equity to Asset Ratio | 0.1911 | 0.8133 | -0.2297 |
| Labor Productivity | 0.5726 | 0.6719 | -0.1781 |
| Labor Distribution Share (To Value Added) | -0.3583 | -0.8520 | 0.1594 |
| Patent Concentration Index | -0.1529 | -0.3491 | 0.9093 |
| Patent Concentration Index G | 0.1248 | -0.2679 | 0.7448 |
| Patent Concentration Index H | -0.3618 | 0.1162 | 0.5526 |
| Characteristic Value | 5.69 | 2.75 | 1.89 |
| Contribution Ratio(%) | 47.40 | 22.93 | 15.77 |
| Cumulative Contribution Ratio(%) | 47.40 | 70.32 | 86.09 |

[Multiple Regression Analysis Result]    Objective Variable    ROA $\beta$

| Explanatory Variable | Partial Regression Coefficient | Standardized Partial Regression Coefficient | Determination | T Value | Standard Error |
|---|---|---|---|---|---|
| Factor 1 | 6.1637 | 0.7223 | [**] | 9.8791 | 0.6239 |
| Factor 2 | 3.8751 | 0.4659 | [**] | 6.3727 | 0.6081 |
| Constant Term | 17.0283 | | | 27.4544 | 0.6202 |

[**]1% Level    [*]5% Level

[Adaptation of Multiple Regresstion Equation]

| Determination Coefficient Flexibility Corrected | R2' = | 0.7168 |
|---|---|---|

FIG. 47

FACTOR LOADING          CONTRIBUTION
                             RATIO

PATENT GRANTED
STOCK H

0.9817

INVENTOR STOCK

0.9606

PATENT GRANTED          0.9489          FACTOR 1:          60.79%          ROA $\beta$
STOCK B                                 STOCK OF
                        0.9288          INTELLECTUAL
R&D STOCK                               ASSETS
                        0.8633

PATENT GRANTED
STOCK C

PATENT GRANTED          0.7938
STOCK G

EQUITY TO ASSET
RATIO

0.8133

LABOR PRODUCTIVITY      0.6719          FACTOR 2:          39.21%
                                        PRODUCTIVITY

LABOR DISTRIBUTION      -0.8520
SHARE (TO VALUE
ADDED)

R2'=0.7168
(FACTORS ARE SIGNIFICANT WITH 1% LEVEL)

FIG. 48

Y

ROA $\beta$

                    REGRESSION
                      LINE

                    THEORETICAL
                      VALUE

                              FACTOR 1
                              FACTOR 2      X

FIG. 49

| COMPANY NAME | YEAR | SUBCLASS IN IPB INDUSTRIAL CLASSIFICATION | ROA β | | TOTAL BUSINESS PROFITS (UNIT: MILLION YEN) | | OPERATING PROFIT (UNIT: MILLION YEN) | |
|---|---|---|---|---|---|---|---|---|
| | | | ACTUAL VALUE | THEORETICAL VALUE | ACTUAL VALUE | THEORETICAL VALUE | ACTUAL VALUE | THEORETICAL VALUE |
| SON | 1994 | | 7.19 | 10.01 | 87,115 | 121,255 | 20,071 | 54,211 |
| | 1995 | | 7.79 | 9.29 | 91,596 | 106,761 | 22,100 | 37,265 |
| | 1996 | | 12.93 | 11.45 | 165,947 | 147,012 | 92,843 | 73,908 |
| | 1997 | ELECTRICAL MACHINERY | 15.69 | 12.24 | 186,899 | 145,828 | 111,427 | 70,356 |
| | 1998 | | 10.32 | 8.86 | 127,946 | 109,897 | 35,143 | 17,094 |
| | 1999 | | 8.71 | 8.99 | 114,731 | 118,381 | -3,506 | 144 |
| | 2000 | | 12.54 | 10.91 | 168,807 | 146,888 | 54,645 | 32,726 |
| | 2001 | | 6.41 | 7.73 | 78,796 | 94,918 | -37,670 | -21,548 |
| | 2002 | | -1.04 | 4.99 | -36,640 | 175,459 | -172,210 | 39,889 |
| SHA | 1994 | | 8.75 | 9.79 | 106,285 | 118,860 | 60,852 | 73,427 |
| | 1995 | | 8.75 | 9.89 | 108,668 | 122,753 | 59,534 | 73,619 |
| | 1996 | ELECTRICAL MACHINERY | 8.71 | 9.84 | 11,940 | 126,368 | 62,356 | 76,784 |
| | 1997 | | 5.77 | 8.57 | 71,923 | 106,895 | 20,587 | 55,559 |
| | 1998 | | 4.83 | 7.60 | 60,618 | 95,262 | 9,991 | 44,635 |
| | 1999 | | 7.90 | 8.88 | 97,069 | 109,116 | 44,213 | 56,260 |

FIG. 50

| No. | Company Name | Year | Actual Stock Price (Yen: As of 4/1 Each Year) | Theoretical Stock Price (Yen: As of 4/1 Each Year) |
|---|---|---|---|---|
| 1 | HEI | * * 02 | 1,461 | 6,611 |
| | | * * 03 | 1,900 | 7,387 |
| | | * * 04 | 1,749 | 8,071 |
| 2 | SNK | * * 02 | 3,350 | 13,796 |
| | | * * 03 | 3,250 | 16,486 |
| | | * * 04 | 2,635 | 16,786 |
| 3 | DMC | * * 02 | 502 | 375 |
| | | * * 03 | 400 | 1,444 |
| | | * * 04 | 315 | 5,211 |
| 4 | TOG | * * 02 | 2,310 | 2 |
| | | * * 03 | 1,510 | 228 |
| | | * * 04 | 2,530 | 2,583 |
| 5 | SEP | * * 02 | 560 | 1,485 |
| | | * * 03 | 350 | 669 |
| | | * * 04 | 300 | 540 |
| ... | ... | | ... | ... |
| N-1 | SYS | * * 02 | 2,775 | 3,041 |
| | | * * 03 | 2,275 | 7,460 |
| | | * * 04 | 2,105 | 16,805 |
| N | UNC | * * 02 | 5,400 | 1,822 |
| | | * * 03 | 3,710 | 1,833 |
| | | * * 04 | 4,660 | 1,695 |

FIG. 51

| No. | Company Name | $\alpha_i$ | $\alpha_i'$ | $\beta_i$ | $\beta_i'$ | $\varepsilon_i$ | | $\varepsilon_i'$ | |
|---|---|---|---|---|---|---|---|---|---|
| | | | | | | $\sigma_{\varepsilon i2}$ | $\sigma_{\varepsilon i}$ | $\sigma_{\varepsilon i'2}$ | $\sigma_{\varepsilon i'}$ |
| 1 | HEI | 0.1362% | 0.1539% | 0.922535 | 1.4299293 | 0.000652 | 2.553% | 0.000461 | 2.147% |
| 2 | SNK | 0.0727% | 0.1028% | 0.7984479 | 1.3829118 | 0.000287 | 1.695% | 0.0002029 | 1.425% |
| 3 | DMC | -0.0135% | -0.0191% | 0.546782 | 0.6867582 | 0.001002 | 3.165% | 0.0008868 | 2.978% |
| 4 | TOG | 0.4258% | 0.5323% | 1.305726 | 1.2064908 | 0.000565 | 2.377% | 0.000465 | 2.156% |
| 5 | SEP | 1.0268% | 1.2013% | 0.972624 | 1.4044691 | 0.004231 | 6.505% | 0.0035244 | 5.937% |
| N-1 | SYS | -1.1724% | -0.9086% | 1.744571 | 3.347832 | 0.000332 | 1.822% | 0.0001853 | 1.361% |
| N | UNC | 0.9258% | 1.1100% | 1.476992 | 2.558150 | 0.001127 | 3.357% | 0.0009512 | 3.084% |

FIG. 52

FIG. 53

FIG. 54

Theoretical Incorporation Ratio of Each Stock of Stock Portfolio in Contact Point

| No. | Company Name | Theoretical Incorporation Ratio |
|---|---|---|
| 1 | HEI | 8.416% |
| 2 | SNK | 13.771% |
| 3 | DMC | 0% |
| 4 | TOG | 0.882% |
| 5 | SEP | 2.874% |
| ⋮ | | |
| N-1 | SYS | 0% |
| N | UNC | 5.561% |

FIG. 55

| No. | Company Name | Theoretical Incorporation Ratio | Theoretical Incorporation Ratio ≧ Minimum Incorporation Ratio? | Actual Incorporation Ratio (Cutback of Stock Less Than Minimum Incorporation Ratio) |
|---|---|---|---|---|
| 1 | HEI | 8.416% | Yes | 9.013% |
| 2 | SNK | 13.771% | Yes | 14.749% |
| 3 | DMC | 0% | No | 0% |
| 4 | TOG | 0.882% | No | 0% |
| 5 | SEP | 2.874% | No | 0% |
| ⋮ | | | | |
| N-1 | SYS | 0% | No | 0% |
| N | UNC | 5.561% | Yes | 5.956% |

| | Theoretical Value |
|---|---|
| Portfolio Expected Return (Daily Basis) | 0.084% |

| Adopted Value |
|---|
| 0.082% |

| Variance | 0.0001966 |
|---|---|
| Risk (Daily Basis) | 1.402% |

| 0.0001991 |
|---|
| 1.411% |

## FIG. 56

Principle Component 1: Intellectual Assets Concentration Type Stock Portfolio
Stock Price Fluctuation Ratio

|  | Intellectual Assets Concentration Type Stock Portfolio 10 | Intellectual Assets Concentration Type Stock Portfolio 20 | Intellectual Assets Concentration Type Stock Portfolio 30 | Nikkei Stock Average | TOPIX |
|---|---|---|---|---|---|
| 1997 | -9.2% | -13.0% | -5.3% | -21.19% | -20.10% |
| 1998 | 9.7% | 2.4% | -5.2% | -9.28% | -7.50% |
| 1999 | 145.8% | 130.5% | 134.8% | 36.79% | 58.40% |
| 2000 | -41.2% | -35.4% | -35.8% | -27.19% | -25.50% |
| 2001 | -16.3% | -16.5% | -14.7% | -23.52% | -19.60% |
| 2002 | 6.0% | -4.4% | -6.7% | -18.63% | -18.30% |
| Standard Deviation | 66% | 60% | 62% | 23.94% | 31.82% |

Return (Amount Base)                                                    (Unit: 10,000 Yen)

|  | Intellectual Assets Concentration Type Stock Portfolio 10 | Intellectual Assets Concentration Type Stock Portfolio 20 | Intellectual Assets Concentration Type Stock Portfolio 30 | Nikkei Stock Average | TOPIX |
|---|---|---|---|---|---|
| 1996 | 100 | 100 | 100 | 100.00 | 100 |
| 1997 | 90.8 | 87.0 | 94.7 | 78.81 | 79.9 |
| 1998 | 99.6 | 89.1 | 89.8 | 71.49 | 73.91 |
| 1999 | 244.7 | 205.4 | 210.9 | 97.79 | 117.07 |
| 2000 | 143.8 | 132.7 | 135.3 | 71.20 | 87.22 |
| 2001 | 120.4 | 110.8 | 115.5 | 54.45 | 70.12 |
| 2002 | 127.6 | 106.8 | 107.8 | 44.31 | 57.29 |

## FIG. 57

Principle Component 2: Intellectual Assets Diversification Type Stock Portfolio
Stock Price Fluctuation Ratio

|  | Intellectual Assets Diversification Type Stock Portfolio 10 | Intellectual Assets Diversification Type Stock Portfolio 20 | Intellectual Assets Diversification Type Stock Portfolio 30 | Nikkei Stock Average | TOPIX |
|---|---|---|---|---|---|
| 1997 | 8.3% | 0.8% | -1.4% | -21.19% | -20.10% |
| 1998 | -21.2% | -13.5% | -12.0% | -9.28% | -7.50% |
| 1999 | 54.2% | 73.9% | 68.2% | 36.79% | 58.40% |
| 2000 | -24.2% | -29.8% | -26.0% | -27.19% | -25.50% |
| 2001 | -1.8% | -14.9% | -13.0% | -23.52% | -19.60% |
| 2002 | 0.0% | -2.3% | -0.7% | -18.63% | -18.30% |
| Standard Deviation | 28% | 37% | 33% | 23.94% | 31.82% |

Return                                                                    (Unit: 10,000 Yen)

|  | Intellectual Assets Diversification Type Stock Portfolio 10 | Intellectual Assets Diversification Type Stock Portfolio 20 | Intellectual Assets Diversification Type Stock Portfolio 30 | Nikkei Stock Average | TOPIX |
|---|---|---|---|---|---|
| 1996 | 100 | 100 | 100 | 100.00 | 100 |
| 1997 | 108.3 | 100.8 | 98.6 | 78.81 | 79.9 |
| 1998 | 85.3 | 87.2 | 86.8 | 71.49 | 73.91 |
| 1999 | 131.5 | 151.7 | 146.0 | 97.79 | 117.07 |
| 2000 | 99.6 | 106.4 | 108.0 | 71.20 | 87.22 |
| 2001 | 97.8 | 90.6 | 93.9 | 54.45 | 70.12 |
| 2002 | 97.9 | 88.5 | 93.3 | 44.31 | 57.29 |

FIG. 58

INTELLECTUAL ASSETS CONCENTRATION TYPE STOCK PORTFOLIO –
STOCK PRICE PERCENT CHANGE

INTELLECTUAL ASSETS CONCENTRATION TYPE STOCK PORTFOLIO 10

INTELLECTUAL ASSETS DIVERSIFICATION TYPE STOCK PORTFOLIO 10

INTELLECTUAL ASSETS CONCENTRATION TYPE (STANDARDIZED VALUE OF 1 OR MORE)

INTELLECTUAL ASSETS DIVERSIFICATION TYPE (STANDARDIZED VALUE OF 1 OR MORE)

NIKKEI STOCK AVERAGE

TOPIX

200.0%
150.0%
100.0%
50.0%
0.0%
-50.0%
-100.0%

1997
1999
2000

YEAR

FIG. 59

INTELLECTUAL ASSETS CONCENTRATION TYPE STOCK PORTFOLIO –
RETURN (AMOUNT BASE)

INTELLECTUAL ASSETS CONCENTRATION TYPE STOCK PORTFOLIO 10

INTELLECTUAL ASSETS DIVERSIFICATION TYPE STOCK PORTFOLIO 10

INTELLECTUAL ASSETS CONCENTRATION TYPE (STANDARDIZED VALUE OF 1 OR MORE)

INTELLECTUAL ASSETS DIVERSIFICATION TYPE (STANDARDIZED VALUE OF 1 OR MORE)

NIKKEI STOCK AVERAGE

TOPIX

YEAR

1996 1997 1998 1999 2000 2001 2002

0 50 100 150 200 250 300

110

FIG. 60

```
                        ┌─────────────┐
                        │    START    │
                        └─────────────┘
                               │ ┌─ S251
                               ▼
              ┌──────────────────────────────────┐
              │ READ DATA OF PRIMARY STOCK-FOR-   │
              │ PORTFOLIO SELECTION CANDIDATES    │
              └──────────────────────────────────┘
                    │                        │
          ┌─ S152   ▼                        ▼  ┌─ S253
┌────────────────────────────────┐  ┌──────────────────────────┐
│ ACQUIRE PRICE MOVEMENT DATA OF  │  │        DECIDE            │
│            INDEX                │  │ LIMIT FOR INCORPORATION  │
└────────────────────────────────┘  │ RECOMMENDED COMPANIES    │
          │  ┌─ S153                 └──────────────────────────┘
          ▼                                   │  ┌─ S255
┌────────────────────────────────┐  ┌──────────────────────────┐
│ CALCULATE RETURN AND RISK OF    │  │ READ DATA OF SECONDARY   │
│            INDEX                │  │ STOCK-FOR-PORTFOLIO      │
└────────────────────────────────┘  │ SELECTION CANDIDATES     │
          │  ┌─ S154                 └──────────────────────────┘
          ▼                                   │  ┌─ S257
┌────────────────────────────────┐  ┌──────────────────────────┐
│ ACQUIRE PRICE MOVEMENT DATA OF  │  │ SELECT INCORPORATION     │
│       INDIVIDUAL STOK           │  │ RECOMMENDED COMPANIES    │
└────────────────────────────────┘  │ FOR PORTFOLIO            │
          │  ┌─ S155                 └──────────────────────────┘
          ▼                                   │  ┌─ S259
┌────────────────────────────────┐  ┌──────────────────────────┐
│ CALCULATE EXCESS RETURN (α),    │  │ SET MINIMUM              │
│ SENSITIVITY IN RELATION TO      │  │ INCORPORATION RATIO TO   │
│ FLUCTUATION OF MARKET STOCK     │  │ EACH OF INCORPORATION    │
│ PRICE (β), AND RESIDUAL         │  │ RECOMMENDED COMPANIES    │
│ RETURN (ε) FOR EACH INDIVIDUAL  │  └──────────────────────────┘
│ STOCK COMPANY                   │             │
└────────────────────────────────┘             │
          │  ┌─ S261                            │
          ▼                                     │
┌────────────────────────────────┐             │
│ CALCULATE EXPECTED RETURN AND   │             │
│ RISK FOR EACH STOCK             │             │
└────────────────────────────────┘             │
          │                                     │
          └──────────────┬──────────────────────┘
                  ┌─ S263 ▼
      ┌──────────────────────────────────┐
      │ MINIMUM INCORPORATION RATIO 5% IS │
      │ INCORPORATED TO 10 INCORPORATION  │
      │ RECOMMENDED COMPANIES             │
      └──────────────────────────────────┘
                  ┌─ S265 ▼
      ┌──────────────────────────────────┐
      │ CALCULATE EXPECTED RETURN AND     │
      │ RISK OF THE OVERALL STOCK         │
      │ PORTFOLIO                         │
      └──────────────────────────────────┘
                  ┌─ S267 ▼
      ┌──────────────────────────────────┐
      │      DERIVE EFFICIENT FRONTIER    │
      └──────────────────────────────────┘
                  ┌─ S161 ▼
      ┌──────────────────────────────────┐
      │ ACQUIRE RISK-FREE RATE OF         │
      │ RISK-FREE ASSETS                  │
      └──────────────────────────────────┘
                  ┌─ S162 ▼
      ┌──────────────────────────────────┐
      │ DERIVE CAPITAL MARKET LINE BY     │
      │ DRAWING A TANGENT FROM A FIXED    │
      │ POINT OF RISK-FREE RATE OF        │
      │ RISK-FREE ASSETS TOWARD           │
      │ EFFICIENT FRONTIER                │
      └──────────────────────────────────┘
                  ┌─ S163 ▼
      ┌──────────────────────────────────┐
      │ DETERMINE OPTIMUM SHARE OF        │
      │ PORTFOLIO IN A CONTACT POINT OF   │
      │ EFFICIENT FRONTIER AND CAPITAL    │
      │ MARKET LINE                       │
      └──────────────────────────────────┘
                  ┌─ S164 ▼
      ┌──────────────────────────────────┐
      │ DETERMINE INCORPORATION RATIO FOR │
      │ EACH STOCK OF STOCK PORTFOLIO     │
      └──────────────────────────────────┘
                         │
                         ▼
                  ┌─────────────┐
                  │     END     │
                  └─────────────┘
```

FIG. 61

| Under-valued ranking | Under-valued ranking index | Name of industry | Name of company | Securities code | Total cumulative number of applications | Value of top 3 application index |
|---|---|---|---|---|---|---|
| 1 | 2.804 | Chemical | DCI | 4202 | 2882 | 12.684 |
| 2 | 2.781 | Chemical | MAC | 4102 | 78 | 8.067 |
| 3 | 2.620 | Automobile/Transportation Equipment | EXE | 7278 | 698 | 15.442 |
| 4 | 2.354 | Chemical | CMP | 4617 | 162 | 4.028 |
| 5 | 2.350 | Automobile/Transportation Equipment | TFS | 7258 | 919 | 11.063 |
| 6 | 2.189 | Electrical Machinery | CAC | 6952 | 11022 | 6.564 |
| 7 | 2.116 | Electrical Machinery | IBI | 4062 | 2910 | 13.118 |
| 8 | 2.092 | Precision Apparatus | PEN | 7750 | 6198 | 9.581 |
| 9 | 2.066 | Pharmaceutical | SNK | 4501 | 933 | 11.549 |
| 10 | 1.956 | Chemical | KAN | 4118 | 4737 | 17.556 |
| 11 | 1.858 | Precision Apparatus | CAN | 7751 | 82453 | 28.830 |
| 12 | 1.762 | Automobile/Transportation Equipment | NIY | 7105 | 1091 | 48.968 |
| 13 | 1.691 | Electrical Machinery | HIM | 6810 | 2602 | 6.046 |
| 14 | 1.613 | Electrical Machinery | NOB | 6744 | 1085 | 55.437 |
| 15 | 1.599 | Pharmaceutical | NKC | 4549 | 135 | 5.540 |
| 16 | 1.574 | Chemical | NKY | 4272 | 2309 | 9.161 |
| 17 | 1.332 | Electrical Machinery | HOC | 6745 | 822 | 20.882 |
| 18 | 1.232 | Chemical | SEK | 4204 | 20835 | 14.916 |
| 19 | 1.225 | Chemical | TIK | 4098 | 65 | 5.215 |
| 20 | 1.171 | Electrical Machinery | MDE | 6991 | 26648 | 5.442 |
| 21 | 1.013 | Chemical | FUM | 4998 | 218 | 19.001 |
| 22 | 0.797 | Electrical Machinery | SKE | 6707 | 849 | 10.141 |
| 23 | 0.785 | Electrical Machinery | NCH | 6997 | 744 | 52.727 |
| 24 | 0.653 | Electrical Machinery | NVI | 6792 | 8195 | 16.824 |
| 25 | 0.638 | Chemical | SJU | 4212 | 975 | 95.264 |
| 26 | 0.630 | Automobile/Transportation Equipment | ICH | 7244 | 1090 | 24.959 |
| 27 | 0.628 | Automobile/Transportation Equipment | SMI | 7224 | 1106 | 5.378 |
| 28 | 0.553 | Chemical | TOU | 4186 | 565 | 8.140 |
| 29 | 0.542 | Electrical Machinery | TTE | 6588 | 8534 | 41.715 |
| 30 | 0.460 | Chemical | DAI | 4046 | 236 | 5.212 |
| 31 | 0.432 | Electrical Machinery | ALP | 6816 | 1932 | 8.930 |
| 32 | 0.350 | Electrical Machinery | NSG | 6741 | 2528 | 24.866 |
| 33 | 0.264 | Precision Apparatus | CIW | 7762 | 3593 | 11.944 |
| 34 | 0.226 | Electrical Machinery | NKD | 6807 | 2148 | 6.223 |
| 35 | 0.175 | Chemical | KAP | 4613 | 1985 | 41.661 |
| 36 | 0.127 | Electrical Machinery | FEL | 6504 | 13914 | 5.096 |
| 37 | 0.108 | Automobile/Transportation Equipment | TYR | 7236 | 324 | 23.938 |
| 38 | 0.069 | Chemical | KUM | 4996 | 147 | 5.026 |
| 39 | 0.034 | Chemical | SUN | 4913 | 414 | 6.894 |
| 40 | -0.329 | Electrical Machinery | MUT | 7999 | 317 | 11.093 |

FIG. 62

EP 1 876 506 A1

<Incorporation recommended 10 companies; minimum incorporation ratio 5%>

| | CMP 4617 | TFS 7258 | PEN 7750 | IBI 4062 | MAC 4102 | KAN 4118 | DCI 4202 | SNK 4501 | CAC 6952 | EXE 7278 |
|---|---|---|---|---|---|---|---|---|---|---|
| $\alpha$ | 0.302977650 | 0.153828678 | 0.383610459 | -0.015548308 | -0.035212081 | 0.007086536 | 0.101594782 | -0.063025892 | 0.200197925 | 0.289572030 |
| $\beta$ | 0.687767377 | 0.445686906 | 0.854197931 | 1.426332565 | 0.407604690 | 1.363147011 | 0.530692217 | 1.233713622 | 0.721296324 | 0.369655067 |
| $\sigma(\varepsilon)^2$ | 0.013119631 | 0.004382093 | 0.067348038 | 0.104589686 | 0.005744717 | 0.007695512 | 0.009359208 | 0.026057537 | 0.031601366 | 0.035438645 |
| $\sigma(\varepsilon)$ | 0.114540957 | 0.066197376 | 0.259515005 | 0.323403286 | 0.075793912 | 0.087724067 | 0.096743001 | 0.161423471 | 0.177767729 | 0.188251546 |
| a (incorporation ratio) | 5.0000000% | 5.0000000% | 5.0000000% | 5.0000000% | 5.0000000% | 5.0000000% | 5.0000000% | 5.0000000% | 5.0000000% | 5.0000000% |

<7 companies other than incorporation recommended companies extracted by stock portfolio theory>

| | UNI 6815 | SHO 4004 | TEI 4514 | SEI 4548 | SKE 6707 | NVI 6792 | OMR 7740 |
|---|---|---|---|---|---|---|---|
| $\alpha$ | 0.473829625 | 0.160965681 | 0.108976873 | -0.047680080 | 0.306028995 | 0.219803753 | 0.560796359 |
| $\beta$ | 0.418641559 | 0.821987241 | 0.810753234 | -1.244260468 | 0.208026141 | -0.019705120 | 0.878581539 |
| $\sigma(\varepsilon)^2$ | 0.021984949 | 0.015935142 | 0.007790155 | 0.064840882 | 0.005670626 | 0.057174895 | 0.195763261 |
| $\sigma(\varepsilon)$ | 0.148273224 | 0.126234470 | 0.088261856 | 0.254638729 | 0.075303558 | 0.239112725 | 0.442451422 |
| a (incorporation ratio) | 22.3397303% | 0.0000009% | 0.0000006% | 12.4392098% | 13.5241263% | 0.9404175% | 0.7565146% |

*Expected return and risk of portfolio (annual basis)*

Expected return      E(RP)     | 31.40% |

Variance                   $\sigma P^2$     | 0.01342 |
Standard deviation (risk)     $\sigma P$     | 11.59% |

FIG. 63

| Name of company | Incorporation ratio by theoretical calculation | Theoretical incorporation ratio ≧ Minimum incorporation ratio (0.5%) ? | Actual incorporation ratio |
|---|---|---|---|
| CMP | 5.00% | TRUE | 5.00% |
| TFS | 5.00% | TRUE | 5.00% |
| PEN | 5.00% | TRUE | 5.00% |
| IBI | 5.00% | TRUE | 5.00% |
| MAC | 5.00% | TRUE | 5.00% |
| KAN | 5.00% | TRUE | 5.00% |
| DCI | 5.00% | TRUE | 5.00% |
| SNK | 5.00% | TRUE | 5.00% |
| CAC | 5.00% | TRUE | 5.00% |
| EXE | 5.00% | TRUE | 5.00% |
| UNI | 22.34% | TRUE | 22.34% |
| SHO | 0.0000009% | FALSE | 0% |
| TEI | 0.0000006% | FALSE | 0% |
| SEI | 12.44% | TRUE | 12.44% |
| SKE | 13.52% | TRUE | 13.52% |
| NVI | 0.94% | TRUE | 0.94% |
| OMR | 0.76% | TRUE | 0.76% |

| | Calculated theoretical value | | Calculated value from actual incorporation ratio |
|---|---|---|---|
| Expected return (annual basis) | 31.40% | | 31.40% |
| Variance | 0.01342 | | 0.01342 |
| Standardized deviation (risk) (annual basis) | 11.59% | | 11.59% |

FIG. 64

## INTERNATIONAL SEARCH REPORT

| International application No. |
|---|
| PCT/JP2006/304412 |

A. CLASSIFICATION OF SUBJECT MATTER
*G06Q40/00*(2006.01)

According to International Patent Classification (IPC) or to both national classification and IPC

B. FIELDS SEARCHED

Minimum documentation searched (classification system followed by classification symbols)
*G06Q40/00*(2006.01)

Documentation searched other than minimum documentation to the extent that such documents are included in the fields searched

| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2004-220196 A  (Quants Research Inc.), 05 August, 2004 (05.08.04), (Family: none) | 1-18 |
| Y | JP 2003-281385 A  (Nomura Securities Co., Ltd.), 03 October, 2003 (03.10.03), (Family: none) | 1-18 |
| Y | JP 2004-272633 A  (Shinkin Central Bank), 30 September, 2004 (30.09.04), (Family: none) | 1-18 |
| Y | JP 2002-352071 A  (Masakazu NAKAI), 06 December, 2002 (16.12.02), (Family: none) | 1-18 |

|☒| Further documents are listed in the continuation of Box C. | ☐ See patent family annex. |

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 19 May, 2006 (19.05.06) | 30 May, 2006 (30.05.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2006/304412 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | "3tsu no Kanten, Sogoteki Hyoka", Gekkan e? Columbus, Toho Tsushinsha, 29 May, 2003 (29.05.03), Vol.29, page 43 | 1-18 |
| Y | Toshiyuki AOKI, "Ningen Keisoku Handbook", Kabushiki Kaisha Asakura Shoten, 01 September, 2003 (01.09.03), first edition; pages 240 to 241 | 1-18 |

Form PCT/ISA/210 (continuation of second sheet) (April 2005)

**EP 1 876 506 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6175824 B